(19) Europäisches Patentamt
European Patent Office
Office européen des brevets

(11) EP 3 454 557 A1

(12) EUROPEAN PATENT APPLICATION
published in accordance with Art. 153(4) EPC

(43) Date of publication:
**13.03.2019 Bulletin 2019/11**

(21) Application number: **17792682.1**

(22) Date of filing: **18.04.2017**

(51) Int Cl.:
***H04N 19/117*** *(2014.01)* ***H04N 19/14*** *(2014.01)*
***H04N 19/182*** *(2014.01)* ***H04N 19/196*** *(2014.01)*
***H04N 19/46*** *(2014.01)* ***H04N 19/82*** *(2014.01)*
***H04N 19/119*** *(2014.01)*

(86) International application number:
**PCT/JP2017/015521**

(87) International publication number:
**WO 2017/191749 (09.11.2017 Gazette 2017/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.05.2016 JP 2016092650**

(71) Applicant: **Sony Corporation**
**Tokyo 108-0075 (JP)**

(72) Inventors:
- **KAWAI Takuro**
**Tokyo 108-0075 (JP)**
- **HOSOKAWA Kenichiro**
**Tokyo 108-0075 (JP)**
- **CHIDA Keisuke**
**Tokyo 108-0075 (JP)**
- **NAKAGAMI Ohji**
**Tokyo 108-0075 (JP)**
- **NAGANO Takahiro**
**Tokyo 108-0075 (JP)**

(74) Representative: **D Young & Co LLP**
**120 Holborn**
**London EC1N 2DY (GB)**

## (54) IMAGE PROCESSING DEVICE, AND IMAGE PROCESSING METHOD

(57) The present technique relates to an image processing apparatus and an image processing method that can improve the S/N and the compression efficiency. A filtering process is applied to a first image obtained by adding a residual of prediction encoding and a predicted image to generate a second image used for prediction of the predicted image. In the filtering process, pixels as a prediction tap used for prediction computation for obtaining a pixel value of a corresponding pixel of the second image corresponding to a pixel to be processed of the first image are selected from the first image. The pixel to be processed is classified into one of a plurality of classes. Tap coefficients of the class of the pixel to be processed among tap coefficients used for the prediction computation in each of the plurality of classes obtained by learning and the prediction tap of the pixel to be processed are used to perform the prediction computation to obtain the pixel value of the corresponding pixel. The present technique can be applied to, for example, an encoding apparatus or a decoding apparatus of an image.

FIG.11

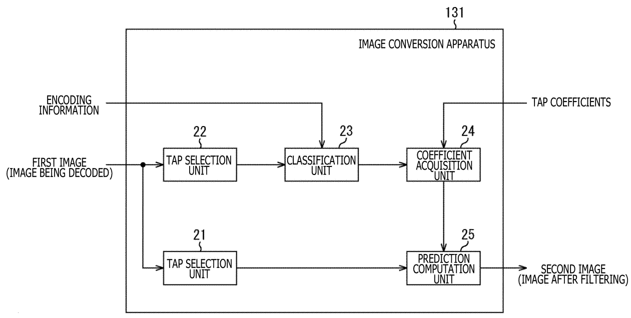


EP 3 454 557 A1

## Description

[Technical Field]

The present technique relates to an image processing apparatus and an image processing method, and particularly, to an image processing apparatus and an image processing method that can significantly improve, for example, the S/N and the compression efficiency of an image.

[Background Art]

An ILF (In Loop Filter) is proposed in, for example, HEVC (High Efficiency Video Coding) that is one of prediction encoding systems. In addition, the ILF is expected to be adopted in post-HEVC (prediction encoding system of next generation of HEVC).

The ILF includes a DF (Deblocking Filter) for reducing blocking noise, an SAO (Sample Adaptive Offset) for reducing ringing, and an ALF (Adaptive Loop Filter) for minimizing encoding errors (errors of decoded image with respect to original image).

The ALF is described in PTL 1, and the SAO is described in PTL 2.

[Citation List]

[Patent Literature]

[PTL 1]
Japanese Patent No. 5485983
[PTL 2]
JP-T-2014-523183

[Summary]

[Technical Problem]

The degree of freedom in the filter strength is low in the currently proposed DF, SAO, and ALF of the ILF, and it is difficult to finely control the filter strength. Therefore, it is difficult to significantly improve the S/N (Signal to Noise Ratio) (SN ratio) (SNR) and the compression efficiency of the image.

The present technique has been made in view of the circumstances, and the present technique can significantly improve the S/N and the compression efficiency of an image.

[Solution to Problem]

The present technique provides an image processing apparatus including a filter processing unit that applies a filtering process to a first image obtained by adding a residual of prediction encoding and a predicted image to generate a second image used for prediction of the predicted image, the filter processing unit including: a prediction tap selection unit that selects, from the first image, pixels as a prediction tap used for prediction computation for obtaining a pixel value of a corresponding pixel of the second image corresponding to a pixel to be processed that is a processing target in the first image; a classification unit that classifies the pixel to be processed into one of a plurality of classes; a tap coefficient acquisition unit that acquires tap coefficients of the class of the pixel to be processed among tap coefficients used for the prediction computation in each of the plurality of classes obtained by learning using a student image equivalent to the first image and a teacher image equivalent to an original image corresponding to the first image; and a computation unit that obtains the pixel value of the corresponding pixel by performing the prediction computation using the tap coefficients of the class of the pixel to be processed and the prediction tap of the pixel to be processed.

The present technique provides an image processing method including a step of applying a filtering process to a first image obtained by adding a residual of prediction encoding and a predicted image to generate a second image used for prediction of the predicted image, the filtering process including: selecting, from the first image, pixels as a prediction tap used for prediction computation for obtaining a pixel value of a corresponding pixel of the second image corresponding to a pixel to be processed that is a processing target in the first image; classifying the pixel to be processed into one of a plurality of classes; acquiring tap coefficients of the class of the pixel to be processed among tap coefficients used for the prediction computation in each of the plurality of classes obtained by learning using a student image equivalent to the first image and a teacher image equivalent to an original image corresponding to the first image; and obtaining the pixel value of the corresponding pixel by performing the prediction computation using the tap coefficients of the class of the pixel to be processed and the prediction tap of the pixel to be processed.

In the image processing apparatus and the image processing method of the present technique, a filtering process is applied to a first image obtained by adding a residual of prediction encoding and a predicted image to generate a second image used for prediction of the predicted image. In the filtering process, pixels as a prediction tap used for prediction computation for obtaining a pixel value of a corresponding pixel of the second image corresponding to a pixel to be processed that is a processing target in the first image are selected from the first image. The pixel to be processed is classified into one of a plurality of classes. Tap coefficients of the class of the pixel to be processed are acquired among tap coefficients used for the prediction computation in each of the plurality of classes obtained by learning using a student image equivalent to the first image and a teacher image equivalent to an original image corresponding to the first image. The pixel value of the corresponding pixel is obtained by performing the prediction computation using the tap coefficients of the class of the pixel to be processed and the prediction tap of the pixel to be processed.

Note that the image processing apparatus may be an independent apparatus or may be an internal block included in one apparatus.

In addition, the image processing apparatus can be realized by causing a computer to execute a program. The program can be transmitted and provided through a transmission medium or can be recorded and provided in a recording medium.

[Advantageous Effect of Invention]

According to the present technique, the S/N and the compression efficiency of an image can be significantly improved.

Note that the advantageous effect described here may not be limited, and the advantageous effect may be any of the advantageous effects described in the present disclosure.

[Brief Description of Drawings]

[FIG. 1]
FIG. 1 is a diagram illustrating a configuration example of an embodiment of an image processing system according to the present technique.
[FIG. 2]
FIG. 2 is a block diagram illustrating a first configuration example of an image conversion apparatus that executes an adaptive classification process.
[FIG. 3]
FIG. 3 is a block diagram illustrating a configuration example of a learning apparatus that performs learning of tap coefficients stored in a coefficient acquisition unit 24.
[FIG. 4]
FIG. 4 is a block diagram illustrating a configuration example of a learning unit 33.
[FIG. 5]
FIG. 5 is a block diagram illustrating a second configuration example of the image conversion apparatus that executes the adaptive classification process.
[FIG. 6]
FIG. 6 is a block diagram illustrating a configuration example of the learning apparatus that performs learning of seed coefficients stored in the coefficient acquisition unit 24.
[FIG. 7]
FIG. 7 is a block diagram illustrating a configuration example of a learning unit 63.
[FIG. 8]
FIG. 8 is a block diagram illustrating another configuration example of the learning unit 63.
[FIG. 9]
FIG. 9 is a block diagram illustrating a first configuration example of an encoding apparatus 11.
[FIG. 10]
FIG. 10 is a block diagram illustrating a configuration example of an adaptive classification filter 111.
[FIG. 11]
FIG. 11 is a block diagram illustrating a configuration example of an image conversion apparatus 131.

[FIG. 12]
FIG. 12 is a diagram describing an example of classification performed by a classification unit 23.
[FIG. 13]
FIG. 13 is a block diagram illustrating a configuration example of a learning apparatus 132.
[FIG. 14]
FIG. 14 is a flow chart describing an example of an encoding process of the encoding apparatus 11.
[FIG. 15]
FIG. 15 is a flow chart describing an example of an adaptive classification process executed in step S25.
[FIG. 16]
FIG. 16 is a block diagram illustrating a first configuration example of a decoding apparatus 12.
[FIG. 17]
FIG. 17 is a block diagram illustrating a configuration example of an adaptive classification filter 206.
[FIG. 18]
FIG. 18 is a block diagram illustrating a configuration example of an image conversion apparatus 231.
[FIG. 19]
FIG. 19 is a flow chart describing an example of a decoding process of the decoding apparatus 12.
[FIG. 20]
FIG. 20 is a flow chart describing an example of an adaptive classification process executed in step S70.
[FIG. 21]
FIG. 21 is a diagram describing differences between the adaptive classification process and an ALF of an ILF regarding classification and a filtering process.
[FIG. 22]
FIG. 22 is a diagram describing differences in effects caused by the differences between the adaptive classification process and the ALF of the ILF regarding the classification and the filtering process.
[FIG. 23]
FIG. 23 is a diagram describing a difference between pixels of a prediction tap and a class tap in the adaptive classification process and pixels of filter coefficients of the ALF in the ILF.
[FIG. 24]
FIG. 24 is a diagram describing examples of a reduction method of reducing tap coefficients obtained by learning.
[FIG. 25]
FIG. 25 is a block diagram illustrating a second configuration example of the encoding apparatus 11.
[FIG. 26]
FIG. 26 is a block diagram illustrating a second configuration example of the decoding apparatus 12.
[FIG. 27]
FIG. 27 is a block diagram illustrating a third configuration example of the encoding apparatus 11.
[FIG. 28]
FIG. 28 is a block diagram illustrating a third configuration example of the encoding apparatus 12.
[FIG. 29]
FIG. 29 is a block diagram illustrating a fourth configuration example of the encoding apparatus 11.
[FIG. 30]
FIG. 30 is a block diagram illustrating a fourth configuration example of the decoding apparatus 12.
[FIG. 31]
FIG. 31 is a diagram describing an overview of an additional class.
[FIG. 32]
FIG. 32 is a block diagram illustrating a fifth configuration example of the encoding apparatus 11.
[FIG. 33]
FIG. 33 is a block diagram illustrating a configuration example of an adaptive classification filter 411.
[FIG. 34]
FIG. 34 is a block diagram illustrating a configuration example of an image conversion apparatus 431.
[FIG. 35]
FIG. 35 is a block diagram illustrating a configuration example of a classification unit 441.
[FIG. 36]
FIG. 36 is a block diagram illustrating a configuration example of a learning apparatus 432.
[FIG. 37]
FIG. 37 is a flow chart describing an example of an encoding process of the encoding apparatus 11.
[FIG. 38]
FIG. 38 is a flow chart describing an example of an adaptive classification process executed in step S125.
[FIG. 39]

FIG. 39 is a block diagram illustrating a fifth configuration example of the decoding apparatus 12.
[FIG. 40]
FIG. 40 is a block diagram illustrating a configuration example of an adaptive classification filter 471.
[FIG. 41]
FIG. 41 is a block diagram illustrating a configuration example of an image conversion apparatus 481.
[FIG. 42]
FIG. 42 is a block diagram illustrating a configuration example of a classification unit 491.
[FIG. 43]
FIG. 43 is a flow chart describing an example of a decoding process of the decoding apparatus 12.
[FIG. 44]
FIG. 44 is a flow chart describing an example of an adaptive classification process executed in step S170.
[FIG. 45]
FIG. 45 is a diagram describing reduction of classes.
[FIG. 46]
FIG. 46 is a block diagram illustrating a sixth configuration example of the encoding apparatus 11.
[FIG. 47]
FIG. 47 is a block diagram illustrating a configuration example of an adaptive classification filter 511.
[FIG. 48]
FIG. 48 is a block diagram illustrating a configuration example of an image conversion apparatus 531.
[FIG. 49]
FIG. 49 is a block diagram illustrating a configuration example of a classification unit 541.
[FIG. 50]
FIG. 50 is a block diagram illustrating a configuration example of a learning apparatus 532.
[FIG. 51]
FIG. 51 is a flow chart describing an example of an encoding process of the encoding apparatus 11.
[FIG. 52]
FIG. 52 is a flow chart describing an example of an adaptive classification process executed in step S225.
[FIG. 53]
FIG. 53 is a block diagram illustrating a sixth configuration example of the decoding apparatus 12.
[FIG. 54]
FIG. 54 is a block diagram illustrating a configuration example of an adaptive classification filter 571.
[FIG. 55]
FIG. 55 is a block diagram illustrating a configuration example of an image conversion apparatus 581.
[FIG. 56]
FIG. 56 is a block diagram illustrating a configuration example of a classification unit 591.
[FIG. 57]
FIG. 57 is a flow chart describing an example of a decoding process of the decoding apparatus 12.
[FIG. 58]
FIG. 58 is a flow chart describing an example of an adaptive classification process executed in step S270.
[FIG. 59]
FIG. 59 is a diagram describing an overview of learning of classification coefficients.
[FIG. 60]
FIG. 60 is a diagram describing an overview of classification using the classification coefficients.
[FIG. 61]
FIG. 61 is a block diagram illustrating a configuration example of the learning apparatus that performs learning of the classification coefficients.
[FIG. 62]
FIG. 62 is a flow chart describing an example of a learning process executed by the learning apparatus.
[FIG. 63]
FIG. 63 is a block diagram illustrating a configuration example of the image conversion apparatus that executes an adaptive classification process using the classification coefficients in the classification.
[FIG. 64]
FIG. 64 is a block diagram illustrating a configuration example of a classification unit 721.
[FIG. 65]
FIG. 65 is a flow chart describing an example of a process of classification using the classification coefficients executed by the classification unit 721.
[FIG. 66]
FIG. 66 is a block diagram illustrating a seventh configuration example of the encoding apparatus 11.

[FIG. 67]
FIG. 67 is a block diagram illustrating a configuration example of an adaptive classification filter 811.
[FIG. 68]
FIG. 68 is a block diagram illustrating a configuration example of an image conversion apparatus 831.
[FIG. 69]
FIG. 69 is a block diagram illustrating a configuration example of a classification unit 841.
[FIG. 70]
FIG. 70 is a block diagram illustrating a configuration example of a learning apparatus 832.
[FIG. 71]
FIG. 71 is a flow chart describing an example of an encoding process of the encoding apparatus 11.
[FIG. 72]
FIG. 72 is a flow chart describing an example of an adaptive classification process executed in step S425.
[FIG. 73]
FIG. 73 is a block diagram illustrating a seventh configuration example of the decoding apparatus 12.
[FIG. 74]
FIG. 74 is a block diagram illustrating a configuration example of an adaptive classification filter 861.
[FIG. 75]
FIG. 75 is a block diagram illustrating a configuration example of an image conversion apparatus 871.
[FIG. 76]
FIG. 76 is a flow chart describing an example of a decoding process of the decoding apparatus 12.
[FIG. 77]
FIG. 77 is a flow chart describing an example of an adaptive classification process executed in step S470.
[FIG. 78]
FIG. 78 is a block diagram illustrating another configuration example of the learning apparatus 832.
[FIG. 79]
FIG. 79 is a diagram illustrating RD (Rate-Distortion) curves of a case where the adaptive classification filter that executes the process of ILF based on the adaptive classification process is provided as the ILF and a case where the ALF is provided as the ILF.
[FIG. 80]
FIG. 80 is a diagram illustrating an example of a multi-view image encoding system.
[FIG. 81]
FIG. 81 is a diagram illustrating a main configuration example of a multi-view image encoding apparatus according to the present technique.
[FIG. 82]
FIG. 82 is a diagram illustrating a main configuration example of a multi-view image decoding apparatus according to the present technique.
[FIG. 83]
FIG. 83 is a diagram illustrating an example of a tiered image encoding system.
[FIG. 84]
FIG. 84 is a diagram illustrating a main configuration example of a tiered image encoding apparatus according to the present technique.
[FIG. 85]
FIG. 85 is a diagram illustrating a main configuration example of a tiered image decoding apparatus according to the present technique.
[FIG. 86]
FIG. 86 is a block diagram illustrating a main configuration example of a computer.
[FIG. 87]
FIG. 87 is a block diagram illustrating an example of a schematic configuration of a television apparatus.
[FIG. 88]
FIG. 88 is a block diagram illustrating an example of a schematic configuration of a mobile phone.
[FIG. 89]
FIG. 89 is a block diagram illustrating an example of a schematic configuration of a recording/reproducing apparatus.
[FIG. 90]
FIG. 90 is a block diagram illustrating an example of a schematic configuration of an imaging apparatus.
[FIG. 91]
FIG. 91 is a block diagram illustrating an example of a schematic configuration of a video set.
[FIG. 92]
FIG. 92 is a block diagram illustrating an example of a schematic configuration of a video processor.

[FIG. 93]
FIG. 93 is a block diagram illustrating another example of the schematic configuration of the video processor.

[Description of Embodiment]

<Image Processing System According to the Present Technique>

FIG. 1 is a diagram illustrating a configuration example of an embodiment of an image processing system according to the present technique.
In FIG. 1, the image processing system includes an encoding apparatus 11 and a decoding apparatus 12.
An original image to be encoded is supplied to the encoding apparatus 11.
The encoding apparatus 11 uses, for example, prediction encoding, such as HEVC and AVC (Advanced Video Coding), to encode the original image.
In the prediction encoding of the encoding apparatus 11, a predicted image of the original image is generated, and the residual between the original image and the predicted image is encoded.
Furthermore, in the prediction encoding of the encoding apparatus 11, an ILF process is executed, in which an ILF is applied to an image being decoded obtained by adding the residual of the prediction encoding and the predicted image. In this way, a reference image used for the prediction of the predicted image is generated.
Here, the image obtained by applying a filtering process (filtering) as the ILF process to the image being decoded will also be referred to as an image after filtering.
In addition to the prediction encoding, the encoding apparatus 11 uses the image being decoded and the original image to perform learning to obtain filtering information for executing the filtering process as the ILF process such that the image after filtering becomes as close to the original image as possible.
The ILF process of the encoding apparats 11 is executed by using the filter information obtained by learning.
Here, the learning for obtaining the filter information can be performed, for example, for every one or a plurality of sequences of the original image, for every one or a plurality of scenes (frames from a scene change to the next scene change) of the original image, for every one or a plurality of frames (pictures) of the original image, for every one or a plurality of slices of the original image, for every one or a plurality of blocks as encoding units of the picture, or in other arbitrary units. In addition, the learning for obtaining the filter information can be performed, for example, in a case where the residual becomes equal to or greater than a threshold.
The encoding apparatus 11 transmits the encoded data obtained by the prediction encoding of the original image and the filter information obtained by the learning through a transmission medium 13 or transmits and records the data and the information in a recording medium 14.
Note that the learning for obtaining the filter information can be performed by an apparatus different from the encoding apparatus 11.
In addition, the filter information can be transmitted separately from the encoded data or can be included in the encoded data and transmitted.
Furthermore, other than using the original image (and the image being decoded obtained from the original image), the learning for obtaining the filter information can be performed by using an image different from the original image including image feature values similar to the original image.
The decoding apparatus 12 collects (receives) (acquires) the encoded data and the filter information transmitted from the encoding apparatus 11 through the transmission medium 13 or the recording medium 14 and uses a system corresponding to the prediction encoding of the encoding apparatus 11 to decode the encoded data.
That is, the decoding apparatus 12 processes the encoded data from the encoding apparatus 11 to obtain the residual of the prediction encoding. Furthermore, the decoding apparatus 12 adds the residual and the predicted image to obtain an image being decoded similar to the image being decoded obtained by the encoding apparatus 11. The decoding apparatus 12 then applies, to the image being decoded, a filtering process as an ILF process using the filter information from the encoding apparatus 11 and obtains the image after filtering.
The decoding apparatus 12 outputs the image after filtering as a decoded image of the original image and temporarily stores the image after filtering as a reference image to be used for the prediction of the predicted image as necessary.
The filtering process as the ILF process of the encoding apparatus 11 and the decoding apparatus 12 is executed on the basis of on an adaptive classification process. Hereinafter, the adaptive classification process will be described.

<Adaptive Classification Process>

FIG. 2 is a block diagram illustrating a first configuration example of an image conversion apparatus that executes the adaptive classification process.

Here, the adaptive classification process can be considered as, for example, an image conversion process of converting a first image into a second image.

The image conversion process of converting the first image into the second image can be various types of signal processing depending on the definition of the first and second images.

That is, if, for example, the first image is an image with a low spatial resolution, and the second image is an image with a high spatial resolution, the image conversion process can be a spatial resolution creation (improvement) process of improving the spatial resolution.

In addition, if, for example, the first image is an image with a low S/N, and the second image is an image with a high S/N, the image conversion process can be a noise removal process of removing the noise.

Furthermore, if, for example, the first image is an image with a predetermined number of pixels (size), and the second image is an image with the number of pixels higher or lower than the number of pixels of the first image, the image conversion process can be a resizing process of resizing (enlarging or reducing) the image.

In addition, for example, if the first image is a decoded image obtained by decoding an image encoded in blocks of HEVC or the like, and the second image is an original image before encoding, the image conversion process can be a distortion removal process of removing block distortion caused by the block-based encoding and decoding.

Note that other than the image, the processing target of the adaptive classification process can be, for example, sound. The adaptive classification process of the sound can be considered as a sound conversion process of converting first sound (for example, sound with low S/N or the like) into second sound (for example, sound with high S/N or the like).

In the adaptive classification process, tap coefficients of a class obtained by classifying a pixel value of a target pixel (processing target pixel to be processed) targeted in the first image into one of a plurality of classes and pixel values of the same number of pixels as the number of tap coefficients in the first image selected with respect to the target pixel are used to perform prediction computation, and a pixel value of the target pixel is obtained.

FIG. 2 illustrates a configuration example of an image conversion apparatus that executes an image conversion process based on the adaptive classification process.

In FIG. 2, an image conversion apparatus 20 includes tap selection units 21 and 22, a classification unit 23, a coefficient acquisition unit 24, and a prediction computation unit 25.

The first image is supplied to the image conversion apparatus 20. The first image supplied to the image conversion apparatus 20 is supplied to the tap selection units 21 and 22.

The tap selection unit 21 sequentially selects a pixel included in the first image as a target pixel. The tap selection unit 21 further selects, as a prediction tap, some of the pixels (pixel values of the pixels) included in the first image used for predicting a corresponding pixel (pixel value of the corresponding pixel) of the second image corresponding to the target pixel.

Specifically, the tap selection unit 21 selects, as a prediction tap, a plurality of pixels of the first image at positions spatially or temporally close to the position of the target pixel in the spatiotemporal space.

The tap selection unit 22 selects, as a class tap, some of the pixels (pixel values of the pixels) included in the first image used to classify and place the target pixel into one of some classes. That is, the tap selection unit 22 selects the class tap just like the selection of the prediction tap by the tap selection unit 21.

Note that the tap structures of the prediction tap and the class tap may be the same or may be different.

The prediction tap obtained by the tap selection unit 21 is supplied to the prediction computation unit 25, and the class tap obtained by the tap selection unit 22 is supplied to the classification unit 23.

The classification unit 23 classifies the target pixel according to a certain rule and supplies a class code corresponding to the class obtained as a result of the classification to the coefficient acquisition unit 24.

That is, the classification unit 23 uses, for example, the class tap from the tap selection unit 22 to classify the target pixel and supplies the class code corresponding to the class obtained as a result of the classification to the coefficient acquisition unit 24.

For example, the classification unit 23 uses the class tap to obtain an image feature value of the target pixel. The classification unit 23 further classifies the target pixel according to the image feature value of the target pixel and supplies the class code corresponding to the class obtained as a result of the classification to the coefficient acquisition unit 24.

Here, an example of the method of classification that can be adopted includes ADRC (Adaptive Dynamic Range Coding).

In the method of using the ADRC, an ADRC process is applied to the pixels (pixel values of the pixels) included in the class tap, and the class of the target pixel is decided according to an ADRC code (ADRC value) obtained as a result of the ADRC process. The ADRC code represents a waveform pattern of the image feature values of a small area including the target value.

Note that in L-bit ADRC, for example, a maximum value MAX and a minimum value MIN of the pixel values of the pixels included in the class tap are detected, and DR=MAX-MIN is used as a local dynamic range of a set. The pixel value of each pixel included in the class tap is re-quantized to L bits on the basis of the dynamic range DR. That is, the minimum value MIN is subtracted from the pixel value of each pixel included in the class tap, and the subtracted value is divided (re-quantized) by $DR/2^L$. The pixel values of the pixels of L bits included in the class tap obtained in this way are then lined up in a predetermined order, and the bit string is output as an ADRC code. Therefore, for example, in a case where a 1-bit ADRC process is applied to the class tap, the pixel value of each pixel included in the class tap is divided by an average value of the maximum value MAX and the minimum value MIN (rounded down to the nearest decimal), and in this way, the pixel value of each pixel is set to 1 bit (binarized). The pixel values in 1 bit are then lined up in a predetermined order, and the bit string is output as an ADRC code.

Note that, for example, the classification unit 23 can output, as the class code, a pattern of level distribution of the pixel values of the pixels included in the class tap. However, if the class tap includes pixel values of N pixels, and A bits are allocated to the pixel value of each pixel in this case, the number of types of the class code output by the classification unit 23 is $(2^N)^A$, and this is an enormous number exponentially proportional to the number of bits A of the pixel value of the pixel.

Therefore, it is preferable that the classification unit 23 use the ADRC process, vector quantization, or the like to compress the amount of information of the class tap to perform the classification.

The coefficient acquisition unit 24 stores tap coefficients of each class obtained by learning described later and further acquires tap coefficients of the class indicated by the class code supplied from the classification unit 23, that is, tap coefficients of the class of the target pixel, among the stored tap coefficients. The coefficient acquisition unit 24 further supplies the tap coefficients of the class of the target pixel to the prediction computation unit 25.

Here, the tap coefficients are coefficients equivalent to coefficients multiplied with input data in a so-called tap in a digital filter.

The prediction computation unit 25 uses the prediction tap output by the tap selection unit 21 and the tap coefficients supplied to the coefficient acquisition unit 24 to perform predetermined prediction computation of obtaining a predicted value of a true value of the pixel value of the pixel (corresponding pixel) of the second image corresponding to the target pixel. In this way, the prediction computation unit 25 obtains and outputs the pixel value (predicted value of the pixel value) of the corresponding pixel, that is, the pixel value of the pixel included in the second image.

FIG. 3 is a block diagram illustrating a configuration example of a learning apparatus that performs learning of the tap coefficients stored in the coefficient acquisition unit 24.

In an example considered here, the second image is an image with high quality (high-quality image), and the first image is an image with low quality (low-quality image) obtained by using an LPF (Low Pass Filter) to filter the high-quality image to reduce the image quality (resolution). The prediction tap is selected from the low-quality image, and the prediction tap and the tap coefficients are used to obtain (predict) the pixel value of the pixel of the high-quality image (high-quality pixel) on the basis of the predetermined prediction computation.

Assuming that, for example, linear first-order prediction computation is adopted as the predetermined prediction computation, a pixel value y of the high-quality pixel is obtained by the following linear first-order equation.

[Math. 1]

$$y = \sum_{n=1}^{N} w_n x_n \quad \dots (1)$$

Here, in Formula (1), $x_n$ represents a pixel value of an nth pixel of the low-quality image (hereinafter, appropriately referred to as low-quality pixel) included in the prediction tap for the high-quality pixel y as a corresponding pixel, and $w_n$ represents an nth tap coefficient multiplied with the nth low-quality pixel (pixel value of the nth low-quality pixel). Note that in Formula (1), it is assumed that the prediction tap includes N low-quality pixels $x_1, x_2, \ldots, x_N$.

Here, a second or higher order equation can also be used instead of the linear first-order equation indicated in Formula (1) to obtain the pixel value y of the high-quality pixel.

Now, a prediction error $e_k$ between $y_k$ and $y_k'$ is represented by the following formula, where $y_k$ represents a true value of the pixel value of the high-quality pixel of a kth sample, and $y_k'$ represents a predicted value of the true value $y_k$ obtained by Formula (1).

[Math. 2]

$$e_k = y_k - y_k' \quad \dots (2)$$

Now, the predicted value $y_k'$ of Formula (2) is obtained according to Formula (1), and $y_k'$ of Formula (2) is replaced according to Formula (1) to obtain the following formula.

[Math. 3]

$$e_k = y_k - \left( \sum_{n=1}^{N} w_n x_{n,k} \right) \quad \ldots (3)$$

Here, $x_{n,k}$ in Formula (3) represents an nth low-quality pixel included in the prediction tap with respect to the high-quality pixel of the kth sample as a corresponding pixel.

Although the tap coefficient $w_n$ is optimal for predicting the high-quality pixel when the prediction error $e_k$ of Formula (3) (or Formula (2)) is 0, it is generally difficult to obtain such a tap coefficient $w_n$ for all the high-quality pixels.

Therefore, when, for example, a least-squares method is adopted as a standard indicating that the tap coefficient $w_n$ is optimal, the optimal tap coefficient $w_n$ can be obtained by minimizing a sum total E of square errors (statistical errors) represented by the following formula.

[Math. 4]

$$E = \sum_{k=1}^{K} e_k^2 \quad \ldots (4)$$

Here, K in Formula (4) represents the number of samples (the number of samples for learning) of a set of the high-quality pixel $y_k$ as a corresponding pixel and low-quality pixels $x_{1,k}$, $x_{2,k}$, ..., $x_{N,k}$ included in the prediction tap for the high-quality pixel $y_k$.

A minimum value (lowest value) of the sum total E of square errors in Formula (4) is provided by $w_n$ where the partial derivative of the sum total E with respect to the tap coefficient $w_n$ is 0 as indicated in Formula (5).

[Math. 5]

$$\frac{\partial E}{\partial w_n} = e_1 \frac{\partial e_1}{\partial w_n} + e_2 \frac{\partial e_2}{\partial w_n} + \cdots + e_k \frac{\partial e_k}{\partial w_n} = 0 \qquad (n=1, 2, \cdots, N) \quad \ldots (5)$$

Therefore, the following formula can be obtained as a partial derivative of Formula (3) with respect to the tap coefficient $w_n$.

[Math. 6]

$$\frac{\partial e_k}{\partial w_1} = -x_{1,k}, \ \frac{\partial e_k}{\partial w_2} = -x_{2,k}, \cdots, \frac{\partial e_k}{\partial w_N} = -x_{N,k}, \ (k=1, 2, \cdots, K)$$

$$\ldots (6)$$

The following formula is obtained from Formulas (5) and (6).

[Math. 7]

$$\sum_{k=1}^{K} e_k x_{1,k} = 0, \ \sum_{k=1}^{K} e_k x_{2,k} = 0, \cdots \sum_{k=1}^{K} e_k x_{N,k} = 0 \quad \ldots (7)$$

Formula (3) can be assigned to $e_k$ of Formula (7), and Formula (7) can be represented by a normal equation indicated in Formula (8).

[Math. 8]

$$\begin{bmatrix} \left(\sum_{k=1}^{K} x_{1,k}x_{1,k}\right) & \left(\sum_{k=1}^{K} x_{1,k}x_{2,k}\right) & \cdots & \left(\sum_{k=1}^{K} x_{1,k}x_{N,k}\right) \\ \left(\sum_{k=1}^{K} x_{2,k}x_{1,k}\right) & \left(\sum_{k=1}^{K} x_{2,k}x_{2,k}\right) & \cdots & \left(\sum_{k=1}^{K} x_{2,k}x_{N,k}\right) \\ \vdots & \vdots & \ddots & \vdots \\ \left(\sum_{k=1}^{K} x_{N,k}x_{1,k}\right) & \left(\sum_{k=1}^{K} x_{N,k}x_{2,k}\right) & \cdots & \left(\sum_{k=1}^{K} x_{N,k}x_{N,k}\right) \end{bmatrix} \begin{bmatrix} w_1 \\ w_2 \\ \vdots \\ w_N \end{bmatrix} = \begin{bmatrix} \left(\sum_{k=1}^{K} x_{1,k}y_k\right) \\ \left(\sum_{k=1}^{K} x_{2,k}y_k\right) \\ \vdots \\ \left(\sum_{k=1}^{K} x_{N,k}y_k\right) \end{bmatrix}$$

... (8)

The normal equation of Formula (8) can be solved for the tap coefficient $w_n$ by using, for example, a sweep-out method (elimination method of Gauss-Jordan) or the like.

The normal equation of Formula (8) can be established and solved for each class to obtain the optimal tap coefficient (here, tap coefficient minimizing the sum total E of square errors) $w_n$ for each class.

FIG. 3 illustrates a configuration example of the learning apparatus that establishes and solves the normal equation of Formula (8) to perform the learning for obtaining the tap coefficient $w_n$.

In FIG. 3, a learning apparatus 30 includes a teacher data generation unit 31, a student data generation unit 32, and a learning unit 33.

A learning image used for the learning of the tap coefficient $w_n$ is supplied to the teacher data generation unit 31 and the student data generation unit 32. An example of the learning image that can be used includes a high-quality image with a high resolution.

The teacher data generation unit 32 uses the learning image to generate teacher data as a teacher (true value) of the learning of the tap coefficient, that is, teacher data to be obtained in the adaptive classification process, which is a teacher image as a mapping destination of mapping in the prediction computation based on Formula (1), and supplies the teacher image to the learning unit 33. Here, for example, the student data generation unit 32 sets, as a teacher image, the high-quality image that is a learning image and supplies the teacher image to the learning unit 33.

The student data generation unit 32 uses the learning image to generate student data as a student of the learning of the tap coefficient, that is, student data as a target of prediction computation with respect to the tap coefficient in the adaptive classification process, which is a student image as a target of conversion in mapping in the prediction computation based on Formula (1), and supplies the student image to the learning unit 33. Here, the student data generation unit 32 uses, for example, the LPF (Low Pass Filter) to filter the high-quality image as a learning image to reduce the resolution to generate a low-quality image and supplies the low-quality image as a student image to the learning unit 33.

The learning unit 33 sequentially sets, as a target pixel, a pixel included in the student image as student data from the student data generation unit 32 and selects, as a prediction tap, the pixel from the student image that is in the same tap structure as the tap structure selected by the tap selection unit 21 of FIG. 2 regarding the target pixel. The learning unit 32 further uses the corresponding pixel included in the teacher image corresponding to the target pixel and the prediction tap of the target pixel to establish and solve the normal equation of Formula (8) for each class to thereby obtain the tap coefficients of each class.

FIG. 4 is a block diagram illustrating a configuration example of the learning unit 33 of FIG. 3.

In FIG. 4, the learning unit 33 includes tap selection units 41 and 42, a classification unit 43, a summing unit 44, and a coefficient calculation unit 45.

The student image is supplied to the tap selection units 41 and 42, and the teacher image is supplied to the summing unit 44.

The tap selection unit 41 sequentially selects a pixel included in the student image as a target pixel and supplies information indicating the target pixel to necessary blocks.

Regarding the target pixel, the tap selection unit 41 further selects, as a prediction tap, the same pixel as the pixel selected by the tap selection unit 21 of FIG. 2 from the pixels included in the student image to thereby obtain the prediction tap in the same tap structure as the tap structure obtained by the tap selection unit 21 and supplies the prediction tap to the summing unit 44.

Regarding the target pixel, the tap selection unit 42 selects, as a class tap, the same pixel as the pixel selected by the tap selection unit 22 of FIG. 2 from the pixels included in the student image to thereby obtain the class tap in the same tap structure as the tap structure obtained by the tap selection unit 22 and supplies the class tap to the classification unit 43.

The classification unit 43 uses the class tap from the tap selection unit 42 to perform the same classification as the classification performed by the classification unit 23 of FIG. 2 and outputs the class code corresponding to the class of the target pixel obtained as a result of the classification to the summing unit 44.

The summing unit 44 acquires the corresponding pixel (pixel value of the pixel) corresponding to the target pixel from the pixels included in the teacher image and sums, for each class code supplied from the classification unit 43, the corresponding pixel and the pixel (pixel value of the pixel) of the student image included in the prediction tap regarding the target pixel supplied from the tap selection unit 42.

That is, the corresponding pixel $y_k$ of the teacher image as teacher data, the prediction tap $x_{n,k}$ of the target pixel as student data, and the class code indicating the class of the target pixel are supplied to the summing unit 44.

For each class of the target pixel, the summing unit 44 uses the prediction tap (student data) $x_{n,k}$ to perform computation equivalent to the multiplication ($x_{n,k}x_{n',k}$) of the student data and the summation ($\Sigma$) in the matrix on the left-hand side of Formula (8).

Furthermore, for each class of the target pixel, the summing unit 44 also uses the prediction tap (student data) $x_{n,k}$ and the teacher data $y_k$ to perform computation equivalent to the multiplication ($x_{n,k}y_k$) of the student data $x_{n,k}$ and the teacher data $y_k$ and the summation ($\Sigma$) in the vector on the right-hand side of Formula (8).

That is, the summing unit 44 stores, in a built-in memory of the summing unit 44 (not illustrated), the component ($\Sigma x_{n,k}x_{n',k}$) of the matrix on the left-hand side and the component ($\Sigma x_{n,k}y_k$) of the vector on the right-hand side in Formula (8) obtained for the corresponding pixel corresponding to the target pixel as teacher data of the last time. For the teacher data as a corresponding pixel corresponding to a new target pixel, the summing unit 44 sums the corresponding component $x_{n,K+1}x_{n',k+1}$ or $x_{n,k+1}y_{k+1}$ calculated by using the teacher data $y_{k+1}$ and the student data $x_{n,K+1}$ to the component ($\Sigma x_{n,k}x_{n',k}$) of the matrix or the component ($\Sigma x_{n,k}y_k$) of the vector (performs the addition indicated by the summation of Formula (8)).

Furthermore, for example, the summing unit 44 sets all the pixels of the student image as target pixels to perform the summing to thereby establish the normal equation indicated in Formula (8) for each class and supplies the normal equations to the coefficient calculation unit 45.

The coefficient calculation unit 45 solves the normal equation for each class supplied from the summing unit 44 to obtain and output the optimal tap coefficients $w_n$ for each class.

The tap coefficients $w_n$ of each class obtained as described above can be stored in the coefficient acquisition unit 24 in the image conversion apparatus 20 of FIG. 20.

FIG. 5 is a block diagram illustrating a second configuration example of the image conversion apparatus that executes the adaptive classification process.

Note that in FIG. 5, the same reference signs are provided to the parts corresponding to the case of FIG. 2, and the description will be appropriately skipped.

In FIG. 5, the image conversion apparatus 20 includes the tap selection units 21 and 22, the classification unit 23, the coefficient acquisition unit 24, and the prediction computation unit 25.

Therefore, the image conversion apparatus 20 of FIG. 5 is configured as in the case of FIG. 2.

However, in FIG. 5, the coefficient acquisition unit 24 stores seed coefficients described later. Furthermore, a parameter z is supplied from the outside to the coefficient acquisition unit 24 in FIG. 5.

The coefficient acquisition unit 24 uses the seed coefficients to generate tap coefficients of each class corresponding to the parameter z and uses the tap coefficients for each class to acquire the tap coefficients of the class from the classification unit 23. The coefficient acquisition unit 24 supplies the tap coefficients to the computation unit 25.

Here, although the coefficient acquisition unit 24 stores the tap coefficients in FIG. 2, the coefficient acquisition unit 24 stores the seed coefficients in FIG. 5. The parameter z can be provided (decided) to generate the tap coefficients from the seed coefficients, and from this viewpoint, it can be assumed that the seed coefficients are information equivalent to the tap coefficients. In the present specification, it is assumed that the tap coefficients include, in addition to the tap coefficients, the seed coefficients that allow to generate the tap coefficients, as necessary.

FIG. 6 is a block diagram illustrating a configuration example of the learning apparatus that performs learning of the seed coefficients stored in the coefficient acquisition unit 24.

In an example considered here, the second image is an image with high quality (high-quality image), and the first image is an image with low quality (low-quality image) obtained by reducing the spatial resolution of the high-quality image as in the case described in FIG. 3. The prediction tap is selected from the low-quality image, and the prediction tap and the tap coefficients are used to obtain (predict) the pixel value of the high-quality pixel that is a pixel of the high-quality image on the basis of, for example, the linear first-order prediction computation of Formula (1).

Now, it is assumed that the tap coefficient $w_n$ is generated by the following formula using the seed coefficient and the parameter z.
[Math. 9]

$$w_n = \sum_{m=1}^{M} \beta_{m,n} z^{m-1} \quad \cdots (9)$$

Here, $\beta_{m,n}$ in Formula (9) denotes an mth seed coefficient used for obtaining an nth tap coefficient $w_n$. Note that in in Formula (9), the tap coefficient $w_n$ is obtained by using M seed coefficients $\beta_{1,n}$, $\beta_{2,n}$, ..., $\beta_{M,n}$.
Here, the equation for obtaining the tap coefficient $w_n$ from the seed coefficient $\beta_{m,n}$ and the parameter z is not limited to Formula (9).
Now, a value $z^{m-1}$ determined by the parameter z in Formula (9) is defined by the following formula by introducing a new variable $t_m$.
[Math. 10]

$$t_m = z^{m-1} \qquad (m = 1, 2, \cdots, M) \quad \cdots (10)$$

The following formula is obtained by assigning Formula (10) to Formula (9).
[Math. 11]

$$w_n = \sum_{m=1}^{M} \beta_{m,n} t_m \quad \cdots (11)$$

According to Formula (11), the tap coefficient $w_n$ is obtained by a linear first-order equation of the seed coefficient $\beta_{m,n}$ and the variable $t_m$.
Incidentally, a prediction error $e_k$ between $y_k$ and $y_k$' is now represented by the following formula, where $y_k$ represents a true value of the pixel value of the high-quality pixel of a kth sample, and $y_k$' represents a predicted value of the true value $y_k$ obtained by Formula (1) .
[Math. 12]

$$e_k = y_k - y_k' \quad \cdots (12)$$

Now, the predicted value $y_k$' of Formula (12) is obtained according to Formula (1), and $y_k$' of Formula (12) is replaced according to Formula (1) to obtain the following formula.
[Math. 13]

$$e_k = y_k - \left( \sum_{n=1}^{N} w_n x_{n,k} \right) \quad \cdots (13)$$

Here, $x_{n,k}$ in Formula (13) represents an nth low-quality pixel included in the prediction tap for the high-quality pixel of the kth sample as a corresponding pixel.
The following formula is obtained by assigning Formula (11) to $w_n$ of Formula (13).
[Math. 14]

$$e_k = y_k - \left( \sum_{n=1}^{N} w_n x_{n,k} \right) \quad \cdots (14)$$

Although the seed coefficient $\beta_{m,n}$ is optimal for predicting the high-quality pixel when the prediction error $e_k$ of

Formula (14) is 0, it is generally difficult to obtain such a seed coefficient $\beta_{m,n}$ for all the high-quality pixels.

Therefore, when, for example, a least-squares method is adopted as a standard indicating that the seed coefficient $\beta_{m,n}$ is optimal, the optimal seed coefficient $\beta_{m,n}$ can be obtained by minimizing a sum total E of square errors represented by the following formula.

[Math. 15]

$$E=\sum_{k=1}^{K} e_k^2 \quad \dots (15)$$

Here, K in Formula (15) represents the number of samples (the number of samples for learning) of a set of the high-quality pixel $y_k$ as a corresponding pixel and low-quality pixels $x_{1,k}$, $x_{2,k}$, ..., $x_{N,k}$ included in the prediction tap for the high-quality pixel $y_k$.

A minimum value (lowest value) of the sum total E of square errors in Formula (15) is provided by $\beta_{m,n}$ where the partial derivative of the sum total E with respect to the seed coefficient $\beta_{m,n}$ is 0 as indicated in Formula (16).

[Math. 16]

$$\frac{\partial E}{\partial \beta_{m,n}}=\sum_{k=1}^{K} 2\cdot\frac{\partial e_k}{\partial \beta_{m,n}}\cdot e_k=0 \quad \dots (16)$$

The following formula is obtained by assigning Formula (13) to Formula (16).

[Math. 17]

$$\sum_{k=1}^{K} t_m x_{n,k} e_k=\sum_{k=1}^{K} t_m x_{n,k}\left(y_k-\left(\sum_{n=1}^{N}\left(\sum_{m=1}^{M}\beta_{m,n} t_m\right)x_{n,k}\right)\right)=0 \quad \dots (17)$$

Now, $X_{i,p,j,q}$ and $Y_{i,p}$ are defined as indicated in Formulas (18) and (19).

[Math. 18]

$$X_{i,p,j,q}=\sum_{k=1}^{K} x_{i,k} t_p x_{j,k} t_q$$
$$(i=1,2,\cdots,N:j=1,2,\cdots,N:p=1,2,\cdots,M:q=1,2,\cdots,M) \quad \dots (18)$$

[Math. 19]

$$Y_{i,p}=\sum_{k=1}^{K} x_{i,k} t_p y_k \quad \dots (19)$$

In this case, Formula (17) can be represented by a normal equation indicated in Formula (20) using $X_{i,p,j,q}$ and $Y_{i,p}$.

[Math. 20]

$$\begin{bmatrix} X_{1,1,1,1} & X_{1,1,1,2} & \cdots & X_{1,1,1,M} & X_{1,1,2,1} & \cdots & X_{1,1,N,M} \\ X_{1,2,1,1} & X_{1,2,1,2} & \cdots & X_{1,2,1,M} & X_{1,2,2,1} & \cdots & X_{1,2,N,M} \\ \vdots & \vdots & \ddots & \vdots & \vdots & & \vdots \\ X_{1,M,1,1} & X_{1,M,1,2} & \cdots & X_{1,M,1,M} & X_{1,M,2,1} & \cdots & X_{1,M,N,M} \\ X_{2,1,1,1} & X_{2,1,1,2} & \cdots & X_{2,M,1,M} & X_{2,M,2,1} & \cdots & X_{2,M,N,M} \\ \vdots & \vdots & & \vdots & \vdots & \ddots & \vdots \\ X_{N,M,1,1} & X_{N,M,1,2} & \cdots & X_{N,M,1,M} & X_{N,M,2,M} & \cdots & X_{N,M,N,M} \end{bmatrix} \begin{bmatrix} \beta_{1,1} \\ \beta_{2,1} \\ \vdots \\ \beta_{M,1} \\ \beta_{1,2} \\ \vdots \\ \beta_{M,N} \end{bmatrix} = \begin{bmatrix} Y_{1,1} \\ Y_{1,2} \\ \vdots \\ Y_{1,M} \\ Y_{2,1} \\ \vdots \\ Y_{N,M} \end{bmatrix}$$

... (20)

The normal equation of Formula (20) can be solved for the seed coefficient $\beta_{m,n}$ by using, for example, a sweep-out method (elimination method of Gauss-Jordan) or the like.

In the image conversion apparatus 20 of FIG. 5, a large number of high-quality pixels $y_1$, $y_2$, ..., $y_k$ are set as teacher data, and the low-quality pixels $x_{1,k}$, $x_{2,k}$, ..., $x_{N,k}$ included in the prediction tap for each high-quality pixel $y_k$ are set as student data. The seed coefficient $\beta_{m,n}$ of each class obtained by performing learning by establishing and solving the normal equation of Formula (20) for each class is stored in the coefficient acquisition unit 24. The coefficient acquisition unit 24 then generates the tap coefficient $w_n$ of each class according to Formula (9) on the basis of the seed coefficient $\beta_{m,n}$ and the parameter z provided from the outside. The prediction computation unit 25 uses the tap coefficient $w_n$ and the low-quality pixel (pixel of the first image) $x_n$ included in the prediction tap regarding the target pixel to calculate Formula (1) to thereby obtain the pixel value (predicted value close to the pixel value) of the high-quality pixel (corresponding pixel of the second image).

FIG. 6 illustrates a configuration example of the learning apparatus that establishes and solves the normal equation of Formula (20) for each class to perform learning for obtaining the seed coefficient $\beta_{m,n}$ of each class.

Note that in FIG. 6, the same reference signs are provided to the parts corresponding to the case of FIG. 3, and the description will be appropriately skipped.

In FIG. 6, the learning apparatus 30 includes the teacher data generation unit 31, a parameter generation unit 61, a student data generation unit 62, and a learning unit 63.

Therefore, the learning apparatus 30 of FIG. 6 is in common with the case of FIG. 3 in that the learning apparatus 30 includes the teacher data generation unit 31.

However, the learning apparatus 30 of FIG. 6 is different from the case of FIG. 3 in that the learning apparatus 30 additionally includes the parameter generation unit 61. Furthermore, the learning apparatus 30 of FIG. 6 is different from the case of FIG. 3 in that the learning apparatus 30 includes the student data generation unit 62 and the learning unit 63 in place of the student data generation unit 32 and the learning unit 33, respectively.

The parameter generation unit 61 generates some values in a possible range of the parameter z and supplies the values to the student data generation unit 62 and the learning unit 63.

For example, if the possible values of the parameter z are real numbers in a range of 0 to Z, the parameter generation unit 61 generates, for example, the parameter z with values of z=0, 1, 2, ..., Z and supplies the parameter z to the student data generation unit 62 and the learning unit 63.

A learning image similar to the learning image supplied to the teacher data generation unit 31 is supplied to the student data generation unit 62.

The student data generation unit 62 generates student images from the learning image just like the student data generation unit 32 of FIG. 3 and supplies the student images as student data to the learning unit 63.

Here, in addition to the learning image, some values in the possible range of the parameter z are supplied from the parameter generation unit 61 to the student data generation unit 62.

The student data generation unit 62 uses, for example, an LPF with a cutoff frequency corresponding to the parameter z supplied to the student data generation unit 62 to filter the high-quality image as a learning image to thereby generate low-quality images as student images for some values of the parameter z.

That is, the student data generation unit 62 generates Z+1 types of low-quality images as student images with different spatial resolutions regarding the high-quality image as a learning image.

Note that here, for example, the larger the value of the parameter z, the higher the cutoff frequency of the LPF used. The LPF is used to filter the high-quality image to generate the low-quality images as student images. In this case, the higher the value of the parameter z for the low-quality image as a student image, the higher the spatial resolution.

The student data generation unit 62 can also generate low-quality images as student images in which the spatial resolution in one or both the horizontal direction and the vertical direction of the high-quality image as a learning image is reduced according to the parameter z.

Furthermore, in the case of generating the low-quality images as student images in which the spatial resolution in both the horizontal direction and the vertical direction of the high-quality image as a learning image is reduced, the spatial resolution in the horizontal direction and the vertical direction of the high-quality image as a learning image can be separately reduced according to separate parameters, that is, two parameters z and z'.

In this case, the coefficient acquisition unit 24 of FIG. 5 receives two parameters z and z' from the outside and uses the two parameters z and z' and the seed coefficients to generate the tap coefficients.

In this way, the seed coefficients can be obtained that allow to generate the tap coefficients by using not only one parameter, but also two parameters z and z' or three or more parameters. However, an example of the seed coefficients for generating the tap coefficients by using one parameter z will be described in the present specification to simplify the description.

The learning unit 63 uses the teacher image as teacher data from the teacher data generation unit 31, the parameter z from the parameter generation unit 61, and the student images as student data from the student data generation unit 62 to obtain and output the seed coefficients of each class.

FIG. 7 is a block diagram illustrating a configuration example of the learning unit 63 of FIG. 6.

Note that in FIG. 7, the same reference signs are provided to the parts corresponding to the learning unit 33 of FIG. 4, and the description will be appropriately skipped.

In FIG. 7, the learning unit 63 includes the tap selection units 41 and 42, the classification unit 43, a summing unit 71, and a coefficient calculation unit 72.

Therefore, the learning unit 63 of FIG. 7 is in common with the learning unit 33 of FIG. 4 in that the learning unit 63 includes the tap selection units 41 and 42 and the classification unit 43.

However, the learning unit 63 is different from the learning unit 33 in that the learning unit 63 includes the summing unit 71 and the coefficient calculation unit 72 in place of the summing unit 44 and the coefficient calculation unit 45, respectively.

In FIG. 7, the tap selection units 41 and 42 select the prediction tap and the class tap, respectively, from the student image generated according to the parameter z generated by the parameter generation unit 61 (here, from the low-quality image as student data generated by using the LPF with a cutoff frequency corresponding to the parameter z).

The summing unit 71 acquires a corresponding pixel corresponding to the target pixel from the teacher image from the teacher data generation unit 31 of FIG. 6, and for each class supplied from the classification unit 43, performs summing regarding the corresponding pixel, the student data (pixel of student image) included in the prediction tap regarding the target pixel supplied from the tap selection unit 41, and the parameter z in generating the student data.

That is, the teacher data $y_k$ as a corresponding pixel corresponding to the target pixel, the prediction tap $x_{i,k}(x_{j,k})$ regarding the target pixel output by the tap selection unit 41, and the class of the target pixel output by the classification unit 43 are supplied to the summing unit 71, and the parameter z in generating the student data included in the prediction tap regarding the target pixel is supplied from the parameter generation unit 61 to the summing unit 71.

In addition, for each class supplied from the classification unit 43, the summing unit 71 uses the prediction tap (student data) $x_{i,k}(x_{j,k})$ and the parameter z to perform computation equivalent to the multiplication $(x_{i,k}t_px_{j,k}t_q)$ of the student data and the parameter z for obtaining the component $X_{i,p,j,q}$ and the summation ($\Sigma$) defined by Formula (18), in the matrix on the left-hand side of Formula (20). Note that $t_p$ in Formula (18) is calculated from the parameter z according to Formula (10). In addition, $t_q$ of Formula (18) is calculated in a similar way.

Furthermore, for each class supplied from the classification unit 43, the summing unit 71 also uses the prediction tap (student data) $x_{i,k}$, the teacher data $y_k$, and the parameter z to perform computation equivalent to the multiplication $(x_{i,k}t_py_k)$ of the student data $x_{i,k}$, the teacher data $y_k$, and the parameter z for obtaining the component $Y_{i,p}$ and the summation ($\Sigma$) defined in Formula (19), in the vector on the right-hand side of Formula (20). Note that $t_p$ of Formula (19) is calculated from the parameter z according to Formula (10).

That is, the summing unit 71 stores, in a built-in memory of the summing unit 71 (not illustrated), the component $X_{i,p,j,q}$ of the matrix on the left-hand side and the component $Y_{i,p}$ of the vector on the right-hand side in Formula (20) obtained for the corresponding pixel corresponding to the target pixel as teacher data of the last time. For the teacher data as a corresponding pixel corresponding to a new target pixel, the summing unit 71 sums the corresponding component $x_{i,k}t_px_{j,k}t_q$ or $x_{i,k}t_py_k$ calculated by using the teacher data $y_k$, the student data $x_{i,k}(x_{j,k})$, and the parameter z to the component $X_{i,p,j,q}$ of the matrix or the component $Y_{i,p}$ of the vector (performs the addition indicated by the summation for the component $X_{i,p,j,q}$ of Formula (18) or the component $Y_{i,p}$ of Formula (19)).

The summing unit 71 sets all the pixels of the student image as target pixels and performs the summing for the parameter z of all the values of 0, 1, ..., Z. In this way, the summing unit 71 establishes the normal equation indicated in Formula (20) for each class and supplies the normal equations to the coefficient calculation unit 72.

The coefficient calculation unit 72 solves the normal equation of each class supplied from the summing unit 71 to obtain and output the seed coefficient $\beta_{m,n}$ of each class.

Incidentally, the learning apparatus 30 of FIG. 6 sets, as teacher data, the high-quality image that is a learning image and sets, as student data, the low-quality images in which the spatial resolution of the high-quality image is degraded according to the parameter z. The learning apparatus 30 performs the learning for obtaining the seed coefficient $\beta_{m,n}$ for directly minimizing the sum total of the square errors of the predicted value y of the teacher data predicted by the linear first-order equation of Formula (1) on the basis of the tap coefficient $w_n$ and the student data $x_n$. However, for the learning of the seed coefficient $\beta_{m,n}$, the learning apparatus 30 can perform learning for obtaining the seed coefficient $\beta_{m,n}$ for, so to say, indirectly minimizing the sum total of the square errors of the predicted value y of the teacher data.

That is, the high-quality image that is a learning image is set as teacher data, and low-quality images are set as student data in which the LPF with the cutoff frequency corresponding to the parameter z is used to filter the high-quality image to reduce the horizontal resolution and the vertical resolution of the high-quality image. The tap coefficient $w_n$ and the student data $x_n$ are first used to obtain, for each value of the parameter z (here, z=0, 1, ..., z), the tap coefficient $w_n$ that minimizes the sum total of the square errors of the predicted value y of the teacher data predicted by the linear first-order prediction equation of Formula (1). The tap coefficient $w_n$ obtained for each value of the parameter z is then set as teacher data, and the parameter z is set as student data. Formula (11) is used to obtain the seed coefficient $\beta_{m,n}$ that minimizes the sum total of the square errors of the predicted value of the tap coefficient $w_n$ as teacher data predicted from the seed coefficient $\beta_{m,n}$ and the variable $t_m$ corresponding to the parameter z that is student data.

Here, the tap coefficient $w_n$ that minimizes (miniaturizes) the sum total E of the square errors of the predicted value y of the teacher data predicted by the linear first-order prediction equation of Formula (1) can be obtained for each value (z=0, 1, ..., Z) of the parameter z in each class by establishing and solving the normal equation of Formula (8) as in the case of the learning apparatus 30 of FIG. 3.

Incidentally, as indicated in Formula (11), the tap coefficient is obtained from the seed coefficient $\beta_{m,n}$ and the variable $t_m$ corresponding to the parameter z. Now, assuming that $w_n$' represents the tap coefficient obtained by Formula (11), the seed coefficient $\beta_{m,n}$ is an optimal seed coefficient for obtaining the optimal tap coefficient $w_n$ when an error $e_n$ represented by the following Formula (21) between the optimal tap coefficient $w_n$ and the tap coefficient $w_n$' obtained by Formula (11) is 0. However, it is generally difficult to obtain such a seed coefficient $\beta_{m,n}$ for all the tap coefficients $w_n$.

[Math. 21]

$$e_n = w_n - w_n' \quad \ldots (21)$$

Note that Formula (21) can be modified as in the following formula on the basis of Formula (11).

[Math. 22]

$$e_n = w_n - \left( \sum_{m=1}^{M} \beta_{m,n} t_m \right) \quad \ldots (22)$$

Therefore, when, for example, a least-squares method is also adopted as a standard indicating that the seed coefficient $\beta_{m,n}$ is optimal, the optimal seed coefficient $\beta_{m,n}$ can be obtained by minimizing the sum total E of the square errors represented by the following formula.

[Math. 23]

$$E = \sum_{n=1}^{N} e_n^2 \quad \ldots (23)$$

A minimum value (lowest value) of the sum total E of the square errors in Formula (23) is provided by $\beta_{m,n}$ where the partial derivative of the sum total E with respect to the seed coefficient $\beta_{m,n}$ is 0 as indicated in Formula (24).

[Math. 24]

$$\frac{\partial E}{\partial \beta_{m,n}} = \sum_{m=1}^{M} 2 \frac{\partial e_n}{\partial \beta_{m,n}} \cdot e_n = 0 \quad \ldots (24)$$

The following formula can be obtained by assigning Formula (22) to Formula (24).
[Math. 25]

$$\sum_{m=1}^{M} t_m \left( w_n - \left( \sum_{m=1}^{M} \beta_{m,n} t_m \right) \right) = 0 \quad \cdots (25)$$

Now, $X_{i,j}$ and $Y_i$ are defined as indicated in Formulas (26) and (27).
[Math. 26]

$$X_{i,j} = \sum_{z=0}^{Z} t_i t_j \quad (i=1, 2, \cdots, M; j=1, 2, \cdots, M) \quad \cdots (26)$$

[Math. 27]

$$Y_i = \sum_{z=0}^{Z} t_i w_n \quad \cdots (27)$$

In this case, Formula (25) can be represented by a normal equation indicated in Formula (28) using $X_{i,j}$ and $Y_i$.
[Math. 28]

$$\begin{bmatrix} X_{1,1} & X_{1,2} & \cdots & X_{1,M} \\ X_{2,1} & X_{2,1} & \cdots & X_{2,2} \\ \vdots & \vdots & \ddots & \vdots \\ X_{M,1} & X_{M,2} & \cdots & X_{M,M} \end{bmatrix} \begin{bmatrix} \beta_{1,n} \\ \beta_{2,n} \\ \vdots \\ \beta_{M,n} \end{bmatrix} = \begin{bmatrix} Y_1 \\ Y_2 \\ \vdots \\ Y_M \end{bmatrix} \quad \cdots (28)$$

The normal equation of Formula (28) can also be solved for the seed coefficient $\beta_{m,n}$ by using, for example, a sweep-out method or the like.

FIG. 8 is a block diagram illustrating another configuration example of the learning unit 63 of FIG. 6.

That is, FIG. 8 illustrates a configuration example of the learning unit 63 that establishes and solves the normal equation of Formula (28) to perform learning for obtaining the seed coefficient $\beta_{m,n}$.

Note that in FIG. 8, the same reference signs are provided to the parts corresponding to the case of FIG. 4 or 7, and the description will be appropriately skipped.

The learning unit 63 of FIG. 8 includes the tap selection units 41 and 42, the classification unit 43, the coefficient calculation unit 45, summing units 81 and 82, and a coefficient calculation unit 83.

Therefore, the learning unit 63 of FIG. 8 is in common with the learning unit 33 of FIG. 4 in that the learning unit 63 includes the tap selection units 41 and 42, the classification unit 43, and the coefficient calculation unit 45.

However, the learning unit 63 of FIG. 8 is different from the learning unit 33 of FIG. 4 in that the learning unit 63 includes the summing unit 81 in place of the summing unit 44 and additionally includes the summing unit 82 and the coefficient calculation unit 83.

The class of the target pixel output by the classification unit 43 and the parameter z output by the parameter generation unit 61 are supplied to the summing unit 81. The summing unit 81 performs summing regarding the teacher data as a corresponding pixel corresponding to the target pixel in the teacher image from the teacher data generation unit 31 and regarding the student data included in the predication tap in relation to the target pixel supplied from the tap selection unit 41, for each class supplied from the classification unit 43 and for each value of the parameter z output by the parameter generation unit 61.

That is, the teacher data $y_k$, the prediction tap $x_{n,k}$, the class of the target pixel, and the parameter z in generating the student image included in the prediction tap $x_{n,k}$ are supplied to the summing unit 81.

For each class of the target pixel and for each value of the parameter z, the summing unit 81 uses the prediction tap (student data) $x_{n,k}$ to perform computation equivalent to the multiplication ($x_{n,k}x_{n',k}$) of the student data and the summation ($\Sigma$) in the matrix on the left-hand side of Formula (8).

Furthermore, for each class of the target pixel and for each value of the parameter z, the summing unit 81 uses the prediction tap (student data) $x_{n,k}$ and the teacher data $y_k$ to perform computation equivalent to the multiplication ($x_{n,k}y_k$) of the student data $x_{n,k}$ and the teacher data $y_k$ and the summation ($\Sigma$) in the vector on the right-hand side of Formula (8).

That is, the summing unit 81 stores, in a built-in memory of the summing unit 81 (not illustrated), the component ($\Sigma x_{n,k}x_{n',k}$) of the matrix on the left-hand side and the component ($\Sigma x_{n,k}y_k$) of the vector on the right-hand side in Formula (8) obtained for the corresponding pixel corresponding to the target pixel as teacher data of the last time. For the teacher data as a corresponding pixel corresponding to a new target pixel, the summing unit 81 sums the corresponding component $x_{n,k+1}x_{n',k+1}$ or $x_{n,k+1}y_{k+1}$ calculated by using the teacher data $y_{k+1}$ and the student data $x_{n,k+1}$ to the component ($\Sigma x_{n,k}x_{n',k}$) of the matrix or the component ($\Sigma x_{n,k}y_k$) of the vector (performs the addition indicated by the summation of Formula (8)).

The summing unit 81 then sets all the pixels of the student image as target pixels and performs the summing. In this way, the summing unit 81 establishes the normal equation indicated in Formula (8) for each value of the parameter z in each class and supplies the normal equations to the coefficient calculation unit 45.

Therefore, the summing unit 81 establishes the normal equation of Formula (8) for each class just like the summing unit 44 of FIG. 4. However, the summing unit 81 is different from the summing unit 44 of FIG. 4 in that the summing unit 81 further establishes the normal equation of Formula (8) for each value of the parameter z.

The coefficient calculation unit 45 solves the normal equation for each value of the parameter z in each class supplied from the summing unit 81 to obtain the optimal tap coefficient $w_n$ of each value of the parameter z for each class and supplies the tap coefficients $w_n$ to the summing unit 82.

For each class, the summing unit 82 performs the summing regarding the parameter z (variable $t_m$ corresponding to the parameter z) supplied from the parameter generation unit 61 (FIG. 6) and regarding the optimal tap coefficient $w_n$ supplied from the coefficient calculation unit 45.

That is, for each class, the summing unit 82 uses the variables $t_i(t_j)$ obtained by Formula (10) on the basis of the parameter z supplied from the parameter generation unit 61 and performs computation equivalent to the multiplication ($t_it_j$) of the variables $t_i(t_j)$ corresponding to the parameter z and the summation ($\Sigma$) for obtaining the component $X_{i,j}$ defined in Formula (26) in the matrix on the left-hand side of Formula (28).

Here, the component $X_{i,j}$ is determined only by the parameter z and is not related to the class. Therefore, the calculation of the component $X_{i,j}$ actually does not have to be performed for each class, and the calculation needs to be performed just once.

Furthermore, for each class, the summing unit 82 uses the variable $t_i$ obtained by Formula (10) on the basis of the parameter z supplied from the parameter generation unit 61 and the optimal tap coefficient $w_n$ supplied from the coefficient calculation unit 45 to perform computation equivalent to the multiplication ($t_iw_n$) of the variable $t_i$ corresponding to the parameter z and the optimal tap coefficient $w_n$ and the summation ($\Sigma$) for obtaining the component $Y_i$ defined in Formula (27) in the vector on the right-hand side of Formula (28).

The summing unit 82 obtains the component $X_{i,j}$ represented by Formula (26) and the component $Y_i$ represented by Formula (27) for each class to thereby establish the normal equation of Formula (28) for each class and supplies the normal equations to the coefficient calculation unit 83.

The coefficient calculation unit 83 solves the normal equation of Formula (28) for each class supplied from the summing unit 82 to obtain and output the seed coefficient $\beta_{m,n}$ of each class.

The coefficient acquisition unit 24 of FIG. 5 can store the seed coefficient $\beta_{m,n}$ of each class obtained in this way.

Note that in the learning of the seed coefficients, seed coefficients for executing various image conversion processes can also be obtained depending on the method of selecting the images to be set as the student data corresponding to the first image and the teacher data corresponding to the second image, as in the case of learning the tap coefficients.

That is, in the case described above, the learning of the seed coefficients is performed by setting the leaning image as the teacher data corresponding to the second image and setting the low-quality image obtained by degrading the spatial resolution of the learning image as the student data corresponding to the first image. This can obtain seed coefficients for executing an image conversion process as a spatial resolution creation process of converting the first image into the second image with improved spatial resolution.

In this case, the image conversion apparatus 20 of FIG. 5 can improve the horizontal resolution and the vertical resolution of the image to the resolution corresponding to the parameter z.

In addition, for example, the learning of the seed coefficients can be performed by setting the high-quality image as the teacher data and superimposing noise in a level corresponding to the parameter z on the high-quality image as the teacher data to set the image as the student data. This can obtain seed coefficients for executing an image conversion process as a noise removal process of converting the first image into the second image in which the noise included in the first image is removed (reduced). In this case, the image conversion apparatus 20 of FIG. 5 can obtain an image with S/N corresponding to the parameter z (image after noise removal in a degree corresponding to the parameter z).

Note that in the case described above, the tap coefficient $w_n$ is defined by $\beta_{1,n}z^0+\beta_{2,n}z^1+...+\beta_{M,n}z^{M-1}$ as indicated in Formula (9) to obtain the tap coefficient $w_n$ for improving the spatial resolution in both the horizontal and vertical directions according to the parameter z on the basis of Formula (9). However, the tap coefficient $w_n$ can also be obtained to independently improve the horizontal resolution and the vertical resolution according to independent parameters $z_x$ and $z_y$, respectively.

That is, the tap coefficient $w_n$ is defined by, for example, a cubic equation $\beta_{1,n}z_x^0z_y^0+\beta_{2,n}z_x^1z_y^0+\beta_{3,n}z_x^2z_y^0+\beta_{4,n}z_x^3z_y^0+\beta_{5,n}z_x^0z_y^1+\beta_{6,n}z_x^0z_y^2+\beta_{7,n}z_x^0z_y^3+\beta_{8,n}z_x^1z_y^1+\beta_{9,n}z\quad x^2z_y^1+\beta_{10,n}z_x^1z_y^2$ in place of Formula (9), and the variable $t_m$ defined in Formula (10) is defined by, for example, $t_1=z_x^0z_y^0$, $t_2=z_x^1z_y^0$, $t_3=z_x^2z_y^0$, $t_4=z_x^3z_y^0$, $t_5=z_x^0z_y^1$, $t_6=z_x^0z_y^2$, $t_7=z_x^0z_y^3$, $t_8=z_x^1z_y^1$, $t_9=z_x^2z_y^1$, $t_{10}=z_x^1z_y^2$ in place of Formula (10). In this case, the tap coefficient $w_n$ can also be ultimately represented by Formula (11). Therefore, the learning apparatus 30 of FIG. 6 can degrade the horizontal resolution and the vertical resolution of the teacher data according to the parameters $z_x$ and $z_y$, respectively, and use the image as student data to perform the learning to obtain the seed coefficient $\beta_{m,n}$. In this way, the learning apparatus 30 can obtain the tap coefficient $w_n$ for independently improving the horizontal resolution and the vertical resolution according to the independent parameters $z_x$ and $z_y$, respectively.

In addition, for example, a parameter $z_t$ corresponding to the resolution in the time direction can be further introduced in addition to the parameters $z_x$ and $z_y$ corresponding to the horizontal resolution and the vertical resolution, respectively, to obtain the tap coefficient $w_n$ for independently improving the horizontal resolution, the vertical resolution, and the temporal resolution according to the independent parameters $z_x$, $z_y$, and $z_t$, respectively.

Furthermore, the learning apparatus 30 of FIG. 6 can degrade the horizontal resolution and the vertical resolution of the teacher data according to the parameter $z_x$ and add noise to the teacher data according to the parameter $z_y$ to use the image as student data to perform the learning. In this way, the learning apparatus 30 can obtain the seed coefficient $\beta_{m,n}$ to obtain the tap coefficient $w_n$ for improving the horizontal resolution and the vertical resolution according to the parameter $z_x$ and for removing the noise according to the parameter $z_y$.

<First Configuration Example of Encoding Apparatus 11>

FIG. 9 is a block diagram illustrating a first configuration example of the encoding apparatus 11 of FIG. 1.

In FIG. 9, the encoding apparatus 11 includes an A/D conversion unit 101, a rearrangement buffer 102, a computation unit 103, an orthogonal transformation unit 104, a quantization unit 105, a reversible encoding unit 106, and an accumulation buffer 107. The encoding apparatus 11 further includes an inverse quantization unit 108, an inverse orthogonal transformation unit 109, a computation unit 110, an adaptive classification filter 111, a frame memory 112, a selection unit 113, an intra prediction unit 114, a motion prediction compensation unit 115, a predicted image selection unit 116, and a rate control unit 117.

The A/D conversion unit 101 performs A/D conversion of an original image in an analog signal into an original image in a digital signal and supplies and stores the original image in the rearrangement buffer 102.

The rearrangement buffer 102 rearranges frames of the original image from an order of display to an order of encoding (decoding) according to GOP (Group Of Picture) and supplies the frames to the computation unit 103, the intra prediction unit 114, the motion prediction compensation unit 115, and the adaptive classification filter 111.

The computation unit 103 subtracts, from the original image from the rearrangement buffer 102, a predicted image supplied from the intra prediction unit 114 or the motion prediction compensation unit 115 through the predicted image selection unit 116 and supplies a residual (predicted residual) obtained by the subtraction to the orthogonal transformation unit 104.

For example, in a case of an image for inter encoding, the computation unit 103 subtracts the predicted image supplied from the motion prediction compensation unit 115 from the original image read from the rearrangement buffer 102.

The orthogonal transformation unit 104 applies an orthogonal transformation, such as a discrete cosine transform and a Karhunen-Loeve transform, to the residual supplied from the computation unit 103. Note that the method of the orthogonal transformation is arbitrary. The orthogonal transformation unit 104 supplies a transformation coefficient obtained by the orthogonal exchange to the quantization unit 105.

The quantization unit 105 quantizes the transformation coefficient supplied from the orthogonal transformation unit 104. The quantization unit 105 sets a quantization parameter QP on the basis of a target value of a code amount (code amount target value) supplied from the rate control unit 117 and quantizes the transformation coefficient. Note that the method of the quantization is arbitrary. The quantization unit 105 supplies the quantized transformation coefficient to the reversible coding unit 106.

The reversible encoding unit 106 uses a predetermined reversible encoding system to encode the transformation coefficient quantized by the quantization unit 105. The transformation coefficient is quantized under the control of the rate control unit 117, and the code amount of the encoded data obtained by the reversible encoding of the reversible encoding unit 106 is a code amount target value set by the rate control unit 117 (or close to the code amount target value).

The reversible encoding unit 106 also acquires, from each block, necessary encoding information in the encoding information regarding prediction encoding by the encoding apparatus 11.

Here, examples of the encoding information include a prediction mode of intra prediction or inter prediction, motion information such as a motion vector, the code amount target value, the quantization parameter QP, a picture type (I, P, B), information of CU (Coding Unit) or CTU (Coding Tree Unit), and the like.

For example, the prediction mode can be acquired from the intra prediction unit 114 or the motion prediction compensation unit 115. In addition, the motion information can be acquired from, for example, the motion prediction compensation unit 115.

Other than acquiring the encoding information, the reversible encoding unit 106 acquires filter information regarding the adaptive classification process in the adaptive classification filter 111 from the adaptive classification filter 111. In FIG. 9, the filter information includes the tap coefficients of each class.

The reversible encoding unit 106 uses an arbitrary reversible encoding system to encode the encoding information and the filter information and sets (multiplexes) the information as part of header information of the encoded data.

The reversible encoding unit 106 transmits the encoded data through the accumulation buffer 107. Therefore, the reversible encoding unit 106 functions as a transmission unit that transmits the encoded data, that is, the encoding information and the filter information included in the encoded data.

Examples of the reversible encoding system of the reversible encoding unit 106 that can be adopted include variable length coding and arithmetic coding. An example of the variable length coding includes CAVLC (Context-Adaptive Variable Length Coding) defined in an H.264/AVC system. An example of the arithmetic coding includes CABAC (Context-Adaptive Binary Arithmetic Coding).

The accumulation buffer 107 temporarily accumulates the encoded data supplied from the reversible encoding unit 106. The encoded data accumulated in the accumulation buffer 107 is read and transmitted at a predetermined timing.

The transformation coefficient quantized by the quantization unit 105 is supplied to the reversible encoding unit 106 and is also supplied to the inverse quantization unit 108. The inverse quantization unit 108 uses a method corresponding to the quantization by the quantization unit 105 to perform inverse quantization of the quantized transformation coefficient. The method of inverse quantization can be any method as long as the method corresponds to the quantization process of the quantization unit 105. The inverse quantization unit 108 supplies the transformation coefficient obtained by the inverse quantization to the inverse orthogonal transformation unit 109.

The inverse orthogonal transformation unit 109 uses a method corresponding to the orthogonal transformation process of the orthogonal transformation unit 104 to perform an inverse orthogonal transformation of the transformation coefficient supplied from the inverse quantization unit 108. The method of inverse orthogonal transformation may be any method corresponding to the orthogonal transformation process of the orthogonal transformation unit 104. The output (restored residual) after the inverse orthogonal transformation is supplied to the computation unit 110.

The computation unit 110 adds the predicted image supplied from the intra prediction unit 114 or the motion prediction compensation unit 115 through the predicted image selection unit 116 to the inverse orthogonal transformation result supplied from the inverse orthogonal transformation unit 109, that is, the restored residual, and outputs the addition result as an image being decoded that is being decoded.

The image being decoded output by the computation unit 110 is supplied to the adaptive classification filter 111 or the frame memory 112.

Through an adaptive classification process, the adaptive classification filter 111 uses the ILF, that is, the filter that functions as all of the DF, the SAO, and the ALF, to execute an ILF process on the basis of the adaptive classification process.

The image being decoded is supplied from the computation unit 110 to the adaptive classification filter 111. In addition, the original image corresponding to the image being decoded is supplied from the rearrangement buffer 102 to the adaptive classification filter 111, and necessary encoding information is also supplied from each block of the encoding apparatus 11 to the adaptive classification filter 111.

The adaptive classification filter 111 uses the student image equivalent to the image being decoded from the computation unit 110 and the teacher image equivalent to the original image from the rearrangement buffer 102 and also uses the encoding information as necessary to perform learning for obtaining the tap coefficients of each class.

That is, for example, the adaptive classification filter 111 performs learning for obtaining the tap coefficients of each class by setting the image being decoded from the computation unit 110 as a student image, setting the original image from the rearrangement buffer 102 as a teacher image, and using the encoding information as necessary. The tap coefficients of each class are supplied as filter information from the adaptive classification filter 111 to the reversible encoding unit 106.

The adaptive classification filter 111 further sets the image being decoded from the computation unit 110 as a first image and uses the encoding information as necessary to execute the adaptive classification process (image conversion based on the adaptive classification process) using the tap coefficients of each class to thereby convert the image being decoded as a first image into an image after filtering as a second image equivalent to the original image (generate the image after filtering) and output the image.

The image after filtering output by the adaptive classification filter 111 is supplied to the frame memory 112.

Here, as described above, the adaptive classification filter 111 sets the image being decoded as a student image and sets the original image as a teacher image to perform learning. The adaptive classification filter 111 uses the tap coefficients obtained by the learning to execute the adaptive classification process of converting the image being decoded into the image after filtering. Therefore, the image after filtering obtained by the adaptive classification filter 111 is an image very close to the original image.

The frame memory 112 temporarily stores the image being decoded supplied from the computation unit 110 or the image after filtering supplied from the adaptive classification filter 111 as a locally decoded image. The decoded image stored in the frame memory 112 is supplied at a necessary timing to the selection unit 113 as a reference image used to generate a predicted image.

For example, of the image being decoded supplied from the computation unit 110 and the image after filtering supplied from the adaptive classification filter 111 as the decoded images stored in the frame memory 112, the image being decoded is used as a reference image of intra prediction. In addition, the image after filtering is used as a reference image of inter prediction.

The selection unit 113 selects a supply destination of the reference image supplied from the frame memory 112. For example, in a case of intra prediction by the intra prediction unit 114, the selection unit 113 supplies the reference image supplied from the frame memory 112 to the intra prediction unit 114. In addition, for example, in a case of inter prediction by the motion prediction compensation unit 115, the selection unit 113 supplies the reference image supplied from the frame memory 112 to the motion prediction compensation unit 115.

The intra prediction unit 114 uses the original image supplied from the rearrangement buffer 102 and the reference image supplied from the frame memory 112 through the selection unit 113 to perform intra prediction (prediction in screen) in which PU (Prediction Unit) is basically the processing unit. The intra prediction unit 114 selects an optimal intra prediction mode on the basis of a predetermined cost function and supplies a predicted image generated in the optimal intra prediction mode to the predicted image selection unit 116. The intra prediction unit 114 also appropriately supplies a prediction mode indicating the intra prediction mode selected based on the cost function as described above to the reversible encoding unit 106 and the like.

The motion prediction compensation unit 115 uses the original image supplied from the rearrangement buffer 102 and the reference image supplied from the frame memory 112 through the selection unit 113 to perform motion prediction (inter prediction) in which PU is basically the processing unit. The motion prediction compensation unit 115 further performs motion compensation according to a motion vector detected by motion prediction to generate a predicted image. The motion prediction compensation unit 115 uses a plurality of prepared inter prediction modes to perform inter prediction to generate the predicted image.

The motion prediction compensation unit 115 selects an optimal inter prediction mode on the basis of a predetermined cost function of the predicted image obtained for each of the plurality of inter prediction modes. The motion prediction compensation unit 115 further supplies the predicted image generated in the optimal inter prediction mode to the predicted image selection unit 116.

The motion prediction compensation unit 115 also supplies the prediction mode indicating the inter prediction mode selected based on the cost function, the motion information such as a motion vector necessary to decode the encoded data encoded in the inter prediction mode, and the like to the reversible encoding unit 106.

The predicted image selection unit 116 selects a supply source (intra prediction unit 114 or motion prediction compensation unit 115) of the predicted image to be supplied to the computation units 103 and 110 and supplies the predicted image supplied from the selected supply source to the computation units 103 and 110.

The rate control unit 117 controls the rate of the quantization operation of the quantization unit 105 on the basis of the code amount of the encoded data accumulated in the accumulation buffer 107 to prevent the occurrence of an overflow or an underflow. That is, the rate control unit 117 sets a target code amount of the encoded data and supplies the target code amount to the quantization unit 105 to prevent an overflow and an underflow of the accumulation buffer 107.

<Configuration Example of Adaptive Classification Filter 111>

FIG. 10 is a block diagram illustrating a configuration example of the adaptive classification filter 111 of FIG. 9.

In FIG. 10, the adaptive classification filter 111 includes an image conversion apparatus 131 and a learning apparatus 132.

The image being decoded is supplied from the computation unit 110 (FIG. 9) to the image conversion apparatus 131, and the tap coefficients of each class are supplied from the learning apparatus 132 to the image conversion apparatus 131. The encoding information is further supplied to the image conversion apparatus 131.

The image conversion apparatus 131 sets the image being decoded as a first image and performs image conversion based on the adaptive classification process using the tap coefficients of each class. In this way, the image conversion apparatus 131 converts the image being decoded as a first image into the image after filtering as a second image equivalent to the original image (generates the image after filtering) and supplies the image to the frame memory 112 (FIG. 9).

Note that the image conversion apparatus 131 uses the encoding information as necessary to perform the classification in the adaptive classification process.

The original image is supplied from the rearrangement buffer 102 (FIG. 9) to the learning apparatus 132, and the image being decoded is supplied from the computation unit 110 (FIG. 9) to the learning apparatus 132. The encoding information is further supplied to the learning apparatus 132.

The learning apparatus 132 sets the image being decoded as student data and sets the original image as teacher data to perform learning for obtaining the tap coefficients of each class (hereinafter, also referred to as tap coefficient learning).

The learning apparatus 132 further supplies, as filter information, the tap coefficients of each class obtained by the tap coefficient learning to the image conversion apparatus 131 and the reversible encoding unit 106 (FIG. 9).

Note that the learning apparatus 132 uses the encoding information as necessary to perform the classification in the tap coefficient learning.

<Configuration Example of Image Conversion Apparatus 131>

FIG. 11 is a block diagram illustrating a configuration example of the image conversion apparatus 131 of FIG. 10.

Note that in FIG. 11, the same reference signs are provided to the parts corresponding to the image conversion apparatus 20, and the description will be appropriately skipped.

In FIG. 11, the image conversion apparatus 131 includes the components from the tap selection unit 21 to the prediction computation unit 25.

Therefore, the configuration of the image conversion apparatus 131 is similar to the configuration of the image conversion apparatus 20 of FIG. 2.

However, the image being decoded is supplied as a first image to the tap selection units 21 and 22 in the image conversion apparatus 131, and the image after filtering is obtained as a second image in the prediction computation unit 25.

In addition, the encoded information is supplied to the classification unit 23 in the image conversion apparatus 131, and the classification unit 23 uses the class tap or the encoding information as necessary to perform the classification.

Furthermore, the tap coefficients of each class as filter information obtained by the learning apparatus 132 are supplied and stored in the coefficient acquisition unit 24 in the image conversion apparatus 131.

FIG. 12 is a diagram describing an example of the classification performed by the classification unit 23 of FIG. 11.

The classification unit 23 can use one or both the image feature value of the target pixel obtained from the pixel values of the pixels as a class tap of the image being decoded and the encoded information of the target pixel to perform the classification.

An example of the image feature value used for the classification includes an ADRC code (ADRC value) obtained by an ADRC process.

FIG. 12 is a diagram describing an example of a 1-bit ADRC process.

Here, the pixels of the image being decoded will be specified by providing pixel numbers, and a pixel with a pixel number i will also be referred to as pixel i.

In FIG. 12, pixel 0 is the target pixel in the image being decoded.

In addition, nine pixels in a cross shape around pixel 0 as the target pixel form a class tap.

More specifically, the class tap of pixel 0 as the target pixel includes a total of nine pixels 0 to 8, that is, pixel 0, pixel 1 and pixel 2 that are two pixels above and adjacent to pixel 0, pixel 3 and pixel 4 that are two pixels on the left and adjacent to pixel 0, pixel 5 and pixel 6 that are two pixels on the right and adjacent to pixel 0, and pixel 7 and pixel 8 that are two pixels below and adjacent to pixel 0.

The classification unit 23 detects a maximum value MAX and a minimum value MIN of the pixel values of pixels 0 to 8 included in the class tap and obtains an intermediate value (average value) of the maximum value MAX and the minimum value MIN as a threshold of quantization.

The classification unit 23 further compares the pixel values of pixels 0 to 8 with the threshold. The classification unit 23 quantizes the pixel value into quantization value 1 in a case where the pixel value is equal to or greater than the threshold and quantizes the pixel value into quantization value 0 in a case where the pixel value is not equal to or greater than the threshold.

The classification unit 23 then obtains an ADRC code that is a code in which the quantization values of the pixel values of pixels 0 to 8 are lined up in order of, for example, the pixel number.

Now, assuming that the classification unit 23 uses only the ADRC code as an image feature value to classify the target pixel (pixel 0) to simplify the description, the classification unit 23 classifies the target pixel into, for example, a class with a class code corresponding to the ADRC code.

Here, for example, assuming that the class code is expressed by decimal numbers, the class code corresponding to the ADRC code means a value obtained by assuming that the ADRC code indicates binary numbers and converting the ADRC code indicating the binary numbers into decimal numbers.

In this case, for example, if the ADRC code obtained by lining up the quantization values of the pixel values of pixels 0 to 8 in order of pixel numbers is 000011100, the class code corresponding to the ADRC code 000011100 is 28.

Note that although the 1-bit ADRC process is executed in FIG. 12 in which one value between the maximum value MAX and the minimum value MIN is the threshold of quantization, a plurality of values can be set as thresholds of quantization to execute an N-bit ADRC process of quantizing the pixel values of the pixels included in the class tap into a plurality of N bits.

In addition, the number of classes is $2^9$ classes in the case where the class tap includes nine pixels 0 to 8, and the classification is performed based on the 1-bit ADRC process. However, the number of classes obtained by the classification can be reduced.

For example, in the case of the classification based on the 1-bit ADRC process, the binary numbers as the ADRC code obtained by the 1-bit ADRC process and inverted binary numbers obtained by inverting the bits of the binary numbers can be classified into the same class to reduce the number of classes. In this way, the number of classes can be 1/2 of the number of classes in the case without the reduction.

For example, in the case of the classification based on the 1-bit ADRC process targeting the class tap including nine pixels 0 to 8, the number of classes can be reduced to reduce the number of classes to $2^{9-1}$.

Note that the ADRC is described in, for example, Japanese Patent No. 4240322.

Here, the class tap is not limited to the nine pixels in a cross shape around the target pixel as illustrated in FIG. 12.

That is, the class tap can be, for example, nine pixels in a square shape including 3×3 pixels around the target pixel and thirteen pixels in a diamond shape around the target pixel in which the horizontal direction and the vertical direction are the diagonals.

Furthermore, in addition to the target frame that is the frame (picture) of the target pixel, the class tap can also include pixels of frames other than the target frame, such as frames adjacent to the target pixel.

In addition, although the ADRC code obtained from the class tap is adopted as the image feature value used for the classification in FIG. 12, an image feature value other than the ADRC code, such as a dynamic range or a sum of absolute differences of pixel values of the pixels included in the class tap, can also be adopted.

In the case where the image feature value used for the classification is, for example, the dynamic range of the pixel values of the pixels included in the class tap, one or more thresholds can be used to apply threshold processing to the dynamic range to classify the target pixel into one of two or more classes, for example.

Furthermore, the classification can be performed by using, for example, a plurality of image feature values, such as an ADRC code and a dynamic range, instead of one image feature value, such as an ADRC code.

In addition, other than the image feature value of the target pixel, encoding information of the target pixel can be used to perform the classification.

Examples of the encoding information of the target pixel used for the classification include a block phase representing the position of the target pixel in a block, such as a CU and a PU, including the target pixel, a picture type of the picture including the target pixel, and the quantization parameter QP of the PU including the target pixel.

In the case where the block phase is adopted as the encoding information of the target pixel used for the classification, the target pixel can be classified on the basis of, for example, whether or not the target pixel is a pixel at the boundary of the block.

In addition, in the case where the picture type is adopted as the encoding information of the target pixel used for the classification, the target pixel can be classified, for example, depending on whether the picture including the target picture is an I picture, a P picture, or a B picture.

Furthermore, in the case where the quantization parameter QP is adopted as the encoding information of the target pixel used for the classification, the target pixel can be classified, for example, on the basis of the coarseness (fineness) of quantization.

In addition, other than using the image feature value or the encoding information, the classification can be performed by, for example, using both the image feature value and the encoding information.

<Configuration Example of Learning Apparatus 132>

FIG. 13 is a block diagram illustrating a configuration example of the learning apparatus 132 of FIG. 10.

Note that in FIG. 13, the same reference signs are provided to the parts corresponding to the cases of FIGS. 3 and 4, and the description will be appropriately skipped.

In FIG. 13, the learning apparatus 132 includes the learning unit 33. The learning unit 33 includes the tap selection units 41 and 42, the classification unit 43, the summing unit 44, and the coefficient calculation unit 45.

Therefore, the learning apparatus 132 of FIG. 13 is in common with the case of FIG. 3 in that the learning apparatus 132 includes the learning unit 33. Furthermore, the learning apparatus 132 is in common with the case of FIG. 4 in that the learning unit 33 includes the components from the tap selection unit 41 to the coefficient calculation unit 45.

However, the learning apparatus 132 of FIG. 13 is different from the case of FIG. 3 in that the learning apparatus 132 does not include the teacher data generation unit 31 and the student data generation unit 32.

Furthermore, the learning apparatus 132 of FIG. 13 is different from the case of FIG. 4 in that the encoding information is supplied to the classification unit 43 in the learning unit 33.

In the learning apparatus 132 of FIG. 13, the classification unit 43 uses the class tap or the encoding information as necessary to perform classification similar to the classification by the classification unit 23 of FIG. 11.

In addition, the learning apparatus 132 of FIG. 13 uses the image being decoded as student data and uses the original image corresponding to the image being decoded as teacher data to learn the tap coefficients.

Furthermore, in the learning apparatus 132 of FIG. 13, the tap coefficients of each class obtained by the coefficient calculation unit 45 are supplied to the image conversion apparatus 131 (FIG. 10), and the tap coefficients are supplied as filter information to the reversible encoding unit 106 (FIG. 9).

Note that the learning of the tap coefficients can be performed in parallel with the encoding of the original image or can be performed in advance independently of the encoding of the original image.

In the case where the learning of the tap coefficients is performed in advance independently of the encoding of the original image, original images of a plurality of categories can be used as teacher data, and the learning of the tap coefficients can be performed for each category. In addition, for example, the tap coefficients of the category that minimize a predetermined cost function among the tap coefficients of the plurality of categories can be used in the adaptive classification process in the image conversion apparatus 131 and can be transmitted as filter information from the reversible encoding unit 106.

<Encoding Process>

FIG. 14 is a flow chart describing an example of an encoding process of the encoding apparatus 11 in FIG. 9.

Note that the order of steps in the encoding process illustrated in FIG. 14 is an order for the convenience of description, and the steps of the actual encoding process are appropriately executed in parallel in a necessary order. This also similarly applies to encoding processes described later.

In the encoding apparatus 11, the learning apparatus 132 (FIG. 10) of the adaptive classification filter 111 sets the image being decoded supplied to the learning apparatus 132 as student data and sets the original image corresponding to the image being decoded as teacher data to appropriately perform the learning. The learning apparatus 132 then determines whether or not it is update timing of the tap coefficients as filter information in step S11.

Here, for example, the update timing of the filter information can be determined in advance, such as for every one or more frames (pictures), for every one or more sequences, and for every one or more slices.

In addition, for example, the time that a predetermined cost function does not become equal to or smaller than a threshold any more can be adopted as the update timing of the filter information.

If the learning apparatus 132 determines that it is not the update timing of the filter information in step S11, the process skips steps S12 and S13 and proceeds to step S14.

Furthermore, if the learning apparatus 132 determines that it is the update timing of the filter information in step S11, the process proceeds to step S12, and the image conversion apparatus 131 updates the tap coefficients as filter information to tap coefficients as latest filter information supplied from the learning apparatus 132.

That is, the image conversion apparatus 131 (FIG. 11) causes the coefficient acquisition unit 24 to store the latest tap coefficients supplied from the learning apparatus 132.

The process then proceeds from step S12 to step S13. The reversible encoding unit 106 sets the latest filter information supplied from the learning apparatus 132 as a transmission target, and the process proceeds to step S14. The latest filter information set as a transmission target is included in the encoded data and transmitted in step S27 described later.

In step S14 and subsequent steps, a prediction encoding process of the original image is executed.

That is, the A/D conversion unit 101 performs A/D conversion of the original image and supplies the original image to the rearrangement buffer in step S14, and the process proceeds to step S15.

In step S15, the rearrangement buffer 102 stores the original image from the A/D conversion unit 101 and rearranges and outputs the original image in order of encoding. The process proceeds to step S16.

In step S16, the intra prediction unit 114 executes an intra prediction process in an intra prediction mode, and the process proceeds to step S17. In step S17, the motion prediction compensation unit 115 executes an inter motion prediction process of performing motion prediction and motion compensation in an inter prediction mode, and the process proceeds to step S18.

In the intra prediction process of the intra prediction unit 114 and the inter motion prediction process of the motion prediction compensation unit 115, cost functions in various prediction modes are computed, and predicted images are generated.

In step S18, the predicted image selection unit 116 decides an optimal prediction mode on the basis of each cost function obtained by the intra prediction unit 114 and the motion prediction compensation unit 115. The predicted image selection unit 116 then selects a predicted image in the optimal prediction mode among the predicted images generated by the intra prediction unit 114 and the predicted images generated by the motion prediction compensation unit 115 and outputs the predicted image. The process proceeds from step S18 to step S19.

In step S19, the computation unit 103 computes the residual between the target image to be encoded that is the original image output by the rearrangement buffer 102 and the predicted image output by the predicted image selection unit 116 and supplies the residual to the orthogonal transformation unit 104. The process proceeds to step S20.

In step S20, the orthogonal transformation unit 104 performs an orthogonal transformation of the residual from the computation unit 103 and supplies transformation coefficients obtained as a result of the orthogonal transformation to the quantization unit 105. The process proceeds to step S21.

In step S21, the quantization unit 105 quantizes the transformation coefficients from the orthogonal transformation unit 104 and supplies quantization coefficients obtained by the quantization to the reversible encoding unit 106 and the inverse quantization unit 108. The process proceeds to step S22.

In step S22, the inverse quantization unit 108 performs inverse quantization of the quantization coefficients from the quantization unit 105 and supplies the transformation coefficients obtained as a result of the inverse quantization to the inverse orthogonal transformation unit 109. The process proceeds to step S23. In step S23, the inverse orthogonal transformation unit 109 performs an inverse orthogonal transformation of the transformation coefficients from the inverse quantization unit 108 and supplies the residual obtained as a result of the inverse orthogonal transformation to the computation unit 110. The process proceeds to step S24.

In step S24, the computation unit 110 adds the residual from the inverse orthogonal transformation unit 109 and the predicted image output by the predicted image selection unit 116 to generate the image being decoded corresponding to the original image as the target of the computation of residual in the computation unit 103. The computation unit 110 supplies the image being decoded to the adaptive classification filter 111 or the frame memory 112, and the process proceeds from step S24 to step S25.

In the case where the image being decoded is supplied from the computation unit 110 to the adaptive classification filter 111, the adaptive classification filter 111 applies the adaptive classification process (adaptive classification filtering process) as a process of ILF to the image being decoded from the computation unit 110 in step S25. The adaptive classification process can be applied to the image being decoded to obtain an image after filtering closer to the original image than in the case of using the ILF to filter the image being decoded.

The adaptive classification filter 111 supplies the image after filtering obtained in the adaptive classification process to the frame memory 112, and the process proceeds from step S25 to step S26.

In step S26, the frame memory 112 stores, as a decoded image, the image being decoded supplied from the computation unit 110 or the image after filtering supplied from the adaptive classification filter 111, and the process proceeds to step S27. The decoded image stored in the frame memory 112 is used as a reference image as a source of generating the predicted image in steps S17 and S18.

In step S27, the reversible encoding unit 106 encodes the quantization coefficients from the quantization unit 105. The reversible encoding unit 106 further encodes the encoding information, such as the quantization parameter QP used in the quantization by the quantization unit 105, the prediction mode obtained in the intra prediction process of the intra prediction unit 114, and the prediction mode and the motion information obtained in the inter motion prediction process of the motion prediction compensation unit 115, as necessary and includes the encoded information in the encoded data.

The reversible encoding unit 106 also encodes the filter information set as the transmission target in step S13 and includes the filter information in the encoded data. The reversible encoding unit 106 then supplies the encoded data to the accumulation buffer 107, and the process proceeds from step S27 to step S28.

In step S28, the accumulation buffer 107 accumulates the encoded data from the reversible encoding unit 106, and the process proceeds to step S29. The encoded data accumulated in the accumulation buffer 107 is appropriately read and transmitted.

In step S29, the rate control unit 117 controls the rate of the quantization operation of the quantization unit 105 on the basis of the code amount (generated code amount) of the encoded data accumulated in the accumulation buffer 107 to prevent the occurrence of an overflow or an underflow, and the encoding process ends.

FIG. 15 is a flow chart describing an example of the adaptive classification process executed in step S25 of FIG. 14.

In the image conversion apparatus 131 (FIG. 11) of the adaptive classification filter 111, the tap selection unit 21 selects, as a target pixel, a pixel that has not been the target pixel yet among the pixels of the image being decoded (block as an image being decoded) supplied from the computation unit 110 in step S41. The process proceeds to step S42.

In step S42, the tap selection units 21 and 22 select pixels to be a prediction tap and a class tap regarding the target pixel from the image being decoded supplied from the computation unit 110. The tap selection unit 21 then supplies the prediction tap to the prediction computation unit 25, and the tap selection unit 22 supplies the class tap to the classification unit 23.

Subsequently, the process proceeds from step S42 to step S43, and the classification unit 23 uses the class tap regarding the target pixel and the encoding information regarding the target pixel to classify the target pixel.

That is, in the classification, the classification unit 23 extracts (calculates), for example, image feature values, such as an ADRC code (ADRC value), from the pixels included in the class tap from the tap selection unit 22 in step S51, and the process proceeds to step S52.

In step S52, the classification unit 23 acquires necessary encoding information regarding the target pixel and converts the encoding information into an information code according to a predetermined rule. The process proceeds to step S53.

That is, in the case where the encoding information is, for example, a picture type indicating the I picture, the P picture, or the B picture, information codes 0, 1, and 2 are allocated, to the I picture, the P picture, and the B picture, respectively, for example. The picture type of the target pixel is converted into the information code according to the allocation.

In step S53, the classification unit 23 generates a class code indicating the class of the target pixel on the basis of the image feature values and the information code and supplies the class code to the coefficient acquisition unit 24. The classification of step S43 ends.

In the case where the image feature value is, for example, an ADRC code, the classification unit 23 adds the information code to upper bits of the ADRC code as the image feature value and uses the obtained numerical value to generate the class code indicating the class of the target pixel.

When the classification of step S43 is finished, the process proceeds to step S44, and the coefficient acquisition unit 24 acquires the tap coefficients of the class indicated by the class code supplied from the classification unit 23 and supplies the tap coefficients to the prediction computation unit 25. The process proceeds to step S45.

In step S45, the prediction computation unit 25 uses the prediction tap from the tap selection unit 21 and the tap coefficients from the coefficient acquisition unit 24 to perform the prediction computation of Formula (1). As a result, the prediction computation unit 25 obtains, as a pixel value of the image after filtering, a predicted value of the pixel value of the corresponding pixel of the original image corresponding to the target pixel. The process proceeds to step S46.

In step S46, the tap selection unit 21 determines whether or not there is a pixel that has not been a target pixel yet among the pixels of the image being decoded (block as the image being decoded) from the computation unit 110. If the tap selection unit 21 determines that there is a pixel that has not been a target pixel yet in step S46, the process returns to step S41, and thereafter, a similar process is repeated.

In addition, if the tap selection unit 21 determines that there is no pixel that has not been a target pixel yet in step S46, the process proceeds to step S47, and the prediction computation unit 25 supplies, to the frame memory 112 (FIG. 9), the image after filtering including the pixel values obtained for the image being decoded (block as the image being decoded) from the computation unit 110. The adaptive classification process then ends, and the process returns.

<First Configuration Example of Decoding Apparatus 12>

FIG. 16 is a block diagram illustrating a first configuration example of the decoding apparatus 12 of FIG. 1.

In FIG. 16, the decoding apparatus 12 includes an accumulation buffer 201, a reversible decoding unit 202, an inverse quantization unit 203, an inverse orthogonal transformation unit 204, a computation unit 205, an adaptive classification filter 206, a rearrangement buffer 207, and a D/A conversion unit 208. The decoding apparatus 12 also includes a frame memory 210, a selection unit 211, an intra prediction unit 212, a motion prediction compensation unit 213, and a selection unit 214.

The accumulation buffer 201 temporarily accumulates the encoded data transmitted from the encoding apparatus 11 and supplies the encoded data to the reversible decoding unit 202 at a predetermined timing.

The reversible decoding unit 202 acquires the encoded data from the accumulation buffer 201. Therefore, the reversible decoding unit 202 functions as a collection unit that collects the encoded data transmitted from the encoded apparatus 11, that is, the encoding information and the filter information included in the encoded data.

The reversible decoding unit 202 uses a system corresponding to the encoding system of the reversible encoding unit 106 of FIG. 9 to decode the encoded data acquired from the accumulation buffer 201.

The reversible decoding unit 202 then supplies the quantization coefficients obtained by decoding the encoded data to the inverse quantization unit 203.

In addition, in a case where the encoding information and the filter information are obtained by decoding the encoded data, the reversible decoding unit 202 supplies necessary encoding information to the intra prediction unit 212, the motion prediction compensation unit 213, and other necessary blocks.

The reversible decoding unit 202 further supplies the encoding information and the filter information to the adaptive classification filter 206.

The inverse quantization unit 203 uses a system corresponding to the quantization system of the quantization unit 105 of FIG. 9 to perform inverse quantization of the quantization coefficients from the reversible decoding unit 202 and supplies the transformation coefficients obtained by the inverse quantization to the inverse orthogonal transformation unit 204.

The inverse orthogonal transformation unit 204 uses a system corresponding to the orthogonal transformation system of the orthogonal transformation unit 104 of FIG. 9 to perform an inverse orthogonal transformation of the transformation coefficients supplied from the inverse quantization unit 203 and supplies the residual obtained as a result of the inverse orthogonal transformation to the computation unit 205.

The residual is supplied from the inverse orthogonal transformation unit 204 to the computation unit 205, and the predicted image is also supplied from the intra prediction unit 212 or the motion prediction compensation unit 213 to the computation unit 205 through the selection unit 214.

The computation unit 205 adds the residual from the inverse orthogonal transformation unit 204 and the predicted image from the selection unit 214 to generate the image being decoded and supplies the image being decoded to the adaptive classification unit 206 or to the rearrangement buffer 207 and the frame memory 210. For example, the image being decoded as a reference image used for intra prediction among the images being decoded is supplied to the rearrangement buffer 207 and the frame memory 210, and the other images being decoded are supplied to the adaptive classification filter 206.

Through the adaptive classification process, the adaptive classification filter 206 uses the ILF, that is, a filter that functions as all of the DF, the SAO, and the ALF, to execute the ILF process (process of ILF) based on the adaptive classification process as in the adaptive classification filter 111.

That is, the adaptive classification filter 206 sets the image being decoded from the computation unit 205 as a first image and uses the encoding information from the reversible decoding unit 202 as necessary to execute the adaptive classification process (image conversion through the adaptive classification process) using the tap coefficients of each class as filter information from the reversible decoding unit 202. In this way, the adaptive classification filter 206 converts the image being decoded as a first image into the image after filtering as a second image equivalent to the original image (generates the image after filtering) and outputs the image after filtering.

The image after filtering output by the adaptive classification filter 206 is an image similar to the image after filtering output by the adaptive classification filter 111, and the image is supplied to the rearrangement buffer 207 and the frame memory 210.

The rearrangement buffer 207 temporarily stores, as a decoded image, the image being decoded supplied from the computation unit 205 or the image after filtering supplied from the adaptive classification filter 206. The rearrangement buffer 207 rearranges the order of frames (pictures) of the decoded image from the order of encoding (decoding) to the order of display and supplies the decoded image to the D/A conversion unit 208.

The D/A conversion unit 208 performs D/A conversion of the decoded image supplied from the rearrangement buffer 207 and outputs and displays the decoded image on a display not illustrated.

The frame memory 210 temporarily stores, as a decoded image, the image being decoded supplied from the computation unit 205 or the image after filtering supplied from the adaptive classification filter 206. Furthermore, the frame memory 210 supplies the decoded image as a reference image used for generating the predicted image to the selection unit 211 at a predetermined timing or on the basis of an external request from the intra prediction unit 212, the motion prediction compensation unit 213, or the like.

The selection unit 211 selects the supply destination of the reference image supplied from the frame memory 210. In the case of decoding the image after intra encoding, the selection unit 211 supplies the reference image supplied from the frame memory 210 to the intra prediction unit 212. Furthermore, in the case of decoding the image after inter encoding, the selection unit 211 supplies the reference image supplied from the frame memory 210 to the motion prediction compensation unit 213.

The intra prediction unit 212 uses the reference image supplied from the frame memory 210 through the selection unit 211 to perform intra prediction in the intra prediction mode used by the intra prediction unit 114 of FIG. 9 according to the prediction mode included in the encoding information supplied from the reversible decoding unit 202. The intra prediction unit 212 then supplies the predicted image obtained by the intra prediction to the selection unit 214.

The motion prediction compensation unit 213 uses the reference image supplied from the frame memory 210 through the selection unit 211 to perform the inter prediction in the inter prediction mode used by the motion prediction compensation unit 115 of FIG. 9 according to the prediction mode included in the encoding information supplied from the reversible decoding unit 202. The inter prediction is performed by using the motion information or the like included in the encoding information supplied from the reversible decoding unit 202 as necessary.

The motion prediction compensation unit 213 supplies the predicted image obtained by the inter prediction to the selection unit 214.

The selection unit 214 selects the predicted image supplied from the intra prediction unit 212 or the predicted image supplied from the motion prediction compensation unit 213 and supplies the predicted image to the computation unit 205.

<Configuration Example of Adaptive Classification Filter 206>

FIG. 17 is a block diagram illustrating a configuration example of the adaptive classification filter 206 of FIG. 16.

In FIG. 17, the adaptive classification filter 206 includes an image conversion apparatus 231.

The image being decoded is supplied from the computation unit 205 (FIG. 16) to the image conversion apparatus 231, and the tap coefficients of each class as filter information and the encoding information are supplied from the reversible decoding unit 202 to the image conversion apparatus 231.

Similar to the image conversion apparatus 131 of FIG. 10, the image conversion apparatus 231 sets the image being decoded as a first image and performs image conversion through the adaptive classification process using the tap coefficients of each class to convert the image being decoded as a first image into the image after filtering as a second image equivalent to the original image (generates the image after filtering). The image conversion apparatus 231 supplies the image after filtering to the rearrangement buffer 207 and the frame memory 210 (FIG. 16).

Note that the image conversion apparatus 231 uses the encoding information as necessary to perform the classification in the adaptive classification process as in the image conversion apparatus 131 of FIG. 10.

<Configuration Example of Image Conversion Apparatus 231>

FIG. 18 is a block diagram illustrating a configuration example of the image conversion apparatus 231 of FIG. 17.

In FIG. 18, the image conversion apparatus 231 includes tap selection units 241 and 242, a classification unit 243, a coefficient acquisition unit 244, and a prediction computation unit 245.

The configurations of the components from the tap selection unit 241 to the prediction computation unit 245 are similar to the configurations of the components from the tap selection unit 21 to the prediction computation unit 25 included in the image conversion apparatus 131 (FIG. 11), respectively.

That is, the image being decoded is supplied from the computation unit 205 (FIG. 16) to the tap selection units 241 and 242.

The tap selection unit 241 sets the image being decoded from the computation unit 205 as a first image and sequentially selects the pixels of the image being decoded as target pixels.

The tap selection unit 241 further selects, from the image being decoded, the prediction tap in the same structure as the prediction tap selected by the tap selection unit 21 of FIG. 11 regarding the target pixel and supplies the prediction tap to the prediction computation unit 245.

The tap selection unit 242 sets the image being decoded from the computation unit 205 as a first image and selects, from the pixels of the image being decoded, the class tap in the same structure as the class tap selected by the tap selection unit 22 of FIG. 11 regarding the target pixel. The tap selection unit 242 supplies the class tap to the classification unit 243.

The class tap is supplied from the tap selection unit 242 to the classification unit 243, and the encoding information is also supplied from the reversible decoding unit 202 (FIG. 16) to the classification unit 243.

The classification unit 243 uses the class tap from the tap selection unit 242 and the encoding information from the reversible decoding unit 202 to perform the same classification as the classification by the classification unit 23 of FIG. 11 and supplies the class (class code indicating the class) of the target pixel to the coefficient acquisition unit 244.

The class of the target pixel is supplied from the classification unit 243 to the coefficient acquisition unit 244, and the tap coefficients of each class as filter information are also supplied from the reversible decoding unit 202 to the coefficient acquisition unit 244.

Once the tap coefficients of each class as filter information are supplied from the reversible decoding unit 202, the coefficient acquisition unit 244 updates the stored tap coefficients to the tap coefficients from the reversible decoding unit 202.

Furthermore, the coefficient acquisition unit 244 acquires, from the stored tap coefficients, the tap coefficients of the class of the target pixel from the classification unit 243 and supplies the tap coefficients to the prediction computation unit 245.

The prediction computation unit 245 uses the prediction tap from the tap selection unit 241 and the tap coefficients from the coefficient acquisition unit 244 to perform the prediction computation of Formula (1) and obtains and outputs, as a pixel value of the pixel of the image after filtering that is the second image, a predicted value of the pixel value of the corresponding pixel of the original image corresponding to the target pixel of the image being decoded.

<Decoding Process>

FIG. 19 is a flow chart describing an example of the decoding process of the decoding apparatus 12 in FIG. 16.
Note that the order of steps in the decoding process illustrated in FIG. 19 is an order for the convenience of description, and the steps of the actual decoding process are appropriately executed in parallel in a necessary order. This also similarly applies to encoding processes described later.
In the decoding process, the accumulation buffer 201 temporarily accumulates the encoded data transmitted from the encoding apparatus 11 and appropriately supplies the encoded data to the reversible decoding unit 202 in step S61. The process proceeds to step S62.
In step S62, the reversible decoding unit 202 collects and decodes the encoded data supplied from the accumulation buffer 201 and supplies the quantization coefficients obtained by the decoding to the inverse quantization unit 203.
Furthermore, in a case where the encoding information or the filter information is obtained by decoding the encoded data, the reversible decoding unit 202 supplies necessary encoding information to the intra prediction unit 212, the motion prediction compensation unit 213, and other necessary blocks.
The reversible decoding unit 202 further supplies the encoding information and the filter information to the adaptive classification filter 206.
Subsequently, the process proceeds from step S62 to step S63, and the adaptive classification filter 206 determines whether or not the filter information is supplied from the reversible decoding unit 202.
If the adaptive classification filter 206 determines that the filter information is not supplied in step S63, the process skips step S64 and proceeds to step S65.
In addition, if the adaptive classification filter 206 determines that the filter information is supplied in step S63, the process proceeds to step S64. The image conversion apparatus 231 (FIG. 18) of the adaptive classification filter 206 causes the coefficient acquisition unit 244 to acquire the tap coefficients of each class as filter information from the reversible decoding unit 202 and update the stored tap coefficients to the tap coefficients from the reversible decoding unit 202.
The process then proceeds from step S64 to step S65, and the inverse quantization unit 203 performs inverse quantization of the quantization coefficients from the reversible decoding unit 202 and supplies the transformation coefficients obtained as a result of the inverse quantization to the inverse orthogonal transformation unit 204. The process proceeds to step S66.
In step S66, the inverse orthogonal transformation unit 204 performs the inverse orthogonal transformation of the transformation coefficients from the inverse quantization unit 204 and supplies the residual obtained as a result of the inverse orthogonal transformation to the computation unit 205. The process proceeds to step S67.
In step S67, the intra prediction unit 212 or the motion prediction compensation unit 213 executes the prediction process of generating the predicted image by using the reference image supplied from the frame memory 210 through the selection unit 211 and the encoding information supplied from the reversible decoding unit 202. The intra prediction unit 212 or the motion prediction compensation unit 213 then supplies the predicted image obtained in the prediction process to the selection unit 214, and the process proceeds from step S67 to step S68.
In step S68, the selection unit 214 selects the predicted image supplied from the intra prediction unit 212 or the motion prediction compensation unit 213 and supplies the predicted image to the computation unit 205. The process proceeds to step S69.
In step S69, the computation unit 205 adds the residual from the inverse orthogonal transformation unit 204 and the predicted image from the selection unit 214 to generate the image being decoded. The computation unit 205 then supplies the image being decoded to the adaptive classification filter 206 or to the rearrangement buffer 207 and the frame memory 210, and the process proceeds from step S69 to step S70.
In the case where the image being decoded is supplied from the computation unit 205 to the adaptive classification filter 206, the adaptive classification filter 206 applies the adaptive classification process as a process of ILF to the image being decoded from the computation unit 205 in step S70. The adaptive classification process can be applied to the image being decoded to obtain an image after filtering closer to the original image than in the case of using the ILF to filter the image being decoded, as in the case of the encoding apparatus 11.
The adaptive classification filter 206 supplies the image after filtering obtained in the adaptive classification process to the rearrangement buffer 207 and the frame memory 210, and the process proceeds from step S70 to step S71.
In step S71, the rearrangement buffer 207 temporarily stores, as a decoded image, the image being decoded supplied from the computation unit 205 or the image after filtering supplied from the adaptive classification filter 206. The rearrangement buffer 207 further rearranges the stored decoded image in the order of display and supplies the decoded image to the D/A conversion unit 208. The process proceeds from step S71 to step S72.
In step S72, the D/A conversion unit 208 performs the D/A conversion of the decoded image from the rearrangement buffer 207, and the process proceeds to step S73. The decoded image after the D/A conversion is output to and displayed by a display not illustrated.

In step S73, the frame memory 210 stores, as a decoded image, the image being decoded supplied from the computation unit 205 or the image after filtering supplied from the adaptive classification filter 206, and the decoding process ends. The decoded image stored in the frame memory 210 is used as a reference image as a source of generating the predicted image in the prediction process of step S67.

FIG. 20 is a flow chart describing an example of the adaptive classification process executed in step S70 of FIG. 19.

In the image conversion apparatus 231 (FIG. 18) of the adaptive classification filter 206, the tap selection unit 241 selects, as a target pixel, a pixel that has not been the target pixel yet among the pixels of the image being decoded (block as the image being decoded) supplied from the computation unit 205 in step S81. The process proceeds to step S82.

In step S82, the tap selection units 241 and 242 select pixels to be a prediction tap and a class tap regarding the target pixel from the image being decoded supplied from the computation unit 205. The tap selection unit 241 then supplies the prediction tap to the prediction computation unit 245, and the tap selection unit 242 supplies the class tap to the classification unit 243.

Subsequently, the process proceeds from step S82 to step S83, and the classification unit 243 uses the class tap regarding the target pixel supplied from the tap selection unit 242 and the encoding information regarding the target pixel supplied from the reversible decoding unit 202 to classify the target pixel as in the case described in FIG. 15.

The classification unit 243 generates the class code indicating the class of the target pixel obtained by the classification and supplies the class code to the coefficient acquisition unit 244. The process proceeds from step S83 to step S84.

In step S84, the coefficient acquisition unit 244 acquires the tap coefficients of the class indicated by the class code supplied from the classification unit 243 and supplies the tap coefficients to the prediction computation unit 245. The process proceeds to step S85.

In step S85, the prediction computation unit 245 uses the prediction tap from the tap selection unit 241 and the tap coefficients from the coefficient acquisition unit 244 to perform the prediction computation of Formula (1). As a result, the prediction computation unit 245 obtains, as a pixel value of the image after filtering, the predicted value of the pixel value of the corresponding pixel of the original image corresponding to the target pixel. The process proceeds to step S86.

In step S86, the tap selection unit 241 determines whether or not there is a pixel that has not been the target pixel yet among the pixels of the image being decoded (block as the image being decoded) from the computation unit 205. If the tap selection unit 241 determines that there is a pixel that has not been the target pixel yet in step S86, the process returns to step S81, and thereafter, a similar process is repeated.

In addition, if the tap selection unit 241 determines that there is no pixel that has not been the target pixel yet in step S86, the process proceeds to step S87, and the prediction computation unit 245 supplies, to the rearrangement buffer 207 and the frame memory 210 (FIG. 9), the image after filtering including the pixel values obtained for the image being decoded (block as the image being decoded) from the computation unit 205. The adaptive classification process then ends, and the process returns.

As described, the ILF process is executed through the adaptive classification process in the encoding apparatus 11 and the decoding apparatus 12, and an image after filtering closer to the original image than the processing result of the ILF can be obtained. As a result, the S/N of the decoded image can be significantly improved. Furthermore, since the image after filtering close to the original image can be obtained, the residual is small. Even if the tap coefficient is included as an overhead in the encoded data, the compression efficiency can be significantly improved, particularly for a high-resolution original image with a large amount of data, such as so-called 4k and 8k.

Here, examples of the ILF include the DF, the SAO, and the ALF as described in FIG. 9 and the like.

The DF controls the filter strength on the basis of the quantization parameter QP or on the basis of whether or not the pixel is at the boundary of the block to thereby reduce the block noise (distortion).

However, there are only two types of filter strength that can be applied to the block in the DF. Furthermore, the unit of control of the filter strength is a slice in the DF, and the filer strength cannot be controlled for each pixel.

In the SAO, the filter mode of reducing noise around the edge or performing DC correction is switched in each CTU. The offset value is determined in each pixel to reduce ringing or perform DC correction.

However, switching the filter mode for each pixel is difficult in the SAO. Furthermore, the process of only one of the reduction of noise and the DC correction can be executed in the SAO, and both processes cannot be executed at the same time.

In the ALF, the direction of edge and the activity are used to perform classification into fifteen classes, and statistically optimal filter coefficients are used to execute a filtering process in each class.

However, the unit of filtering process is a unit of 4×4 pixels in the ALF. Therefore, the filter strength cannot be finely controlled for each pixel according to the waveform pattern around the pixel or the block phase. Furthermore, the number of classes to be classified is only fifteen classes in the ALF, and the filter strength also cannot be finely controlled from this perspective.

On the other hand, in the adaptive classification process, each pixel is classified into more classes than fifteen classes of the ALF, and statistically optimal tap coefficients obtained by learning are used to execute the filtering process of converting the image being decoded into the image after filtering. Therefore, the image quality (S/N) can be significantly improved compared to the existing ILF.

Particularly, in the adaptive classification process, the image feature value, such as the ADRC code that is an image feature value expressing the waveform pattern around the pixel and the dynamic range, and the encoding information, such as the quantization parameter QP, the picture type, and the block phase, are used to classify each pixel, and an image very close to the original image can be obtained as the image after filtering. As a result, the S/N and the compression efficiency of the image can be significantly improved in the prediction encoding compared not only to the case without using the ILF, but also compared to the case in which the ILF is used.

<Difference Between Adaptive Classification Process and ALF in ILF>

FIG. 21 is a diagram describing differences between the adaptive classification process and the ALF in the ILF regarding the classification and the filtering process.

In the ALF, the direction of edge and the activity are used to classify a small block of 4×4 pixels into one of fifteen classes.

Furthermore, in the ALF, the filter coefficients of the class of the small block of 4×4 pixels are used to apply the filtering process to the small block of 4×4 pixels.

In addition, in the filtering process of the ALF, point-symmetric filter coefficients are used around the filter coefficient for the target pixel as a target of the filtering process.

That is, the filter coefficients of the filtering process of the ALF include thirteen filter coefficients for a total of thirteen pixels including the target pixel, two pixels on the left and adjacent to the target pixel, two pixels on the right and adjacent to the target image, two pixels above and adjacent to the target pixel, two pixels below and adjacent to the target pixel, one pixel on the upper left and adjacent to the target pixel, one pixel on the lower left and adjacent to the target pixel, one pixel on the upper right and adjacent to the target pixel, and one pixel on the lower right and adjacent to the target pixel.

Furthermore, the filter coefficient for the farther one of the two pixels above and adjacent to the target pixel and the filter coefficient for the farther one of the two pixels below and adjacent to the target pixel are the same coefficient C0.

The filter coefficient for the pixel on the upper left and adjacent to the target pixel and the filter coefficient for the pixel on the lower right and adjacent to the target image are the same coefficient C1.

The filter coefficient for the closer one of the two pixels above and adjacent to the target pixel and the filter coefficient for the closer one of the two pixels below and adjacent to the target pixel are the same coefficient C2.

The filter coefficient for the pixel on the lower left and adjacent to the target pixel and the filter coefficient for the pixel on the upper right and adjacent to the target image are the same coefficient C3.

The filter coefficient for the farther one of the two pixels on the left and adjacent to the target pixel and the filter coefficient for the farther one of the two pixels on the right and adjacent to the target pixel are the same coefficient C4.

The filter coefficient for the closer one of the two pixels on the left and adjacent to the target pixel and the filter coefficient for the closer one of the two pixels on the right and adjacent to the target pixel are the same coefficient C5.

The filter coefficient for the target pixel is a coefficient C6.

As described, in the ALF, the small blocks of 4×4 pixels are classified into a small number of classes, that is, fifteen classes, and the filter coefficients of each class are point-symmetric. Therefore, the effect of the filtering process is significantly restricted.

Furthermore, the same filter coefficients are used in the filtering process of the small blocks of 4×4 pixels in the ALF, and the filtering process generates the same (average) effect for all the 4×4 pixels.

On other hand, the classification is performed for each pixel in the adaptive classification process, and therefore, the prediction computation of Formula (1) as a filtering process is also performed for each pixel.

In addition, the adaptive classification process is not restricted by the direction of edge or the activity, and the image feature value obtained from the class tap and the encoding information can be used to classify the target pixel on the basis of the waveform pattern around the target pixel or the position of the target pixel in the block.

Furthermore, the number of classes in the classification can be designed at an arbitrary number in consideration of the amount of data of the tap coefficients as well as the S/N and the compression efficiency of the decoded image (image after filtering) on the basis of the number of pixels in the class tap, the method of converting the encoding information into the information code (FIG. 15) used in the classification, and the like.

For example, assuming now that the class tap includes eight pixels, and the ADRC code indicating the waveform pattern obtained in the 1-bit ADRC process is used to perform the classification to simplify the description, the number of classes is 256 classes.

In addition, in the adaptive classification process, there is no restriction of point symmetry or restriction of thirteen filter coefficients as in the ALF regarding the tap coefficients used for the prediction computation of Formula (1) as a filtering process. Therefore, the tap coefficients that make the statistical errors of the image after filtering with respect to the original image smaller than in the ALF can be obtained by learning.

Furthermore, in the adaptive classification process, for example, the amount of data of the tap coefficients as well as the S/N and the compression efficiency of the decoded image can be taken into account to design the number of tap coefficients, that is, the number of pixels included in the prediction tap, and the structure of the prediction tap.

In addition, in the adaptive classification process, the prediction tap can include not only the frame of the target pixel, but also the pixels of the frames around the frame.

In this way, the classification and the prediction computation of Formula (1) as a filtering process are performed for each pixel in the adaptive classification process. Therefore, an effect of the filtering process suitable for each pixel can be generated in the pixel.

As a result, for example, the effect of NR (Noise Reduction) can be generated without reducing the edge or the texture too much, and ringing can be suppressed.

In addition, in the adaptive classification process, for example, the encoding information, such as the block phase, can be used to perform the classification, and the effect of NR can be adjusted on the basis of whether the target pixel is a pixel at the boundary of the block.

Furthermore, in the adaptive classification process, for example, the prediction tap can include not only the frame of the target pixel, but also the pixels of the frames around the frame. This can improve the degradation in the image quality caused by a motion, such as a motion blur.

FIG. 22 is a diagram describing differences in effects caused by the differences between the adaptive classification process and the ALF in the ILF regarding the classification and the filtering process.

In the ALF, the edge and the activity are used to perform the classification for each small block of 4×4 pixels, and the filter coefficients of the class obtained by the classification are used to execute the filtering process of each pixel of the small block of 4×4 pixels.

Therefore, in a case where an edge part and a flat part are mixed, it may not be possible to soften the edge part (reduce the details) while removing the noise of the flat part, or conversely, it may not be possible to sufficiently remove the noise of the flat part while maintaining the edge part.

Furthermore, in the ALF, the classification is not performed in consideration of the position (block phase) of the pixel in the encoding block (PU, CU, or the like) as a target of the encoding process (decoding process). Therefore, a filter coefficient for removing block distortion generated in a pixel at the boundary of the encoding block and a filter coefficient for removing noise other than the block distortion generated in a pixel at a position other than the boundary are not prepared as filter coefficients of different classes.

Therefore, a filtering process appropriate for removing the block distortion may not be applied to the pixel with the block distortion. Similarly, a filtering process appropriate for removing the noise may not be applied to the pixel with the noise other than the block distortion.

On the other hand, in the adaptive classification process, each pixel can be classified on the basis of the waveform pattern as an image feature value obtained from the class tap, and in each pixel, the tap coefficients of the class obtained by the classification can be used to perform the prediction computation of Formula (1) as a filtering process.

Therefore, for the pixel of the edge part, the edge part can be maintained (details can be left). For the pixel of the flat part, the noise can be sufficiently removed.

Furthermore, in the adaptive classification process, each pixel can be classified on the basis of the block phase as encoding information, and in each pixel, the tap coefficients of the class obtained by the classification can be used to perform the prediction computation of Formula (1) as a filtering process.

Therefore, a filtering process appropriate for removing the block distortion can be applied to the pixel with the block distortion, and a filtering process appropriate for removing the noise can be applied to the pixel with the noise other than the block distortion.

Here, the adaptive classification process is applied to the image being decoded handled in the encoding apparatus 11 and the decoding apparatus 12 in the present technique, and the block phase and the information regarding the encoding block necessary for specifying the block phase (for example, the size of the encoding block, the boundary of the encoding block, and the like) can be obtained in the encoding process or the decoding process.

Note that, for example, a technique is described in Japanese Patent No. 4770711, in which the image quality of a decoded image output by an MPEG decoder is increased through an adaptive classification process using a block phase. In the technique described in Japanese Patent No. 4770711, the adaptive classification process is applied to the decoded image output by the MPEG decoder outside of the MPEG decoder. Therefore, the information regarding the encoding block needs to be predetermined or needs to be detected in some way.

FIG. 23 is a diagram describing a difference between the pixels of the prediction tap and the class tap in the adaptive classification process and the pixels of the filter coefficients of the ALF in the ILF.

Thirteen filter coefficients of the ALF are filter coefficients for the pixels in the target frame that is a frame as a target of encoding now, and there are no filter coefficients for the pixels of other frames.

Therefore, only the pixels (pixel values of the pixels) in the target frame are used to execute the filtering process of ALF, and it is difficult to improve the degradation of image quality caused by a motion such as a motion blur.

On the other hand, in the adaptive classification process, the prediction tap and the class tap can include pixels of other frames (frame T-1 and frame T+1 in FIG. 23) in addition to the pixels in the target frame (frame T in FIG. 23).

That is, in the adaptive classification process, pixels of adjacent frames adjacent to the target frame at positions moved by a motion vector from the target pixel of the target frame, pixels around the pixels, and the like can be included in the prediction tap and the class tap.

Therefore, in the adaptive classification process, the class tap and the prediction tap can include the pixels of the target frame and the pixels of the adjacent frames to perform the classification and the prediction computation of Formula (1) as a filtering process. This can improve the degradation of the image quality caused by a motion such as a motion blur.

<Reduction of Tap Coefficients>

FIG. 24 is a diagram describing an example of a reduction method of reducing the tap coefficients obtained by learning.

The tap coefficients become an overhead of encoded data. Therefore, even if the tap coefficients can be obtained such that the image after filtering becomes an image very close to the original image, the improvement of the compression efficiency is hindered if the amount of data of the tap coefficients is large.

Therefore, the tap coefficients (the number of tap coefficients) obtained by learning can be reduced as necessary.

For example, in the case where the class tap includes nine pixels in a cross shape around the target pixel, and the classification is performed through the 1-bit ADRC process as illustrated in FIG. 12, each bit of the ADRC code with 1 in the most significant bit (ADRC result of target pixel) can be inverted to reduce the number of classes from $512=2^9$ classes to $256=2^8$ classes, for example. In the 256 classes after the reduction of the classes, the amount of data of the tap coefficients is reduced to 1/2 compared to the case where the ADRC code of the class tap (1-bit ADRC process of the class tap) of nine pixels is used as the class code.

Furthermore, classes with the same ADRC results in the pixels in a line-symmetric positional relationship in an up and down direction, a left and right direction, or a diagonal direction among the nine pixels in a cross shape included in the class tap can be integrated into one class to reduce the classes, and the number of classes can be 100 classes. In this case, the amount of data of the tap coefficients of 100 classes is approximately 39% of the amount of data of the tap coefficients of 256 classes.

Additionally, classes with the same ADRC results in the pixels in a point-symmetric positional relationship among the nine pixels in a cross shape included in the class tap can be integrated into one class to reduce the classes, and the number of classes can be 55 classes. In this case, the amount of data of the tap coefficients of 55 classes is approximately 21% of the amount of data of the tap coefficients of 256 classes.

Other than the reduction of the classes as described above, the tap coefficients can also be reduced by reducing the tap coefficients.

That is, for example, in a case where the prediction tap and the encoding block include the same pixels, the tap coefficients can be reduced on the basis of the block phase.

For example, in a case where the prediction tap and the encoding block include 4×4 pixels, the tap coefficients of upper left 2×2 pixels of the prediction tap can be rearranged according to the positional relationship between the upper left 2×2 pixels and upper right 2×2 pixels in a line-symmetric positional relationship in the left and right direction, the positional relationship between the upper left 2×2 pixels and lower left 2×2 pixels in a line-symmetric positional relationship in the up and down direction, and the positional relationship between the upper left 2×2 pixels and lower right 2×2 pixels in a point-symmetric positional relationship, and the rearranged tap coefficients can be adopted for the respective 2×2 pixels. In this case, sixteen tap coefficients for the 4×4 pixels included in the prediction tap can be reduced to four tap coefficients for the upper left 2×2 pixels.

In addition, tap coefficients of 4×2 pixels on the upper half of the prediction tap can be rearranged according to the positional relationship between the 4×2 pixels on the upper half and 4×2 pixels on the lower half in a line-symmetric positional relationship in the up and down direction, and the rearranged tap coefficients can be adopted for the tap coefficients of the 4×2 pixels on the lower half. In this case, sixteen tap coefficients for the 4×4 pixels included in the prediction tap can be reduced to eight tap coefficients for the 4×2 pixels on the upper half.

Additionally, the tap coefficients can be reduced by adopting the same tap coefficients for the pixels in the line-symmetric positional relationship in the left and right direction of the prediction tap or for the pixels in a line-symmetric positional relationship in the diagonal direction.

Note that if the tap coefficients are blindly reduced based on the block phase as described above, the S/N of the image after filtering obtained by the reduced tap coefficients decreases (errors with respect to the original image increase).

Therefore, in reducing the tap coefficients based on the block phase, the ADRC code used for the classification can be used to analyze the waveform patterns of the pixels included in the prediction tap, for example. In a case where the waveform patterns are spatially symmetric, the same tap coefficients can be adopted for the pixels of the prediction tap in a symmetric positional relationship.

That is, for example, in a case where the class tap includes 2×2 pixels, and the ADRC code indicating the ADRC results of the pixels of the class tap lined up in order of raster scan is 1001, it is assumed that the pixels are point-symmetric. The same tap coefficients can be adopted for the tap coefficients of the pixels of the prediction tap in the point-symmetric positional relationship.

<Second Configuration Example of Encoding Apparatus 11>

FIG. 25 is a block diagram illustrating a second configuration example of the encoding apparatus 11 of FIG. 1.

Note that in FIG. 25, the same reference signs are provided to the parts corresponding to the case of FIG. 9, and the description will be appropriately skipped.

In FIG. 25, the encoding apparatus 11 includes the components from the A/D conversion unit 101 to the computation unit 110, the components from the frame memory 112 to the rate control unit 117, an adaptive classification filter 261, an adaptive offset unit 262, and an adaptive loop filter 263.

Therefore, the encoding apparatus 11 of FIG. 25 is in common with the case of FIG. 9 in that the encoding apparatus 11 includes the components from the A/D conversion unit 101 to the computation unit 110 and the components from the frame memory 112 to the rate control unit 117.

However, the encoding apparatus 11 of FIG. 25 is different from the case of FIG. 9 in that the encoding apparatus 11 includes the adaptive classification filter 261 in place of the adaptive classification filter 111 and additionally includes the adaptive offset unit 262 and the adaptive loop filter 263.

The configuration of the adaptive classification filter 261 is similar to the configuration of the adaptive classification filter 111 of FIG. 9. However, the adaptive classification filter 261 is a filter that functions only as the DF instead of the entire ILF, that is, the DF, the SAO, and the ALF, through the adaptive classification process, and this is different from the adaptive classification filter 111 that functions as the entire ILF.

In FIG. 25, the image being decoded is supplied from the computation unit 110 to the adaptive classification filter 261.

The adaptive classification filter 261 applies the process of DF based on the adaptive classification process to the image being decoded from the computation unit 110 and supplies the image after filtering obtained as a result of the process to the adaptive offset unit 262.

The adaptive offset unit 262 applies the process of SAO to the image after filtering from the adaptive classification filter 261 and supplies the image after filtering to the adaptive loop filter 263.

The adaptive loop filter 263 applies the process of ALF to the image after filtering from the adaptive offset unit 262 and supplies the image after filtering to the frame memory 112.

In the encoding apparatus 11 of FIG. 25, the adaptive classification filter 261 executes the process of DF in the ILF through the adaptive classification process. The adaptive offset unit 262 then executes the process of SAO, and the adaptive loop filter 263 executes the process of ALF.

Note that in the adaptive offset unit 262, SAO information necessary for the process of SAO is supplied to the reversible encoding unit 106 and included in the encoded data.

Other than these points, the encoding apparatus 11 of FIG. 25 executes a process similar to the case of FIG. 9.

<Second Configuration Example of Decoding Apparatus 12>

FIG. 26 is a block diagram illustrating a second configuration example of the decoding apparatus 12 of FIG. 1.

Note that in FIG. 26, the same reference signs are provided to the parts corresponding to the case of FIG. 16, and the description will be appropriately skipped.

In FIG. 26, the decoding apparatus 12 includes the components from the accumulation buffer 201 to the computation unit 205, the rearrangement buffer 207, the D/A conversion unit 208, the components from the frame memory 210 to the selection unit 214, an adaptive classification filter 271, an adaptive offset unit 272, and an adaptive loop filter 273.

Therefore, the decoding apparatus 12 of FIG. 26 is in common with the case of FIG. 16 in that the decoding apparatus 12 includes the components from the accumulation buffer 201 to the communication unit 205, the rearrangement buffer 207, the D/A conversion unit 208, and the components from the frame memory 210 to the selection unit 214.

However, the decoding apparatus 12 of FIG. 26 is different from the case of FIG. 16 in that the decoding apparatus 12 includes the adaptive classification filter 271 in place of the adaptive classification filter 206 and additionally includes the adaptive offset unit 272 and the adaptive loop filter 273.

The configuration of the adaptive classification filter 271 is similar to the configuration of the adaptive classification filter 206 of FIG. 16. However, the adaptive classification filter 271 is a filter that functions only as the DF instead of the entire ILF, that is, the DF, the SAO, and the ALF, through the adaptive classification process, and this is different from the adaptive classification filter 206 that functions as the entire ILF.

In FIG. 26, the image being decoded is supplied from the computation unit 205 to the adaptive classification filter 271.

The adaptive classification filter 271 applies the process of DF based on the adaptive classification process to the image being decoded from the computation unit 205 and supplies the image after filtering obtained as a result of the process to the adaptive offset unit 272.

The adaptive offset unit 272 applies the process of SAO to the image after filtering from the adaptive classification filter 271 and supplies the image after filtering to the adaptive loop filter 273.

The adaptive loop filter 273 applies the process of ALF to the image after filtering from the adaptive offset unit 272 and supplies the image after filtering to the rearrangement buffer 207 and the frame memory 210.

The decoding apparatus 12 of FIG. 26 decodes the encoded data obtained by the encoding apparatus 11 of FIG. 25.

That is, the adaptive classification filter 271 executes the process of DF in the ILF through the adaptive classification process. The adaptive offset unit 272 then executes the process of SAO, and the adaptive loop filter 273 executes the process of ALF.

Note that SAO information included in the encoded data is supplied from the reversible decoding unit 202 to the adaptive offset unit 272. The adaptive offset unit 272 uses the SAO information from the reversible decoding unit 202 to execute the process of SAO.

Other than these points, the decoding apparatus 12 of FIG. 26 executes a process similar to the case of FIG. 16.

<Third Configuration Example of Encoding Apparatus 11>

FIG. 27 is a block diagram illustrating a third configuration example of the encoding apparatus 11 of FIG. 1.

Note that in FIG. 27, the same reference signs are provided to the parts corresponding to the case of FIG. 9 or FIG. 25, and the description will be appropriately skipped.

In FIG. 27, the encoding apparatus 11 includes the components from the A/D conversion unit 101 to the computation unit 110, the components from the frame memory 112 to the rate control unit 117, the adaptive loop filter 263, a deblocking filter 281, and an adaptive classification filter 282.

Therefore, the encoding apparatus 11 of FIG. 27 is in common with the case of FIG. 9 in that the encoding apparatus 11 includes the components from the A/D conversion unit 101 to the computation unit 110 and the components from the frame memory 112 to the rate control unit 117.

However, the encoding apparatus 11 of FIG. 27 is different from the case of FIG. 9 in that the encoding apparatus 11 includes the adaptive classification filter 282 in place of the adaptive classification filter 111, additionally includes the adaptive loop filter 263 of FIG. 25, and additionally includes the deblocking filter 281.

In FIG. 27, the image being decoded is supplied from the computation unit 110 to the deblocking filter 281.

The deblocking filter 281 applies the process of DF to the image being decoded from the computation unit 110 and supplies the image being decoded to the adaptive classification filter 282.

The configuration of the adaptive classification filter 282 is similar to the configuration of the adaptive classification filter 111 of FIG. 9. However, the adaptive classification filter 282 is a filter that functions only as the SAO instead of the entire ILF, that is, the DF, the SAO, and the ALF, through the adaptive classification process, and this is different from the adaptive classification filter 111 that functions as the entire ILF.

The adaptive classification filter 282 applies the process of SAO based on the adaptive classification process to the image being decoded from the deblocking filter 281 and supplies the image after filtering obtained as a result of the process to the adaptive loop filter 263.

In the encoding apparatus 11 of FIG. 27, the deblocking filter 281 executes the process of DF. Furthermore, the adaptive classification filter 282 executes the process of SAO in the ILF through the adaptive classification process. The adaptive loop filter 263 then executes the process of ALF.

Other than these points, the encoding apparatus 11 of FIG. 27 executes a process similar to the case of FIG. 9.

<Third Configuration Example of Decoding Apparatus 12>

FIG. 28 is a block diagram illustrating a third configuration example of the decoding apparatus 12 of FIG. 1.

Note that in FIG. 28, the same reference signs are provided to the parts corresponding to the case of FIG. 16 or FIG. 26, and the description will be appropriately skipped.

In FIG. 28, the decoding apparatus 12 includes the components from the accumulation buffer 201 to the computation unit 205, the rearrangement buffer 207, the D/A conversion unit 208, the components from the frame memory 210 to the selection unit 214, the adaptive loop filter 273, a deblocking filter 291, and an adaptive classification filter 292.

Therefore, the decoding apparatus 12 of FIG. 28 is in common with the case of FIG. 16 in that the decoding apparatus 12 includes the components from the accumulation buffer 201 to the computation unit 205, the rearrangement buffer 207, the D/A conversion unit 208, and the components from the frame memory 210 to the selection unit 214.

However, the decoding apparatus 12 of FIG. 28 is different from the case of FIG. 16 in that the decoding apparatus 12 includes the adaptive classification filter 292 in place of the adaptive classification filter 206, additionally includes the adaptive loop filter 273 of FIG. 26, and additionally includes the deblocking filter 291.

In FIG. 28, the image being decoded is supplied from the computation unit 205 to the deblocking filter 291.

The deblocking filter 291 applies the process of DF to the image being decoded from the computation unit 205 and supplies the image being decoded to the adaptive classification filter 291.

The configuration of the adaptive classification filter 292 is similar to the configuration of the adaptive classification filter 206 of FIG. 16. However, the adaptive classification filter 292 is a filter that functions only as the SAO instead of the entire ILF, that is, the DF, the SAO, and the ALF, through the adaptive classification process, and this is different from the adaptive classification filter 206 that functions as the entire ILF.

The adaptive classification filter 292 applies the process of SAO based on the adaptive classification process to the image being decoded from the deblocking filter 291 and supplies the image after filtering obtained as a result of the process to the adaptive loop filter 273.

The decoding apparatus 12 of FIG. 28 decodes the encoded data obtained by the encoding apparatus 11 of FIG. 27.

That is, the deblocking filter 291 executes the process of DF. Furthermore, the adaptive classification filter 292 executes the process of SAO in the ILF through the adaptive classification process. The adaptive loop filter 273 then executes the process of ALF.

Other than these points, the decoding apparatus 12 of FIG. 28 executes a process similar to the case of FIG. 16.

<Fourth Configuration Example of Encoding Apparatus 11>

FIG. 29 is a block diagram illustrating a fourth configuration example of the encoding apparatus 11 of FIG. 1.

Note that in FIG. 29, the same reference signs are provided to the parts corresponding to the case of FIG. 9, FIG. 25, or FIG. 27, and the description will be appropriately skipped.

In FIG. 29, the encoding apparatus 11 includes the components from the A/D conversion unit 101 to the computation unit 110, the components from the frame memory 112 to the rate control unit 117, the adaptive offset unit 262, the deblocking filter 281, and an adaptive classification filter 311.

Therefore, the encoding apparatus 11 of FIG. 29 is in common with the case of FIG. 9 in that the encoding apparatus 11 includes the components from the A/D conversion unit 101 to the computation unit 110 and the components from the frame memory 112 to the rate control unit 117.

However, the encoding apparatus 11 of FIG. 29 is different from the case of FIG. 9 in that the encoding apparatus 11 includes the adaptive classification filter 311 in place of the adaptive classification filter 111, additionally includes the adaptive offset unit 262 of FIG. 25, and additionally includes the deblocking filter 281 of FIG. 27.

In FIG. 29, the image being decoded after the process of SAO is supplied from the adaptive offset unit 262 to the adaptive classification filter 311.

The configuration of the adaptive classification filter 311 is similar to the configuration of the adaptive classification filter 111 of FIG. 9. However, the adaptive classification filter 311 is a filter that functions only as the ALF instead of the entire ILF, that is, the DF, the SAO, and the ALF, through the adaptive classification process, and this is different from the adaptive classification filter 111 that functions as the entire ILF.

The adaptive classification filter 311 applies the process of SAO based on the adaptive classification process to the image being decoded from the adaptive offset unit 262 and supplies the image after filtering obtained as a result of the process to the frame memory 112.

In the encoding apparatus 11 of FIG. 29, the deblocking filter 281 executes the process of DF. Furthermore, the adaptive offset unit 262 executes the process of SAO. The adaptive classification filter 311 then executes the process of ALF in the ILF through the adaptive classification process.

Note that in the adaptive offset unit 262, the SAO information necessary for the process of SAO is supplied to the reversible encoding unit 106 and included in the encoded data as described in FIG. 25.

Other than these points, the encoding apparatus 11 of FIG. 29 executes a process similar to the case of FIG. 9.

<Fourth Configuration Example of Decoding Apparatus 12>

FIG. 30 is a block diagram illustrating a fourth configuration example of the decoding apparatus 12 of FIG. 1.

Note that in FIG. 30, the same reference signs are provided to the parts corresponding to the case of FIG. 16, FIG. 26, or FIG. 28, and the description will be appropriately skipped.

In FIG. 30, the decoding apparatus 12 includes the components from the accumulation buffer 201 to the computation unit 205, the rearrangement buffer 207, the D/A conversion unit 208, the components from the frame memory 210 to the selection unit 214, the adaptive offset unit 272, the deblocking filter 291, and an adaptive classification filter 321.

Therefore, the decoding apparatus 12 of FIG. 30 is in common with the case of FIG. 16 in that the decoding apparatus 12 includes the components from the accumulation buffer 201 to the computation unit 205, the rearrangement buffer 207, the D/A conversion unit 208, and the components from the frame memory 210 to the selection unit 214.

However, the decoding apparatus 12 of FIG. 30 is different from the case of FIG. 16 in that the decoding apparatus 12 includes the adaptive classification filter 321 in place of the adaptive classification filter 206, additionally includes the adaptive offset unit 272 of FIG. 26, and additionally includes the deblocking filter 291 of FIG. 28.

In FIG. 30, the image being decoded after the process of SAO is supplied from the adaptive offset unit 272 to the adaptive classification filter 321.

The configuration of the adaptive classification filter 321 is similar to the configuration of the adaptive classification filter 206 of FIG. 16. However, the adaptive classification filter 321 is a filter that functions only as the ALF instead of the entire ILF, that is, the DF, the SAO, and the ALF, through the adaptive classification process, and this is different from the adaptive classification filter 206 that functions as the entire ILF.

The adaptive classification filter 321 applies the process of ALF based on the adaptive classification process to the image being decoded from the adaptive offset unit 272 and supplies the image after filtering obtained as a result of the process to the rearrangement buffer 297 and the frame memory 210.

The decoding apparatus 12 of FIG. 30 decodes the encoded data obtained by the encoding apparatus 11 of FIG. 29.

That is, the deblocking filter 291 executes the process of DF. Furthermore, the adaptive offset unit 272 executes the process of SAO. The adaptive classification filter 321 then executes the process of ALF in the ILF through the adaptive classification process.

Note that the SAO information included in the encoded data is supplied from the reversible decoding unit 202 to the adaptive offset unit 272. The adaptive offset unit 272 uses the SAO information from the reversible decoding unit 202 to execute the process of SAO.

Other than these points, the decoding apparatus 12 of FIG. 30 executes a process similar to the case of FIG. 16.

In this way, according to the adaptive classification process, the functions of the entire ILF can be realized, and the function of the DF, the SAO, or the ALF in the ILF can also be realized.

In addition, according to the adaptive classification process, the functions of two or more of the DF, the SAO, and the ALF can also be realized.

That is, according to the adaptive classification process, the functions of one or more of the DF, the SAO, and the ALF can be realized.

In addition, the adaptive classification process realizes the functions of one or more of the DF, the SAO, and the ALF, and an image with an excellent S/N, that is, an image very close to the original image, can be obtained as an image after filtering that serves as a reference image used for the prediction of the predicted image. Furthermore, the residual can be very small. Therefore, the S/N and the compression efficiency can be significantly improved.

Furthermore, the adaptive classification process realizes the functions of two or more of the DF, the SAO, and the ALF, and the computation cost can be reduced compared to the case of providing all of the DF, the SAO, and the ALF in the ILF.

Note that although an example of a case where the functions of the entire ILF are realized by the adaptive classification process will be described below, the functions of arbitrary one or two of the DF, the SAO, and the ALF can also be realized by the adaptive classification process in embodiments described below.

<Additional Class>

FIG. 31 is a diagram describing an overview of an additional class.

In the first to fourth configuration examples of the encoding apparatus 11 and the encoding apparatus 12, the class tap (image feature value of the class tap) obtained from the image being decoded and the encoding information included in the encoded data are used to perform the classification.

That is, in the first to fourth configuration examples of the encoding apparatus 11 and the decoding apparatus 12, the acquirable information that can be acquired by both the encoding apparatus 11 and the decoding apparatus 12 is used to perform the classification.

Incidentally, it is desirable to use the original image for the classification in the adaptive classification process from the viewpoint of obtaining an image after filtering closer to the original image. In addition, the classification can be performed by using, for example, encoding information, such as a target code amount, not included in the encoded data or information lost in encoding to perform classification that can obtain an image after filtering closer to the original image.

However, the original image, the encoding information not included in the encoded data, and the information lost in encoding are unacquirable information that cannot be acquired on the decoding apparatus 12 side. The classification using the unacquirable information can be performed by the encoding apparatus 11, but cannot be performed by the decoding apparatus 12.

Therefore, in a case where the encoding apparatus 11 uses the unacquirable information to perform the classification, the encoding apparatus 11 transmits, as an additional class, the class obtained by the classification. The decoding apparatus 12 then uses the additional class transmitted from the encoding apparatus 11 to execute the adaptive classification process.

That is, the encoding apparatus 11 uses the acquirable information, such as the class tap obtained from the image being decoded and the encoding information included in the encoded data, to perform the classification and obtains a normal class as a first class of the target pixel.

The encoding apparatus 11 further uses the unacquirable information, such as the original image and the encoding information not included in the encoded data, to perform the classification to obtain an additional class as a second class of the target pixel.

The encoding apparatus 11 then obtains a final class of the target pixel from the normal class and the additional class and performs prediction computation using tap coefficients of the final class to obtain a pixel value of a corresponding pixel of the image after filtering corresponding to the target pixel (predicted value of the pixel value of the pixel of the original image corresponding to the target pixel).

The encoding apparatus 11 also transmits the additional class (class code indicating the additional class) as filter information along with the tap coefficients.

The decoding apparatus 12 uses the acquirable information to perform the classification and obtains the normal class as the first class of the target pixel.

The decoding apparatus 12 further acquires the tap coefficients and the additional class as the second class of the target pixel transmitted from the encoding apparatus 11.

As in the encoding apparatus 11, the decoding apparatus 12 then obtains the final class of the target pixel from the normal class and the additional class and performs the prediction computation using the tap coefficient of the final class to obtain the pixel value of the corresponding pixel of the image after filtering corresponding to the target pixel.

In FIG. 31, the encoding apparatus 11 uses the class tap obtained from the image being decoded as acquirable information to classify the target pixel into the normal class indicated by an 8-bit class code.

The encoding apparatus 11 further uses a predetermined unit, such as a CU, a CTU, and a slice, including the corresponding pixel corresponding to the target pixel in the original image as unacquirable information to classify the target pixel into the additional class indicated by a 2-bit class code.

The encoding apparatus 11 further adds the class code indicating the 2-bit additional class to upper bits of the class code indicating the 8-bit normal class to obtain the class as a final class indicated by a 10-bit class code.

The encoding apparatus 11 then performs the prediction computation using the tap coefficients of the final class indicated by the 10-bit class code to obtain the pixel value of the corresponding pixel of the image after filtering corresponding to the target pixel.

The encoding apparatus 11 further transmits the tap coefficients of each final class represented by the 10-bit class code and the 2-bit (indicated by the class code) additional class.

Here, although the additional class (class code indicating the additional class) is added to the upper bits of the normal class (class code indicating the normal class) to generate the final class (class code indicating the final class) in the case described above, the method of generating the final class from the normal class and the additional class is not limited to this.

That is, although the method of generating the final class from the normal class and the additional class needs to be set in advance, an arbitrary method can be adopted. For example, the final class can be generated by adding the additional class to lower bits of the normal class.

The decoding apparatus 12 acquires the tap coefficients of each final class and the 2-bit additional class transmitted from the encoding apparatus 11.

The decoding apparatus 12 further uses the class tap obtained from the image being decoded as acquirable information to classify the target pixel into the 8-bit (indicated by the class code) normal class.

As in the encoding apparatus 11, the decoding apparatus 12 also obtains the 10-bit (indicated by the class code) final class from the 8-bit normal class and the 2-bit additional class transmitted from the encoding apparatus 11 and performs the prediction computation using the tap coefficients of the final class to obtain the pixel value of the corresponding pixel of the image after filtering corresponding to the target pixel.

Note that an example of the classification using the unacquirable information includes classification using the image feature value, such as an activity of original image, as unacquirable information.

For example, a sum of absolute differences of the pixel values of adjacent pixels among the pixels included in a predetermined area (hereinafter, also referred to as specific area), such as a CU, a CTU, and a slice, including the pixel of the original image corresponding to the target pixel can be normalized by the number of differences, and the obtained value can be adopted as the activity of the original image.

Other examples of the image feature value of the original image as unacquirable information include a difference between frames of pixel values of corresponding pixels of the original image corresponding to the target pixels, a DC difference between pixel values of a specific area of the original image and an area of the image being decoded corresponding to the specific area, and an image feature value of an image in which part of the band of the original image is reduced or emphasized.

Furthermore, other than the image feature value of the original image as unacquirable information, the encoding information can be used in the classification using the unacquirable information, regardless of whether the encoding information is acquirable information or unacquirable information.

That is, for example, the image feature value of the original image and the quantization parameter QP as unacquirable information can be used in the classification using the unacquirable information.

For example, in a case where the quantization parameter QP is large (quantization step is large) in an area of a texture with a large activity in the original image that is an image feature value of the original image, the amount of information of the original image lost in encoding (quantization) is large, and the image after filtering (decoded image) is significantly degraded.

On the other hand, in a case where the quantization parameter QP is small (quantization step is small) in a flat area with a small activity in the original image, the amount of information of the original image lost in encoding is small, and the image after filtering is not degraded much.

Therefore, in the case of the classification using the activity as an image feature value of the original image and the quantization parameter QP, the classification is performed according to the magnitude of the degradation of the image after filtering, and the tap coefficients appropriate for recovering the degradation can be used to perform the prediction computation.

<Fifth Configuration Example of Encoding Apparatus 11>

FIG. 32 is a block diagram illustrating a fifth configuration example of the encoding apparatus 11 of FIG. 1.

Note that in FIG. 32, the same reference signs are provided to the parts corresponding to the case of FIG. 9, and the description will be appropriately skipped.

In FIG. 32, the encoding apparatus 11 includes the components from the A/D conversion unit 101 to the computation unit 110, the components from the frame memory 112 to the rate control unit 117, and an adaptive classification filter 411.

Therefore, the encoding apparatus 11 of FIG. 32 is in common with the case of FIG. 9 in that the encoding apparatus 11 includes the components from the A/D conversion unit 101 to the computation unit 110 and the components from the frame memory 112 to the rate control unit 117.

However, the encoding apparatus 11 of FIG. 32 is different from the case of FIG. 9 in that the encoding apparatus 11 includes the adaptive classification filter 411 in place of the adaptive classification filter 111.

The adaptive classification filter 411 is a filter that functions as the ILF, that is, all of the DF, the SAO, and the ALF, through the adaptive classification process and is in common with the adaptive classification filter 111 in that the adaptive classification filter 411 executes the ILF process through the adaptive classification process.

However, the adaptive classification filter 411 is different from the adaptive classification filter 111 in that the adaptive classification filter 411 obtains the normal class as a first class in the classification using the acquirable information, obtains the additional class as a second class in the classification using the unacquirable information, and generates the final class from the normal class and the additional class.

The adaptive classification filter 411 is also different from the adaptive classification filter 111 in that the adaptive classification filter 411 supplies and transmits the additional class as filter information to the reversible encoding unit 106 along with the tap coefficients of each final class.

<Configuration Example of Adaptive Classification Filter 411>

FIG. 33 is a block diagram illustrating a configuration example of the adaptive classification filter 411 of FIG. 32.

In FIG. 33, the adaptive classification filter 411 includes an image conversion apparatus 431 and a learning apparatus 432.

The image being decoded is supplied from the computation unit 110 (FIG. 32) to the image conversion apparatus 431, and the tap coefficients of each final class are supplied from the learning apparatus 432 to the image conversion apparatus 431. The encoding information is further supplied to the image conversion apparatus 431. The original image is also supplied from the rearrangement buffer 102 (FIG. 32) to the image conversion apparatus 431.

The image conversion apparatus 431 sets the image being decoded as a first image and uses the tap coefficients of each final class to perform the image conversion through the adaptive classification process to thereby convert the image being decoded as a first image into the image after filtering as a second image equivalent to the original image (generate the image after filtering) and supply the image after filtering to the frame memory 112 (FIG. 32).

Note that the image conversion apparatus 431 uses the encoding information as necessary to perform the classification in the adaptive classification process.

The image conversion apparatus 431 also uses the image being decoded and the encoding information (encoding information included in the encoded data) as acquirable information to perform the classification to obtain the normal class as a first class and uses, for example, the original image or the like as unacquirable information to perform the classification to obtain the additional class as a second class. The image conversion apparatus 431 generates the final class from the normal class and the additional class.

The image conversion apparatus 431 further supplies the additional class as filter information to the reversible encoding unit 106 (FIG. 32).

The original image is supplied from the rearrangement buffer 102 (FIG. 32) to the learning apparatus 432, and the image being decoded is supplied from the computation unit 110 (FIG. 32) to the learning apparatus 432. The encoding information is further supplied to the learning apparatus 432.

The learning apparatus 432 sets the image being decoded as student data and sets the original image as teacher data to perform learning (tap coefficient learning) of obtaining the tap coefficients of each class (final class).

The learning apparatus 432 further sets the tap coefficients of each class obtained by the tap coefficient learning as filter information and supplies the filter information to the image conversion apparatus 431 and the reversible encoding unit 106 (FIG. 32) .

Note that the learning apparatus 432 uses the encoding information as necessary to perform the classification in the tap coefficient learning as in the image conversion apparatus 431.

In addition, the learning apparatus 432 obtains the normal class and the additional class to generate the final class from the normal class and the additional class in the classification as in the image conversion apparatus 431.

<Configuration Example of Image Conversion Apparatus 431>

FIG. 34 is a block diagram illustrating a configuration example of the image conversion apparatus 431 of FIG. 33.

Note that in FIG. 34, the same reference signs are provided to the parts corresponding to the image conversion apparatus 131 of FIG. 11, and the description will be appropriately skipped.

In FIG. 34, the image conversion apparatus 431 includes the tap selection units 21 and 22, the coefficient acquisition unit 24, the prediction computation unit 25, and a classification unit 441.

Therefore, the image conversion apparatus 431 is in common with the image conversion apparatus 131 of FIG. 11 in that the image conversion apparatus 431 includes the tap coefficient units 21 and 22, the coefficient acquisition unit 24, and the prediction computation unit 25.

However, the image conversion apparatus 431 is different from the image conversion apparatus 131 of FIG. 11 in that the image conversion apparatus 431 includes the classification unit 441 in place of the classification unit 23.

The class tap of the target pixel as acquirable information is supplied from the tap selection unit 22 to the classification unit 441. Furthermore, the encoding information as acquirable information is supplied to the classification unit 441, and the original image as unacquirable information is supplied from the rearrangement buffer 102 (FIG. 32) to the classification unit 441.

The classification unit 441 uses the class tap and the encoding information to perform the classification to obtain the normal class as a first class of the target pixel as in the classification unit 23 of FIG. 11.

The classification unit 441 further uses the original image to perform the classification and obtains the additional class as a second class of the target pixel.

The classification unit 441 then generates the final class of the target pixel from the normal class and the additional class and supplies the final class to the coefficient acquisition unit 24.

The classification unit 441 further supplies the additional class (class code indicating the addition class) as filter information to the reversible encoding unit 106.

Here, in FIG. 34, the coefficient acquisition unit 24 stores the tap coefficients of the final classes supplied from the learning apparatus 432. The coefficient acquisition unit 24 acquires the tap coefficients of the final class of the target pixel from the classification unit 541 among the tap coefficients of the final classes and supplies the tap coefficients to the prediction computation unit 25.

FIG. 35 is a block diagram illustrating a configuration example of the classification unit 441 of FIG. 34.

In FIG. 35, the classification 441 includes a first classification unit 451, a second classification unit 452, and a class code generation unit 453.

Similar to the classification unit 23 of FIG. 11, the first classification unit 451 uses the class tap and the encoding information to perform the classification, obtains the normal class as a first class of the target pixel, and supplies the normal class to the class code generation unit 453.

The second classification unit 452 uses the original image to execute threshold processing of, for example, the activity as an image feature value of the original image to perform the classification and obtains the additional class as a second class of the target pixel. The second classification unit 452 supplies the additional class to the class code generation unit 453 and supplies the additional class as filter information to the reversible encoding unit 106 (FIG. 32).

The class code generation unit 453 generates the final class of the target pixel from the normal class from the first classification unit 451 and the additional class from the second classification unit 452 and supplies the final class to the coefficient acquisition unit 24 (FIG. 34).

That is, for example, the class code generation unit 453 adds the class code indicating the additional class from the second classification unit 452 to the upper bits of the class code indicating the normal class from the first classification unit 451 to generate the class code indicating the final class of the target pixel.

<Configuration Example of Learning Apparatus 432>

FIG. 36 is a block diagram illustrating a configuration example of the learning apparatus 432 of FIG. 33.

Note that in FIG. 36, the same reference signs are provided to the parts corresponding to the case of FIG. 13, and the description will be appropriately skipped.

In FIG. 36, the learning apparatus 432 includes the learning unit 33. The learning unit 33 includes the tap selection units 41 and 42, the summing unit 44, the coefficient calculation unit 45, and a classification unit 461.

Therefore, the learning apparatus 432 of FIG. 36 is in common with the case of FIG. 13 in that the learning apparatus 432 includes the learning unit 33. The learning apparatus 432 is also in common with the case of FIG. 13 in that the learning unit 33 includes the tap selection units 41 and 42, the summing unit 44, and the coefficient calculation unit 45.

However, the learning apparatus 432 of FIG. 36 is different from the case of FIG. 13 in that the learning unit 33 is provided with the classification unit 461 in place of the classification unit 43.

The class tap of the target pixel as acquirable information is supplied from the tap selection unit 42 to the classification unit 461. Furthermore, the encoding information as acquirable information is supplied to the classification unit 461, and the original image as unacquirable information is supplied from the rearrangement buffer 102 (FIG. 32) to the classification unit 461.

The configuration of the classification unit 461 is similar to the configuration of the classification unit 441 of FIG. 35, and the classification unit 461 uses the class tap, the encoding information, and the original image to perform classification similar to the classification by the classification unit 441.

That is, similar to the classification unit 43 of FIG. 13, the classification unit 461 uses the class tap and the encoding information to perform the classification and obtains the normal class as a first class of the target pixel.

The classification unit 461 further uses the original image to perform the classification and obtains the additional class as a second class of the target pixel.

The classification unit 461 then generates the final class of the target pixel from the normal class and the additional class and supplies the final class to the summing unit 44.

Therefore, the summing unit 44 performs the summing for obtaining the normal equation for each final class, and the coefficient calculation unit 45 obtains the tap coefficients of each final class.

Here, the number of tap coefficients of each final class is a number equivalent to the product of the number of normal classes and the number of additional classes.

<Encoding Process>

FIG. 37 is a flow chart describing an example of the encoding process of the encoding apparatus 11 in FIG. 32.

In steps S111 to S129, the encoding apparatus 11 of FIG. 32 executes processes similar to steps S11 to S29 of FIG. 14, respectively.

Although the learning apparatus 432 (FIG. 33) of the adaptive classification filter 411 in the encoding apparatus 11 sets the image being decoded supplied to the learning apparatus 432 as student data and sets the original image corresponding to the image being decoded as teacher data to appropriately perform the tap coefficient learning as in the learning apparatus 132 of FIG. 10, the tap coefficients of each final class are generated as filter information in the tap coefficient learning. The tap coefficients of each final class are then regarded as the filter information updated in step S112 and regarded as the filter information set as a transmission target in step S113.

In addition, although the adaptive classification filter 411 applies the adaptive classification process as a process of ILF to the image being decoded from the computation unit 110 in step S125 as in step S25 of FIG. 14, the class tap, the encoding information, and the original image are used to perform the classification in the adaptive classification process, and the final class is generated from the normal class and the additional class.

Furthermore, the adaptive classification filter 411 uses the tap coefficients of each final class to execute the adaptive classification process.

The adaptive classification filter 411 also supplies the additional class obtained in the adaptive classification process as filter information to the reversible encoding unit 106.

Furthermore, although the reversible encoding unit 106 encodes the quantization coefficients, the encoding information, and the filter information in step S127 as in step S27 of FIG. 14, the filter information includes the additional class and the tap coefficients of each final class.

Therefore, the encoded data obtained by the reversible encoding unit 106 includes the quantization coefficients, the encoding information, the additional class as filter information, and the tap coefficients of each final class. In addition, the encoded data is appropriately read and transmitted from the accumulation buffer 107 in step S128 as described in step S28 of FIG. 14.

FIG. 38 is a flow chart describing an example of the adaptive classification process executed in step S125 of FIG. 37.

In steps S141 to S147, the image conversion apparatus 431 (FIG. 34) of the adaptive classification filter 411 executes processes similar to steps S41 to S47 of FIG. 15, respectively.

However, in the classification of the target pixel in step S143, the classification unit 441 (FIG. 34 and FIG. 35) uses the class tap, the encoding information, and the original image to classify the target pixel.

That is, in steps S151 to S153 of the classification, processes similar to steps S51 to S53 of FIG. 15 are executed, respectively.

Specifically, in step S151, the first classification unit 451 of the classification unit 441 (FIG. 35) extracts, for example, the image feature values, such as an ADRC code, from the pixels included in the class tap from the tap selection unit 22, and the process proceeds to step S152.

In step S152, the first classification unit 451 acquires necessary encoding information regarding the target pixel and converts the encoding information into the information code according to a predetermined rule. The process proceeds to step S153.

In step S153, the first classification unit 451 uses the image feature values and the information code to generate the class code indicating the normal class as a first class of the target pixel and supplies the class code to the class code generation unit 453. The process proceeds to step S154.

In step S154, the second classification unit 452 acquires, as information for the additional class as a second class, the specific area, such as a CU, a CTU, and a slice, including the corresponding pixel of the target pixel corresponding to the original image. The process proceeds to step S155.

Note that the information for the additional class can be acquired from the original image and also from the encoding information (regardless of whether or not the information is included in the encoded data).

In step S155, the second classification unit 452 extracts, for example, the image feature value, such as an activity, from the information for the additional class and applies threshold processing to the image feature value to obtain the class code indicating the additional class of the target pixel.

The second classification unit 452 then supplies the class code indicating the additional class to the class code generation unit 453, and the process proceeds from step S155 to step S156.

In step S156, the class code generation unit 453 uses the class code indicating the normal class from the first classification unit 451 and the class code indicating the additional class from the second classification unit 452 to generate the class code indicating the final class of the target pixel.

The class code generation unit 453 then supplies the final class (class code indicating the final code) of the target pixel to the coefficient acquisition unit 24 of the image conversion apparatus 431 (FIG. 34) and ends the classification of step S143.

Note that in step S147, the prediction computation unit 25 in the image conversion apparatus 431 (FIG. 34) of the adaptive classification filter 411 supplies, to the frame memory 112 (FIG. 32), the image after filtering including the pixel values obtained for the image being decoded from the computation unit 110 as in step S47 of FIG. 15, and the classification unit 441 (FIG. 34) supplies, as filter information, the additional class as a second class obtained in the classification of step S143 to the reversible encoding unit 106 (FIG. 32) .

<Fifth Configuration Example of Decoding Apparatus 12>

FIG. 39 is a block diagram illustrating a fifth configuration example of the decoding apparatus 12 of FIG. 1.

Note that in FIG. 39, the same reference signs are provided to the parts corresponding to the case of FIG. 16, and the description will be appropriately skipped.

In FIG. 39, the decoding apparatus 12 includes the components from the accumulation buffer 201 to the computation unit 205, the rearrangement buffer 207, the D/A conversion unit 208, the components from the frame memory 210 to the selection unit 214, and an adaptive classification filter 471.

Therefore, the decoding apparatus 12 of FIG. 39 is in common with the case of FIG. 16 in that the decoding apparatus 12 includes the components from the accumulation buffer 201 to the computation unit 205, the rearrangement buffer 207, the D/A conversion unit 208, and the components from the frame memory 210 to the selection unit 214.

However, the decoding apparatus 12 of FIG. 39 is different from the case of FIG. 16 in that the decoding apparatus 12 includes the adaptive classification filter 471 in place of the adaptive classification filter 206.

The decoding apparatus 12 of FIG. 39 decodes the encoded data transmitted from the encoding apparatus 11 of FIG. 32.

Therefore, the filter information supplied from the reversible decoding unit 202 to the adaptive classification filter 471 includes the tap coefficients of each final class and the additional class.

The adaptive classification filter 471 is in common with the adaptive classification filter 206 of FIG. 16 in that the adaptive classification filter 471 is a filter that functions as the ILF, that is, all of the DF, the SAO, and the ALF, through the adaptive classification process and executes the ILF process on the basis of the adaptive classification process.

However, the adaptive classification filter 471 is different from the adaptive classification filter 206 in that the adaptive classification filter 471 uses the acquirable information to perform the classification to obtain the normal class as a first class and uses the normal class and the additional class as filter information from the reversible decoding unit 202 to generate the final class.

<Configuration Example of Adaptive Classification Filter 471>

FIG. 40 is a block diagram illustrating a configuration example of the adaptive classification filter 471 of FIG. 39.

In FIG. 40, the adaptive classification filter 471 includes an image conversion apparatus 481.

The image being decoded is supplied from the computation unit 205 (FIG. 39) to the image conversion apparatus 481, and the tap coefficients of each final class and the additional class as filter information as well as the encoding information are supplied from the reversible decoding unit 202 to the image conversion apparatus 481.

Similar to the image conversion apparatus 431 of FIG. 33, the image conversion apparatus 481 sets the image being decoded as a first image and uses the tap coefficients of each class (final class) to perform the image conversion through the adaptive classification process to thereby convert the image being decoded as a first image into the image after filtering as a second image equivalent to the original image (generates the image after filtering). The image conversion apparatus 481 supplies the image after filtering to the rearrangement buffer 207 and the frame memory 210 (FIG. 39).

Note that, similar to the image conversion apparatus 431 of FIG. 33, the image conversion apparatus 481 uses the encoding information as necessary to perform the classification in the adaptive classification process.

In addition, the image conversion apparatus 481 uses the class tap and the encoding information (encoding information included in the encoded data) obtained from the image being decoded as acquirable information to perform the classification to thereby obtain the normal class as a first class of the target pixel. The image conversion apparatus 481 acquires, from the filter information from the reversible decoding unit 202 (FIG. 39), the additional class as a second class of the target pixel obtained by the classification using the original image as unacquirable information. The image conversion apparatus 481 uses the normal class and the additional class to generate the final class of the target pixel.

The image conversion apparatus 481 then uses the tap coefficients of the final class of the target pixel to perform the prediction computation of Formula (1).

<Configuration Example of Image Conversion Apparatus 481>

FIG. 41 is a block diagram illustrating a configuration example of the image conversion apparatus 481 of FIG. 40.

Note that in FIG. 41, the same reference signs are provided to the parts in common with the image conversion apparatus 231 of FIG. 18, and the description will be appropriately skipped.

In FIG. 41, the image conversion apparatus 481 includes the tap selection units 241 and 242, the coefficient acquisition unit 244, the prediction computation unit 245, and a classification unit 491.

Therefore, the image conversion apparatus 481 of FIG. 41 is in common with the image conversion apparatus 231 of FIG. 18 in that the image conversion apparatus 481 includes the tap selection units 241 and 242, the coefficient acquisition unit 244, and the prediction computation unit 245.

However, the image conversion apparatus 481 of FIG. 41 is different from the image conversion apparatus 231 of FIG. 18 in that the image conversion apparatus 481 includes the classification unit 491 in place of the classification unit 243.

The tap coefficients of the final classes (tap coefficients of the number of classes equivalent to the product of the number of normal classes and the number of additional classes) as filter information from the reversible decoding unit 202 (FIG. 39) are supplied to and stored in the coefficient acquisition unit 244.

In addition, the additional class as filter information from the reversible decoding unit 202 (FIG. 39) is supplied to the classification unit 491.

Furthermore, the encoding information from the reversible decoding unit 202 is supplied to the classification unit 491, and the class tap from the tap selection unit 242 is supplied to the classification unit 491.

Similar to the classification unit 243 of FIG. 18, the classification unit 491 uses the class tap and the encoding information to perform the classification and obtains the normal class as a first class of the target pixel.

The classification unit 491 further acquires the additional class as a second class of the target pixel among the additional classes as filter information from the reversible decoding unit 202 (FIG. 39).

The classification unit 491 then uses the normal class and the additional class of the target pixel to generate the final class of the target pixel and supplies the final class to the coefficient acquisition unit 244.

From the tap coefficients of the final classes as filter information from the reversible decoding unit 202, the coefficient acquisition unit 244 acquires the tap coefficients of the final class of the target pixel from the classification unit 491 and supplies the tap coefficients to the prediction computation unit 245.

FIG. 42 is a block diagram illustrating a configuration example of the classification unit 491 of FIG. 41.

In FIG. 42, the classification unit 491 includes a first classification unit 501 and a class code generation unit 502.

Similar to the classification unit 243 of FIG. 18, the first classification unit 501 uses the class tap from the tap selection unit 242 (FIG. 41) and the encoding information from the reversible decoding unit 202 (FIG. 39) to perform the classification to obtain the normal class as a first class of the target pixel and supplies the normal class to the class code generation unit 502.

The class code generation unit 502 acquires the additional class as a second class of the target pixel among the additional classes as filter information from the reversible decoding unit 202.

Similar to the class code generation unit 453 of FIG. 35, the class code generation unit 502 then uses the normal class from the first classification unit 501 and the additional class acquired from the filter information from the reversible decoding unit 202 to generate the final class of the target pixel and supplies the final class to the coefficient acquisition unit 244 (FIG. 41).

<Decoding Process>

FIG. 43 is a flow chart describing an example of the decoding process of the decoding apparatus 12 of FIG. 39.

In steps S161 to S173, the decoding apparatus 12 of FIG. 39 executes processes similar to steps S61 to S73 of FIG. 19, respectively.

In step S162, although the reversible decoding unit 202 decodes the encoded data, supplies the quantization coefficients obtained by the decoding to the inverse quantization unit 203, and supplies the encoding information and the filter information obtained by the decoding of the encoded data to the intra prediction unit 212, the motion prediction compensation unit 213, the adaptive classification filter 471, and other necessary blocks as in step S62 of FIG. 19, the filter information supplied to the adaptive classification filter 471 includes the tap coefficients of each final class and the additional class as a second class.

In addition, although the adaptive classification filter 471 applies the adaptive classification process as a process of ILF to the image being decoded from the computation unit 205 in step S170 as in step S70 of FIG. 19, the normal class as a first class is obtained by the classification using the class tap and the encoding information in the adaptive classification process, and the final class is generated from the normal class and the additional class as filter information from the reversible decoding unit 202 (FIG. 39).

FIG. 44 is a flow chart describing an example of the adaptive classification process executed in step S170 of FIG. 43.

In steps S181 to S187, the image conversion apparatus 481 (FIG. 41) of the adaptive classification filter 471 executes processes similar to steps S81 to S87 of FIG. 20, respectively.

However, in the classification of the target pixel in step S183, the classification unit 491 (FIG. 42) generates the final class of the target pixel from the additional class of the target pixel as filter information supplied from the reversible decoding unit 202 (FIG. 39).

That is, processes similar to steps S151 to S153 of FIG. 38 are executed in steps S191 to S193, respectively, in the classification.

Specifically, in step S191, the first classification unit 501 of the classification unit 491 (FIG. 42) extracts, for example, the image feature value, such as an ADRC code, from the pixels included in the class tap from the tap selection unit 242 (FIG. 41), and the process proceeds to step S192.

In step S192, the first classification unit 501 acquires necessary encoding information regarding the target pixel and converts the encoding information into the information code according to a predetermined rule. The process proceeds to step S193.

In step S193, the first classification unit 501 uses the image feature value and the information code to generate the class code indicating the normal class as a first class of the target pixel and supplies the class code to the class code generation unit 502. The process proceeds to step S194.

In step S194, the class code generation unit 502 acquires the additional class (class code indicating the additional class) as a second class of the target pixel among the additional classes as filter information supplied from the reversible decoding unit 202 (FIG. 39) .

The class code generation unit 502 further uses the normal class (class code indicating the normal class) from the first classification unit 501 and the additional class (class code indicating the additional class) of the target pixel acquired from the additional classes as filter information from the reversible decoding unit 202 to generate the final class (class code indicating the final class) of the target pixel.

The class code generation unit 502 then supplies the final class of the target pixel to the coefficient acquisition unit 244 (FIG. 41) and ends the classification of step S183.

<Reduction of Classes>

FIG. 45 is a diagram describing reduction of the final classes.

As described in FIG. 31, the final classes generated from the normal classes obtained by the classification using the acquirable information and the additional classes obtained by the classification using the unacquirable information can be adopted to perform the classification that can obtain the image after filtering closer to the original image to improve the S/N of the image after filtering (decoded image).

However, the number of classes increases in the case where the final classes generated from the normal classes and the additional classes are adopted compared to the case where only the normal classes are adopted. Therefore, the amount of data of the tap coefficients as filter information included in the encoded data increases, and the overhead of the encoded data increases.

In addition, the increase in the overhead of the encoded data hinders the improvement of the compression efficiency.

Therefore, in the case where the final classes generated from the normal classes and the additional classes are adopted, the final classes can be reduced.

In FIG. 45, the encoding apparatus 11 adds the class code indicating the 2-bit additional class obtained by the classification using the image feature value of the original image as unacquirable information to the upper bits of the class code indicating the 8-bit normal class obtained by the classification using the class tap obtained from the image being decoded as acquirable information to obtain, as the final class, the class indicated by the 10-bit class code as in FIG. 31.

The encoding apparatus 11 then reduces the 10-bit final class (indicated by the class code) to the 8-bit reduced class and uses the tap coefficients of the 8-bit reduced class to perform the prediction computation to obtain the pixel value of the corresponding pixel of the image after filtering corresponding to the target pixel.

The encoding apparatus 11 further transmits the tap coefficients of each 8-bit reduced class and the 2-bit additional class.

In addition, the encoding apparatus 11 generates the conversion table for converting the 10-bit final class into the 8-bit reduced class and also transmits the conversion table.

The final class can be reduced by, for example, the method described in FIG. 24. The final class can also be reduced by, for example, integrating the classes at short distances between the tap coefficients (sets of tap coefficients) into one class in a tap coefficient space including the tap coefficient as an axis of coordinates. The final classes can also be reduced by other arbitrary methods.

The decoding apparatus 12 acquires the tap coefficients of each reduced class, the 2-bit additional class, and the conversion table transmitted from the encoding apparatus 11.

Furthermore, the decoding apparatus 12 uses the class tap obtained from the image being decoded as acquirable information to classify the target pixel into the 8-bit normal class (indicated by the class code).

In addition, the decoding apparatus 12 uses the 8-bit normal class and the 2-bit additional class transmitted from the encoding apparatus 11 to obtain the 10-bit final class similar to the case of the encoding apparatus 11.

The decoding apparatus 12 then converts (reduces) the 10-bit final class into the reduced class according to the conversion table transmitted from the encoding apparatus 11 and uses the tap coefficients of the reduced class to perform the prediction computation to thereby obtain the pixel value of the corresponding pixel of the image after filtering corresponding to the target pixel.

In this way, the final classes can be reduced to suppress the increase in the overhead of the encoded data in the case of adopting the final classes generated from the normal classes and the additional classes.

Note that whether to transmit the tap coefficients of each final class and the additional class as filter information without reducing the final class as described in FIG. 31 or to transmit the tap coefficients of each reduced class, the additional class, and the conversion table after reducing the final class as described in FIG. 45 can be selected by, for example, switching an operation mode.

In addition, in the case of reducing the final classes to the reduced classes, the number of reduced classes can be appropriately decided by, for example, taking into account the degree of improvement of the S/N and the amount of increase in the overhead of the encoded data.

<Sixth Configuration Example of Encoding Apparatus 11>

FIG. 46 is a block diagram illustrating a sixth configuration example of the encoding apparatus 11 of FIG. 1.

Note that in FIG. 46, the same reference signs are provided to the parts corresponding to the case of FIG. 32, and the description will be appropriately skipped.

In FIG. 46, the encoding apparatus 11 includes the components from the A/D conversion unit 101 to the computation unit 110, the components from the frame memory 112 to the rate control unit 117, and an adaptive classification filter 511.

Therefore, the encoding apparatus 11 of FIG. 46 is in common with the case of FIG. 32 in that the encoding apparatus 11 includes the components from the A/D conversion unit 101 to the computation unit 110 and the components from the frame memory 112 to the rate control unit 117.

However, the encoding apparatus 11 of FIG. 46 is different from the case of FIG. 32 in that the encoding apparatus 11 includes the adaptive classification filter 511 in place of the adaptive classification filter 411.

The adaptive classification filter 511 is in common with the adaptive classification filter 411 in that the adaptive classification filter 511 is a filter that functions as the ILF, that is, all of the DF, the SAO, and the ALF, through the adaptive classification process and executes the ILF process on the basis of the adaptive classification process.

Furthermore, the adaptive classification filter 511 is in common with the adaptive classification filter 411 in that the adaptive classification filter 511 uses the acquirable information to perform the classification to obtain the normal class as a first class, uses the unacquirable information to perform the classification to obtain the additional class as a second class, and generates the final class from the normal class and the additional class.

In addition, the adaptive classification filter 511 is in common with the adaptive classification filter 411 in that the adaptive classification filter 511 supplies and transmits the additional class as filter information to the reversible encoding unit 106.

However, the adaptive classification filter 511 is different from the adaptive classification filter 411 in that the adaptive classification filter 511 converts (reduces) the final class into the reduced class as described in FIG. 45.

Furthermore, the adaptive classification filter 511 is different from the adaptive classification filter 411 in that the adaptive classification filter 511 supplies and transmits, as filter information, the conversion table for converting the final class into the reduced class to the reversible encoding unit 106 along with the tap coefficients of each reduced class.

<Configuration Example of Adaptive classification Filter 511>

FIG. 47 is a block diagram illustrating a configuration example of the adaptive classification filter 511 of FIG. 46.

In FIG. 47, the adaptive classification filter 511 includes an image conversion apparatus 531 and a learning apparatus 532.

The image being decoded is supplied from the computation unit 110 (FIG. 46) to the image conversion apparatus 531, and the tap coefficients of each reduced class and the conversion table are supplied from the learning apparatus 532 to the image conversion apparatus 532. Furthermore, the encoding information is supplied to the image conversion apparatus 531. In addition, the original image is supplied from the rearrangement buffer 102 (FIG. 46) to the image conversion apparatus 531.

The image conversion apparatus 531 sets the image being decoded as a first image and uses the tap coefficients of each reduced class to perform the image conversion through the adaptive classification process to thereby convert the image being decoded as a first image into the image after filtering as a second image equivalent to the original image (generates the image after filtering). The image conversion apparatus 531 supplies the image after filtering to the frame memory 112 (FIG. 46).

Note that the image conversion apparatus 531 uses the encoding information as necessary to perform the classification in the adaptive classification process.

In addition, the image conversion apparatus 531 performs the classification using the class tap and the encoding information (encoding information included in the encoded data) obtained from the image being decoded as acquirable information to obtain the normal class as a first class and performs the classification using, for example, the original image as unacquirable information to obtain the additional class as a second class. The image conversion apparatus 531 generates the final class from the normal class and the additional class.

The image conversion apparatus 531 further converts the final class into the reduced class according to the conversion table from the learning apparatus 532.

The image conversion apparatus 531 also supplies the additional class as filter information to the reversible encoding unit 106 (FIG. 46) .

The original image is supplied from the rearrangement buffer 102 (FIG. 46) to the learning apparatus 532, and the image being decoded is supplied from the computation unit 110 (FIG. 46) to the learning apparatus 532. Furthermore, the encoding information is supplied to the learning apparatus 532.

The learning apparatus 532 sets the image being decoded as student data and sets the original image as teacher data to perform tap coefficient learning for obtaining the tap coefficients of each reduced class.

The learning apparatus 532 further sets, as filter information, the tap coefficients of each reduced class obtained by the tap coefficient learning and supplies the tap coefficients to the image conversion apparatus 531 and the reversible encoding unit 106 (FIG. 46) .

Note that, similar to the image conversion apparatus 531, the learning apparatus 532 uses the encoding information as necessary to perform the classification in the tap coefficient learning.

In addition, similar to the image conversion apparatus 531, the learning apparatus 532 obtains the normal class and the additional class in the classification and generates the final class from the normal class and the additional class.

The learning apparatus 532 further generates the conversion table for converting the final class into the reduced class and converts the final class into the reduced class according to the conversion table.

The learning apparatus 532 also supplies the conversion table as filter information to the image conversion apparatus 531 and the reversible encoding unit 106 (FIG. 46).

<Configuration Example of Image Conversion Apparatus 531>

FIG. 48 is a block diagram illustrating a configuration example of the image conversion apparatus 531 is FIG. 47.

Note that in FIG. 48, the same reference signs are provided to the parts corresponding to the image conversion apparatus 431 of FIG. 34, and the description will be appropriately skipped.

In FIG. 48, the image conversion apparatus 531 includes the tap selection units 21 and 22, the coefficient acquisition unit 24, the prediction computation unit 25, and a classification unit 541.

Therefore, the image conversion apparatus 531 is in common with the image conversion apparatus 431 of FIG. 34 in that the image conversion apparatus 531 includes the tap selection units 21 and 22, the coefficient acquisition unit 24, and the prediction computation unit 25.

However, the image conversion apparatus 531 is different from the image conversion apparatus 431 of FIG. 34 in that the image conversion apparatus 531 includes the classification unit 541 in place of the classification unit 441.

The class tap of the target pixel as acquirable information is supplied from the tap selection unit 22 to the classification unit 541. Furthermore, the encoding information as acquirable information is supplied to the classification unit 541, and the original image as unacquirable information is supplied from the rearrangement buffer 102 (FIG. 46) to the classification unit 541. In addition, the conversion table is supplied from the learning apparatus 532 (FIG. 47) to the classification unit 541.

Similar to the classification unit 441 of FIG. 34, the classification unit 541 uses the class tap and the encoding information to perform the classification to obtain the normal class as a first class of the target pixel and uses the original image to perform the classification to obtain the additional class as a second class of the target pixel.

Furthermore, similar to the classification unit 441, the classification unit 541 supplies the additional class as filter information to the reversible encoding unit 106.

In addition, similar to the classification unit 441, the classification unit 541 generates the final class of the target pixel from the normal class and the additional class.

The classification unit 541 then converts the final class of the target pixel into the reduced class according to the conversion table from the learning apparatus 532 (FIG. 47) and supplies the reduced class to the coefficient acquisition unit 24.

Here, in FIG. 48, the coefficient acquisition unit 24 stores the tap coefficients of the reduced classes supplied from the learning apparatus 532 and acquires the tap coefficients of the reduced class from the classification unit 541 among the tap coefficients of the reduced classes. The coefficient acquisition unit 24 supplies the tap coefficients to the prediction computation unit 25.

FIG. 49 is a block diagram illustrating a configuration example of the classification unit 541 of FIG. 48.

Note that in FIG. 49, the same reference signs are provided to the parts corresponding to the classification unit 441 of FIG. 35, and the description will be appropriately skipped.

In FIG. 49, the classification unit 541 includes the components from the first classification unit 451 to the class code generation unit 453 and a class reduction unit 551.

Therefore, the classification unit 541 of FIG. 49 is in common with the classification unit 441 of FIG. 35 in that the classification unit 541 includes the components from the first classification unit 451 to the class code generation unit 453.

However, the classification unit 541 is different from the classification unit 441 in that the classification unit 541 additionally includes the class reduction unit 551.

The conversion table is supplied from the learning apparatus 532 (FIG. 47) to the class reduction unit 551, and the final class (class code indicating the final class) of the target pixel is supplied from the class code generation unit 453 to the class reduction unit 551.

The class reduction unit 551 converts the final class from the class code generation unit 453 into the reduced class (class code indicating the reduced class) according to the conversion table from the learning apparatus 532 and supplies the reduced class to the coefficient acquisition unit 24 (FIG. 48).

<Configuration Example of Learning Apparatus 532>

FIG. 50 is a block diagram illustrating a configuration example of the learning apparatus 532 of FIG. 47.

Note that in FIG. 50, the same reference signs are provided to the parts corresponding to the case of FIG. 36, and the description will be appropriately skipped.

In FIG. 50, the learning apparatus 532 includes the learning unit 33 and a conversion table generation unit 562. The learning unit 33 includes the tap selection units 41 and 42, the summing unit 44, the coefficient calculation unit 45, and the classification unit 461.

Therefore, the learning apparatus 532 of FIG. 50 is in common with the case of FIG. 36 in that the learning apparatus 532 includes the learning unit 33. Furthermore, the learning apparatus 532 is in common with the learning apparatus 432 of FIG. 36 in that the learning unit 33 includes the tap selection units 41 and 42, the summing unit 44, the coefficient calculation unit 45, and the classification unit 461.

However, the learning apparatus 532 is different from the learning apparatus 432 in that the learning apparatus 532 additionally includes the conversion table generation unit 562.

The tap coefficients of each final class are supplied from the coefficient calculation unit 45 to the conversion table generation unit 562.

The conversion table generation unit 562 reduces the final class (tap coefficients of each final class) from the coefficient calculation unit 45 into the reduced class (tap coefficients of each reduced class) and generates the conversion table for converting the final class into the reduced class.

The conversion table generation unit 562 then supplies the tap coefficients of each reduced class and the conversion table as filter information to the image conversion apparatus 531 (FIG. 47) and the reversible encoding unit 106 (FIG. 46).

Here, the number of final classes is a number of classes equivalent to the product of the number of normal classes and the number of additional classes, and for example, the number of reduced classes can be a number of classes equal to the number of normal classes. However, the number of reduced classes is not limited to, for example, the number of normal classes, the number of additional classes, or the like.

The final class can be reduced by, for example, the method described in FIG. 24. The final class can also be reduced by, for example, integrating the classes at short distances between the tap coefficients (sets of tap coefficients) into one class in the tap coefficient space including the tap coefficient as an axis of coordinates.

The final class can also be reduced on the basis of a standard for suppressing the decrease in the S/N of the second image corresponding to the original image (hereinafter, also referred to as S/N standard) obtained in the adaptive classification process using the tap coefficients of each reduced class after the reduction.

In the case where the final class is reduced on the basis of the S/N standard, the original image as teacher data and the image being decoded as student data are supplied to the conversion table generation unit 562, for example.

The conversion table generation unit 562 uses an arbitrary method to reduce the final class and uses the tap coefficients of each reduced class after the reduction to execute the adaptive classification process. In this way, the conversion table generation unit 562 obtains the second image predicting the original image as teacher data and obtains the S/N of the second image with the original image as a true value.

The conversion table generation unit 562 obtains the S/N of the second image for a plurality of reduction methods (including reduction with different numbers of reduced classes) and selects one of the reduction methods with the S/N equal to or greater than a threshold as a method of reducing the final class.

<Encoding Process>

FIG. 51 is a flow chart describing an example of the encoding process of the encoding apparatus 11 in FIG. 46.

In steps S211 to S229, the encoding apparatus 11 of FIG. 46 executes processes similar to steps S111 to S129 of FIG. 37, respectively.

However, although the learning apparatus 532 (FIG. 47) of the adaptive classification filter 511 in the encoding apparatus 11 sets the image being decoded supplied to the learning apparatus 532 as student data and sets the original image corresponding to the image being decoded as teach data to appropriately perform the tap coefficient learning as in the learning apparatus 432 of FIG. 33, the tap coefficients of each reduced class obtained by reducing the tap coefficients of each final class and the conversion table for converting the final class into the reduced class are generated as filter information in the tap coefficient learning. The tap coefficients of each reduced class and the conversion table are supplied as filter information to the image conversion apparatus 531 (FIG. 47) and the reversible encoding unit 106 (FIG. 46).

In addition, the filter information to be updated in step S212 and the filter information set as a transmission target in step S213 include the tap coefficients of each reduced class and the conversion table.

Furthermore, in step S225, the adaptive classification filter 511 applies the adaptive classification process as a process of ILF to the image being decoded from the computation unit 110 as in step S125 of FIG. 37.

That is, in the adaptive classification process of the adaptive classification filter 511, the normal class and the additional class are obtained by the classification using the class tap, the encoding information, and the original image, and the final class is generated from the normal class and the additional class as in the case of FIG. 37. The additional class is then supplied as filter information to the reversible encoding unit 106 as in the case of FIG. 37.

However, in the adaptive classification process of the adaptive classification filter 511, the final class is converted into the reduced class according to the conversion table from the learning apparatus 532 (FIG. 47), and the tap coefficients of each reduced class are used.

In addition, although the reversible encoding unit 106 encodes the quantization coefficients, the encoding information, and the filter information and includes them in the encoded data in step S227 as in step S127 of FIG. 37, the filter information includes the additional class, the tap coefficients of each reduced class, and the conversion table.

Therefore, the encoded data obtained by the reversible encoding unit 106 includes the quantization coefficients and the encoding information, as well as the additional class, the tap coefficients of each reduced class, and the conversion table as the filter information. The encoded data is then appropriately read and transmitted from the accumulation buffer 107 in step S228 as described in step S28 of FIG. 14.

FIG. 52 is a flow chart describing an example of the adaptive classification process executed in step S225 of FIG. 51.

In steps S241 to S247, the image conversion apparatus 531 (FIG. 48) of the adaptive classification filter 511 executes processes similar to steps S141 to S147 of FIG. 38, respectively.

However, in the classification of the target pixel of step S243, the classification unit 541 (FIG. 48 and FIG. 49) uses the class tap, the encoding information, and the original image to obtain the final class from the normal image and the additional class regarding the target pixel and reduces the final class to the reduced class.

That is, in the classification, the processes similar to steps S151 to S156 of FIG. 38 are executed in steps S251 to S256, respectively. As a result, the class code generation unit 453 of the classification unit 541 (FIG. 49) uses the normal class from the first classification unit 451 and the additional class from the second classification unit 452 to generate the final class of the target pixel and supplies the final class to the class reduction unit 551.

Subsequently, the process proceeds from step S256 to step S257, and the class reduction unit 551 converts the final class from the class code generation unit 453 to the reduced class according to the conversion table from the learning apparatus 532 (FIG. 47).

The class reduction unit 551 then supplies the reduced class to the coefficient acquisition unit 24 of the image conversion apparatus 531 (FIG. 48) and ends the classification of step S243.

<Sixth Configuration Example of Decoding Apparatus 12>

FIG. 53 is a block diagram illustrating a sixth configuration example of the decoding apparatus 12 in FIG. 1.

Note that in FIG. 53, the same reference signs are provided to the parts corresponding to the case of FIG. 39, and the description will be appropriately skipped.

In FIG. 53, the decoding apparatus 12 includes the components from the accumulation buffer 201 to the computation unit 205, the rearrangement buffer 207, the D/A conversion unit 208, the components from the frame memory 210 to the selection unit 214, and an adaptive classification filter 571.

Therefore, the decoding apparatus 12 of FIG. 53 is in common with the case of FIG. 39 in that the decoding apparatus 12 includes the components from the accumulation buffer 201 to the computation unit 205, the rearrangement buffer 207, the D/A conversion unit 208, and the components from the frame memory 210 to the selection unit 214.

However, the decoding apparatus 12 of FIG. 53 is different from the case of FIG. 39 in that the decoding apparatus 12 includes the adaptive classification filter 571 in place of the adaptive classification filter 471.

The decoding apparatus 12 of FIG. 53 decodes the encoded data transmitted from the encoding apparatus 11 of FIG. 46.

Therefore, the filter information supplied from the reversible decoding unit 202 to the adaptive classification filter 571 includes the tap coefficients of each reduced class, the conversion table, and the additional class.

The adaptive classification filter 571 is in common with the adaptive classification filter 471 of FIG. 39 in that the adaptive classification filter 571 is a filter that functions as the ILF, that is, all of the DF, the SAO, and the ALF, through the adaptive classification process and executes the ILF process on the basis of the adaptive classification process.

However, although the adaptive classification filter 571 uses the additional class as filter information from the reversible decoding unit 202 to generate the final class as in the adaptive classification filter 471, the adaptive classification filter 571 is different from the adaptive classification filter 471 in that the adaptive classification filter 571 converts the final class into the reduced class according to the conversion table as filter information from the reversible decoding unit 202.

<Configuration Example of Adaptive Classification Filter 571>

FIG. 54 is a block diagram illustrating a configuration example of the adaptive classification filter 571 of FIG. 53.

In FIG. 54, the adaptive classification filter 571 includes an image conversion apparatus 581.

The image being decoded is supplied from the computation unit 205 (FIG. 53) to the image conversion apparatus 581, and the tap coefficients of each reduced class, the conversion table, and the additional class as filter information as well as the encoding information are supplied from the reversible decoding unit 202 to the image conversion apparatus 581.

Similar to the image conversion apparatus 531 of FIG. 47, the image conversion apparatus 581 sets the image being decoded as a first image and performs the image conversion based on the adaptive classification process using the tap coefficients of each class (reduced class). In this way, the image conversion apparatus 581 converts the image being decoded as a first image into the image after filtering as a second image equivalent to the original image (generates the image after filtering) and supplies the image after filtering to the rearrangement buffer 207 and the frame memory 210 (FIG. 53).

Note that, similar to the image conversion apparatus 531 of FIG. 47, the image conversion apparatus 581 uses the encoding information as necessary to perform the classification in the adaptive classification process.

In addition, similar to the image conversion apparatus 481 (FIG. 40), the image conversion apparatus 581 performs the classification using the class tap to obtain the normal class as a first class of the target pixel and acquires the additional class as a second class of the target pixel from the filter information from the reversible decoding unit 202 (FIG. 53). The image conversion apparatus 581 generates the final class of the target pixel from the normal class and the additional class.

The image conversion apparatus 581 then converts the final class of the target pixel into the reduced class according to the conversion table as filter information from the reversible decoding unit 202 and uses the tap coefficients of the reduced class to perform the prediction computation of Formula (1).

<Configuration Example of Image Conversion Apparatus 581>

FIG. 55 is a block diagram illustrating a configuration example of the image conversion apparatus 581 of FIG. 54.

Note that in FIG. 55, the same reference signs are provided to the parts in common with the image conversion apparatus 481 of FIG. 41, and the description will be appropriately skipped.

In FIG. 55, the image conversion apparatus 581 includes the tap selection units 241 and 242, the coefficient acquisition unit 244, the prediction computation unit 245, and a classification unit 591.

Therefore, the image conversion apparatus 581 of FIG. 55 is in common with the image conversion apparatus 481 of FIG. 41 in that the image conversion apparatus 581 includes the tap selection units 241 and 242, the coefficient acquisition unit 244, and the prediction computation unit 245.

However, the image conversion apparatus 581 of FIG. 55 is different from the image conversion apparatus 481 of FIG. 41 in that the image conversion apparatus 581 includes the classification unit 591 in place of the classification unit 491.

The tap coefficients of the reduced classes (tap coefficients of the number of classes equivalent to the product of the number of normal classes and the number of additional classes) as filter information from the reversible decoding unit 202 (FIG. 53) are supplied to and stored in the coefficient acquisition unit 244.

In addition, the additional class and the conversion table as filter information from the reversible decoding unit 202 (FIG. 53) are supplied to the classification unit 591.

Furthermore, the encoding information from the reversible decoding unit 202 is supplied to the classification unit 591, and the class tap is supplied from the tap selection unit 242 to the classification unit 591.

Similar to the classification unit 491 of FIG. 41, the classification unit 591 uses the class tap and the encoding information to perform the classification to obtain the normal class as a first class of the target pixel.

Furthermore, similar to the classification unit 491 of FIG. 41, the classification unit 591 acquires the additional class as a second class of the target pixel among the additional classes as filter information from the reversible decoding unit 202 (FIG. 53).

The classification unit 591 then generates the final class of the target pixel from the normal class and the additional class as in the classification unit 491 of FIG. 41.

The classification unit 591 further converts the final class of the target pixel into the reduced class according to the conversion table as filter information from the reversible decoding unit 202 (FIG. 53) and supplies the reduced class to the coefficient acquisition unit 244.

The coefficient acquisition unit 244 acquires the tap coefficients of the reduced class of the target pixel from the classification unit 591 among the tap coefficients of the reduced classes as filter information from the reversible decoding unit 202 and supplies the tap coefficients to the prediction computation unit 245.

FIG. 56 is a block diagram illustrating a configuration example of the classification unit 591 of FIG. 55.

Note that in FIG. 56, the same reference signs are provided to the parts corresponding to the classification unit 491 of FIG. 42, and the description will be appropriately skipped.

In FIG. 56, the classification unit 591 includes the first classification unit 501, the class code generation unit 502, and a class reduction unit 601.

Therefore, the classification unit 591 of FIG. 56 is in common with the classification unit 491 of FIG. 42 in that the classification unit 591 includes the first classification unit 501 and the class code generation unit 502.

However, the classification unit 591 is different from the classification unit 491 in that the classification unit 591 additionally includes the class reduction unit 601.

The final class of the target pixel generated by the class code generation unit 502 and the conversion table included in the filter information from the reversible decoding unit 202 (FIG. 53) are supplied to the class reduction unit 601.

The class reduction unit 601 converts the final class of the target pixel from the class code generation unit 502 into the reduced class according to the conversion table from the reversible decoding unit 202 and supplies the reduced class to the coefficient acquisition unit 244 (FIG. 55).

<Decoding Process>

FIG. 57 is a flow chart describing an example of the decoding process of the decoding apparatus 12 in FIG. 53.

In steps S261 to S273, the decoding apparatus 12 of FIG. 53 executes processes similar to steps S161 to S173 of FIG. 43, respectively.

However, although the reversible decoding unit 202 decodes the encoded data, supplies the quantization coefficients obtained by the decoding to the inverse quantization unit 203, and supplies the encoding information and the filter information obtained by decoding the encoded data to the intra prediction unit 212, the motion prediction compensation unit 213, the adaptive classification filter 571, and other necessary blocks in step S262 as in step S162 of FIG. 43, the filter information supplied to the adaptive classification filter 571 may include the additional class as a second class, the tap coefficients of each reduced class, and the conversion table.

In addition, although the adaptive classification filter 571 applies the adaptive classification process as a process of ILF to the image being decoded from the computation unit 205 in step S270 as in step S170 of FIG. 43, the final class generated from the normal class obtained by the classification using the class tap and the encoding information and from the additional class as filter information from the reversible decoding unit 202 (FIG. 53) is converted into the reduced class according to the conversion table as filter information from the reversible decoding unit 202 in the adaptive classification process.

FIG. 58 is a flow chart describing an example of the adaptive classification process executed in step S270 of FIG. 57.

In steps S281 to S287, the image conversion apparatus 581 (FIG. 55) of the adaptive classification filter 571 executes processes similar to steps S181 to S187 of FIG. 44, respectively.

However, in the classification of the target pixel in step S283, the classification unit 591 (FIG. 56) generates the final pixel of the target pixel from the additional class of the target pixel as filter information supplied from the reversible decoding unit 202 (FIG. 53) and then converts the final class into the reduced class.

That is, in the classification, processes similar to steps S191 to S194 of FIG. 44 are executed in steps S291 to S294, respectively. As a result, the class code generation unit 502 of the classification unit 591 (FIG. 56) generates the final class of the target pixel from the normal class from the first classification unit 451 and the additional class as filter information from the reversible decoding unit 202 (FIG. 53) and supplies the final class to the class reduction unit 601.

Subsequently, the process proceeds from step S294 to step S295, and the class reduction unit 601 converts the final class of the target pixel from the class code generation unit 502 into the reduced class according to the conversion table from the reversible decoding unit 202 (FIG. 53).

The class reduction unit 601 then supplies the reduced class to the coefficient acquisition unit 244 of the image conversion apparatus 581 (FIG. 55) and ends the classification of step S283.

In this way, the number of classes increases in the case where the final class generated from the normal class and the additional class is adopted compared to the case where only the normal class is adopted, and this increases the overhead of the encoded data. However, the increase in the overhead of the encoded data can be suppressed by converting (reducing) the final class into the reduced class.

<Classification Using Classification Coefficients>

FIG. 59 is a diagram describing an overview of learning of classification coefficients.

In the case of obtaining the image feature value, such as an ADRC code, from the class tap and using the image feature value to classify the target pixel, the classification may not be performed so as to improve the S/N of the second image obtained in the adaptive classification process.

On the other hand, in the classification using classification coefficients, the classification is performed so as to further improve the S/N of the second image obtained in the adaptive classification process.

The classification coefficients are obtained by learning for minimizing statistical errors along with the tap coefficients.

FIG. 59 illustrates an overview of the learning of the classification coefficients.

The classification coefficients are learned, so to say, hierarchically. A first tier will be referred to as a 0th tier.

In the learning of each tier, classification coefficients for subclassifying the target pixels into one of a plurality of subclasses are obtained.

Now, assuming that the target pixel is classified into, for example, one of two subclasses 0 and 1 in the subclassification, classification coefficients cc(n,k) (sets of classification coefficients) of $2^n$ classes (pieces) are obtained (k=0, 1, ..., $2^n$-1) in the learning of an nth tier.

Here, although the classification coefficients are obtained by learning for minimizing the statistical errors along with the tap coefficients, only the learning of the classification coefficients will be focused here to simplify the description.

Now, it is assumed that the class tap includes M pixels (pixel values of the pixels), and the pixel value of an nth pixel of the M pixels will be represented by $x_m$.

Furthermore, it is assumed that the classification coefficients (set of classification coefficients) of one class (piece) include the same number of coefficients as the number of pixels M of the class tap, and an mth coefficient (classification coefficient) of the classification coefficients of one class will be represented by $w_m$.

In addition, the predicted value of the prediction error (hereinafter, also referred to as prediction error predicted value) of the predicted value of the pixel value of a pixel in the teacher image as teacher data obtained in the adaptive classification process of the student image as student data will be represented by y.

Furthermore, it is assumed that the prediction error predicted value y is obtained by, for example, predetermined computation, such as product-sum computation represented by a linear first-order equation $y=w_1x_1+w_2x_2+...+w_Mx_M$ using the class tap $x_m$ and the classification coefficient $w_m$. Here, for example, the equation $y=w_1x_1+w_2x_2+...+w_Mx_M$ representing the predetermined computation will also be referred to as a prediction error prediction equation.

In the learning of the classification coefficients, learning of the 0th tier is performed first.

In the learning of the 0th tier, for example, all the pixels of the student image are set as a pixel group (0,0) of the 0th tier, and the pixel value of each pixel of the pixel group (0,0) is set as student data. The prediction error of the predicted value of the pixel of the teacher image corresponding to each pixel of the pixel group (0,0) obtained in the adaptive classification process of each pixel of the pixel group (0,0) is set as teacher data. The classification coefficients $w_m$ (set of classification coefficients) that statistically minimize the prediction errors of the prediction error predicted values y are obtained as classification coefficients cc(0,0) of the 0th tier.

Furthermore, the classification coefficient cc(0,0) of the 0th tier is used for each pixel of the pixel group (0,0) of the 0th tier to obtain the prediction error predicted value y according to the prediction error prediction equation.

In addition, for example, the pixels with the prediction error predicted value y equal to or greater than 0 among the pixels of the pixel group (0,0) of the 0th tier are subclassified into a subclass 0. Furthermore, for example, the pixels with the prediction error predicted value y smaller than 0 among the pixels of the pixel group (0,0) of the 0th tier are subclassified into a subclass 1, and the learning of the 0th tier ends.

Note that in another example of the subclassification, the pixels with the absolute value of the prediction error predicted value y smaller than a threshold can be classified into the subclass 0, and the pixels with the absolute value of the predicted error predicted value y equal to or greater than the threshold can be classified into the subclass 1.

In addition, in the subclassification, the pixel can be classified into one of three or more subclasses according to the absolute value of the prediction error predicted value y of the pixel.

Here, a pixel group including the pixels subclassified into the subclass 0 in the pixel group (0,0) of the 0th tier will be referred to as a pixel group (0,0,0), and a pixel group including the pixels subclassified into the subclass 1 will be referred to as a pixel group (0,0,1).

In addition, a pixel group (n,k,s) represents a pixel group classified into a subclass s through the subclassification using classification coefficients cc(n,k) of the nth tier in a pixel group (n,k) of the nth tier.

The pixel group (n,k) represents a (k+1)th pixel group of the nth tier. Here, k takes $2^n$ values of 0, 1, ..., $2^n$-1, and therefore, there are $2^n$ pixel groups (n,k) in the nth tier (before the subclassification).

After the end of the learning of the 0th tier, learning of the next tier, that is, a first tier, is performed as necessary.

In the learning of the first tier, $2^1$ pixel groups (0,0,0) and (0,0,1) obtained by the subclassification in the learning of the 0th tier are set as $2^n$ pixel groups (n,k) of the first tier, that is, $2^1$ pixel groups (1,0) and (1,1) of the first tier, and a process similar to the learning of the 0th tier is executed.

That is, for the first pixel group (1,0) of the first tier, the pixel group (1,0) is set as student data, and the prediction error of the predicted value of the pixel value of the pixel in the teacher image corresponding to each pixel of the pixel group (1,0) obtained in the adaptive classification process for each pixel of the pixel group (1,0) is set as teacher data. Classification coefficients $w_m$ that statistically minimize the prediction errors of the prediction error predicted values y are obtained as first (class) classification coefficients cc(1,0) of the first tier.

Furthermore, for each pixel of the pixel group (1,0) of the first tier, the classification coefficient cc(1,0) of the first tier is used to obtain the prediction error predicted value y according to the prediction error prediction equation.

In addition, the pixels with the prediction error predicted value y equal to or greater than 0 among the pixels of the pixel group (1,0) of the first tier are subclassified into a pixel group (1,0,0) of a subclass 0, and the pixels with the prediction error predicted value y smaller than 0 are subclassified into a pixel group (1,0,1) of a subclass 1.

Similarly, for the second pixel group (1,1) of the first tier, the pixel group (1,1) is set as student data, and the prediction error of the predicted value of the pixel value of the pixel in the teacher image corresponding to each pixel of the pixel group (1,1) obtained in the adaptive classification process for each pixel of the pixel group (1,1) is set as teacher data. Classification coefficients $w_m$ that statistically minimize the prediction errors of the prediction error predicted values y are obtained as second (class) classification coefficients cc(1,1) of the first tier.

Furthermore, for each pixel of the pixel group (1,1) of the first tier, the classification coefficient cc(1,1) of the first tier is used to obtain the prediction error predicted value y according to the prediction error prediction equation.

In addition, the pixels with the prediction error predicted value y equal to or greater than 0 among the pixels of the pixel group (1,1) of the first tier are subclassified into a pixel group (1,1,0) of a subclass 0, and the pixels with the prediction error predicted value y smaller than 0 are subclassified into a pixel group (1,1,1) of a subclass 1.

After the end of the learning of the first tier, learning of the next tier, that is, a second tier, is performed as necessary.

In the learning of the second tier, $2^2$ pixel groups (1,0,0), (1,0,1), (1,1,0), and (1,1,1) obtained by the subclassification in the learning of the first tier are set as $2^n$ pixel groups (n,k) of the second tier, that is, $2^2$ pixel groups (2,0), (2,1), (2,2), and (2,3) of the second tier, and a process similar to the learning of the 0th tier is executed.

That is, for the first pixel group (2,0) of the second tier, the pixel group (2,0) is set as student data, and the prediction error of the predicted value of the pixel value of the pixel in the teacher image corresponding to each pixel of the pixel group (2,0) obtained in the adaptive classification process for each pixel of the pixel group (2,0) is set as teacher data. Classification coefficients $w_m$ that statistically minimize the prediction errors of the prediction error predicted values y are obtained as first (class) classification coefficients cc(2,0) of the first tier.

Furthermore, for each pixel of the pixel group (2,0) of the second tier, the classification coefficient cc(2,0) of the second tier is used to obtain the prediction error predicted value y according to the prediction error prediction equation.

In addition, the pixels with the prediction error predicted value y equal to or greater than 0 among the pixels of the pixel group (2,0) of the second tier are subclassified into a pixel group (2,0,0) of a subclass 0, and the pixels with the prediction error predicted value y smaller than 0 are subclassified into a pixel group (2,0,1) of a subclass 1.

Similarly, for the second pixel group (2,1) of the second tier, the pixel group (2,1) is set as student data, and the prediction error of the predicted value of the pixel value of the pixel in the teacher image corresponding to each pixel of the pixel group (2,1) obtained in the adaptive classification process for each pixel of the pixel group (2,1) is set as teacher data. Classification coefficients $w_m$ that statistically minimize the prediction errors of the prediction error predicted values y are obtained as second classification coefficients cc(2,1) of the second tier.

Furthermore, for each pixel of the pixel group (2,1) of the second tier, the classification coefficient cc(2,1) of the second tier is used to obtain the prediction error predicted value y according to the prediction error prediction equation.

In addition, the pixels with the prediction error predicted value y equal to or greater than 0 among the pixels of the pixel group (2,1) of the second tier are subclassified into a pixel group (2,1,0) of a subclass 0, and the pixels with the prediction error predicted value y smaller than 0 are subclassified into a pixel group (2,1,1) of a subclass 1.

Similarly, for the third pixel group (2,2) of the second tier, the pixel group (2,2) is set as student data, and the prediction error of the predicted value of the pixel value of the pixel in the teacher image corresponding to each pixel of the pixel group (2,2) obtained in the adaptive classification process for each pixel of the pixel group (2,2) is set as teacher data. Classification coefficients $w_m$ that statistically minimize the prediction errors of the prediction error predicted values y are obtained as third classification coefficients cc(2,2) of the second tier.

Furthermore, for each pixel of the pixel group (2,2) of the second tier, the classification coefficient cc(2,2) of the second tier is used to obtain the prediction error predicted value y according to the prediction error prediction equation.

In addition, the pixels with the prediction error predicted value y equal to or greater than 0 among the pixels of the pixel group (2,2) of the second tier are subclassified into a pixel group (2,2,0) of a subclass 0, and the pixels with the prediction error predicted value y smaller than 0 are subclassified into a pixel group (2,2,1) of a subclass 1.

Similarly, for the fourth pixel group (2,3) of the second tier, the pixel group (2,3) is set as student data, and the prediction error of the predicted value of the pixel value of the pixel in the teacher image corresponding to each pixel of the pixel group (2,3) obtained in the adaptive classification process for each pixel of the pixel group (2,3) is set as teacher data. Classification coefficients $w_m$ that statistically minimize the prediction errors of the prediction error predicted values y are obtained as fourth classification coefficients cc(2,3) of the second tier.

Furthermore, for each pixel of the pixel group (2,3) of the second tier, the classification coefficient cc(2,3) of the second tier is used to obtain the prediction error predicted value y according to the prediction error prediction equation.

In addition, the pixels with the prediction error predicted value y equal to or greater than 0 among the pixels of the pixel group (2,3) of the second tier are subclassified into a pixel group (2,3,0) of a subclass 0, and the pixels with the prediction error predicted value y smaller than 0 are subclassified into a pixel group (2,3,1) of a subclass 1.

After the end of the learning of the second tier, learning of the next tier, that is, a third tier, is performed as necessary.

In the learning of the third tier, $2^3$ pixel groups (2,0,0), (2,0,1), (2,1,0), (2,1,1), (2,2,0), (2,2,1), (2,3,0), and (2,3,1) obtained by the subclassification in the learning of the second tier are set as $2^n$ pixel groups (n,k) of the third tier, that is, $2^3$ pixel groups (3,0), (3,1), (3,2), (3,3), (3,4), (3,5), (3,6), and (3,7) of the third tier, and a process similar to the learning of the 0th tier is executed.

Thereafter, the learning is similarly performed up to a necessary tier.

In a case where the learning of the classification coefficients is performed up to learning of an Lth tier, the classification coefficients from $2^0$ classification coefficients cc(2,0) of the 0th tier to $2^L$ classification coefficients cc(L,0), cc(L,1), ... cc(L, $2^L$-1) of the Lth tier are obtained.

Here, the (k+1)th pixel group (n,k) of the nth tier will also be referred to as a pixel group (n,k) of a class k of the nth tier, and the classification coefficients cc(n,k) of the nth tier will also be referred to as classification coefficients cc(n,k) of the class k of the nth tier.

In the learning of the classification coefficients, the classification coefficients cc(n,k) of the class k of the nth tier are used in the learning of the nth tier to perform the subclassification of the pixel group (n,k) of the class k of the nth tier according to the prediction error prediction equation, and the pixel group (n,k) of the class k of the nth tier is classified into a pixel group of a subclass 0 and a pixel group of a subclass 1.

Additionally, in the learning of the next (n+1)th tier, the pixel group of the subclass 0 in the pixel groups (n,k) of the class k of the nth tier is set as a pixel group (n+1,k1) of a class k1 of the (n+1)th tier, and the pixel group of the subclass 1 is set as a pixel group (n+1,k2) of another class k2 of the (n+1)th tier.

Furthermore, the subclassification of the pixel group (n+1,k1) of the class k1 of the (n+1)th tier is performed by using classification coefficients cc(n+1,k1) of the class k1 of the (n+1)th tier, and the subclassification of the pixel group (n+1,k2) of the class k2 of the (n+1)th tier is performed by using classification coefficients cc(n+1,k2) of the class k2 of the (n+1)th tier.

Similarly, the subclassification is recursively repeated, and the classification coefficients from the 0th tier to an arbitrary tier are obtained.

FIG. 60 is a diagram describing an overview of the classification using the classification coefficients.

The classification using the classification coefficients is hierarchically performed as in the learning of the classification coefficients.

That is, in the classification using the classification coefficients, the subclassification of the 0th tier is performed first.

In the subclassification of the 0th tier, the classification coefficients cc(0,0) of the 0th tier are used to obtain the prediction error predicted value y regarding the target pixel.

In addition, in the case where the prediction error predicted value y of the target pixel is equal to or greater than 0, the target pixel is subclassified into the subclass 0 of the 0th tier. In addition, in the case where the prediction error predicted value y of the target pixel is smaller than 0, the target pixel is subclassified into the subclass 1 of the 0th tier.

The target pixel subclassified into the subclass 0 or 1 in the 0th tier becomes a pixel of a class of the next tier, that is, the first tier.

In the case where the target pixel is subclassified in the 0th tier, the class of the first tier of the target pixel is decided by taking into account the subclass of the 0th tier of the target pixel in addition to the class of the 0th tier of the target pixel.

There is no class in the 0th tier, and the class of the first tier of the target pixel is decided from the subclass of the 0th tier of the target pixel.

That is, in the case where the target pixel is subclassified into the subclass 0 in the 0th tier, the class of the first tier of the target pixel is decided to be, for example, a class 0 according to the subclass 0.

In addition, in the case where the target pixel is subclassified into the subclass 1 in the 0th tier, the class of the first tier of the target pixel is decided to be, for example, a class 1 according to the subclass 1.

Here, it is assumed that a class k represents a class with a class code k.

After the end of the subclassification of the 0th tier, subclassification of the first tier is performed in a case where there is a next tier, that is, classification coefficients cc(1,0) and cc(1,1) of the first tier.

In the subclassification of the first tier, classification coefficients cc(1,k) of the class k of the first tier of the target pixel are used among the classification coefficients cc(1,0) and cc(1,1) of the first tier.

Therefore, in the case where the class k of the first tier of the target pixel is the class 0, the classification coefficients cc(1,0) of the first tier are used to obtain the prediction error predicted value y of the target pixel. In addition, in the case where the class k of the first tier of the target pixel is the class 1, the classification coefficients cc(1,1) of the first tier are used to obtain the prediction error predicted value y of the target pixel.

Furthermore, in the case where the prediction error predicted value y of the target pixel is equal to or greater than 0, the target pixel is subclassified into the subclass 0 of the first tier. In addition, in the case where the prediction error predicted value y of the target pixel is smaller than 0, the target pixel is subclassified into the subclass 1 of the first tier.

The target pixel subclassified into the subclass 0 or 1 in the first tier becomes a pixel of a class of the next tier, that is, the second tier.

In the case where the target pixel is subclassified in the first tier, the class of the second tier of the target pixel is decided by taking into account the subclass of the first tier of the target pixel in addition to the class of the first tier of the target pixel.

For example, in the case where the class k of the first tier of the target pixel is the class 0, the class of the second tier of the target pixel is decided by taking into account the subclass of the first tier of the target pixel in addition to the class 0 of the first tier.

That is, in the case where the target pixel is subclassified into the subclass 0 in the first tier, the class of the second tier of the target pixel is decided to be a class $00_2=0$ by adding the subclass 0 of the first tier of the target pixel to the lower bits of the class 0 of the first tier of the target pixel. Here, the subscript 2 indicates that the numerical values just before the subscript are binary numbers.

In addition, in the case where the target pixel is subclassified into the subclass 1 in the first tier, the class of the second tier of the target pixel is decided to be a class $01_2=1$ by adding the subclass 1 of the first tier of the target pixel to the lower bits of the class 0 of the first tier of the target pixel.

On the other hand, in the case where the class k of the first tier of the target pixel is the class 1, the class of the second tier of the target pixel is decided by taking into account the subclass of the first tier of the target pixel in addition to the class 1 of the first tier.

That is, in the case where the target pixel is subclassified into the subclass 0 in the first tier, the class of the second tier of the target pixel is decided to be a class $10_2=2$ by adding the subclass 0 of the first tier of the target pixel to the lower bits of the class 1 of the first tier of the target pixel.

In addition, in the case where the target pixel is subclassified into the subclass 1 in the first tier, the class of the second tier of the target pixel is decided to be a class $11_2=3$ by adding the subclass 1 of the first tier of the target pixel to the lower bits of the class 1 of the first tier of the target pixel.

After the end of the subclassification of the first tier, subclassification of the second tier is performed in a case where there is a next tier, that is, classification coefficients cc(2,0), cc(2,1), cc(2,2), and cc(2,3) of the second tier.

In the subclassification of the second tier, classification coefficients cc(2,k) of the class k of the second tier of the target pixel are used among the classification coefficients cc(2,0) to cc(2,3) of the second tier.

Therefore, for example, in the case where the class k of the second tier of the target pixel is the class $0=00_2$, the classification coefficients cc(2,0) of the second tier are used to obtain the prediction error predicted value y of the target pixel.

Furthermore, in the case where the prediction error predicted value y of the target pixel is equal to or greater than 0, the target pixel is subclassified into the subclass 0 of the second tier. In addition, in the case where the prediction error predicted value y of the target pixel is smaller than 0, the target pixel is subclassified into the subclass 1 of the second tier.

The target pixel subclassified into the subclass 0 or 1 in the second tier becomes a pixel of a class of the next tier, that is, the third tier.

In the case where the target pixel is subclassified in the second tier, the class of the third tier of the target pixel is decided by taking into account the subclass of the second tier of the target pixel in addition to the class of the second tier of the target pixel.

In this case, the class k of the second tier of the target pixel is the class $0=00_2$, and the class of the third tier of the target pixel is decided by taking into account the subclass of the second tier of the target pixel in addition to the class $0=00_2$ of the second tier.

That is, in the case where the target pixel is subclassified into the subclass 0 in the second tier, the class of the third tier of the target pixel is decided to be a class $000_2=0$ by adding the subclass 0 of the second tier of the target pixel to the lower bits of the class $0=00_2$ of the second tier of the target pixel.

In addition, in the case where the target pixel is subclassified into the subclass 1 in the second tier, the class of the third tier of the target pixel is decided to be a class $001_2=1$ by adding the subclass 1 of the second tier of the target pixel to the lower bits of the class $0=00_2$ of the second tier of the target pixel.

In the case where the class k of the second tier of the target pixel is the class $1=01_2$, the classification coefficients cc(2,1) of the second tier are used to obtain the prediction error predicted value y of the target pixel.

Furthermore, in the case where the prediction error predicted value y of the target pixel is equal to or greater than 0, the target pixel is subclassified into the subclass 0 of the second tier. In addition, in the case where the prediction error predicted value y of the target pixel is smaller than 0, the target pixel is subclassified into the subclass 1 of the second tier.

The target pixel subclassified into the subclass 0 or 1 in the second tier becomes a pixel of a class of the next tier, that is, the third tier.

In the case where the target pixel is subclassified in the second tier, the class of the second tier of the target pixel is decided by taking into account the subclass of the second tier of the target pixel in addition to the class of the second tier of the target pixel.

In this case, the class k of the second tier of the target pixel is the class $1=01_2$, and the class of the third tier of the target pixel is decided by taking into account the subclass of the second tier of the target pixel in addition to the class $1=01_2$ of the second tier.

That is, in the case where the target pixel is subclassified into the subclass 0 in the second tier, the class of the third tier of the target pixel is decided to be a class $010_2=2$ by adding the subclass 0 of the second tier of the target pixel to the lower bits of the class $1=01_2$ of the second tier of the target pixel.

In addition, in the case where the target pixel is subclassified into the subclass 1 in the second tier, the class of the third tier of the target pixel is decided to be a class $011_2=3$ by adding the subclass 1 of the second tier of the target pixel to the lower bits of the class $1=01_2$ of the second tier of the target pixel.

In the case where the class k of the second tier of the target pixel is the class $2=10_2$, the classification coefficients cc(2,2) of the second tier are used to obtain the prediction error predicted value y of the target pixel.

Furthermore, in the case where the prediction error predicted value y of the target pixel is equal to or greater than 0, the target pixel is subclassified into the subclass 0 of the second tier. In addition, in the case where the prediction error predicted value y of the target pixel is smaller than 0, the target pixel is subclassified into the subclass 1 of the second tier.

The target pixel subclassified into the subclass 0 or 1 in the second tier becomes a pixel of a class of the next tier, that is, the third tier.

In the case where the target pixel is subclassified in the second tier, the class of the second tier of the target pixel is decided by taking into account the subclass of the second tier of the target pixel in addition to the class of the second tier of the target pixel.

In this case, the class k of the second tier of the target pixel is the class $2=10_2$, and the class of the third tier of the target pixel is decided by taking into account the subclass of the second tier of the target pixel in addition to the class $2=10_2$ of the second tier.

That is, in the case where the target pixel is subclassified into the subclass 0 in the second tier, the class of the third tier of the target pixel is decided to be a class $100_2=4$ by adding the subclass 0 of the second tier of the target pixel to the lower bits of the class $2=10_2$ of the second tier of the target pixel.

In addition, in the case where the target pixel is subclassified into the subclass 1 in the second tier, the class of the third tier of the target pixel is decided to be a class $101_2=5$ by adding the subclass 1 of the second tier of the target pixel to the lower bits of the class $2=10_2$ of the second tier of the target pixel.

In the case where the class k of the second tier of the target pixel is the class $3=11_2$, the classification coefficients cc(2,3) of the second tier are used to obtain the prediction error predicted value y of the target pixel.

Furthermore, in the case where the prediction error predicted value y of the target pixel is equal to or greater than 0, the target pixel is subclassified into the subclass 0 of the second tier. In addition, in the case where the prediction error predicted value y of the target pixel is smaller than 0, the target pixel is subclassified into the subclass 1 of the second tier.

The target pixel subclassified into the subclass 0 or 1 in the second tier becomes a pixel of a class of the next tier, that is, the third tier.

In the case where the target pixel is subclassified in the second tier, the class of the second tier of the target pixel is decided by taking into account the subclass of the second tier of the target pixel in addition to the class of the second tier of the target pixel.

In this case, the class k of the second tier of the target pixel is the class $3=11_2$, and the class of the third tier of the target pixel is decided by taking into account the subclass of the second tier of the target pixel in addition to the class $3=11_2$ of the second tier.

That is, in the case where the target pixel is subclassified into the subclass 0 in the second tier, the class of the third tier of the target pixel is decided to be a class $110_2=6$ by adding the subclass 0 of the second tier of the target pixel to the lower bits of the class $3=11_2$ of the second tier of the target pixel.

In addition, in the case where the target pixel is subclassified into the subclass 1 in the second tier, the class of the third tier of the target pixel is decided to be a class $111_2=7$ by adding the subclass 1 of the second tier of the target pixel to the lower bits of the class $3=11_{22}$ of the second tier of the target pixel.

Thereafter, the subclassification of each tier is sequentially performed up to a tier without the classification coefficients cc(n,k).

Note that the learning of the classification coefficients and the classification using the classification coefficients are described in, for example, Japanese Patent No. 5347862.

<Learning Apparatus That Learns Classification Coefficients>

FIG. 61 is a block diagram illustrating a configuration example of a learning apparatus that learns classification coefficients.

The learning apparatus of FIG. 61 obtains the classification coefficients along with the tap coefficients through the learning for minimizing the statistical errors.

In FIG. 61, the learning apparatus includes a tap coefficient learning unit 701, a tap coefficient setting unit 702, a subclass teacher data generation unit 703, a classification coefficient learning unit 704, a classification coefficient setting unit 705, a subclass prediction unit 706, a subclassification unit 707, a class decision unit 708, a pixel prediction unit 709, and an end condition determination unit 710.

An example of the student data supplied to the tap coefficient learning unit 701 includes a student image equivalent to the image being decoded, and an example of the teacher data supplied to the tap coefficient learning unit 701 includes a teacher image equivalent to the original image.

Furthermore, the class k of the nth tier of each pixel of the student image is supplied from the class decision unit 708 to the tap coefficient learning unit 701.

For each class k of the nth tier from the class decision unit 708, the tap coefficient learning unit 701 performs tap coefficient learning for obtaining tap coefficients tc(n,k) (set of tap coefficients) of the class k of the nth tier by using the pixel group (n,k) of the class k of the nth tier of the student image and the pixel group of the teacher image corresponding to the pixel group (n,k).

The tap coefficient learning unit 701 then supplies the tap coefficients tc (n,k) ($k=0, 1,...2^n-1$) of the class k of the nth tier obtained by the tap coefficient learning to the tap coefficient setting unit 702.

The tap coefficient setting unit 702 stores the tap coefficients tc(n,k) ($k=0, 1,...2^n-1$) of the class k of the nth tier, that is, tap coefficients tc(n,k) of $2^n$ classes (pieces) of the nth tier, from the tap coefficient learning unit 701 and sets the tap coefficients tc(n,k) in the pixel prediction unit 709.

The tap coefficient setting unit 702 also outputs the stored tap coefficients tc(n,k) of the $2^n$ classes of the nth tier to the outside according to control of the end condition determination unit 710.

The teacher image is supplied to the subclass teacher data generation unit 703. Furthermore, predicted values predicting the pixel values of the pixels of the teacher image (hereinafter, also referred to as pixel predicted values) obtained by the adaptive classification process using the student image and the tap coefficients tc(n,k) of the $2^n$ classes of the nth tier are supplied from the pixel prediction unit 709 to the subclass teacher data generation unit 703.

The subclass teacher data generation unit 703 generates subclass teacher data from the teacher image and the pixel predicted values from the pixel prediction unit 709 and supplies the subclass teacher data to the classification coefficient learning unit 704.

Here, the subclass teacher data is information regarding the subclass of the pixel of the student image and is teacher data of the classification coefficient learning in the classification coefficient learning unit 704.

An example of the subclass teacher data that can be adopted includes a prediction error of the pixel predicted value, which is supplied from the pixel prediction unit 709 to the subclass teacher data generation unit 703, with respect to the pixel value of the pixel of the teacher image.

The subclass teacher data as well as the student image are supplied from the subclass teacher data generation unit 703 to the classification coefficient learning unit 704.

The classification coefficient learning unit 704 sets, as teacher data, the prediction errors of the pixel predicted values as subclass teacher data and sets, as student data, the pixel group (n,k) of the class k of the nth tier among the pixels of the student image. The classification coefficient learning unit 704 performs the classification coefficient learning for obtaining the classification coefficients cc(n,k) of the class k of the nth tier as described in FIG. 59.

That is, the classification coefficient learning unit 704 sets the pixel group (n,k) of the student image of the class k of the nth tier as student image and sets the prediction errors (subclass teacher data) of the pixel predicted values of the pixels of the teacher image corresponding to the pixels of the pixel group (n,k) as teacher data. The classification coefficient learning unit 704 obtains, as the classification coefficients cc(n,k) of the class k of the nth tier, the classification coefficients $w_m$ represented by the prediction error prediction equation $y=w_1x_1+w_2x_2+...+w_Mx_M$ that statistically minimize the prediction errors of the prediction error predicted values y of the pixel predicted values. The classification coefficients cc(n,k) of the class k of the nth tier that statistically minimize the prediction errors of the prediction error predicted values y can be obtained by, for example, a least-squares method as in the tap coefficient learning.

Once the classification coefficient learning unit 704 obtains the classification coefficients cc(n,k) of the $2^n$ classes of the nth tier through the classification coefficient learning, the classification coefficient learning unit 704 supplies the classification coefficients cc(n,k) of the $2^n$ classes of the nth tier to the classification coefficient setting unit 705.

The classification coefficient setting unit 705 stores the classification coefficients cc(n,k) of the $2^n$ classes of the nth tier from the classification coefficient learning unit 704 and sets the classification coefficients cc(n,k) in the subclass prediction unit 706.

The classification coefficient setting unit 705 also outputs the stored classification coefficients cc(0,k), cc(1,k), ..., cc(n,k) from the 0th tier to the nth tier according to the control of the end condition determination unit 710.

The student image is supplied to the subclass prediction unit 706.

For each pixel of the pixel groups (n,k) ($k=0,1,...,2^n-1$) of the class k of the nth tier among the pixel groups of the student image, the subclass prediction unit 706 uses the classification coefficients cc(n,k)=$\{w_m\}$ of the class k of the nth tier from the classification coefficient setting unit 705 to perform the prediction computation according to the prediction error prediction equation $y=w_1x_1+w_2x_2+...+w_Mx_M$ to obtain the prediction error predicted value y of the pixel predicted value as a subclass predicted value.

Here, the subclass predicted value is a predicted value predicting the subclass teacher data as information regarding the subclass of the pixel of the pixel group (n,k) of the class k of the nth tier.

The subclass prediction unit 706 supplies the subclass predicted value to the subclassification unit 707.

The subclassification unit 707 subclassifies each pixel of the pixel groups (n,k) ($k=0,1,...,2^n-1$) of the class k of the nth tier according to the subclass predicted value from the subclass prediction unit 706.

That is, for example, the pixels with the subclass predicted value (prediction error predicted value y) equal to or greater than 0 are subclassified into the subclass 0, and the pixels with the subclass predicted value smaller than 0 are subclassified into the subclass 1.

The subclassification unit 707 supplies the subclass of each pixel of the pixel groups (n,k) ($k=0,1,2^n-1$) of the class k of the nth tier to the class decision unit 708.

The class decision unit 708 decides a class k' of the (n+1)th tier of each pixel of the pixel groups (n,k) ($k=0,1,...,2^n-1$) of the class k of the nth tier as described in FIG. 60 by taking into account the subclass of the nth tier from the subclassification unit 707 in addition to the class k of the nth tier.

The class decision unit 708 supplies the class k' of the (n+1)th tier decided for each pixel of the pixel groups (n,k) ($k=0,1,...,2^n-1$) of the class k of the nth tier to the tap coefficient learning unit 701 and the pixel prediction unit 709 in a form that allows identifying the pixels of the student image belonging to the class k' of the (n+1)th tier.

The student image equivalent to the image being decoded is supplied to the pixel prediction unit 709.

For each class k ($k=0,1,...2^n-1$) of the nth tier from the class decision unit 708, the pixel prediction unit 709 sets each pixel of the pixel group (n,k) of the class k of the nth tier of the student image as a target pixel and executes the adaptive classification process (prediction computation of Formula (1) in the adaptive classification process) of obtaining the pixel predicted value of the pixel value of the pixel of the teacher image corresponding to the target pixel by using the tap coefficients tc(n,k) of the class k of the nth tier from the tap coefficient setting unit 702.

The pixel prediction unit 709 then supplies the pixel predicted value of each pixel obtained in the adaptive classification process to the subclass teacher data generation unit 703.

The end condition determination unit 710 determines whether or not an end condition of learning is satisfied and ends the learning of the tap coefficients tc(n,k) and the classification coefficients cc(n,k) by the learning apparatus in a case where the end condition of learning is satisfied. The end condition determination unit 710 further controls the tap coefficient setting unit 702 and the classification coefficient setting unit 705 to output the tap coefficients tc(n,k) of the $2^n$ classes of the nth tier stored in the tap coefficient setting unit 702 to the outside and output the classification coefficients cc(0,k), cc(1,k), ..., cc(n-1,k) from the 0th tier to the (n-1)th tier stored in the classification coefficient setting unit 705 to the outside.

Note that the tap coefficient setting unit 702 and the classification coefficient setting unit 705 can be included in one block.

FIG. 62 is a flow chart describing an example of a learning process executed by the learning apparatus of FIG. 61.

In step S311, the end condition determination unit 710 sets the tier (variable indicating the tier) n to an initial value, such as 0.

Subsequently, the process proceeds from step S311 to step S312, and for each class k of the nth tier from the class decision unit 708, the tap coefficient learning unit 701 uses the pixel group (n,k) of the class k of the nth tier of the student image and the pixel group of the teacher image corresponding to the pixel group (n,k) to perform the tap coefficient learning for obtaining the tap coefficients tc(n,k) of the class k of the nth tier.

The tap coefficient learning unit 701 then supplies and stores, in the tap coefficient setting unit 702, the tap coefficients tc(n,k) (k=0,1,...$2^n$-1) of $2^n$ classes of the nth tier obtained by the tap coefficient learning, and the process proceeds from step S312 to step S313.

Note that in the tap coefficient learning of step S312, all pixels of the student image are regarded as pixels of one class (for example, class 0) for the 0th tier (n=0), and tap coefficients tc(0,0) (set of tap coefficients) of 1=$2^0$ piece (class) are obtained.

In step S313, the end condition determination unit 710 determines whether or not the end condition of learning is satisfied.

Here, an example the end condition of leaning that can be adopted includes that the tier n is a last tier N. The last tier N is a final tier for obtaining the tap coefficients tc(n,k), and the last tier N can be, for example, set in advance.

Another example of the end condition of learning that can be adopted includes that the amount of increase in the S/N of the image including the pixel predicted values obtained in the adaptive classification process of the pixel prediction unit 709 is equal to or smaller than a threshold.

If the end condition determination unit 710 determines that the end condition of learning is not satisfied in step S313, the process proceeds to step S314, and the learning of nth tier is performed hereafter.

That is, the tap coefficient setting unit 702 sets the stored tap coefficients tc(n,k) of the $2^n$ classes of the nth tier in the pixel prediction unit 709 in step S314.

For each class k (k=0,1,...$2^n$-1) of the nth tier from the class decision unit 708, the pixel prediction unit 709 sets each pixel of the pixel group (n,k) of the class k of the nth tier of the student image as a target pixel and performs the adaptive classification process (prediction computation of Formula (1) in the adaptive classification process) of obtaining the pixel predicted value of the pixel value of the pixel of the teacher image corresponding to the target pixel by using the tap coefficients tc(n,k) of the class k of the nth tier from the tap coefficient setting unit 702.

The pixel prediction unit 709 then supplies the pixel predicted value obtained in the adaptive classification process to the subclass teacher data generation unit 703, and the process proceeds from step S314 to step S315.

Note that in the adaptive classification process of step S314, all pixels of the student image are set as pixels of one class (for example, class 0) for the 0th tier (n=0), and the tap coefficients tc(0,0) of 1=$2^0$ piece (class) obtained in the preceding step S312 are used to obtain the pixel predicted values of the pixel values of the pixels of the teacher image corresponding to the pixels of the student image that are pixels of one class.

In step S315, the subclass teacher data generation unit 703 uses the teacher image and the pixel predicted values of the pixels from the pixel prediction unit 709 to obtain (generate), as subclass teacher data, prediction errors of the pixel predicted values with respect to the pixel values of the corresponding pixels of the teacher image.

The subclass teacher data generation unit 703 then supplies the subclass teacher data to the classification coefficient learning unit 704, and the process proceeds from step S315 to step S316.

In step S316, the classification coefficient learning unit 704 sets, as teacher data, the prediction errors of the pixel predicted values as subclass teacher data from the subclass teacher data generation unit 703 and sets, as student data, the pixel groups (n,k) (k=0,1,...$2^n$-1) of the class k of the nth tier among the pixels of the student image. The classification learning unit 704 performs the classification coefficient learning for obtaining the classification coefficients cc(n,k) of the class k of the nth tier used for the classification as described in FIG. 59 and the like for each class k of the nth tier.

Once the classification coefficient learning unit 704 obtains the classification coefficients cc(n,k) of the $2^n$ classes of the nth tier through the classification coefficient learning of each class k of the nth tier, the classification coefficient learning unit 704 supplies and stores the classification coefficients cc(n,k) of the $2^n$ classes of the nth tier in the classification coefficient setting unit 705.

The classification coefficient setting unit 705 stores the classification coefficients cc(n,k) of the $2^n$ classes of the nth tier from the classification coefficient learning unit 704 and sets the classification coefficients cc(n,k) in the subclass prediction unit 706. The process proceeds from step S316 to step S317.

In step S317, for each pixel of the pixel groups (n,k) (k=0,1,...,$2^n$-1) of the class k of the nth tier among the pixel groups of the student image, the subclass prediction unit 706 uses the classification coefficients cc(n,k)={$w_m$} of the class k of the nth tier from the classification coefficient setting unit 705 to perform the prediction computation according to the prediction error prediction equation $y=w_1x_1+w_2x_2+...+w_Mx_M$ to thereby obtain the prediction error predicted value y of the pixel predicted value as a subclass predicted value. The subclass prediction unit 706 supplies the subclass predicted value to the subclassification unit 707.

The subclassification unit 707 subclassifies each pixel of the pixel groups (n,k) (k=0,1,...,$2^n$-1) of the class k of the nth tier according to the subclass predicted value from the subclass prediction unit 706.

That is, the subclassification unit 707 subclassifies the pixels with the subclass predicted value (prediction error predicted value y) equal to or greater than 0 into the subclass 0 and subclassifies the pixels with the prediction error predicted value y smaller than 0 into the subclass 1.

As a result of the subclassification, the pixel groups (n,k) (k=0,1,...,$2^n$-1) of the class k of the nth tier are classified into a pixel group (n,k,0) of the subclass 0 and a pixel group (n,k,1) of the subclass 1 of the nth tier.

The subclassification unit 707 supplies the subclass of each pixel of the pixel groups (n,k) (k=0,1,...,$2^n$-1) of the class k of the nth tier to the class decision unit 708.

The class decision unit 708 decides the class k' of the (n+1)th tier of each pixel of the pixel groups (n,k) (k=0,1,...,$2^n$-1) of the class k of the nth tier as described in FIG. 60 by taking into account the subclass of the nth tier from the subclassification unit 707 in addition to the class k of the nth tier.

Note that in step S317, the class of the first tier is decided from the subclass of the 0th tier for the pixel group (0,0) of the 0th tier (n=0).

That is, in the 0th tier, the class of the first tier of the pixel subclassified into the subclass 0 is decided to be the class 0 according to the subclass 0, and the class of the first tier of the pixel subclassified into the subclass 1 is decided to be the class 1 according to the subclass 1.

Once the class decision unit 708 decides the class k' of the (n+1)th tier for each pixel of the pixel groups (n,k) of the class k of the nth tier in each class k of the nth tier, the class decision unit 708 supplies the class k' of the (n+1)th tier of each pixel of the student image to the tap coefficient learning unit 701 and the pixel prediction unit 709 in a form that allows identifying the pixel of the student image belonging to the class k' of the (n+1)th tier. The process proceeds from step S317 to step S318.

In step S318, the end condition determination unit 710 increments the tier n by 1, and the process returns to step S312.

In step S312, for each class k of the nth tier from the class decision unit 708 after the increment of the tier n in step S318, the tap coefficient learning unit 701 uses the pixel group (n,k) of the class k of the nth tier of the student image and the pixel group of the teacher image corresponding to the pixel group (n,k) to perform the tap coefficient learning for obtaining the tap coefficients tc(n,k) of the class k of the nth tier as described above.

The tap coefficient learning unit 701 then supplies and stores, in the tap coefficient setting unit 702, the tap coefficients tc(n,k) (k=0,1,...$2^n$-1) of the $2^n$ classes of the nth tier obtained by the tap coefficient learning, and the process proceeds from step S312 to step S313.

Here, the learning of an Lth tier as a certain tier started from step S314 returns to step S312 from step S318, and the learning ends once the tap coefficients tc(L+1,k) (k=0,1,...$2^{L+1}$-1) of $2^{L+1}$ classes of an (L+1)th tier are obtained.

The process from the start in step S314 to the return from step S318 to step S312 is the learning of one tier.

If the end condition determination unit 710 determines that the end condition of learning is satisfied in step S313, the process proceeds to step S319. The end condition setting unit 710 controls the tap coefficient setting unit 702 and the classification coefficient setting unit 705 to output the tap coefficients tc(n,k) stored in the tap coefficient setting unit 702 and the classification coefficients cc(n,k) stored in the classification coefficient setting unit 705 to the outside. The learning process ends.

That is, it is assumed now that the learning of the (N-1)th tier is finished, and the tier n is the last tier N.

In this case, the tap coefficient setting unit 702 outputs the stored tap coefficients tc(N,k) (k=0,1,...$2^N$-1) of the $2^N$ classes of the Nth tier to the outside according to the control of the end condition determination unit 710.

The classification coefficient setting unit 705 also outputs the stored classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier to the outside according to the control of the end condition determination unit 710.

<Image Conversion Apparatus That Executes Adaptive Classification Process Using Classification Coefficients in Classification>

FIG. 63 is a block diagram illustrating a configuration example of the image conversion apparatus that executes the adaptive classification process using the classification coefficients in the classification.

Note that in FIG. 63, the same reference signs are provided to the parts corresponding to the case of FIG. 2, and the description will be appropriately skipped.

In FIG. 63, the image conversion apparatus includes the tap selection units 21 and 22, the prediction computation unit 25, a classification unit 721, and a coefficient acquisition unit 722.

Therefore, the image conversion apparatus of FIG. 63 is in common with the case of FIG. 2 in that the image conversion apparatus includes the tap selection units 21 and 22 and the prediction computation unit 25.

However, the image conversion apparatus of FIG. 63 is different from the case of FIG. 2 in that the image conversion apparatus includes the classification unit 721 and the coefficient acquisition unit 722 in place of the classification unit 23 and the coefficient acquisition unit 24, respectively.

The class tap is supplied from the tap selection unit 22 to the classification unit 721.

The classification unit 721 stores the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1) th tier obtained by the learning apparatus of FIG. 61.

The classification unit 721 uses the class tap from the tap selection unit 22 and uses the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier as necessary to classify the target pixel. The classification unit 721 supplies the class (class of the Nth tier) of the target pixel obtained by the classification to the coefficient acquisition unit 722.

The coefficient acquisition unit 722 stores the tap coefficients tc(n,k) (k=0,1, ...$2^N$-1) of the $2^N$ classes of the Nth tier obtained by the learning apparatus of FIG. 61.

The coefficient acquisition unit 722 acquires the tap coefficients tc(N,k) of the class k of the target pixel supplied from the classification unit 721 from the stored tap coefficients tc(N,k) (k=0,1,...$2^N$-1) of the $2^N$ classes of the Nth tier supplied from the classification unit 721 and supplies the tap coefficients tc(N,k) to the prediction computation unit 25.

FIG. 64 is a block diagram illustrating a configuration example of the classification unit 721 of FIG. 63.

In FIG. 64, the classification unit 721 includes a classification coefficient setting unit 731, a subclass prediction unit 732, a subclassification unit 733, and a class decision unit 734.

The classification coefficient setting unit 731 stores the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier obtained by the learning apparatus of FIG. 61.

The classification coefficient setting unit 731 acquires the classification coefficients cc(n,k) of the class k of the nth tier among the stored classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier according to the class k of the nth tier of the target pixel supplied from the class decision unit 734 and sets the classification coefficients cc(n,k) in the subclass prediction unit 732.

The class tap of the target pixel is supplied to the subclass prediction unit 732.

The subclass prediction unit 732 uses the pixel values $x_m$ of the pixels included in the class tap of the target pixel and the classification coefficients cc(n,k)={$w_m$} of the class k of the nth tier from the classification coefficient setting unit 731 to perform the prediction computation according to the prediction error prediction equation $y=w_1x_1+w_2x_2+...+w_Mx_M$.

As a result of the prediction computation, the prediction error predicted value y of the pixel predicted value of the corresponding pixel of the original image corresponding to the target pixel is obtained as a subclass predicted value of the target pixel, and the subclass predicted value is supplied from the subclass prediction unit 732 to the subclassification unit 733.

The subclassification unit 733 subclassifies the target pixel of the class k of the nth tier according to the subclass predicted value from the subclass prediction unit 732.

That is, for example, the target value of the class k of the nth tier is subclassified into the subclass 0 in the case where the subclass predicted value (prediction error predicted value y) of the target pixel is equal to or greater than 0. In addition, the target pixel of the class k of the nth tier is subclassified into the subclass 1 in the case where the subclass predicted value of the target pixel is smaller than 0.

The subclassification unit 733 supplies the subclass of the target pixel of the class k of the nth tier to the class decision unit 734.

The class decision unit 734 decides the class k' of the (n+1)th tier of the target pixel as described in FIG. 60 by taking into account the subclass of the nth tier of the target pixel from the subclassification unit 733 in addition to the class k of the nth tier of the target pixel.

The class decision unit 734 then supplies the class k' of the (n+1)th tier of the target pixel to the classification coefficient setting unit 731.

In this case, the classification coefficient setting unit 731 acquires the classification coefficients cc(n+1,k') of the class k' of the (n+1)th tier among the stored classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier according to class k' of the (n+1)th tier of the target pixel supplied from the class decision unit 734 and sets the classification coefficients cc(n+1,k') in the subclass prediction unit 732.

Note that in the case where the (n+1)th tier is the Nth tier that is the last tier N, the class decision unit 734 supplies the class k of the Nth tier of the target pixel as a classification result of the target pixel to the coefficient acquisition unit 722.

FIG. 65 is a flow chart describing an example of the process of classification using the classification coefficients executed by the classification unit 721 of FIG. 64.

In step S331, the class decision unit 734 sets the tier (variable indicating the tier) n to the initial value, such as 0, and the process proceeds to step S332.

In step S332, the class decision unit 734 determines whether or not the tier n is the last tier N.

If the class decision unit 734 determines that the tier n is not the last tier N in step S332, the process proceeds to step S333, and the subclass predicted value of the target pixel is obtained.

That is, in step S333, the classification coefficient setting unit 731 sets the classification coefficients cc(n,k) of the class k of the nth tier in the subclass prediction unit 732 according to the class k of the nth tier of the target pixel supplied from the class decision unit 734.

Note that for the 0th tier (n=0), the classification coefficient setting unit 731 sets the classification coefficients cc(0,0) of the 0th tier in the subclass prediction unit 732.

The subclass prediction unit 732 uses the pixel values $x_m$ of the pixels included in the class tap of the target pixel from the tap selection unit 22 (FIG. 63) and the classification coefficients cc(n,k)=$\{w_m\}$ of the class k of the nth tier from the classification coefficient setting unit 731 to perform the prediction computation according to the prediction error prediction equation $y=w_1x_1+w_2x_2+...+w_Mx_M$.

The subclass prediction unit 732 then supplies the subclass predicted value of the target pixel obtained by the prediction computation to the subclassification unit 733, and the process proceeds from step S333 to step S334.

In step S334, the subclassification unit 733 subclassifies the target pixel of the class k of the nth tier according to the subclass predicted value from the subclass prediction unit 732. The subclassification unit 733 then supplies the subclass of the nth tier of the target pixel obtained by the subclassification to the class decision unit 734, and the process proceeds from step S334 to step S335.

In step S335, the class decision unit 734 decides the class k of the (n+1)th tier of the target pixel by taking into account the subclass of the nth tier from the subclassification unit 733 in addition to the class k of the nth tier of the target pixel as described in FIG. 60.

The class decision unit 734 then supplies the class k of the (n+1)th tier of the target pixel to the classification coefficient setting unit 731, and the process proceeds from step S335 to step S336.

In step S336, the class decision unit 734 increments the tier n by 1, and the process returns to step S332.

In addition, if the class decision unit 734 determines that the tier n is the last tier N in step S332, the process proceeds to step S337. The class decision unit 734 supplies the class k of the Nth tier of the target pixel as a classification result of the target pixel to the coefficient acquisition unit 722 (FIG. 63), and the process of classification ends.

According to the classification using the classification coefficients, the pixels are classified on the basis of the prediction errors of the pixel values. Therefore, the classification can be performed so as to further improve the S/N of the second image obtained in the adaptive classification process.

<Seventh Configuration Example of Encoding Apparatus 11>

FIG. 66 is a block diagram illustrating a seventh configuration example of the encoding apparatus 11 of FIG. 1.

Note that in FIG. 66, the same reference signs are provided to the parts corresponding to the case of FIG. 9, and the description will be appropriately skipped.

In FIG. 66, the encoding apparatus 11 includes the components from the A/D conversion unit 101 to the computation unit 110, the components from the frame memory 112 to the rate control unit 117, and an adaptive classification filter 811.

Therefore, the encoding apparatus 11 of FIG. 66 is in common with the case of FIG. 9 in that the encoding apparatus 11 includes the components from the A/D conversion unit 101 to the computation unit 110 and the components from the frame memory 112 to the rate control unit 117.

However, the encoding apparatus 11 of FIG. 66 is different from the case of FIG. 9 in that the encoding apparatus 11 includes the adaptive classification filter 811 in place of the adaptive classification filter 111.

The adaptive classification filter 811 is in common with the adaptive classification filter 111 in that the adaptive classification filter 811 is a filter that functions as the ILF, that is, all of the DF, the SAO, and the ALF, through the adaptive classification process and executes the ILF process on the basis of the adaptive classification process.

However, the adaptive classification filter 811 is different from the adaptive classification filter 111 in that the adaptive classification filter 811 uses the classification coefficients to perform the classification.

Furthermore, the adaptive classification filter 811 is different from the adaptive classification filter 111 in that the classification coefficients are supplied and transmitted as filter information to the reversible encoding unit 106.

<Configuration Example of Adaptive Classification Filter 811>

FIG. 67 is a block diagram illustrating a configuration example of the adaptive classification filter 811 of FIG. 66.
In FIG. 67, the adaptive classification filter 811 includes an image conversion apparatus 831 and a learning apparatus 832.
The image being decoded is supplied from the computation unit 110 (FIG. 66) to the image conversion apparatus 831, and the tap coefficients and the classification coefficients of each class are supplied from the learning apparatus 832 to the image conversion apparatus 831. Furthermore, the encoding information is supplied to the image conversion apparatus 831.
The image conversion apparatus 831 sets the image being decoded as a first image to perform the image conversion based on the adaptive classification process using the tap coefficients of each class to thereby convert the image being decoded as a first image into the image after filtering as a second image equivalent to the original image (generates the image after filtering) and supplies the image after filtering to the frame memory 112 (FIG. 66).
Note that the image conversion apparatus 831 uses the classification coefficients from the learning apparatus 832 to perform the classification in the adaptive classification process. In addition, the image feature values obtained from the class tap and the encoding information can be used as necessary to perform the classification as in the image conversion apparatus 131 of FIG. 10.
The original image is supplied from the rearrangement buffer 102 (FIG. 66) to the learning apparatus 832, and the image being decoded is supplied from the computation unit 110 (FIG. 66) to the learning apparatus 832. Furthermore, the encoding information is supplied to the learning apparatus 832.
The learning apparatus 832 uses the image being decoded and the original image to perform the classification coefficient learning as well as the tap coefficient learning. In the tap coefficient learning, the classification coefficients obtained by the classification coefficient learning are used to perform the classification.
Furthermore, the learning apparatus 832 supplies, as filter information, the classification coefficients obtained by the classification coefficient learning and the tap coefficients of each class obtained by the tap coefficient learning to the image conversion apparatus 831 and the reversible encoding unit 106 (FIG. 66).
Note that, similar to the image conversion apparatus 831, the learning apparatus 832 can use the image feature values obtained from the class tap and the encoding information as necessary to perform the classification.

<Configuration Example of Image Conversion Apparatus 831>

FIG. 68 is a block diagram illustrating a configuration example of the image conversion apparatus 831 of FIG. 67.
Note that in FIG. 68, the same reference signs are provided to the parts corresponding to the image conversion apparatus 131 of FIG. 11, and the description will be appropriately skipped.
In FIG. 68, the image conversion apparatus 831 includes the tap selection units 21 and 22, the prediction computation unit 25, a classification unit 841, and a coefficient acquisition unit 842.
Therefore, the image conversion apparatus 831 is in common with the image conversion apparatus 131 of FIG. 11 in that the image conversion apparatus 831 includes the tap selection units 21 and 22 and the prediction computation unit 25.
However, the image conversion apparatus 831 is different from the image conversion apparatus 131 of FIG. 11 in that the image conversion apparatus 831 includes the classification unit 841 and the coefficient acquisition unit 842 in place of the classification unit 23 and the coefficient acquisition unit 24, respectively.
The classification unit 841 stores the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1) th tier supplied from the learning apparatus 832 of FIG. 67.
The classification unit 841 uses the class tap supplied from the tap selection unit 22 and uses the classification coefficients from the classification coefficients cc(0,0) of the $2^0$ class of the 0th tier to the classification coefficients cc(N-1,0), cc(N-1,1), ..., cc(N-1,$2^{N-1}$-1) of the $2^{N-1}$ classes of the (N-1)th tier as necessary to classify the target pixel. The classification unit 841 supplies the class of the target pixel (class of the Nth tier) obtained as a result of the classification to the coefficient acquisition unit 842.
The coefficient acquisition unit 842 stores the tap coefficients tc (N,k) (k=0,1,...$2^N$-1) of the $2^N$ classes of the Nth tier supplied from the learning apparatus 832 of FIG. 67.
The coefficient acquisition unit 842 acquires the tap coefficients tc(N,k) of the class k of the target pixel supplied from the classification unit 841 among the stored tap coefficients tc(N,k) (k=0,1,...$2^N$-1) of the $2^N$ classes of the Nth tier and supplies the tap coefficients tc(N,k) to the prediction computation unit 25.
Note that other than the classification coefficients, the classification unit 841 can also use the image feature values obtained from the class tap and the encoding information as necessary to perform the classification.
For example, in the subclassification of the 0th tier of the classification using the classification coefficients, the image feature values and the encoding information can be used in addition to the classification coefficients to classify the target pixels into two subclasses or three or more subclasses.

FIG. 69 is a block diagram illustrating a configuration example of the classification unit 841 of FIG. 68.

Note that in FIG. 69, the same reference signs are provided to the parts corresponding to the classification unit 721 of FIG. 64, and the description will be appropriately skipped.

In FIG. 69, the classification unit 841 includes the classification coefficient setting unit 731, the subclass prediction unit 732, the subclassification unit 733, and the class decision unit 734.

Therefore, the classification unit 841 of FIG. 69 is in common with the classification unit 721 of FIG. 64 in that the classification unit 841 includes the components from the classification coefficient setting unit 731 to the class decision unit 734.

However, in the classification unit 841 of FIG. 69, the classification coefficient setting unit 731 stores the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1) th tier supplied from the learning apparatus 832 of FIG. 67.

Furthermore, in the classification unit 841 of FIG. 69, the subclass predicted value of the target pixel is supplied from the subclass prediction unit 732 to the subclassification unit 733, and the class tap and the encoding information are also supplied from the subclass prediction unit 732 to the subclassification unit 733.

Other than the subclass predicted value, the subclassification unit 733 can also use the image feature value obtained from the class tap and the encoding information to perform the subclassification of the 0th tier.

In addition to the subclass predicted value, the image feature value and the encoding information are used to perform the subclassification of the 0th tier, and therefore, the classification performed by the classification unit 841 is classification using the image feature value and the encoding information in addition to the classification coefficients.

<Configuration Example of Learning Apparatus 832>

FIG. 70 is a block diagram illustrating a configuration example of the learning apparatus 832 of FIG. 67.

Note that in FIG. 70, the same reference signs are provided to the parts corresponding to the case of FIG. 61, and the description will be appropriately skipped.

In FIG. 70, the learning apparatus 832 includes the tap coefficient learning unit 701, the tap coefficient setting unit 702, the subclass teacher data generation unit 703, the classification coefficient learning unit 704, the classification coefficient setting unit 705, the subclass prediction unit 706, the subclassification unit 707, the class decision unit 708, the pixel prediction unit 709, and the end condition determination unit 710.

Therefore, the learning apparatus 832 of FIG. 70 is in common with the case of FIG. 61 in that the learning apparatus 832 includes the components from the tap coefficient learning unit 701 to the end condition determination unit 710.

However, in the learning apparatus 832 of FIG. 70, the student image and the encoding information are supplied from the subclass prediction unit 706 to the subclassification unit 707 in addition to the subclass predicted value.

Similar to the subclassification unit 733 of FIG. 69, the subclassification unit 707 can use the image feature value obtained from the class tap generated by the image conversion apparatus 831 of FIG. 68 and the encoding information in addition to the subclass predicted value to perform the subclassification of the 0th tier for each pixel of the student image.

The class decided by the class decision unit 708 by performing the subclassification of the 0th tier using the image feature value and the encoding information in addition to the subclass predicted value is a class obtained by the classification using the image feature value and the encoding information in addition to the classification coefficient.

Furthermore, in the learning apparatus 832 of FIG. 70, the pixel predicted value obtained by the pixel prediction unit 709 in the adaptive classification process can be supplied to the end condition determination unit 710, and the teacher image can also be supplied to the end condition determination unit 710.

In this case, the end condition determination unit 710 can use the teacher image as a true value to obtain the S/N of the pixel predicted value, and the end condition of learning can be that the amount of increase in the S/N of the image including the pixel predicted value is equal to or smaller than a threshold.

According to the classification coefficients and the tap coefficients obtained on the basis of the end condition, the S/N can be improved substantially to the limit (saturated state).

<Encoding Process>

FIG. 71 is a flow chart describing an example of the encoding process of the encoding apparatus 11 in FIG. 66.

In the encoding apparatus 11 of FIG. 66, processes similar to steps S11 to S29 of FIG. 14 are executed in steps S411 to S429, respectively.

However, although the learning apparatus 832 (FIG. 67) of the adaptive classification filter 811 in the encoding apparatus 11 sets, as student data, the image being decoded supplied to the learning apparatus 832 and sets, as teacher data, the original image corresponding to the image being decoded to appropriately perform the learning as in the learning apparatus 132 of FIG. 10, the tap coefficients and the classification coefficients of each class are generated as filter information in the learning. The tap coefficients and the classification coefficients of each class are then regarded as the filter information updated in step S412 and the filter information set as a transmission target in step S413.

In addition, although the adaptive classification filter 811 applies the adaptive classification process as a process of ILF to the image being decoded from the computation unit 110 in step S425 as in step S25 of FIG. 14, the classification coefficients are used to perform the classification in the adaptive classification process.

Here, although the image feature value and the encoding information can be used in addition to the classification coefficients in the classification using the classification coefficients as described in FIGS. 69 and 70, the description of the use of the image feature value and the encoding information in the classification using the classification coefficients will be appropriately skipped to simplify the description.

Furthermore, although the reversible encoding unit 106 (FIG. 66) encodes the quantization coefficients, the encoding information, and the filter information and includes them in the encoded data in step S427 as in step S27 of FIG. 14, the filter information included in the encoded data includes the classification coefficients in addition to the tap coefficients of each class.

Therefore, the encoded data obtained by the reversible encoding unit 106 includes the quantization coefficients and the encoding information as well as the tap coefficients and the classification coefficients as filter information. In addition, the encoded data is appropriately read and transmitted from the accumulation buffer 107 in step S428 as described in step S28 of FIG. 14.

FIG. 72 is a flow chart describing an example of the adaptive classification process executed in step S425 of FIG. 71.

In the image conversion apparatus 831 (FIG. 68) of the adaptive classification filter 811, processes similar to steps S41 to S47 of FIG. 15 are executed in steps S441 to S447, respectively.

However, in the classification of the target pixel of step S443, the classification unit 841 (FIG. 68 and FIG. 69) uses the classification coefficients to perform the classification to obtain the class of the last tier N of the target pixel as described in FIG. 65.

Furthermore, in step S444, the coefficient acquisition unit 842 (FIG. 68) acquires the tap coefficients of the class of the last tier N of the target pixel from the classification unit 841 among the tap coefficients of the $2^N$ classes of the Nth tier and supplies the tap coefficients to the prediction computation unit 25.

<Seventh Configuration Example of Decoding Apparatus 12>

FIG. 73 is a block diagram illustrating a seventh configuration example of the decoding apparatus 12 of FIG. 1.

Note that in FIG. 73, the same reference signs are provided to the parts corresponding to the case of FIG. 16, and the description will be appropriately skipped.

In FIG. 73, the decoding apparatus 12 includes the components from the accumulation buffer 201 to the computation unit 205, the rearrangement buffer 207, the D/A conversion unit 208, the components from the frame memory 210 to the selection unit 214, and an adaptive classification filter 861.

Therefore, the decoding apparatus 12 of FIG. 73 is in common with the case of FIG. 16 in that the decoding apparatus 12 includes the components from the accumulation buffer 201 to the computation unit 205, the rearrangement buffer 207, the D/A conversion unit 208, and the components from the frame memory 210 to the selection unit 214.

However, the decoding apparatus 12 of FIG. 73 is different from the case of FIG. 16 in that the decoding apparatus 12 includes the adaptive classification filter 861 in place of the adaptive classification filter 206.

The decoding apparatus 12 of FIG. 73 decodes the encoded data transmitted from the encoding apparatus 11 of FIG. 66.

Therefore, the filter information supplied from the reversible decoding unit 202 to the adaptive classification filter 861 includes the tap coefficients and the classification coefficients of each class.

Here, the classification coefficients included in the filter information are classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier. In addition, the tap coefficients of each class included in the filter information are the tap coefficients tc(N,k) (k=0,1,...$2^N$-1) of the $2^N$ classes of the Nth tier that is the last tier N.

The adaptive classification filter 861 is in common with the adaptive classification filter 206 of FIG. 16 in that the adaptive classification filter 861 is a filter that functions as the ILF, that is, all of the DF, the SAO, and the ALF through the adaptive classification process and executes the ILF process on the basis of the adaptive classification process.

However, the adaptive classification filter 861 is different from the adaptive classification filter 206 in that the adaptive classification filter 861 uses the classification coefficients to perform the classification in the adaptive classification process.

<Configuration Example of Adaptive Classification Filter 861>

FIG. 74 is a block diagram illustrating a configuration example of the adaptive classification filter 861 of FIG. 73.

In FIG. 74, the adaptive classification filter 861 includes an image conversion apparatus 871.

The image being decoded is supplied from the computation unit 205 (FIG. 73) to the image conversion apparatus 871, and the tap coefficients and the classification coefficients of each class as filter information and the encoding information are supplied from the reversible decoding unit 202 to the image conversion apparatus 871.

Similar to the image conversion apparatus 831 of FIG. 67, the image conversion apparatus 871 sets the image being decoded as a first image to execute the image conversion through the adaptive classification process using the tap coefficients of each class to thereby convert the image being decoded as a first image into the image after filtering as a second image equivalent to the original image (generates the image after filtering) and supplies the image after filtering to the rearrangement buffer 207 and the frame memory 210 (FIG. 73).

Note that, similar to the image conversion apparatus 831 of FIG. 67, the image conversion apparatus 871 uses the classification coefficients as filter information from the reversible decoding apparatus 202 (FIG. 73) to perform the classification in the adaptive classification process.

Similar to the image conversion apparatus 831 of FIG. 67, the image conversion apparatus 871 can perform the classification by using the image feature values obtained from the class tap and the encoding information as necessary in addition to the classification coefficients.

<Configuration Example of Image Conversion Apparatus 871>

FIG. 75 is a block diagram illustrating a configuration example of the image conversion apparatus 871 of FIG. 74.

Note that in FIG. 75, the same reference signs are provided to the parts in common with the image conversion apparatus 231 of FIG. 18, and the description will be appropriately skipped.

In FIG. 75, the image conversion apparatus 871 includes the tap selection units 241 and 242, the prediction computation unit 245, a classification unit 881, and a coefficient acquisition unit 882.

Therefore, the image conversion apparatus 871 of FIG. 75 is in common with the image conversion apparatus 231 of FIG. 18 in that the image conversion apparatus 871 includes the tap selection units 241 and 242 and the prediction computation unit 245.

However, the image conversion apparatus 871 of FIG. 75 is different from the image conversion apparatus 231 of FIG. 18 in that the image conversion apparatus 871 includes the classification unit 881 and the coefficient acquisition unit 882 in place of the classification unit 243 and the coefficient acquisition unit 244, respectively.

The classification coefficients as filter information from the reversible decoding unit 202 (FIG. 73), that is, the classification coefficients from the classification coefficients cc(0,0) of the $2^0$ class of the 0th tier to the classification coefficients cc(N-1,0), cc(N-1,1), ..., cc(N-1, $2^{N-1}$-1) of the $2^{N-1}$ classes of the (N-1)th tier, are supplied to and stored in the classification unit 881.

The tap coefficients tc(N,k) (k=0,1,...$2^N$-1) of the $2^N$ classes of the Nth tier as tap coefficients of each class that are filter information from the reversible decoding unit 202 (FIG. 73) are supplied to and stored in the coefficient acquisition unit 882.

The configuration of the classification unit 881 is similar to the configuration of the classification unit 841 (FIG. 68 and FIG. 69) on the encoding apparatus 11 (FIG. 66) side. The classification unit 881 uses the classification coefficients to perform the classification as in the classification unit 841 and supplies the class of the Nth tier of the target pixel obtained as a result of the classification to the coefficient acquisition unit 882.

The coefficient acquisition unit 882 acquires the tap coefficients tc(N,k) of the class of the Nth tier of the target pixel from the classification unit 881 among the stored tap coefficients tc (N,k) (k=0,1,...$2^N$-1) of the $2^N$ classes of the Nth tier and supplies the tap coefficients tc(N,k) to the prediction computation unit 245.

<Decoding Process>

FIG. 76 is a flow chart describing an example of the decoding process of the decoding apparatus 12 in FIG. 73.

In the decoding apparatus 12 of FIG. 73, processes similar to steps S61 to S73 of FIG. 19 are executed in steps S461 to S473, respectively.

However, although the reversible decoding unit 202 decodes the encoded data to supply the quantization coefficients obtained by the decoding to the inverse quantization unit 203 and supplies the encoding information and the filter information obtained by decoding the encoded data to the intra prediction unit 212, the motion prediction compensation unit 213, the adaptive classification filter 861, and other necessary blocks in step S462 as in step S62 of FIG. 19, the filter information supplied to the adaptive classification filter 861 includes the tap coefficients of each class and the classification coefficients of each class.

In addition, although the adaptive classification filter 861 applies the adaptive classification process as a process of ILF to the image being decoded from the computation unit 205 in step S470 as in step S70 of FIG. 19, the classification coefficients are used to perform the classification in the adaptive classification process.

Note that, similar to the adaptive classification filter 811 (FIG. 66), the adaptive classification filter 861 can also use the image feature values and the encoding information in addition to the classification coefficients in the classification using the classification coefficients.

FIG. 77 is a flow chart describing an example of the adaptive classification process executed in step S470 of FIG. 76.

In the image conversion apparatus 871 (FIG. 75) of the adaptive classification filter 861, processes similar to steps S81 to S87 of FIG. 20 are executed in steps S481 to S487, respectively.

However, in the classification of the target pixel of step S483, the classification unit 881 (FIG. 75) uses the classification coefficients supplied as filter information from the reversible decoding unit 202 to perform the classification as in the classification unit 841 (FIG. 68) on the encoding apparatus 11 (FIG. 66) side to obtain the class of the last tier N of the target pixel.

Furthermore, in step S484, the coefficient acquisition unit 882 (FIG. 75) acquires the tap coefficients of the class of the last tier N of the target pixel from the classification unit 881 among the tap coefficients of the $2^N$ classes of the Nth tier supplied as filter information from the reversible decoding unit 202 and supplies the tap coefficients to the prediction computation unit 245.

<Another Configuration Example of Learning Apparatus 832>

FIG. 78 is a block diagram illustrating another configuration example of the learning apparatus 832 of FIG. 67.

Note that in FIG. 78, the same reference signs are provided to the parts corresponding to the case of FIG. 70, and the description will be appropriately skipped.

In FIG. 78, the learning apparatus 832 includes the tap coefficient learning unit 701, the tap coefficient setting unit 702, the subclass teacher data generation unit 703, the classification coefficient learning unit 704, the classification coefficient setting unit 705, the subclass prediction unit 706, the subclassification unit 707, the class decision unit 708, the pixel prediction unit 709, the end condition determination unit 710, a transmission band detection unit 911, a transmission amount calculation unit 912, and a transmission target coefficient setting unit 913.

Therefore, the learning apparatus 832 of FIG. 78 is in common with the case of FIG. 70 in that the learning apparatus 832 includes the components from the tap coefficient learning unit 701 to the end condition determination unit 710.

However, the learning apparatus 832 of FIG. 78 is different from the case of FIG. 70 in that the learning apparatus 832 additionally includes the transmission band detection unit 911, the transmission amount calculation unit 912, and the transmission target coefficient setting unit 913.

The transmission band detection unit 911 detects a transmission band that can be used to transmit the encoded data from the encoding apparatus 11 (for example, a bitrate allocated to the encoded data) and supplies the transmission band to the transmission amount calculation unit 912.

On the basis of the transmission band from the transmission band detection unit 911, the transmission amount calculation unit 912 obtains a transmittable amount that is an amount of data of the filter information transmittable at the transmission band and supplies the transmittable amount to the transmission target coefficient setting unit 913.

The tap coefficients of each tier obtained by the learning of each tier, that is, the tap coefficients from the 0th tier to the Nth tier, are supplied from the tap coefficient setting unit 702 to the transmission target coefficient setting unit 913. Furthermore, the classification coefficients from the 0th tier to the (N-1)th tier are supplied from the classification coefficient setting unit 705 to the transmission target coefficient setting unit 913.

The transmission target coefficient setting unit 913 selects the tap coefficients to be transmitted among the tap coefficients from the tap coefficient setting unit 702 according to the transmittable amount from the transmission amount calculation unit 912 and outputs the tap coefficients as filter information.

The transmission target coefficient setting unit 913 further selects the classification coefficients to be transmitted among the classification coefficients from the classification coefficient setting unit 705 according to the transmittable amount from the transmission amount calculation unit 912 and outputs the classification coefficients as filter information.

That is, the transmission target coefficient setting unit 913 sets a transmittable tier N' (<= last tier N) that allows transmitting the tap coefficients and the classification coefficients according to the transmittable amount from the transmission amount calculation unit 912. The larger the transmittable amount, the larger (deeper) the tier set for the transmittable tier N'.

The transmission target coefficient setting unit 913 further sets (selects) the tap coefficients of the N'th tier as a transmission target among the tap coefficients from the 0th tier to the Nth tier and sets the classification coefficients from the 0th tier to the (N'-1)th tier as a transmission target among the classification coefficients from the 0th tier to the (N-1)th tier.

The transmission target coefficient setting unit 913 then outputs, as filter information, the tap coefficients and the classification coefficients set as the transmission targets (coefficients to be transmitted).

Therefore, the tap coefficients and the classification coefficients set as the transmission targets according to the transmittable amount among the tap coefficients and the classification coefficients obtained by the learning apparatus 832 are transmitted in the encoding apparatus 11 including the learning apparatus 832 of FIG. 78.

In this way, for example, a variable transmission system with a variable transmission band, such as adaptive streaming, can be handled in the case where the tap coefficients and the classification coefficients set as the transmission targets according to the transmittable amount are transmitted among the tap coefficients and the classification coefficients obtained by the learning apparatus 832.

That is, in a case where the transmission band is large, the classification coefficients for the classification up to the classes of a deep tier and the tap coefficients of the classes of the deep tier are transmitted, and this can significantly contribute to the improvement of the S/N. In addition, in a case where the transmission band is small, the classification coefficients for the classification up to the classes of a shallow tier and the tap coefficients of the classes of the shallow tier are transmitted, and the S/N can be improved within a possible range of the small transmission band.

Note that in the case of transmitting the encoded data in the variable transmission system, the amount of data of the tap coefficients and the classification coefficients suitable for each of some transmission bands can be obtained by learning, and the tap coefficients and the classification coefficients to be transmitted as filter information can be switched according to the transmission band (or the transmittable amount).

In addition, the tap coefficients and the classification coefficients as provisional transmission targets can be selected according to the transmission band from the tap coefficients and the classification coefficients of each transmission band. The transmittable tier N' can be further set for the tap coefficients and the classification coefficients as the provisional transmission targets, and the tap coefficients of the N'th tier and the classification coefficients from the 0th tier to the (N'-1)th tier can be finally selected as transmission targets.

<RD Curves>

FIG. 79 is a diagram illustrating RD (Rate-Distortion) curves of a case where the adaptive classification filter that executes the process of ILF on the basis of the adaptive classification process is provided as the ILF and a case where the ALF is provided as the ILF.

Note that FIG. 79 also illustrates an RD curve of a case where the ILF is not provided, in addition to the RD curve of the case where the adaptive classification filter is provided and the RD curve of the case where the ALF is provided.

The RD curve is a graph indicating the S/N on the vertical axis and the bitrate (of the encoded data) on the horizontal axis, and the RD curve can be obtained by plotting the points corresponding to the S/N and the bitrate for each quantization parameter QP during encoding.

The compression efficiency improves with an increase in the S/N and with a decrease in the bitrate. Therefore, the RD curve positioned on the upper left indicates excellent compression efficiency.

In FIG. 79, the compression efficiency of the case where the ALF is provided is improved by 3.2% compared to the case where the ILF is not provided, and the compression efficiency of the case where the adaptive classification filter is provided is improved by 5.5% compared to the case where the ILF is not provided.

Therefore, the improvement of the compression efficiency in the case where the adaptive classification filter is provided can be close to twice the improvement of the compression efficiency in the case where the ALF is provided.

Note that although the filter information provided from the encoding apparatus 11 to the decoding apparatus 12 includes the tap coefficients in the present embodiment to simplify the description, the filter information can include the seed coefficients and the parameters z in place of the tap coefficients. The tap coefficients can be obtained from the seed coefficients and the parameters z, and the seed coefficients and the parameters z are information equivalent to the tap coefficients. In the present specification, the tap coefficients as filter information include the seed coefficients and the parameters z in addition to the tap coefficients. In the case where the seed coefficients and the parameters z are adopted as the tap coefficients, the parameters z can be decided on the basis of, for example, a predetermined cost function.

<Application to Multi-View Image Encoding/Decoding System>

The series of processes can be applied to a multi-view image encoding/decoding system.

FIG. 80 is a diagram illustrating an example of a multi-view image encoding system.

As illustrated in FIG. 80, multi-view images include images from a plurality of viewpoints (views). The plurality of views of the multi-view images include a base view for performing encoding and decoding by using only the images of the base view without using the information of other views and include non-base views for performing encoding and decoding by using the information of other views. In the encoding and decoding of the non-base views, the information of the base view may be used, or the information of the other non-base views may be used.

In the case of encoding and decoding the multi-view images as in the example of FIG. 80, the multi-view images are encoded for each viewpoint. Furthermore, in the case of decoding the encoded data obtained in this way, the encoded data of each viewpoint is decoded (that is, for each viewpoint). The methods described in the embodiment may be applied to the encoding and decoding for each viewpoint. In this way, the S/N and the compression efficiency can be significantly improved. That is, in the case of the multi-view images, the S/N and the compression efficiency can also be significantly improved in a similar manner.

<Multi-View Image Encoding/Decoding System>

FIG. 81 is a diagram illustrating a multi-view image encoding apparatus of the multi-view image encoding/decoding system that performs the multi-view image encoding/decoding described above.

As illustrated in FIG. 81, a multi-view image encoding apparatus 1000 includes an encoding unit 1001, an encoding unit 1002, and a multiplexing unit 1003.

The encoding unit 1001 encodes a base view image to generate a base view image encoding stream. The encoding unit 1002 encodes a non-base view image to generate a non-base view image encoding stream. The multiplexing unit 1003 multiplexes the base view image encoding stream generated by the encoding unit 1001 and the non-base view image encoding stream generated by the encoding unit 1002 to generate a multi-view image encoding stream.

FIG. 82 is a diagram illustrating a multi-view image decoding apparatus that performs the multi-view image decoding described above.

As illustrated in FIG. 82, a multi-view image decoding apparatus 1010 includes a demultiplexing unit 1011, a decoding unit 1012, and a decoding unit 1013.

The demultiplexing unit 1011 demultiplexes a multi-view image encoding stream including multiplexed base view image encoding stream and non-base view image encoding stream and extracts a base view image encoding stream and a non-base view image encoding stream. The decoding unit 1012 decodes the base view image encoding stream extracted by the demultiplexing unit 1011 and obtains a base view image. The decoding unit 1013 decodes the non-base view image encoding stream extracted by the demultiplexing unit 1011 and obtains a non-base view image.

For example, in the multi-view image encoding/decoding system, the encoding apparatus 11 described in the embodiment may be applied as the encoding unit 1001 and the encoding unit 1002 of the multi-view image encoding apparatus 1000. In this way, the methods described in the embodiment can also be applied to the encoding of multi-view images. That is, the S/N and the compression efficiency can be significantly improved. In addition, for example, the decoding apparatus 12 described in the embodiment may be applied as the decoding unit 1012 and the decoding unit 1013 of the multi-view image decoding apparatus 1010. In this way, the methods described in the embodiment can also be applied to the decoding of the encoded data of multi-view images. That is, the S/N and the compression efficiency can be significantly improved.

<Application to Tiered Image Encoding/Decoding System>

In addition, the series of processes can be applied to a tiered image encoding (scalable encoding) and decoding system.

FIG. 83 is a diagram illustrating an example of a tiered image encoding system.

In the tiered image encoding (scalable encoding), an image is divided into a plurality of layers (image is tiered) to provide a scalability function for a predetermined parameter, and the image data is encoded in each layer. The tiered image decoding (scalable decoding) is decoding corresponding to the tiered image encoding.

As illustrated in FIG. 83, in the image tiering, one image is partitioned into a plurality of images (layers) on the basis of the predetermined parameter with the scalability function. That is, the images after tiering (tiered images) include images of a plurality of tiers (layers) with different values of the predetermined parameter. The plurality of layers of the tiered images include a base layer for encoding and decoding by using only the images of the base layer without using the images of other layers and include non-base layers (also referred to as enhancement layers) for encoding and decoding by using the images of other layers. In the non-base layers, the images of the base layer may be used, or the images of the other non-base layers may be used.

In general, the non-base layer includes data of a difference image (difference data) of an image of the non-base layer and an image of another layer in order to reduce the redundancy. For example, in a case where one image is divided into two tiers including a base layer and a non-base layer (also referred to as enhancement layer), an image with lower quality than the original image can be obtained from only the data of the base layer, and the data of the base layer and the data of the non-base layer can be combined to obtain the original image (that is, high-quality image).

The images are tiered in this way, and images with a variety of quality can be easily obtained according to the situation. For example, image compression information of only the base layer can be transmitted to a terminal with low processing capability, such as a mobile phone, and moving images with low spatial-temporal resolution or low image quality can be reproduced. Image compression information of the enhancement layers in addition to the base layer can be transmitted to a terminal with high processing capability, such as a TV and a personal computer, and moving images with high spatial temporal resolution or high image quality can be reproduced. In this way, the image compression information according to the capability of the terminal or the network can be transmitted from the server without executing a transcoding process.

In the case of encoding and decoding the tiered images as in the example of FIG. 83, the tiered images are encoded in each layer. Furthermore, in the case of decoding the encoded data obtained in this way, the encoded data of each layer is decoded (that is, on a layer-by-layer basis). The methods described in the embodiment may be applied to the encoding and decoding of each layer. In this way, the S/N and the compression efficiency can be significantly improved. That is, in the case of tiered images, the S/N and the compression efficiency can be significantly improved in a similar manner.

<Scalable Parameter>

In the tiered image encoding and the tiered image decoding (scalable encoding and scalable decoding), the parameter with the scalability function is arbitrary. For example, the spatial resolution may be the parameter (spatial scalability). In the case of the spatial scalability, the resolution of the image is different in each layer.

In addition, another example of the parameter with scalability includes the temporal resolution (temporal scalability). In the case of the temporal scalability, the frame rate is different in each layer.

Furthermore, another example of the parameter with scalability includes the signal to noise ratio (SNR) (SNR scalability). In the case of the SNR scalability, the SN ratio is different in each layer.

Obviously, the parameter with scalability can be a parameter other than the parameters described in the examples. For example, there is bit-depth scalability in which the base layer includes an 8-bit image, and the enhancement layer is added to the 8-bit image to obtain a 10-bit image.

In addition, there is chroma scalability in which the base layer includes a component image in a 4:2:0 format, and the enhancement layer is added to the component image to obtain a component image in a 4:2:2 format.

<Tiered Image Encoding/Decoding System>

FIG. 84 is a diagram illustrating a tiered image encoding apparatus of the tiered image encoding/decoding system that performs the tiered image encoding/decoding described above.

As illustrated in FIG. 84, a tiered image encoding apparatus 1020 includes an encoding unit 1021, an encoding unit 1022, and a multiplexing unit 1023.

The encoding unit 1021 encodes a base layer image to generate a base layer image encoding stream. The encoding unit 1022 encodes a non-base layer image to generate a non-base layer image encoding stream. The multiplexing unit 1023 multiplexes the base layer image encoding stream generated by the encoding unit 1021 and the non-base layer image encoding stream generated by the encoding unit 1022 to generate a tiered image encoding stream.

FIG. 85 is a diagram illustrating a tiered image decoding apparatus that performs the tiered image decoding described above.

As illustrated in FIG. 85, a tiered image decoding apparatus 1030 includes a demultiplexing unit 1031, a decoding unit 1032, and a decoding unit 1033.

The demultiplexing unit 1031 demultiplexes a tiered image encoding stream including multiplexed base layer image encoding stream and non-base layer image encoding stream and extracts a base layer image encoding stream and a non-base layer image encoding stream. The decoding unit 1032 decodes the base layer image encoding stream extracted by the demultiplexing unit 1031 and obtains a base layer image. The decoding unit 1033 decodes the non-base layer image encoding stream extracted by the demultiplexing unit 1031 and obtains a non-base layer image.

For example, in the tiered image encoding/decoding system, the encoding apparatus 11 described in the embodiment may be applied as the encoding unit 1021 and the encoding unit 1022 of the tiered image encoding apparatus 1020. In this way, the methods described in the embodiment can also be applied to the encoding of tiered images. That is, the S/N and the compression efficiency can be significantly improved. In addition, for example, the decoding apparatus 12 described in the embodiment may be applied as the decoding unit 1032 and the decoding unit 1033 of the tiered image decoding apparatus 1030. In this way, the methods described in the embodiment can also be applied to the decoding of the encoded data of tiered images. That is, the S/N and the compression efficiency can be significantly improved.

<Computer>

The series of processes can be executed by hardware or can be executed by software. In the case where the series of processes are executed by software, a program included in the software is installed on a computer. Here, examples of the computer include a computer incorporated into dedicated hardware and a general-purpose personal computer that can execute various functions by installing various programs.

FIG. 86 is a block diagram illustrating a configuration example of the hardware of the computer that uses a program to execute the series of processes.

In a computer 1100 illustrated in FIG. 86, a CPU (Central Processing Unit) 1101, a ROM (Read Only Memory) 1102, and a RAM (Random Access Memory) 1103 are connected to each other through a bus 1104.

An input-output interface 1110 is also connected to the bus 1104. An input unit 1111, an output unit 1112, a storage unit 1113, a communication unit 1114, and a drive 1115 are connected to the input-output interface 1110.

The input unit 1111 includes, for example, a keyboard, a mouse, a microphone, a touch panel, an input terminal, and the like. The output unit 1112 includes, for example, a display, a speaker, an output terminal, and the like. The storage unit 1113 includes, for example, a hard disk, a RAM disk, a non-volatile memory, and the like. The communication unit 1114 includes, for example, a network interface. The drive 1115 drives a removable medium 821, such as a magnetic disk, an optical disk, a magneto-optical disk, and a semiconductor memory.

In the computer configured in this way, the CPU 1101 loads, for example, a program stored in the storage unit 1113 to the RAM 1103 through the input-output interface 1110 and the bus 1104 to execute the program to thereby execute the series of processes. Data and the like necessary for the CPU 1101 to execute various processes are also appropriately stored in the RAM 1103.

The program executed by the computer (CPU 1101) can be applied by, for example, recording the program in the removable medium 821 as a package medium or the like. In this case, the removable medium 821 can be mounted on the drive 1115 to install the program on the storage unit 1113 through the input-output interface 1110.

The program can also be provided through a wired or wireless transmission medium, such as a local area network, the Internet, and digital satellite broadcasting. In this case, the program can be received by the communication unit 1114 and installed on the storage unit 1113.

In addition, the program can also be installed in advance on the ROM 1102 or the storage unit 1113.

<Application of the Present Technique>

The encoding apparatus 11 and the decoding apparatus 12 according to the embodiment can be applied to, for example, various electronic devices, such as a transmitter and a receiver for distribution in satellite broadcasting, cable broadcasting like cable TV, or the Internet or for distribution to a terminal through cellular communication, a recording apparatus that records images in a medium like an optical disk, a magnetic disk, or a flash memory, and a reproduction apparatus that reproduces images from these storage media. Hereinafter, four application examples will be described.

<First Application Example: Television Receiver>

FIG. 87 is a diagram illustrating an example of a schematic configuration of a television apparatus according to the embodiment.

A television apparatus 1200 includes an antenna 1201, a tuner 1202, a demultiplexer 1203, a decoder 1204, a video signal processing unit 1205, a display unit 1206, an audio signal processing unit 1207, a speaker 1208, an external interface (I/F) unit 1209, a control unit 1210, a user interface (I/F) unit 1211, and a bus 1212.

The tuner 1202 extracts a signal of a desired channel from a broadcast signal received through the antenna 1201 and demodulates the extracted signal. The tuner 1202 then outputs an encoded bitstream obtained by the demodulation to the demultiplexer 1203. That is, the tuner 1202 plays a role of a transmission unit in the television apparatus 1200 that receives an encoded stream in which an image is encoded.

The demultiplexer 1203 separates a video stream and an audio stream of a program to be viewed from the encoded bitstream and outputs each of the separated streams to the decoder 1204. The demultiplexer 1203 also extracts auxiliary data, such as EPG (Electronic Program Guide), from the encoded bitstream and supplies the extracted data to the control unit 1210. Note that in a case where the encoded bitstream is scrambled, the demultiplexer 1203 may descramble the encoded bitstream.

The decoder 1204 decodes the video stream and the audio stream input from the demultiplexer 1203. The decoder 1204 then outputs video data generated in the decoding process to the video signal processing unit 1205. The decoder 1204 also outputs audio data generated in the decoding process to the audio signal processing unit 1207.

The video signal processing unit 1205 reproduces the video data input from the decoder 1204 and causes the display unit 1206 to display the video. The video signal processing unit 1205 may also cause the display unit 1206 to display an application screen supplied through a network. The video signal processing unit 1205 may also apply, for example, an additional process, such as noise removal, to the video data according to the setting. The video signal processing unit 1205 may further generate, for example, an image of GUI (Graphical User Interface), such as a menu, a button, and a cursor, and superimpose the generated image on the output image.

The display unit 1206 is driven by a drive signal supplied from the video signal processing unit 1205, and the display unit 1206 displays a video or an image on a video screen of a display device (for example, liquid crystal display, plasma display, OELD (Organic ElectroLuminescence Display) (organic EL display), or the like).

The audio signal processing unit 1207 applies a reproduction process, such as D/A conversion and amplification, to the audio data input from the decoder 1204 and causes the speaker 1208 to output the sound. The audio signal processing unit 1207 may also apply an additional process, such as noise removal, to the audio data.

The external interface unit 1209 is an interface for connecting the television apparatus 1200 and an external device or a network. For example, the decoder 1204 may decode a video stream or an audio stream received through the external interface unit 1209. That is, the external interface unit 1209 also plays a role of a transmission unit in the television apparatus 1200 that receives an encoded stream in which an image is encoded.

The control unit 1210 includes a processor, such as a CPU, and a memory, such as a RAM and a ROM. The memory stores a program executed by the CPU, program data, EPG data, data acquired through the network, and the like. The CPU reads and executes the program stored in the memory at, for example, the start of the television apparatus 1200. The CPU executes the program to control the operation of the television apparatus 1200 according to, for example, an operation signal input from the user interface unit 1211.

The user interface unit 1211 is connected to the control unit 1210. The user interface unit 1211 includes, for example, a button and a switch for the user to operate the television apparatus 1200, a reception unit of a remote control signal, and the like. The user interface unit 1211 detects an operation by the user through these constituent elements to generate an operation signal and outputs the generated operation signal to the control unit 1210.

The bus 1212 mutually connects the tuner 1202, the demultiplexer 1203, the decoder 1204, the video signal processing unit 1205, the audio signal processing unit 1207, the external interface unit 1209, and the control unit 1210.

In the television apparatus 1200 configured in this way, the decoder 1204 may have the function of the decoding apparatus 12. That is, the decoder 1204 may use the methods described in the embodiment to decode the encoded data. In this way, the television apparatus 1200 can significantly improve the S/N and the compression efficiency.

In addition, in the television apparatus 1200 configured in this way, the video signal processing unit 1205 may be able to, for example, encode the image data supplied from the decoder 1204 and output the obtained encoded data to the outside of the television apparatus 1200 through the external interface unit 1209. Furthermore, the video signal processing unit 1205 may have the function of the encoding apparatus 11. That is, the video signal processing unit 1205 may use the methods described in the embodiment to encode the image data supplied from the decoder 1204. In this way, the television apparatus 1200 can significantly improve the S/N and the compression efficiency.

<Second Application Example: Mobile Phone>

FIG. 88 is a diagram illustrating an example of a schematic configuration of a mobile phone according to the embodiment.

A mobile phone 1220 includes an antenna 1221, a communication unit 1222, an audio codec 1223, a speaker 1224, a microphone 1225, a camera unit 1226, an image processing unit 1227, a multiplexing/demultiplexing unit 1228, a recording/reproducing unit 1229, a display unit 1230, a control unit 1231, an operation unit 1232, and a bus 1233.

The antenna 1221 is connected to the communication unit 1222. The speaker 1224 and the microphone 1225 are connected to the audio codec 1223. The operation unit 1232 is connected to the control unit 1231. The bus 1233 mutually connects the communication unit 1222, the audio codec 1223, the camera unit 1226, the image processing unit 1227, the multiplexing/demultiplexing unit 1228, the recording/reproducing unit 1229, the display unit 1230, and the control unit 1231.

The mobile phone 1220 performs operations, such as transmitting and receiving an audio signal, transmitting and receiving email or image data, taking an image, and recording data, in various operation modes including a voice call mode, a data communication mode, an imaging mode, and a TV phone mode.

In the voice call mode, an analog audio signal generated by the microphone 1225 is supplied to the audio codec 1223. The audio codec 1223 converts the analog audio signal into audio data and performs A/D conversion to compress the converted audio data. The audio codec 1223 then outputs the audio data after the compression to the communication unit 1222. The communication unit 1222 encodes and modulates the audio data to generate a transmission signal. The communication unit 1222 then transmits the generated transmission signal to a base station (not illustrated) through the antenna 1221. The communication unit 1222 also amplifies a wireless signal received through the antenna 1221 and converts the frequency to acquire a reception signal. The communication unit 1222 then demodulates and decodes the reception signal to generate audio data and outputs the generated audio data to the audio codec 1223. The audio codec 1223 expands and performs D/A conversion of the audio data to generate an analog audio signal. The audio codec 1223 then supplies the generated audio signal to the speaker 1224 to output the sound.

In addition, for example, the control unit 1231 generates character data of an email according to an operation by the user through the operation unit 1232 in the data communication mode. The control unit 1231 also causes the display unit 1230 to display the characters. The control unit 1231 also generates email data according to a transmission instruction from the user through the operation unit 1232 and outputs the generated email data to the communication unit 1222. The communication unit 1222 encodes and modulates the email data to generate a transmission signal. The communication unit 1222 then transmits the generated transmission signal to a base station (not illustrated) through the antenna 1221. The communication unit 1222 also amplifies a wireless signal received through the antenna 1221 and converts the frequency to acquire a reception signal. The communication unit 1222 then demodulates and decodes the reception signal to restore email data and outputs the restored email data to the control unit 1231. The control unit 1231 causes the display unit 1230 to display the content of the email and supplies the email data to the recording/reproducing unit 1229 to write the email data to a storage medium of the recording/reproducing unit 1229.

The recording/reproducing unit 1229 includes an arbitrary read/write storage medium. For example, the storage medium may be a built-in storage medium, such as a RAM and a flash memory, or may be an externally mounted storage medium, such as a hard disk, a magnetic disk, a magneto-optical disk, an optical disk, a USB (Universal Serial Bus) memory, and a memory card.

In addition, for example, the camera unit 1226 takes an image of a subject to generate image data and outputs the generated image data to the image processing unit 1227 in the imaging mode. The image processing unit 1227 encodes the image data input from the camera unit 1226 and supplies the encoded stream to the recording/reproducing unit 1229 to write the encoded stream to the storage medium of the recording/reproducing unit 1229.

Furthermore, the recording/reproducing unit 1229 reads an encoded stream recorded in the storage medium and outputs the encoded stream to the image processing unit 1227 in the image display mode. The image processing unit 1227 decodes the encoded stream input from the recording/reproducing unit 1229 and supplies the image data to the display unit 1230 to display the image.

In addition, for example, the multiplexing/demultiplexing unit 1228 multiplexes a video stream encoded by the image processing unit 1227 and an audio stream input from the audio codec 1223 and outputs the multiplexed stream to the communication unit 1222 in the TV phone mode. The communication unit 1222 encodes and modulates the stream to generate a transmission signal. The communication unit 1222 then transmits the generated transmission signal to a base station (not illustrated) through the antenna 1221. The communication unit 1222 also amplifies a wireless signal received through the antenna 1221 and converts the frequency to acquire a reception signal. The transmission signal and the reception signal can include encoded bitstreams. The communication unit 1222 then demodulates and decodes the reception signal to restore the stream and outputs the restored stream to the multiplexing/demultiplexing unit 1228. The multiplexing/demultiplexing unit 1228 separates a video stream and an audio stream from the input stream, outputs the video stream to the image processing unit 1227, and outputs the audio stream to the audio codec 1223. The image processing unit 1227 decodes the video stream to generate video data. The video data is supplied to the display unit 1230, and the display unit 1230 displays a series of images. The audio codec 1223 expands and performs D/A conversion of the audio stream to generate an analog audio signal. The audio codec 1223 then supplies the generated audio signal to the speaker 1224 to output the sound.

In the mobile phone 1220 configured in this way, the image processing unit 1227 may have, for example, the function of the encoding apparatus 11. That is, the image processing unit 1227 may use the methods described in the embodiment to encode the image data. In this way, the mobile phone 1220 can significantly improve the S/N and the compression efficiency.

In addition, in the mobile phone 1220 configured in this way, the image processing unit 1227 may have, for example, the function of the decoding apparatus 12. That is, the image processing unit 1227 may use the methods described in the embodiment to decode the encoded data. In this way, the mobile phone 1220 can significantly improve the S/N and the compression efficiency.

<Third Application Example: Recording/Reproducing Apparatus>

FIG. 89 is a diagram illustrating an example of a schematic configuration of a recording/reproducing apparatus according to the embodiment.

For example, a recording/reproducing apparatus 1240 encodes audio data and video data of a received broadcast program and records the audio data and the video data in a recording medium. The recording/reproducing apparatus 1240 may also encode audio data and video data acquired from another apparatus and record the audio data and the video data in the recording medium, for example. The recording/reproducing apparatus 1240 also reproduces data recorded in the recording medium on a monitor and a speaker according to an instruction of the user, for example. In this case, the recording/reproducing apparatus 1240 decodes audio data and video data.

The recording/reproducing apparatus 1240 includes a tuner 1241, an external interface (I/F) unit 1242, an encoder 1243, an HDD (Hard Disk Drive) unit 1244, a disk drive 1245, a selector 1246, a decoder 1247, an OSD (On-Screen Display) unit 1248, a control unit 1249, and a user interface (I/F) unit 1250.

The tuner 1241 extracts a signal of a desired channel from a broadcast signal received through an antenna (not illustrated) and demodulates the extracted signal. The tuner 1241 then outputs an encoded bitstream obtained by the demodulation to the selector 1246. That is, the tuner 1241 plays a role of a transmission unit in the recording/reproducing apparatus 1240.

The external interface unit 1242 is an interface for connecting the recording/reproducing apparatus 1240 and an external device or a network. The external interface unit 1242 may be, for example, an IEEE (Institute of Electrical and Electronic Engineers) 1394 interface, a network interface, a USB interface, a flash memory interface, or the like. For example, video data and audio data received through the external interface unit 1242 are input to the encoder 1243. That is, the external interface unit 1242 plays a role of a transmission unit in the recording/reproducing apparatus 1240.

The encoder 1243 encodes video data and audio data in a case where the video data and the audio data input from the external interface unit 1242 are not encoded. The encoder 1243 then outputs an encoded bitstream to the selector 1246.

The HDD unit 1244 records encoded bitstreams including compressed content data of video, sound, and the like, various programs, and other data in an internal hard disk. The HDD unit 1244 also reads the data from the hard disk at the reproduction of the video and the sound.

The disk drive 1245 records and reads data to and from a mounted recording medium. The recording medium mounted on the disk drive 1245 may be, for example, a DVD (Digital Versatile Disc) disk (DVD-Video, DVD-RAM (DVD-Random Access Memory), DVD-R (DVD-Recordable), DVD-RW (DVD-Rewritable), DVD+R (DVD+Recordable), DVD+RW (DVD+Rewritable), or the like), a Blu-ray (registered trademark) disk, or the like.

At the recording of the video and the sound, the selector 1246 selects an encoded bitstream input from the tuner 1241 or the encoder 1243 and outputs the selected encoded bitstream to the HDD 1244 or the disk drive 1245. In addition, at the reproduction of the video and the sound, the selector 1246 outputs the encoded bitstream input from the HDD 1244 or the disk drive 1245 to the decoder 1247.

The decoder 1247 decodes the encoded bitstream to generate video data and audio data. The decoder 1247 then outputs the generated video data to the OSD unit 1248. In addition, the decoder 1247 outputs the generated audio data to an external speaker.

The OSD unit 1248 reproduces the video data input from the decoder 1247 and displays the video. The OSD unit 1248 may also superimpose, for example, an image of GUI, such as a menu, a button, and a cursor, on the displayed video.

The control unit 1249 includes a processor, such as a CPU, and a memory, such as a RAM and a ROM. The memory stores a program executed by the CPU, program data, and the like. The CPU reads and executes the program stored in the memory at, for example, the start of the recording/reproducing apparatus 1240. The CPU executes the program to control the operation of the recording/reproducing apparatus 1240 according to, for example, an operation signal input from the user interface unit 1250.

The user interface unit 1250 is connected to the control unit 1249. The user interface unit 1250 includes, for example, a button and a switch for the user to operate the recording/reproducing apparatus 1240, a reception unit of a remote control signal, and the like. The user interface unit 1250 detects an operation by the user through these constituent elements to generate an operation signal and outputs the generated operation signal to the control unit 1249.

In the recording/reproducing apparatus 1240 configured in this way, the encoder 1243 may have, for example, the function of the encoding apparatus 11. That is, the encoder 1243 may use the methods described in the embodiment to encode the image data. In this way, the recording/reproducing apparatus 1240 can significantly improve the S/N and the compression efficiency.

Furthermore, in the recording/reproducing apparatus 1240 configured in this way, the decoder 1247 may have, for example, the function of the decoding apparatus 12. That is, the decoder 1247 may use the methods described in the embodiment to decode the encoded data. In this way, the recording/reproducing apparatus 1240 can significantly improve the S/N and the compression efficiency.

<Fourth Application Example: Imaging Apparatus>

FIG. 90 is a diagram illustrating an example of a schematic configuration of an imaging apparatus according to the embodiment.

An imaging apparatus 1260 images a subject, generates an image, encodes image data, and records the image data in a recording medium.

The imaging apparatus 1260 includes an optical block 1261, an imaging unit 1262, a signal processing unit 1263, an image processing unit 1264, a display unit 1265, an external interface (I/F) unit 1266, a memory unit 1267, a medium drive 1268, an OSD unit 1269, a control unit 1270, a user interface (I/F) unit 1271, and a bus 1272.

The optical block 1261 is connected to the imaging unit 1262. The imaging unit 1262 is connected to the signal processing unit 1263. The display unit 1265 is connected to the image processing unit 1264. The user interface unit 1271 is connected to the control unit 1270. The bus 1272 mutually connects the image processing unit 1264, the external interface unit 1266, the memory unit 1267, the medium drive 1268, the OSD unit 1269, and the control unit 1270.

The optical block 1261 includes a focus lens, a diaphragm mechanism, and the like. The optical block 1261 forms an optical image of the subject on an imaging surface of the imaging unit 1262. The imaging unit 1262 includes an image sensor, such as a CCD (Charge Coupled Device) and a CMOS (Complementary Metal Oxide Semiconductor), and performs photoelectric conversion of the optical image formed on the imaging surface to convert the optical image into an image signal that is an electrical signal. The imaging unit 1262 then outputs the image signal to the signal processing unit 1263.

The signal processing unit 1263 applies various types of camera signal processing, such as knee correction, gamma correction, and color correction, to the image signal input from the imaging unit 1262. The signal processing unit 1263 outputs the image data after the camera signal processing to the image processing unit 1264.

The image processing unit 1264 encodes the image data input from the signal processing unit 1263 to generate encoded data. The image processing unit 1264 then outputs the generated encoded data to the external interface unit 1266 or the medium drive 1268. The image processing unit 1264 also decodes encoded data input from the external interface unit 1266 or the medium drive 1268 to generate image data. The image processing unit 1264 then outputs the generated image data to the display unit 1265. The image processing unit 1264 may also output the image data input from the signal processing unit 1263 to the display unit 1265 to display the image. The image processing unit 1264 may also superimpose display data acquired from the OSD unit 1269 on the image output to the display unit 1265.

The OSD unit 1269 generates, for example, an image of GUI, such as a menu, a button, and a cursor, and outputs the generated image to the image processing unit 1264.

The external interface unit 1266 is provided as, for example, a USB input/output terminal. The external interface unit 1266 connects, for example, the imaging apparatus 1260 and a printer at the printing of an image. A drive is also connected to the external interface unit 1266 as necessary. The drive is provided with, for example, a removable medium, such as a magnetic disk and an optical disk, and a program read from the removable medium can be installed on the imaging apparatus 1260. Furthermore, the external interface unit 1266 may be provided as a network interface connected to a network, such as a LAN and the Internet. That is, the external interface unit 1266 plays a role of a transmission unit in the imaging apparatus 1260.

A recording medium mounted on the medium drive 1268 may be, for example, an arbitrary read/write removable medium, such as a magnetic disk, a magneto-optical disk, an optical disk, and a semiconductor memory. In addition, the recording medium may be fixed and mounted on the medium drive 1268 to provide, for example, a non-portable storage unit, such as a built-in hard disk drive and an SSD (Solid State Drive).

The control unit 1270 includes a processor, such as a CPU, and a memory, such as a RAM and a ROM. The memory stores a program executed by the CPU, program data, and the like. The CPU reads and executes the program stored in the memory at, for example, the start of the imaging apparatus 1260. The CPU executes the program to control the operation of the imaging apparatus 1260 according to, for example, an operation signal input from the user interface unit 1271.

The user interface unit 1271 is connected to the control unit 1270. The user interface unit 1271 includes, for example, a button, a switch, and the like for the user to operate the imaging apparatus 1260. The user interface unit 1271 detects an operation by the user through these constituent elements to generate an operation signal and outputs the generated operation signal to the control unit 1270.

In the imaging apparatus 1260 configured in this way, the image processing unit 1264 may have, for example, the function of the encoding apparatus 11. That is, the image processing unit 1264 may use the methods described in the embodiment to encode the image data. In this way, the imaging apparatus 1260 can significantly improve the S/N and the compression efficiency.

In addition, in the imaging apparatus 1260 configured in this way, the image processing unit 1264 may have, for example, the function of the decoding apparatus 12. That is, the image processing unit 1264 may use the methods described in the embodiment to decode the encoded data. In this way, the imaging apparatus 1260 can significantly improve the S/N and the compression efficiency.

<Other Application Examples>

Note that the present technique can also be applied to, for example, HTTP streaming, such as MPEG DASH, in which appropriate data is used by selecting the data on a segment-by-segment basis from a plurality of pieces of encoded data with different resolutions or the like prepared in advance. That is, information regarding encoding and decoding can also be shared between the plurality of pieces of encoded data.

In addition, although the examples of the apparatus, the system, and the like according to the present technique are described above, the present technique is not limited to these. The present technique can also be carried out in any configuration mounted on an apparatus included in the apparatus or the system, such as, for example, a processor as system LSI (Large Scale Integration) or the like, a module using a plurality of processors or the like, a unit using a plurality of modules or the like, and a set provided with other functions in addition to the unit (that is, configuration of part of an apparatus).

<Video Set>

An example of a case where the present technique is carried out in a set will be described with reference to FIG. 91.

FIG. 91 is a diagram illustrating an example of a schematic configuration of a video set according to the present technique.

In recent years, electronic devices are provided with more functions, and in the development or manufacturing of the electronic devices, there is a case where the configuration of part of the electronic devices is implemented by selling or providing the configuration. Instead of implementing the configuration as a configuration having one function, a plurality of configurations with related functions are often combined to implement the configurations as one set provided with a plurality of functions.

A video set 1300 illustrated in FIG. 91 has such a configuration with multiple functions, and a device having functions regarding encoding or decoding (one or both encoding and decoding) of images is combined with a device having other functions related to the functions.

As illustrated in FIG. 91, a video set 1300 includes a module group, such as a video module 1311, an external memory 1312, a power management module 1313, and a front-end module 1314, and a device having related functions, such as a connectivity 1321, a camera 1322, and a sensor 1323.

The modules are components with integrated functions, in which some functions of components related to each other are integrated. The specific physical configuration is arbitrary, and for example, a plurality of processors with respective functions, electronic circuit elements, such as resistors and capacitors, and other devices can be arranged and integrated on a wiring board or the like. In addition, other modules, processors, and the like can be combined with the modules to provide new modules.

In the case of the example of FIG. 91, components with functions regarding image processing are combined in the video module 1311, and the video module 1311 includes an application processor 1331, a video processor 1332, a broadband modem 1333, and an RF module 1334.

The processor includes components with predetermined functions integrated on a semiconductor chip on the basis of SoC (System On a Chip), and the processor is called, for example, system LSI (Large Scale Integration) or the like. The components with predetermined functions may be a logic circuit (hardware configuration), may be a CPU, a ROM, a RAM, and a program executed by using them (software configuration), or may be a combination of them. For example, the processor may include the logic circuit, the CPU, the ROM, the RAM, and the like, and part of the functions may be realized by the logic circuit (hardware configuration). The other functions may be realized by the program executed by the CPU (software configuration).

The application processor 1331 of FIG. 91 is a processor that executes an application regarding image processing. The application executed by the application processor 1331 can not only execute a computing process, but can also control, for example, components inside and outside of the video module 1311, such as a video processor 1332, as necessary in order to realize a predetermined function.

The video processor 1332 is a processor with a function regarding encoding or decoding (one or both encoding and decoding) of an image.

The broadband modem 1333 performs digital modulation or the like of data (digital signal) to be transmitted in wired or wireless (or both wired and wireless) broadband communication performed through a broadband circuit, such as the Internet and a public phone network, to convert the data into an analog signal and demodulates an analog signal received in the broadband communication to convert the analog signal into data (digital signal). The broadband modem 1333 processes, for example, arbitrary information, such as image data to be processed by the video processor 1332, a stream including encoded image data, an application program, and configuration data.

The RF module 1334 is a module that applies frequency conversion, modulation and demodulation, amplification, a filtering process, and the like to an RF (Radio Frequency) signal transmitted and received through an antenna. For example, the RF module 1334 applies frequency conversion or the like to a baseband signal generated by the broadband modem 1333 to generate an RF signal. In addition, the RF module 1334 applies, for example, frequency conversion or the like to an RF signal received through the front-end module 1314 to generate a baseband signal.

Note that as indicated by a dotted line 1341 in FIG. 91, the application processor 1331 and the video processor 1332 may be integrated to provide one processor.

The external memory 1312 is a module provided outside of the video module 1311 and including a storage device used by the video module 1311. The storage device of the external memory 1312 may be realized by any physical configuration. However, the storage device is generally used to store high-capacity data, such as frame-based image data, in many cases. Therefore, it is desirable to realize the storage device by, for example, a relatively inexpensive high-capacity semiconductor memory, such as a DRAM (Dynamic Random Access Memory).

The power management module 1313 manages and controls power supplied to the video module 1311 (each component in the video module 1311) .

The front-end module 1314 is a module that provides a front-end function (circuit at transmitting and receiving end of antenna side) to the RF module 1334. As illustrated in FIG. 91, the front-end module 1314 includes, for example, an antenna unit 1351, a filter 1352, and an amplification unit 1353.

The antenna unit 1351 includes an antenna that transmits and receives wireless signals and includes components around the antenna. The antenna unit 1351 transmits a wireless signal of a signal supplied from the amplification unit 1353 and supplies an electrical signal (RF signal) of a received wireless signal to the filter 1352. The filter 1352 applies a filtering process or the like to the RF signal received through the antenna unit 1351 and supplies the RF signal after the process to the RF module 1334. The amplification unit 1353 amplifies the RF signal supplied from the RF module 1334 and supplies the RF signal to the antenna unit 1351.

The connectivity 1321 is a module with a function regarding connection to the outside. The physical configuration of the connectivity 1321 is arbitrary. For example, the connectivity 1321 includes a component with a communication function of a standard other than the communication standard handled by the broadband modem 1333 and includes an external input-output terminal and the like.

For example, the connectivity 1321 may include: a module with a communication function in compliance with a wireless communication standard, such as Bluetooth (registered trademark), IEEE 802.11 (for example, Wi-Fi (Wireless Fidelity, registered trademark)), NFC (Near Field Communication), and IrDA (InfraRed Data Association); an antenna that transmits and receives a signal in compliance with the standard; and the like. The connectivity 1321 may also include, for example, a module with a communication function in compliance with a wired communication standard, such as USB (Universal Serial Bus) and HDMI (registered trademark) (High-Definition Multimedia Interface), and a terminal in compliance with the standard. The connectivity 1321 may further include, for example, other data (signal) transmission functions and the like, such as an analog input-output terminal.

Note that the connectivity 1321 may include a device of a transmission destination of data (signal). For example, the connectivity 1321 may include a drive (including not only a drive of a removable medium, but also a hard disk, an SSD (Solid State Drive), a NAS (Network Attached Storage), and the like) that reads and writes data to a recording medium, such as a magnetic disk, an optical disk, a magneto-optical disk, and a semiconductor memory. The connectivity 1321 may also include an output device (such as a monitor and a speaker) of images and sound.

The camera 1322 is a module with a function of imaging a subject to obtain image data of the subject. The image data obtained by the imaging of the camera 1322 is supplied to and encoded by, for example, the video processor 1332.

The sensor 1323 is, for example, a module with arbitrary sensor functions, such as an audio sensor, an ultrasonic sensor, an optical sensor, an illumination sensor, an infrared sensor, an image sensor, a rotation sensor, an angle sensor, an angular velocity sensor, a speed sensor, an acceleration sensor, a tilt sensor, a magnetic identification sensor, an impact sensor, and a temperature sensor. Data detected by the sensor 1323 is supplied to, for example, the application processor 1331 and used by an application or the like.

The configurations of the modules described above may be realized by processors, and conversely, the configurations of the processors described above may be realized by modules.

In the video set 1300 configured as described above, the present technique can be applied to the video processor 1332 as described later. Therefore, the video set 1300 can be carried out as a set according to the present technique.

<Configuration Example of Video Processor>

FIG. 92 is a diagram illustrating an example of a schematic configuration of the video processor 1332 (FIG. 91) according to the present technique.

In the case of the example of FIG. 92, the video processor 1332 has a function of receiving an input of a video signal and an audio signal and using a predetermined system to encode the signals and has a function of decoding encoded video data and audio data and reproducing and outputting a video signal and an audio signal.

As illustrated in FIG. 92, the video processor 1332 includes a video input processing unit 1401, a first image enlargement/reduction unit 1402, a second image enlargement/reduction unit 1403, a video output processing unit 1404, a frame memory 1405, and a memory control unit 1406. The video processor 1332 also includes an encode/decode engine 1407, video ES (Elementary Stream) buffers 1408A and 1408B, and audio ES buffers 1409A and 1409B. The video processor 1332 further includes an audio encoder 1410, an audio decoder 1411, a multiplexing unit (MUX (Multiplexer)) 1412, a demultiplexing unit (DMUX (Demultiplexer)) 1413, and a stream buffer 1414.

The video input processing unit 1401 acquires, for example, a video signal input from the connectivity 1321 (FIG. 91) or the like and converts the video signal into digital image data. The first image enlargement/reduction unit 1402 applies format conversion, enlargement/reduction processing of image, or the like to the image data. The second image enlargement/reduction unit 1403 applies enlargement/reduction processing of image to the image data according to the format at the destination of the output through the video output processing unit 1404 and applies format conversion, enlargement/reduction processing of image, or the like to the image data as in the first image enlargement/reduction unit 1402. The video output processing unit 1404 performs operations, such as converting the format of the image data and converting the image data into an analog signal, and outputs a reproduced video signal to, for example, the connectivity 1321 or the like.

The frame memory 1405 is a memory for image data shared by the video input processing unit 1401, the first image enlargement/reduction unit 1402, the second image enlargement/reduction unit 1403, the video output processing unit 1404, and the encode/decode engine 1407. The frame memory 1405 is realized as, for example, a semiconductor memory, such as a DRAM.

The memory control unit 1406 receives a synchronization signal from the encode/decode engine 1407 to control the access for writing and reading to and from the frame memory 1405 according to a schedule for accessing the frame memory 1405 written in the access management table 1406A. The access management table 1406A is updated by the memory control unit 1406 according to the process executed by the encode/decode engine 1407, the first image enlargement/reduction unit 1402, the second image enlargement/reduction unit 1403, or the like.

The encode/decode engine 1407 executes an encoding process of image data and a decoding process of a video stream in which image data is encoded data. For example, the encode/decode engine 1407 encodes image data read from the frame memory 1405 and sequentially writes video streams to the video ES buffer 1408A. In addition, for example, the encode/decode engine 1407 sequentially reads video streams from the video ES buffer 1408B to decode the video streams and sequentially writes image data to the frame memory 1405. The encode/decode engine 1407 uses the frame memory 1405 as a work area in the encoding and the decoding. The encode/decode engine 1407 also outputs a synchronization signal to the memory control unit 1406 at a timing of, for example, the start of the process for each macroblock.

The video ES buffer 1408A buffers a video stream generated by the encode/decode engine 1407 and supplies the video stream to the multiplexing unit (MUX) 1412. The video ES buffer 1408B buffers a video stream supplied from the demultiplexing unit (DMUX) 1413 and supplies the video stream to the encode/decode engine 1407.

The audio ES buffer 1409A buffers an audio stream generated by the audio encoder 1410 and supplies the audio stream to the multiplexing unit (MUX) 1412. The audio ES buffer 1409B buffers an audio stream supplied from the demultiplexing unit (DMUX) 1413 and supplies the audio stream to the audio decoder 1411.

The audio encoder 1410 performs, for example, digital conversion of an audio signal input from, for example, the connectivity 1321 or the like and uses, for example, a predetermined system, such as an MPEG audio system and an AC3 (AudioCode number 3) system, to encode the audio signal. The audio encoder 1410 sequentially writes, to the audio ES buffer 1409A, audio streams that are data in which the audio signal is encoded. The audio decoder 1411 decodes the audio stream supplied from the audio ES buffer 1409B, performs an operation, such as, for example, converting the audio stream into an analog signal, and supplies a reproduced audio signal to, for example, the connectivity 1321 or the like.

The multiplexing unit (MUX) 1412 multiplexes a video stream and an audio stream. The method of multiplexing (that is, the format of the bitstream generated by multiplexing) is arbitrary. In the multiplexing, the multiplexing unit (MUX) 1412 can also add predetermined header information or the like to the bitstream. That is, the multiplexing unit (MUX) 1412 can convert the format of the stream by multiplexing. For example, the multiplexing unit (MUX) 1412 multiplexes the video stream and the audio stream to convert the streams into a transport stream that is a bitstream in a format for transfer. In addition, for example, the multiplexing unit (MUX) 1412 multiplexes the video stream and the audio stream to convert the streams into data (file data) in a file format for recording.

The demultiplexing unit (DMUX) 1413 uses a method corresponding to the multiplexing by the multiplexing unit (MUX) 1412 to demultiplex a bitstream in which a video stream and an audio stream are multiplexed. That is, the demultiplexing unit (DMUX) 1413 extracts the video stream and the audio stream (separates the video stream and the audio stream) from the bitstream read from the stream buffer 1414. That is, the demultiplexing unit (DMUX) 1413 can demultiplex the stream to convert the format of the stream (inverse transformation of the conversion by the multiplexing unit (MUX) 1412). For example, the demultiplexing unit (DMUX) 1413 can acquire a transport stream supplied from, for example, the connectivity 1321, the broadband modem 1333, or the like through the stream buffer 1414 and demultiplex the transport stream to convert the transport stream into a video stream and an audio stream. In addition, for example, the demultiplexing unit (DMUX) 1413 can acquire file data read from various recording media by the connectivity 1321 through the stream buffer 1414 and demultiplex the file data to convert the file data into a video stream and an audio stream.

The stream buffer 1414 buffers a bitstream. For example, the stream buffer 1414 buffers a transport stream supplied from the multiplexing unit (MUX) 1412 and supplies the transport stream to, for example, the connectivity 1321, the broadband modem 1333, or the like at a predetermined timing or on the basis of a request or the like from the outside.
In addition, for example, the stream buffer 1414 buffers file data supplied from the multiplexing unit (MUX) 1412 and supplies the file data to, for example, the connectivity 1321 or the like at a predetermined timing or on the basis of a request or the like from the outside to record the file data in various recording media.
The stream buffer 1414 further buffers a transport stream acquired through, for example, the connectivity 1321, the broadband modem 1333, or the like and supplies the transport stream to the demultiplexing unit (DMUX) 1413 at a predetermined timing or on the basis of a request or the like from the outside.
The stream buffer 1414 also buffers file data read from various recording media by, for example, the connectivity 1321 or the like and supplies the file data to the demultiplexing unit (DMUX) 1413 at a predetermined timing or on the basis of a request or the like from the outside.
Next, an example of an operation of the video processor 1332 configured in this way will be described. For example, the video input processing unit 1401 converts the video signal input from the connectivity 1321 or the like to the video processor 1332 into digital image data of a predetermined system, such as a 4:2:2 Y/Cb/Cr system, and sequentially writes the digital image data to the frame memory 1405. The first image enlargement/reduction unit 1402 or the second image enlargement/reduction unit 1403 reads the digital image data to convert the format into a predetermined system, such as a 4:2:0 Y/Cb/Cr system, and execute enlargement/reduction processing. The digital image data is written again to the frame memory 1405. The encode/decode engine 1407 encodes the image data, and the video stream is written to the video ES buffer 1408A.
In addition, the audio encoder 1410 encodes the audio signal input from the connectivity 1321 or the like to the video processor 1332, and the audio stream is written to the audio ES buffer 1409A.
The video stream of the video ES buffer 1408A and the audio stream of the audio ES buffer 1409A are read and multiplexed by the multiplexing unit (MUX) 1412 and converted into a transport stream, file data, or the like. The transport stream generated by the multiplexing unit (MUX) 1412 is buffered by the stream buffer 1414 and then output to an external network through, for example, the connectivity 1321, the broadband modem 1333, or the like. In addition, the stream buffer 1414 buffers the file data generated by the multiplexing unit (MUX) 1412, and the file data is then output to, for example, the connectivity 1321 or the like and recorded in various recording media.
In addition, for example, the transport stream input from the external network to the video processor 1332 through the connectivity 1321, the broadband modem 1333, or the like is buffered by the stream buffer 1414 and then demultiplexed by the demultiplexing unit (DMUX) 1413. In addition, for example, the file data read from various recording media by the connectivity 1321 or the like and input to the video processor 1332 is buffered by the stream buffer 1414 and then demultiplexed by the demultiplexing unit (DMUX) 1413. That is, the transport stream or the file data input to the video processor 1332 is separated into the video stream and the audio stream by the demultiplexing unit (DMUX) 1413.
The audio stream is supplied to the audio decoder 1411 through the audio ES buffer 1409B and decoded to reproduce the audio signal. In addition, the video stream is written to the video ES buffer 1408, and then the video stream is sequentially read and decoded by the encode/decode engine 1407 and written to the frame memory 1405. The decoded image data is enlarged or reduced by the second image enlargement/reduction unit 1403 and written to the frame memory 1405. The decoded image data is then read by the video output processing unit 1404, and the format is converted into a predetermined system, such as a 4:2:2 Y/Cb/Cr system. The decoded image data is further converted into an analog signal, and the video signal is reproduced and output.
In the case of applying the present technique to the video processor 1332 configured in this way, the present technique according to the embodiment can be applied to the encode/decode engine 1407. That is, for example, the encode/decode engine 1407 may have one or both the function of the encoding apparatus 11 and the function of the decoding apparatus 12. In this way, the video processor 1332 can obtain advantageous effects similar to the advantageous effects of the encoding apparatus 11 and the decoding apparatus 12 of the embodiment.
Note that in the encode/decode engine 1407, the present technique (that is, one or both the function of the encoding apparatus 11 and the function of the decoding apparatus 12) may be realized by hardware, such as a logic circuit, may be realized by software, such as an embedded program, or may be realized by both the hardware and the software.

<Another Configuration Example of Video Processor>

FIG. 93 is a diagram illustrating another example of the schematic configuration of the video processor 1332 according to the present technique.
In the case of the example of FIG. 93, the video processor 1332 has a function of using a predetermined system to encode and decode the video data.
More specifically, as illustrated in FIG. 93, the video processor 1332 includes a control unit 1511, a display interface 1512, a display engine 1513, an image processing engine 1514, and an internal memory 1515. The video processor 1332 also includes a codec engine 1516, a memory interface 1517, a multiplexing/demultiplexing unit (MUX DMUX) 1518, a network interface 1519, and a video interface 1520.

The control unit 1511 controls the operation of each processing unit in the video processor 1332, such as the display interface 1512, the display engine 1513, the image processing engine 1514, and the codec engine 1516.

As illustrated in FIG. 93, the control unit 1511 includes, for example, a main CPU 1531, a sub CPU 1532, and a system controller 1533. The main CPU 1531 executes a program or the like for controlling the operation of each processing unit in the video processor 1332. The main CPU 1531 generates a control signal according to the program or the like and supplies the control signal to each processing unit (that is, controls the operation of each processing unit). The sub CPU 1532 plays an auxiliary role of the main CPU 1531. For example, the sub CPU 1532 executes a child process, a subroutine, or the like of the program or the like executed by the main CPU 1531. The system controller 1533 controls the operations of the main CPU 1531 and the sub CPU 1532, such as designating the program executed by the main CPU 1531 and the sub CPU 1532.

The display interface 1512 outputs image data to, for example, the connectivity 1321 or the like under the control of the control unit 1511. For example, the display interface 1512 converts image data of digital data into an analog signal and outputs a reproduced video signal or the image data of the digital data to a monitor apparatus or the like of the connectivity 1321.

Under the control of the control unit 1511, the display engine 1513 applies various conversion processes, such as format conversion, size conversion, and color gamut conversion, to the image data according to hardware specifications of a monitor apparatus or the like that displays the image.

The image processing engine 1514 applies predetermined image processing, such as, for example, a filtering process for improving the image quality, to the image data under the control of the control unit 1511.

The internal memory 1515 is a memory shared by the display engine 1513, the image processing engine 1514, and the codec engine 1516 and provided inside of the video processor 1332. The internal memory 1515 is used to transfer data between, for example, the display engine 1513, the image processing engine 1514, and the codec engine 1516. For example, the internal memory 1515 stores data supplied from the display engine 1513, the image processing engine 1514, or the codec engine 1516 and supplies the data to the display engine 1513, the image processing engine 1514, or the codec engine 1516 as necessary (for example, according to a request). Although the internal memory 1515 may be realized by any storage device, the internal memory 1515 is generally used to store low-capacity data, such as block-based image data and parameters, in many cases, and it is desirable to realize the internal memory 1515 by a relatively (for example, compared to the external memory 1312) low-capacity semiconductor memory with high response speed, such as an SRAM (Static Random Access Memory).

The codec engine 1516 executes a process regarding encoding and decoding of image data. The system of encoding and decoding corresponding to the codec engine 1516 is arbitrary, and there may be one system or a plurality of systems. For example, the codec engine 1516 may have codec functions of a plurality of encoding and decoding systems and may use selected one of the codec functions to encode image data or decode encoded data.

In the example illustrated in FIG. 93, the codec engine 1516 includes, for example, an MPEG-2 Video 1541, an AVC/H.264 1542, an HEVC/H.265 1543, an HEVC/H.265 (Scalable) 1544, an HEVC/H.265 (Multi-view) 1545, and an MPEG-DASH 1551 that are functional blocks of processes regarding the codec.

The MPEG-2 Video 1541 is a functional block that uses the MPEG-2 system to encode and decode image data. The AVC/H.264 1542 is a functional block that uses the AVC system to encode and decode image data. The HEVC/H.265 1543 is a functional block that uses the HEVC system to encode and decode image data. The HEVC/H.265 (Scalable) 1544 is a functional block that uses the HEVC system to apply scalable encoding and scalable decoding to image data. The HEVC/H.265 (Multi-view) 1545 is a functional block that uses the HEVC system to apply multi-view encoding and multi-view decoding to the image data.

The MPEG-DASH 1551 is a functional block that uses the MPEG-DASH (MPEG-Dynamic Adaptive Streaming over HTTP) system to transmit and receive image data. The MPEG-DASH is a technique of using the HTTP (HyperText Transfer Protocol) to stream a video, and one of the features is that appropriate encoded data is transmitted by selecting the encoded data on a segment-by-segment basis from a plurality of pieces of encoded data with different resolutions or the like prepared in advance. The MPEG-DASH 1551 performs operations, such as generating a stream in compliance with the standard and controlling the transmission of the stream, and uses the components from the MPEG-2 Video 1541 to the HEVC/H.265 (Multi-view) 1545 to encode and decode image data.

The memory interface 1517 is an interface for the external memory 1312. The data supplied from the image processing engine 1514 or the codec engine 1516 is supplied to the external memory 1312 through the memory interface 1517. In addition, the data read from the external memory 1312 is supplied to the video processor 1332 (image processing engine 1514 or codec engine 1516) through the memory interface 1517.

The multiplexing/demultiplexing unit (MUX DMUX) 1518 multiplexes and demultiplexes various types of data regarding the image, such as a bitstream of encoded data, image data, and a video signal. The method of multiplexing and demultiplexing is arbitrary. For example, the multiplexing/demultiplexing unit (MUX DMUX) 1518 can not only group together a plurality of pieces of data in multiplexing, but can also add predetermined header information or the like to the data. In addition, the multiplexing/demultiplexing unit (MUX DMUX) 1518 can not only partition one piece of data into a plurality of pieces of data in demultiplexing, but can also add predetermined header information or the like to each piece of partitioned data. That is, the multiplexing/demultiplexing unit (MUX DMUX) 1518 can multiplex and demultiplex data to convert the format of the data. For example, the multiplexing/demultiplexing unit (MUX DMUX) 1518 can multiplex a bitstream to convert the bitstream into a transport stream that is a bitstream in the format of transfer or into data (file data) in the file format for recording. Obviously, the inverse transformation of the data can also be performed by demultiplexing.

The network interface 1519 is, for example, an interface for the broadband modem 1333, the connectivity 1321, and the like. The video interface 1520 is, for example, an interface for the connectivity 1321, the camera 1322, and the like.

Next, an example of the operation of the video processor 1332 will be described. For example, when a transport stream is received from an external network through the connectivity 1321, the broadband modem 1333, or the like, the transport stream is supplied to the multiplexing/demultiplexing unit (MUX DMUX) 1518 through the network interface 1519 and demultiplexed, and the codec engine 1516 decodes the transport stream. The image processing engine 1514 applies, for example, predetermined image processing to the image data obtained by the decoding of the codec engine 1516, and the display engine 1513 performs predetermined conversion. The image data is supplied to, for example, the connectivity 1321 or the like through the display interface 1512, and the image is displayed on the monitor. In addition, for example, the codec engine 1516 encodes again the image data obtained by the decoding of the codec engine 1516, and the multiplexing/demultiplexing unit (MUX DMUX) 1518 multiplexes the image data and converts the image data into file data. The file data is output to, for example, the connectivity 1321 or the like through the video interface 1520 and recorded in various recording media.

Furthermore, for example, the file data of the encoded data including the encoded image data read by the connectivity 1321 or the like from a recording medium not illustrated is supplied to the multiplexing/demultiplexing unit (MUX DMUX) 1518 through the video interface 1520 and demultiplexed, and the file data is decoded by the codec engine 1516. The image processing engine 1514 applies predetermined image processing to the image data obtained by the decoding of the codec engine 1516, and the display engine 1513 performs predetermined conversion of the image data. The image data is supplied to, for example, the connectivity 1321 or the like through the display interface 1512, and the image is displayed on the monitor. In addition, for example, the codec engine 1516 encodes again the image data obtained by the decoding of the codec engine 1516, and the multiplexing/demultiplexing unit (MUX DMUX) 1518 multiplexes the image data and converts the image data into a transport stream. The transport stream is supplied to, for example, the connectivity 1321, the broadband modem 1333, or the like through the network interface 1519 and transmitted to another apparatus not illustrated.

Note that the transfer of the image data and other data between processing units in the video processor 1332 is performed by using, for example, the internal memory 1515 or the external memory 1312. In addition, the power management module 1313 controls power supplied to, for example, the control unit 1511.

In the case where the present technique is applied to the video processor 1332 configured in this way, the present technique according to the embodiment can be applied to the codec engine 1516. That is, for example, the codec engine 1516 can include one or both the function of the encoding apparatus 11 and the function of the decoding apparatus 12. In this way, the video processor 1332 can obtain advantageous effects similar to the advantageous effects of the encoding apparatus 11 and the decoding apparatus 12.

Note that in the codec engine 1516, the present technique (that is, the functions of the encoding apparatus 11 and the decoding apparatus 12) may be realized by hardware, such as a logic circuit, may be realized by software, such as an embedded program, or may be realized by both the hardware and the software.

Although two configurations of the video processor 1332 have been illustrated, the configuration of the video processor 1332 is arbitrary, and the configuration may be other than the configurations of the two examples. In addition, the video processor 1332 may be provided as one semiconductor chip or may be provided as a plurality of semiconductor chips. For example, the video processor 1332 may be a three-dimensional stacked LSI including a plurality of stacked semiconductors. The video processor 1332 may also be realized by a plurality of LSIs.

<Example of Application to Apparatus>

The video set 1300 can be incorporated into various apparatuses that process image data. For example, the video set 1300 can be incorporated into the television apparatus 1200 (FIG. 87), the mobile phone 1220 (FIG. 88), the recording/reproducing apparatus 1240 (FIG. 89), the imaging apparatus 1260 (FIG. 90), and the like. The incorporation of the video set 1300 allows the apparatus to obtain advantageous effects similar to the advantageous effects of the encoding apparatus 11 and the decoding apparatus 12.

Note that part of each configuration of the video set 1300 can be carried out as a configuration according to the present technique as long as the part includes the video processor 1332. For example, the video processor 1332 alone can be carried out as a video processor according to the present technique. In addition, for example, the processor indicated by the dotted line 1341, the video module 1311, or the like can be carried out as a processor, a module, or the like according to the present technique as described above. Furthermore, for example, the video module 1311, the external memory 1312, the power management module 1313, and the front-end module 1314 can be combined to carry out a video unit 1361 according to the present technique. In any of the configurations, advantageous effects similar to the advantageous effects of the encoding apparatus 11 and the decoding apparatus 12 can be obtained.

That is, any configuration including the video processor 1332 can be incorporated into various apparatuses that process image data, as in the case of the video set 1300. For example, the video processor 1332, the processor indicated by the dotted line 1341, the video module 1311, or the video unit 1361 can be incorporated into the television apparatus 1200 (FIG. 87), the mobile phone 1220 (FIG. 88), the recording/reproducing apparatus 1240 (FIG. 89), the imaging apparatus 1260 (FIG. 90), or the like. In addition, the incorporation of one of the configurations according to the present technique allows the apparatus to obtain advantageous effects similar to the advantageous effects of the encoding apparatus 11 and the decoding apparatus 12 as in the case of the video set 1300.

<Etc.>

Note that although various types of information are multiplexed into encoded data (bitstream) and transmitted from the encoding side to the decoding side in the example described in the present specification, the method of transmitting the information is not limited to the example. For example, the information may not be multiplexed into encoded data, and the information may be transmitted or recorded as separate data associated with the encoded data. Here, the term "associated" means, for example, that the image (may be part of the image, such as a slice or a block) included in the encoded data and the information corresponding to the image can be linked at the decoding. That is, the information associated with the encoded data (image) may be transmitted on a transmission path different from the encoded data (image). In addition, the information associated with the encoded data (image) may be recorded in a recording medium separate from the encoded data (image) (or in a separate recording area of the same recording medium). Furthermore, the image and the information corresponding to the image may be associated with each other in an arbitrary unit, such as, for example, a plurality of frames, one frame, and part of the frame.

In addition, the terms, such as "combine," "multiplex," "add," "integrate," "include," "store," "put in," "place into," and "insert," denote grouping of a plurality of things, such as grouping of the flag information and the encoded data of the information regarding the image into one piece of data, and each term denotes one method of "associating" described above.

In addition, the embodiment of the present technique is not limited to the embodiment described above, and various changes can be made without departing from the scope of the present technique.

For example, the system in the present specification denotes a set of a plurality of constituent elements (apparatuses, modules (components), and the like), and whether or not all of the constituent elements are in the same housing does not matter. Therefore, a plurality of apparatuses stored in separate housings and connected through a network and one apparatus storing a plurality of modules in one housing are both systems.

Furthermore, for example, the configuration of one apparatus (or processing unit) described above may be divided to provide a plurality of apparatuses (or processing units). Conversely, the configurations of a plurality of apparatuses (or processing units) described above may be put together to provide one apparatus (or processing unit). In addition, configurations other than the configurations described above may be obviously added to the configuration of each apparatus (or each processing unit). Furthermore, part of the configuration of an apparatus (or processing unit) may be included in the configuration of another apparatus (or another processing unit) as long as the configuration and the operation of the entire system are substantially the same.

In addition, the present technique can be provided as, for example, cloud computing in which a plurality of apparatuses share one function and cooperate to execute a process through a network.

In addition, the program described above can be executed by, for example, an arbitrary apparatus. In that case, the apparatus can have necessary functions (such as functional blocks) and obtain necessary information.

In addition, for example, one apparatus can execute each step described in the flow charts, or a plurality of apparatuses can take charge and execute each step. Furthermore, in the case where one step includes a plurality of processes, one apparatus can execute the plurality of processes included in one step, or a plurality of apparatuses can take charge and execute the processes.

Note that the program executed by the computer may be a program in which the processes of the steps describing the program are executed in chronological order described in the present specification, or the program may be a program for executing the processes in parallel or for executing the processes separately at a necessary timing such as when the processes are invoked. That is, the processes of the steps may be executed in an order different from the order described above as long as there is no contradiction. Furthermore, the processes of the steps describing the program may be executed in parallel with processes of other programs or may be executed in combination with processes of other programs.

Note that the plurality of present techniques described in the present specification can be independently and separately carried out as long as there is no contradiction. Obviously, a plurality of arbitrary present techniques can be combined and carried out. For example, the present technique described in one of the embodiments can also be carried out in combination with the present technique described in another embodiment. In addition, an arbitrary present technique described above can also be carried out in combination with another technique not described above.

In addition, the advantageous effects described in the present specification are illustrative only, and the advantageous effects are not limited. There may also be other advantageous effects.

Note that the present technique can be configured as follows.

<1> An image processing apparatus including

a filter processing unit that applies a filtering process to a first image obtained by adding a residual of prediction encoding and a predicted image to generate a second image used for prediction of the predicted image,
the filter processing unit including:

a prediction tap selection unit that selects, from the first image, pixels as a prediction tap used for prediction computation for obtaining a pixel value of a corresponding pixel of the second image corresponding to a pixel to be processed that is a processing target in the first image;
a classification unit that classifies the pixel to be processed into one of a plurality of classes;
a tap coefficient acquisition unit that acquires tap coefficients of the class of the pixel to be processed among tap coefficients used for the prediction computation in each of the plurality of classes obtained by learning using a student image equivalent to the first image and a teacher image equivalent to an original image corresponding to the first image; and
a computation unit that obtains the pixel value of the corresponding pixel by performing the prediction computation using the tap coefficients of the class of the pixel to be processed and the prediction tap of the pixel to be processed.

<2> The image processing apparatus according to <1>, further including
a transmission unit that transmits the tap coefficients.
<3> The image processing apparatus according to <2>, further including
a learning unit that performs the learning.
<4> The image processing apparatus according to <2>, in which
the classification unit performs the classification by using one or both an image feature value obtained from the first image and encoding information regarding prediction encoding of the pixel to be processed.
<5> The image processing apparatus according to <4>, in which
the transmission unit transmits the encoding information.
<6> The image processing apparatus according to any one of <2> to <5>, in which

the classification unit

classifies the pixel to be processed into a first class by using one or both the image feature value obtained from the first image and the encoding information regarding the prediction encoding of the pixel to be processed,
classifies the pixel to be processed into a second class by using predetermined information that cannot be acquired on an decoding side, and
generates a final class of the pixel to be processed from the first class and the second class, and

the transmission unit transmits the second class.

<7> The image processing apparatus according to <6>, in which

the classification unit converts the final class of the pixel to be processed into a reduced class according to a conversion table for converting the final class of the pixel to be processed into the reduced class in which the number of classes in the final class of the pixel to be processed is reduced,
the tap coefficient acquisition unit acquires tap coefficients of the reduced class of the pixel to be processed, and
the transmission unit transmits the conversion table.

<8> The image processing apparatus according to <2>, in which

the classification unit classifies the pixel to be processed by repeating:

obtaining a subclass predicted value for predicting information regarding a subclass of the pixel to be processed by performing prediction computation using pixel values of pixels of the first image as a class tap used for the classification and predetermined classification coefficients; and
classifying the pixel to be processed into a subclass according to the subclass predicted value, and

the transmission unit transmits the classification coefficients.

<9> The image processing apparatus according to <8>, in which

the image processing apparatus uses the student image to perform tap coefficient learning for obtaining the tap coefficients, and
the image processing apparatus further includes a learning unit that performs learning of one tier, the learning including:

performing prediction computation using the tap coefficients and the prediction tap selected from the student image to obtain a pixel predicted value of a pixel of the teacher image;
comparing the pixel predicted value and a pixel value of the pixel of the teacher image to generate the information regarding the subclass;
performing classification coefficient learning for obtaining the classification coefficients that minimize statistical errors between results of prediction computation for obtaining the information regarding the subclass using the student image and the information regarding the subclass;
performing prediction computation using the classification coefficients obtained by the classification coefficient learning and the student image to obtain the subclass predicted value of the pixel of the student image;
classifying the pixel of the student image into the subclass according to the subclass predicted value; and
using the pixel of the student image of each subclass to perform the tap coefficient learning of the subclass.

<10> The image processing apparatus according to <9>, in which
the learning unit repeats the learning of one tier according to an S/N (Signal to Noise ratio) of the pixel predicted value.
<11> The image processing apparatus according to <10>, in which
the transmission unit transmits the tap coefficients obtained by final learning of the learning of one tier and the classification coefficients obtained by all the learning of one tier.
<12> The image processing apparatus according to <10>, in which

the learning unit sets, as transmission target coefficients to be transmitted, the tap coefficients obtained in predetermined second or later time of the learning of one tier and the classification coefficients obtained before the predetermined second or later time of the learning of one tier according to a transmittable amount that can be transmitted, and
the transmission unit transmits the coefficients to be transmitted.

<13> The image processing apparatus according to <1>, further including
a collection unit that collects the tap coefficients.
<14> The image processing apparatus according to <13>, in which
the classification unit performs the classification by using one or both an image feature value obtained from the first image and encoding information regarding prediction encoding of the pixel to be processed.
<15> The image processing apparatus according to <14>, in which
the collection unit collects the encoding information.
<16> The image processing apparatus according to any one of <13> to <15>, in which

of a first class obtained by classification using one or both the image feature value obtained from the first image and the encoding information regarding the prediction encoding of the pixel to be processed and a second class obtained by the classification using predetermined information that cannot be acquired on a decoding side, the collection unit collects the second class, and
the classification unit

classifies the pixel to be processed into the first class and
generates a final class of the pixel to be processed from the first class and the second class collected by the collection unit.

<17> The image processing apparatus according to claim <16>, in which

the collection unit collects a conversion table for converting the final class of the pixel to be processed into a reduced class in which the number of classes in the final class of the pixel to be processed is reduced, and
the classification unit converts the final class of the pixel to be processed into the reduced class according to the conversion table.

<18> The image processing apparatus according to <13>, in which

the transmission unit uses the student image to perform tap coefficient learning for obtaining the tap coefficients and
collects the tap coefficients and the classification coefficients obtained by repeating learning of one tier, the learning including:

performing prediction computation using the tap coefficients and the prediction tap selected from the student image to obtain a pixel predicted value of a pixel of the teacher image;
comparing the pixel predicted value and a pixel value of the pixel of the teacher image to generate information regarding a subclass of the pixel of the student image;
performing classification coefficient learning for obtaining the classification coefficients that minimize statistical errors between results of prediction computation for obtaining the information regarding the subclass using the student image and the classification coefficients obtained by learning and the information regarding the subclass;
performing prediction computation using the classification coefficients obtained by the classification coefficient learning and the student image to obtain a subclass predicted value for predicting the information regarding the subclass of the pixel of the student image;
classifying the pixel of the student image into the subclass according to the subclass predicted value; and
using the pixel of the student image of each subclass to perform the tap coefficient learning of the subclass, and

the classification unit classifies the pixel to be processed by repeating:

obtaining the subclass predicted value for predicting the information regarding the subclass of the pixel to be processed by performing prediction computation using pixel values of pixels of the first image as a class tap used for the classification and the classification coefficients; and
classifying the pixel to be processed into a subclass according to the subclass predicted value.

<19> The image processing apparatus according to any one of <1> to <18>, in which
the filter processing unit functions as one or more of a DF (Deblocking Filter), an SAO (Sample Adaptive Offset), and an ALF (Adaptive Loop Filter) included in an ILF (In Loop Filter).
<20> An image processing method including

a step of applying a filtering process to a first image obtained by adding a residual of prediction encoding and a predicted image to generate a second image used for prediction of the predicted image,
the filtering process including:

selecting, from the first image, pixels as a prediction tap used for prediction computation for obtaining a pixel value of a corresponding pixel of the second image corresponding to a pixel to be processed that is a processing target in the first image;
classifying the pixel to be processed into one of a plurality of classes;
acquiring tap coefficients of the class of the pixel to be processed among tap coefficients used for the prediction computation in each of the plurality of classes obtained by learning using a student image equivalent to the first image and a teacher image equivalent to an original image corresponding to the first image; and
obtaining the pixel value of the corresponding pixel by performing the prediction computation using the tap coefficients of the class of the pixel to be processed and the prediction tap of the pixel to be processed.

[Reference Signs List]

11 Encoding apparatus, 12 Decoding apparatus, 21, 22 Tap selection units, 23 Classification unit, 24 Coefficient acquisition unit, 25 Prediction computation unit, 30 Learning apparatus, 31 Teacher data generation unit, 32 Student data generation unit, 33 Learning unit, 41, 42 Tap selection units, 43 Classification unit, 44 Summing unit, 45 Coefficient calculation unit, 61 Parameter generation unit, 62 Student data generation unit, 63 Learning unit, 71 Summing unit, 72 Coefficient calculation unit, 81, 82 Summing units, 83 Coefficient calculation unit, 101 A/D conversion unit, 102 Rearrangement buffer, 103 Computation unit, 104 Orthogonal transformation unit, 105 Quantization unit, 106 Reversible encoding unit, 107 Accumulation buffer, 108 Inverse quantization unit, 109 Inverse orthogonal transformation unit, 110 Computation unit, 111 Adaptive classification filter, 112 Frame memory, 113 Selection unit, 114 Intra prediction unit, 115 Motion prediction compensation unit, 116 Predicted image selection unit, 117 Rate control unit, 131 Image conversion apparatus, 132 Learning apparatus, 201 Accumulation buffer, 202 Reversible decoding unit, 203 Inverse quantization unit, 204 Inverse orthogonal transformation unit, 205 Computation unit, 206 Adaptive classification filter, 207 Rearrangement buffer, 208 D/A conversion unit, 210 Frame memory, 211 Selection unit, 212 Intra prediction unit, 213 Motion prediction compensation unit, 214 Selection unit, 231 Image conversion apparatus, 241, 242 Tap selection units, 243 Classification unit, 244 Coefficient acquisition unit, 245 Prediction computation unit, 261 Adaptive classification filter, 262 Adaptive offset unit, 263 Adaptive loop filter, 271 Adaptive classification filter, 272 Adaptive offset unit, 273 Adaptive loop filter, 281 Deblocking filter, 282 Adaptive classification filter, 291 Deblocking filter, 292, 311, 321, 411 Adaptive classification filters, 431 Image conversion apparatus, 432 Learning apparatus, 441 Classification unit, 451 First classification unit, 452 Second classification unit, 453 Class code generation unit, 461 Classification unit, 471 Adaptive classification filter, 481 Image conversion apparatus, 491 Classification unit, 501 First classification unit, 502 Class code generation unit, 511 Adaptive classification filter, 531 Image conversion apparatus, 532 Learning apparatus, 541 Classification unit, 551 Class reduction unit, 562 Conversion table generation unit, 571 Adaptive classification filter, 581 Image conversion apparatus, 591 Classification unit, 601 Class reduction unit, 701 Tap coefficient learning unit, 702 Tap coefficient setting unit, 703 Subclass teacher data generation unit, 704 Classification coefficient learning unit, 705 Classification coefficient setting unit, 706 Subclass prediction unit, 707 Subclassification unit, 708 Subclass decision unit, 709 Pixel prediction unit, 710 End condition determination unit, 721 Classification unit, 722 Coefficient acquisition unit, 731 Classification coefficient setting unit, 732 Subclass prediction unit, 733 Subclassification unit, 734 Class decision unit, 811 Adaptive classification filter, 831 Image conversion apparatus, 832 Learning apparatus, 841 Classification unit, 842 Coefficient acquisition unit, 861 Adaptive classification filter, 871 Image conversion apparatus, 881 Classification unit, 882 Coefficient acquisition unit, 911 Transmission band detection unit, 912 Transmission amount calculation unit, 913 Transmission target coefficient setting unit

## Claims

1. An image processing apparatus comprising

   a filter processing unit that applies a filtering process to a first image obtained by adding a residual of prediction encoding and a predicted image to generate a second image used for prediction of the predicted image,
   the filter processing unit including:

      a prediction tap selection unit that selects, from the first image, pixels as a prediction tap used for prediction computation for obtaining a pixel value of a corresponding pixel of the second image corresponding to a pixel to be processed that is a processing target in the first image;
      a classification unit that classifies the pixel to be processed into one of a plurality of classes;
      a tap coefficient acquisition unit that acquires tap coefficients of the class of the pixel to be processed among tap coefficients used for the prediction computation in each of the plurality of classes obtained by learning using a student image equivalent to the first image and a teacher image equivalent to an original image corresponding to the first image; and
      a computation unit that obtains the pixel value of the corresponding pixel by performing the prediction computation using the tap coefficients of the class of the pixel to be processed and the prediction tap of the pixel to be processed.

2. The image processing apparatus according to claim 1, further comprising
   a transmission unit that transmits the tap coefficients.

**3.** The image processing apparatus according to claim 2, further comprising a learning unit that performs the learning.

**4.** The image processing apparatus according to claim 2, wherein the classification unit performs the classification by using one or both an image feature value obtained from the first image and encoding information regarding prediction encoding of the pixel to be processed.

**5.** The image processing apparatus according to claim 4, wherein the transmission unit transmits the encoding information.

**6.** The image processing apparatus according to claim 2, wherein

the classification unit

classifies the pixel to be processed into a first class by using one or both the image feature value obtained from the first image and the encoding information regarding the prediction encoding of the pixel to be processed,
classifies the pixel to be processed into a second class by using predetermined information that cannot be acquired on an decoding side, and
generates a final class of the pixel to be processed from the first class and the second class, and

the transmission unit transmits the second class.

**7.** The image processing apparatus according to claim 6, wherein

the classification unit converts the final class of the pixel to be processed into a reduced class according to a conversion table for converting the final class of the pixel to be processed into the reduced class in which the number of classes in the final class of the pixel to be processed is reduced,
the tap coefficient acquisition unit acquires tap coefficients of the reduced class of the pixel to be processed, and
the transmission unit transmits the conversion table.

**8.** The image processing apparatus according to claim 2, wherein

the classification unit classifies the pixel to be processed by repeating:

obtaining a subclass predicted value for predicting information regarding a subclass of the pixel to be processed by performing prediction computation using pixel values of pixels of the first image as a class tap used for the classification and predetermined classification coefficients; and
classifying the pixel to be processed into a subclass according to the subclass predicted value, and

the transmission unit transmits the classification coefficients.

**9.** The image processing apparatus according to claim 8, wherein

the image processing apparatus uses the student image to perform tap coefficient learning for obtaining the tap coefficients, and
the image processing apparatus further comprises
a learning unit that performs learning of one tier, the learning including:

performing prediction computation using the tap coefficients and the prediction tap selected from the student image to obtain a pixel predicted value of a pixel of the teacher image;
comparing the pixel predicted value and a pixel value of the pixel of the teacher image to generate the information regarding the subclass;
performing classification coefficient learning for obtaining the classification coefficients that minimize statistical errors between results of prediction computation for obtaining the information regarding the subclass using the student image and the information regarding the subclass;
performing prediction computation using the classification coefficients obtained by the classification coefficient learning and the student image to obtain the subclass predicted value of the pixel of the student image;

classifying the pixel of the student image into the subclass according to the subclass predicted value; and
using the pixel of the student image of each subclass to perform the tap coefficient learning of the subclass.

**10.** The image processing apparatus according to claim 9, wherein
the learning unit repeats the learning of one tier according to an S/N (Signal to Noise ratio) of the pixel predicted value.

**11.** The image processing apparatus according to claim 10, wherein
the transmission unit transmits the tap coefficients obtained by final learning of the learning of one tier and the classification coefficients obtained by all the learning of one tier.

**12.** The image processing apparatus according to claim 10, wherein

the learning unit sets, as transmission target coefficients to be transmitted, the tap coefficients obtained in predetermined second or later time of the learning of one tier and the classification coefficients obtained before the predetermined second or later time of the learning of one tier according to a transmittable amount that can be transmitted, and
the transmission unit transmits the coefficients to be transmitted.

**13.** The image processing apparatus according to claim 1, further comprising
a collection unit that collects the tap coefficients.

**14.** The image processing apparatus according to claim 13, wherein
the classification unit performs the classification by using one or both an image feature value obtained from the first image and encoding information regarding prediction encoding of the pixel to be processed.

**15.** The image processing apparatus according to claim 14, wherein
the collection unit collects the encoding information.

**16.** The image processing apparatus according to claim 13, wherein

of a first class obtained by classification using one or both the image feature value obtained from the first image and the encoding information regarding the prediction encoding of the pixel to be processed and a second class obtained by the classification using predetermined information that cannot be acquired on a decoding side, the collection unit collects the second class, and
the classification unit

classifies the pixel to be processed into the first class and
generates a final class of the pixel to be processed from the first class and the second class collected by the collection unit.

**17.** The image processing apparatus according to claim 16, wherein

the collection unit collects a conversion table for converting the final class of the pixel to be processed into a reduced class in which the number of classes in the final class of the pixel to be processed is reduced, and
the classification unit converts the final class of the pixel to be processed into the reduced class according to the conversion table.

**18.** The image processing apparatus according to claim 13, wherein

the transmission unit uses the student image to perform tap coefficient learning for obtaining the tap coefficients and
collects the tap coefficients and the classification coefficients obtained by repeating learning of one tier, the learning comprising:

performing prediction computation using the tap coefficients and the prediction tap selected from the student image to obtain a pixel predicted value of a pixel of the teacher image;
comparing the pixel predicted value and a pixel value of the pixel of the teacher image to generate information regarding a subclass of the pixel of the student image;

performing classification coefficient learning for obtaining the classification coefficients that minimize statistical errors between results of prediction computation for obtaining the information regarding the subclass using the student image and the classification coefficients obtained by learning and the information regarding the subclass;
performing prediction computation using the classification coefficients obtained by the classification coefficient learning and the student image to obtain a subclass predicted value for predicting the information regarding the subclass of the pixel of the student image;
classifying the pixel of the student image into the subclass according to the subclass predicted value; and using the pixel of the student image of each subclass to perform the tap coefficient learning of the subclass, and

the classification unit classifies the pixel to be processed by repeating:

obtaining the subclass predicted value for predicting the information regarding the subclass of the pixel to be processed by performing prediction computation using pixel values of pixels of the first image as a class tap used for the classification and the classification coefficients; and
classifying the pixel to be processed into a subclass according to the subclass predicted value.

**19.** The image processing apparatus according to claim 1, wherein
the filter processing unit functions as one or more of a DF (Deblocking Filter), an SAO (Sample Adaptive Offset), and an ALF (Adaptive Loop Filter) included in an ILF (In Loop Filter).

**20.** An image processing method comprising

a step of applying a filtering process to a first image obtained by adding a residual of prediction encoding and a predicted image to generate a second image used for prediction of the predicted image,
the filtering process including:

selecting, from the first image, pixels as a prediction tap used for prediction computation for obtaining a pixel value of a corresponding pixel of the second image corresponding to a pixel to be processed that is a processing target in the first image;
classifying the pixel to be processed into one of a plurality of classes;
acquiring tap coefficients of the class of the pixel to be processed among tap coefficients used for the prediction computation in each of the plurality of classes obtained by learning using a student image equivalent to the first image and a teacher image equivalent to an original image corresponding to the first image; and
obtaining the pixel value of the corresponding pixel by performing the prediction computation using the tap coefficients of the class of the pixel to be processed and the prediction tap of the pixel to be processed.

FIG. 1

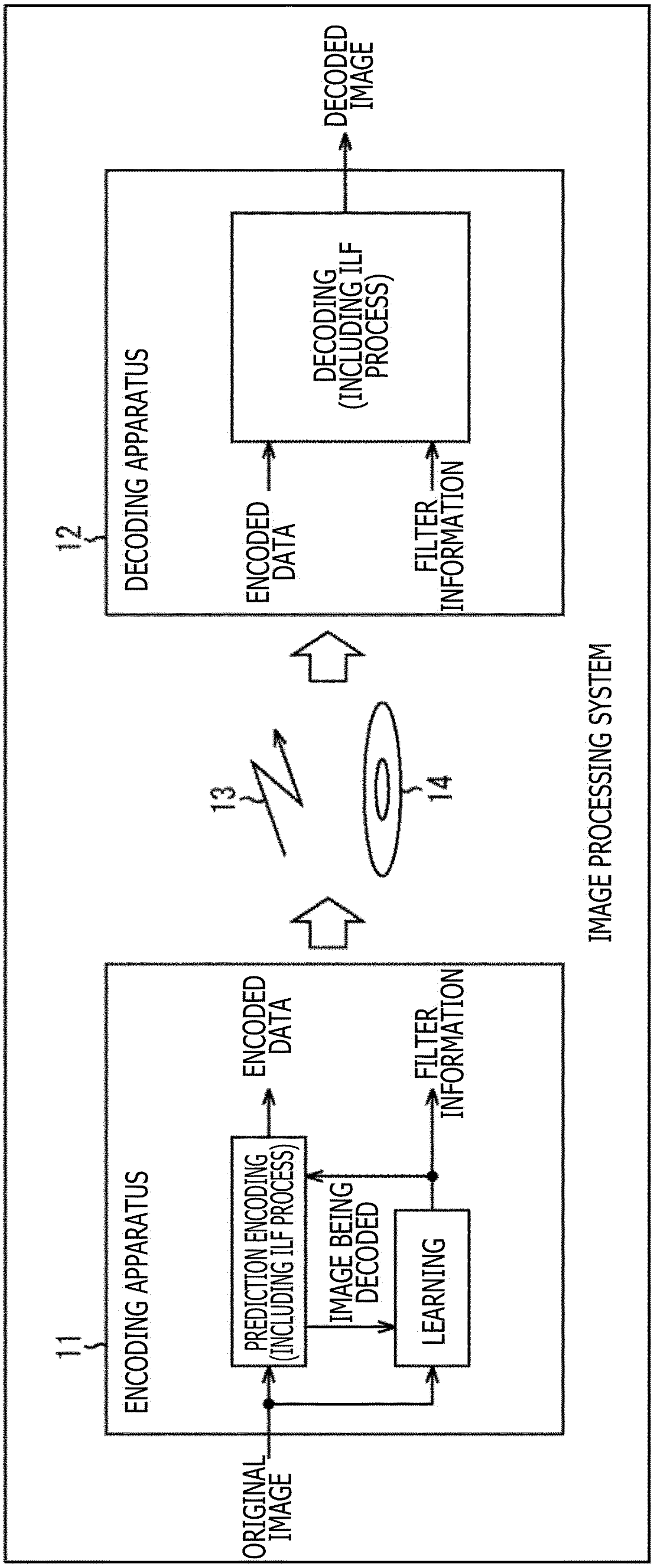
IMAGE PROCESSING SYSTEM
11
ENCODING APPARATUS
ORIGINAL IMAGE
PREDICTION ENCODING (INCLUDING ILF PROCESS)
IMAGE BEING DECODED
LEARNING
ENCODED DATA
FILTER INFORMATION
13
14
12
DECODING APPARATUS
ENCODED DATA
FILTER INFORMATION
DECODING (INCLUDING ILF PROCESS)
DECODED IMAGE

FIG. 2

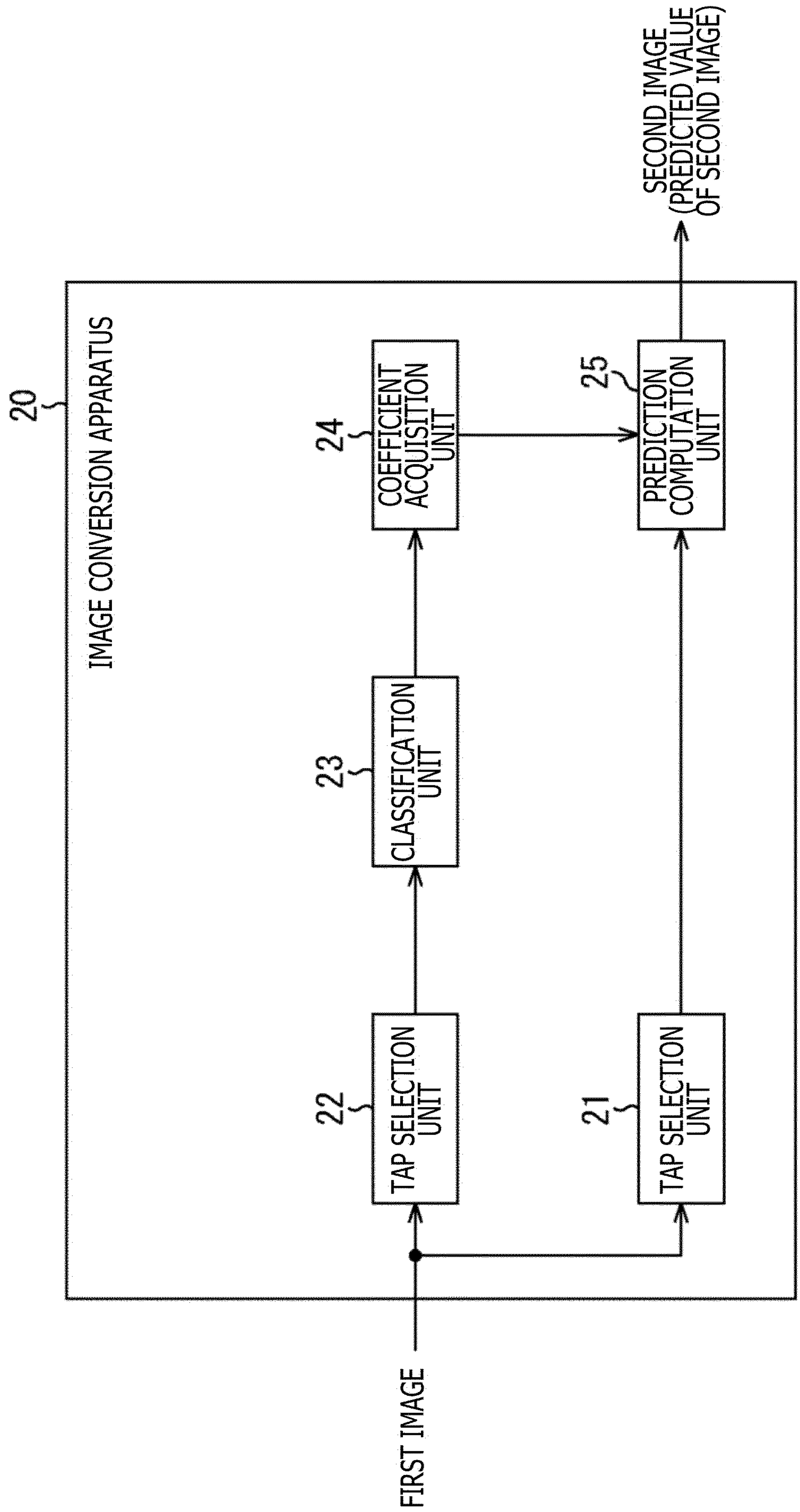
FIRST IMAGE
20
IMAGE CONVERSION APPARATUS
22
TAP SELECTION UNIT
21
TAP SELECTION UNIT
23
CLASSIFICATION UNIT
24
COEFFICIENT ACQUISITION UNIT
25
PREDICTION COMPUTATION UNIT
SECOND IMAGE (PREDICTED VALUE OF SECOND IMAGE)

FIG. 3

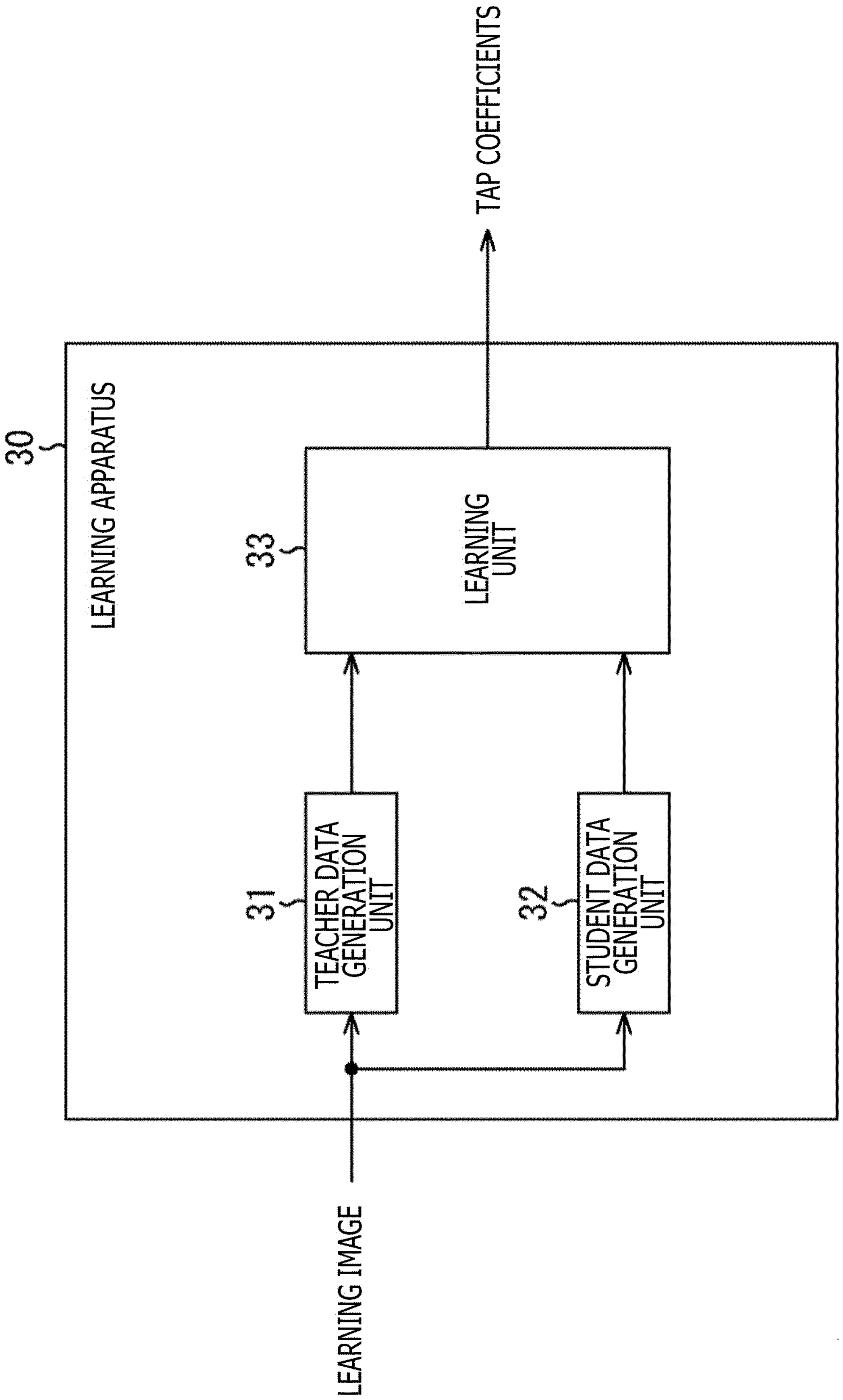
TAP COEFFICIENTS
30
LEARNING APPARATUS
33
LEARNING UNIT
31
TEACHER DATA GENERATION UNIT
32
STUDENT DATA GENERATION UNIT
LEARNING IMAGE

FIG. 4

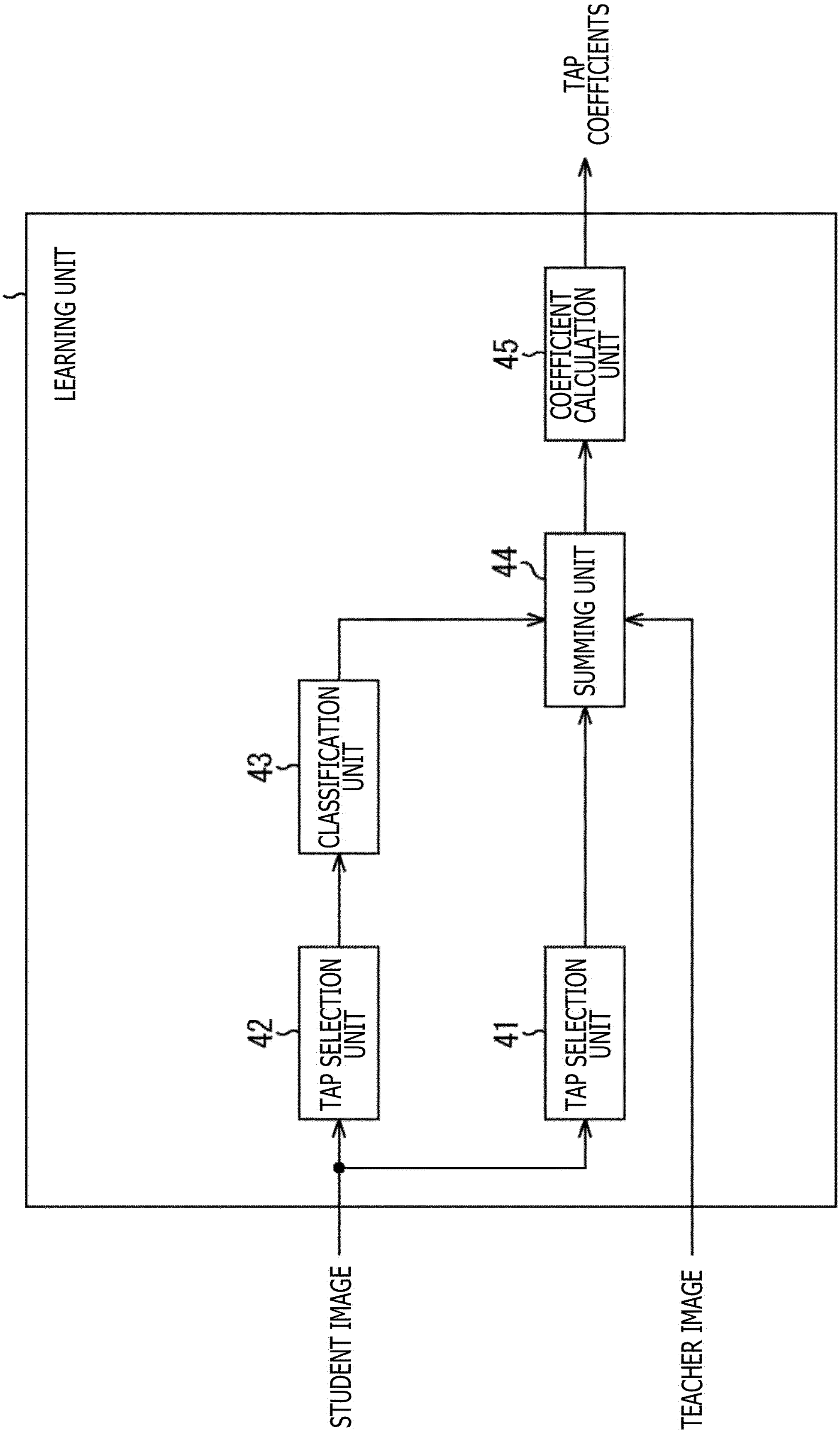

33
LEARNING UNIT
STUDENT IMAGE
TEACHER IMAGE
41
TAP SELECTION UNIT
42
TAP SELECTION UNIT
43
CLASSIFICATION UNIT
44
SUMMING UNIT
45
COEFFICIENT CALCULATION UNIT
TAP COEFFICIENTS

FIG. 5

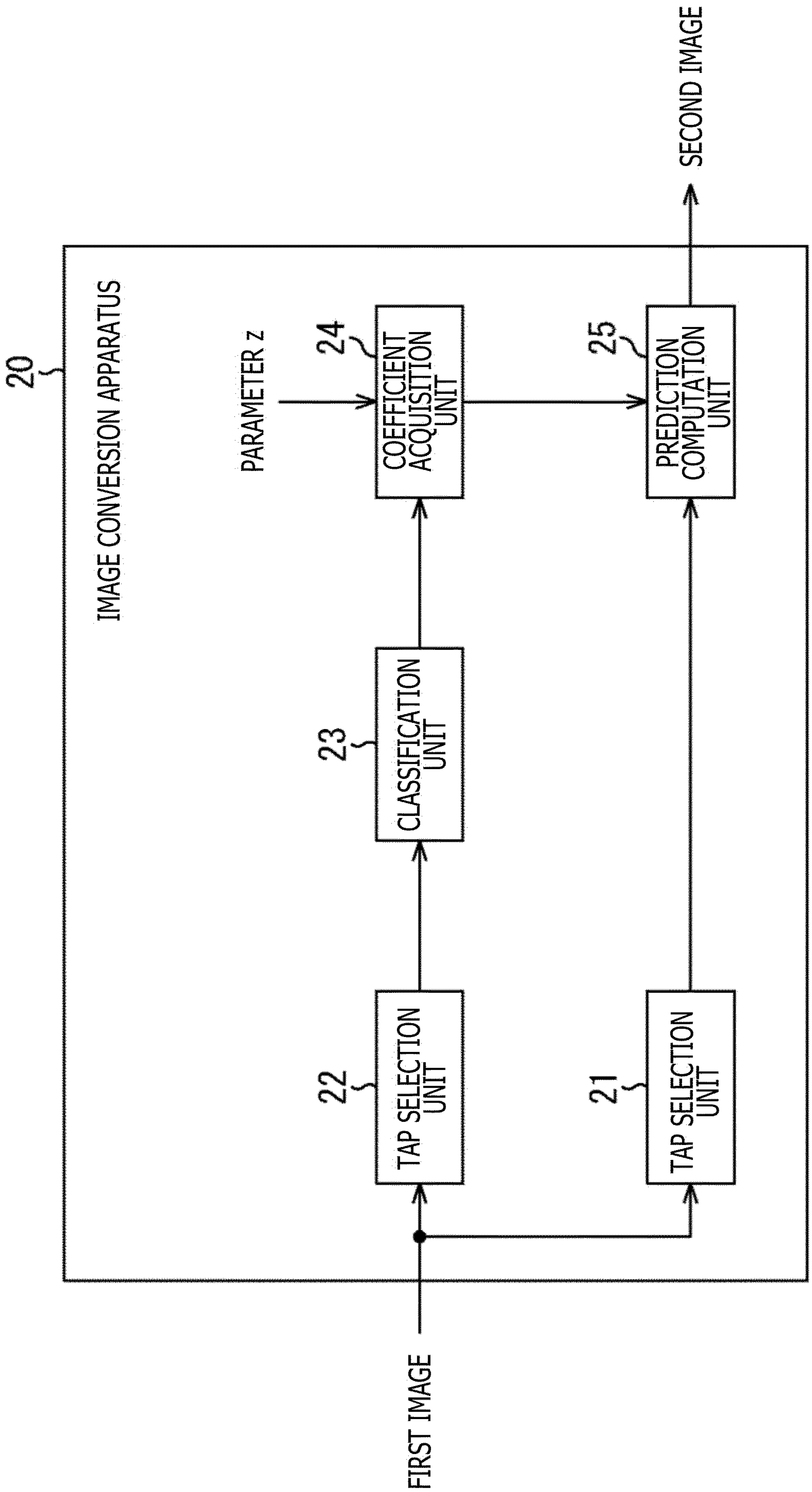
IMAGE CONVERSION APPARATUS
20
FIRST IMAGE
22
TAP SELECTION UNIT
21
TAP SELECTION UNIT
23
CLASSIFICATION UNIT
PARAMETER z
24
COEFFICIENT ACQUISITION UNIT
25
PREDICTION COMPUTATION UNIT
SECOND IMAGE

FIG. 6

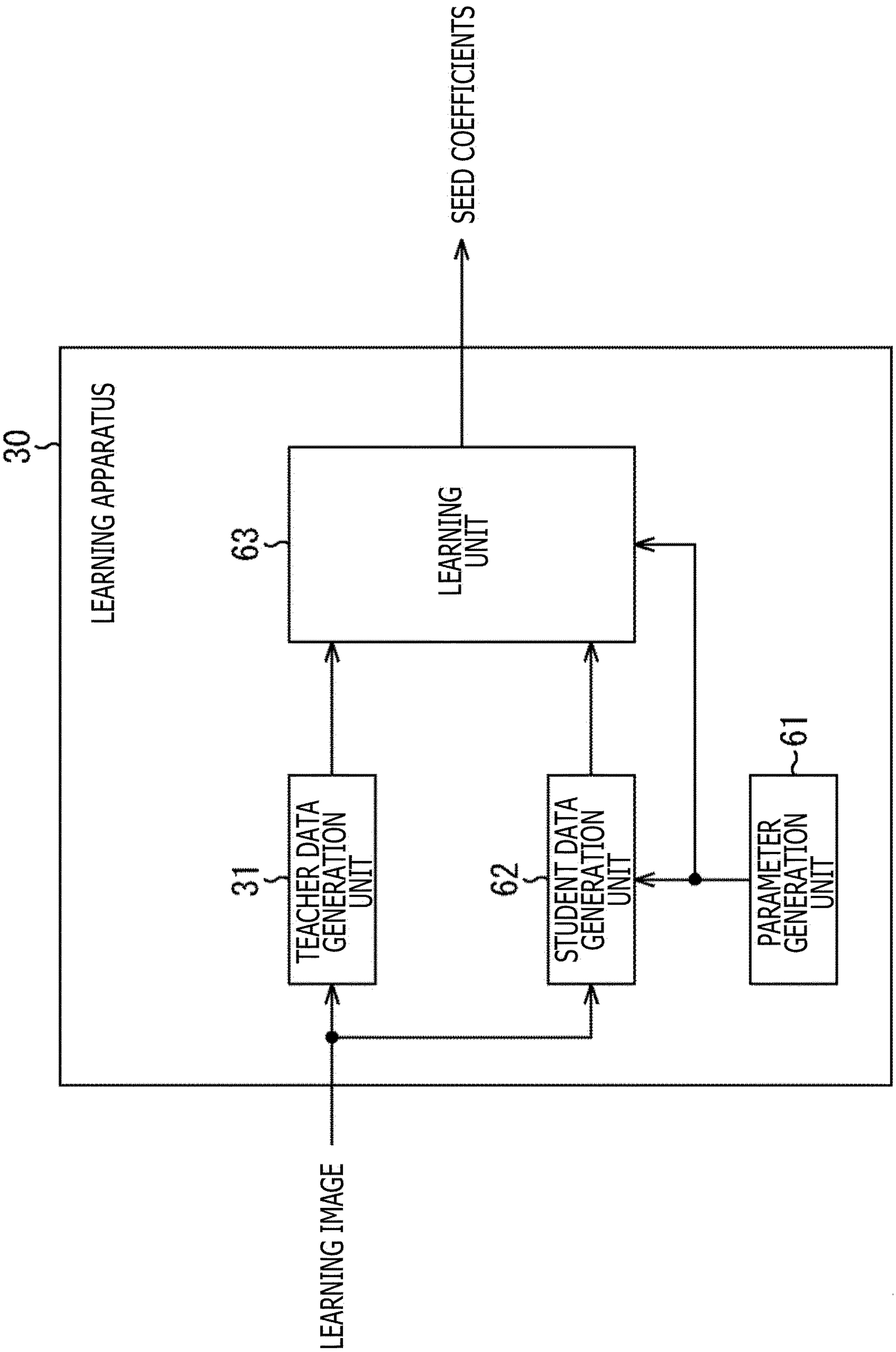
SEED COEFFICIENTS
30
LEARNING APPARATUS
63
LEARNING UNIT
31
TEACHER DATA GENERATION UNIT
62
STUDENT DATA GENERATION UNIT
61
PARAMETER GENERATION UNIT
LEARNING IMAGE

FIG. 7

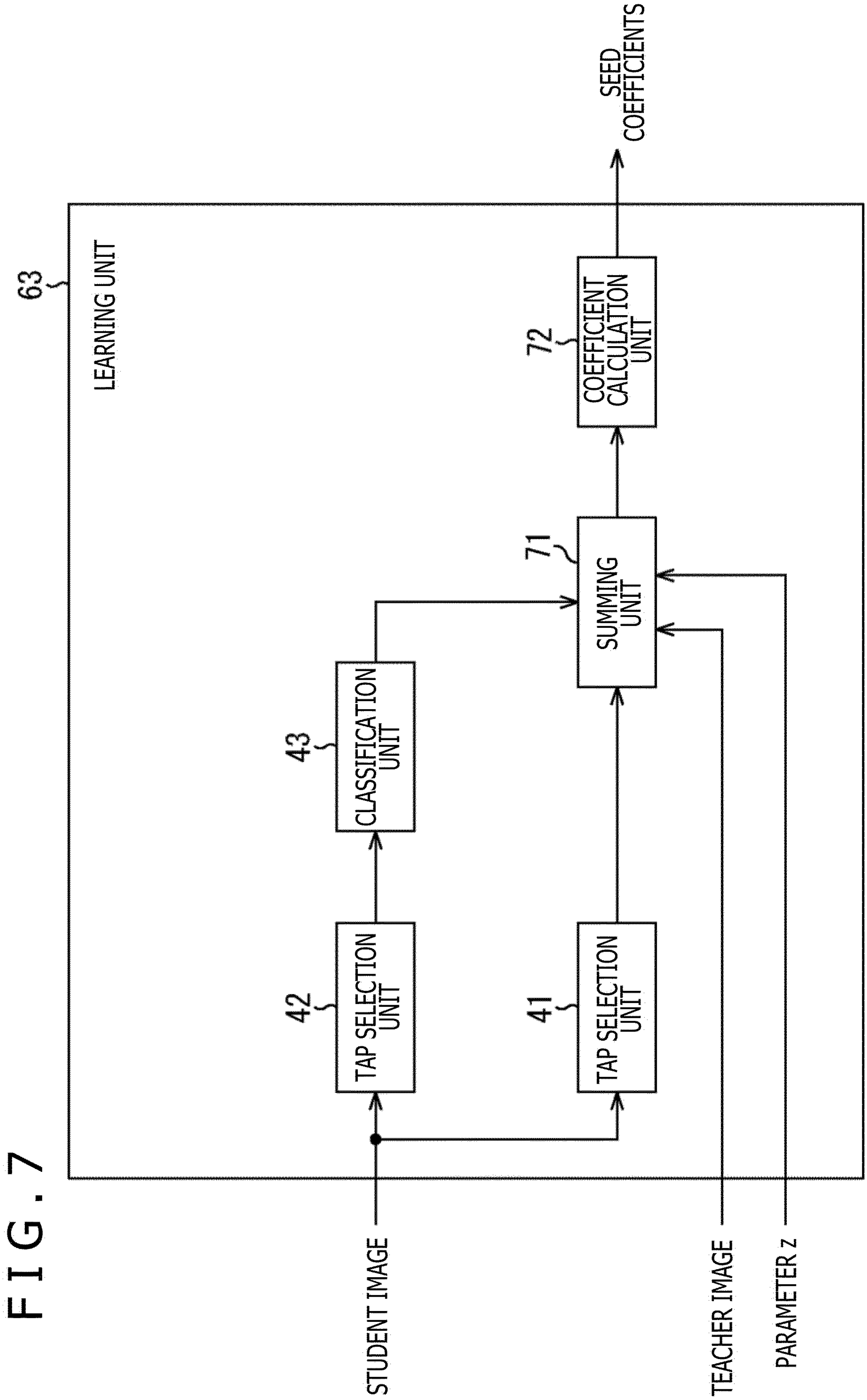
63
LEARNING UNIT
STUDENT IMAGE
TEACHER IMAGE
PARAMETER z
42
TAP SELECTION UNIT
43
CLASSIFICATION UNIT
41
TAP SELECTION UNIT
71
SUMMING UNIT
72
COEFFICIENT CALCULATION UNIT
SEED COEFFICIENTS

FIG. 8

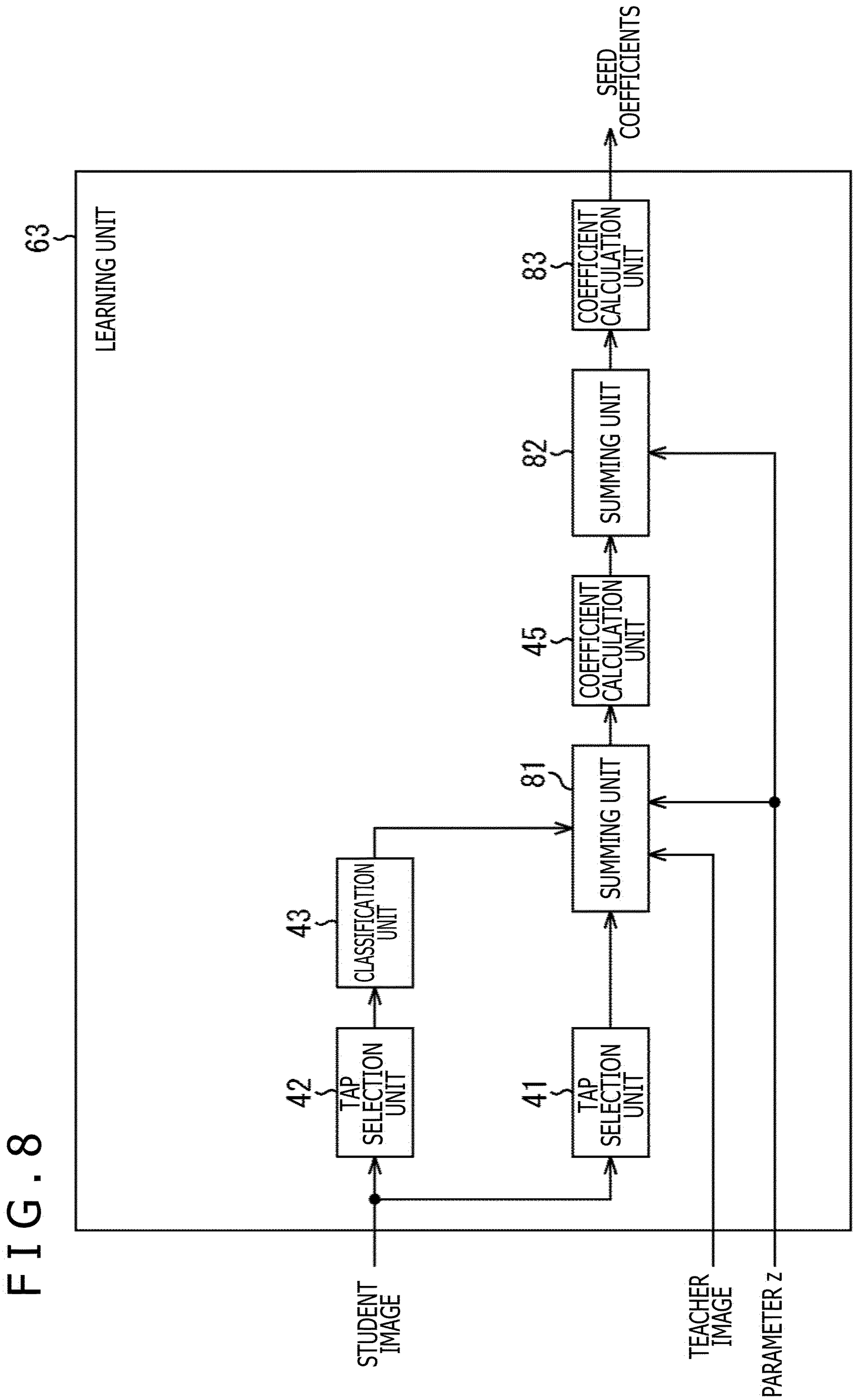
63
LEARNING UNIT
STUDENT IMAGE
TEACHER IMAGE
PARAMETER z
42
TAP SELECTION UNIT
43
CLASSIFICATION UNIT
41
TAP SELECTION UNIT
81
SUMMING UNIT
45
COEFFICIENT CALCULATION UNIT
82
SUMMING UNIT
83
COEFFICIENT CALCULATION UNIT
SEED COEFFICIENTS

FIG. 9

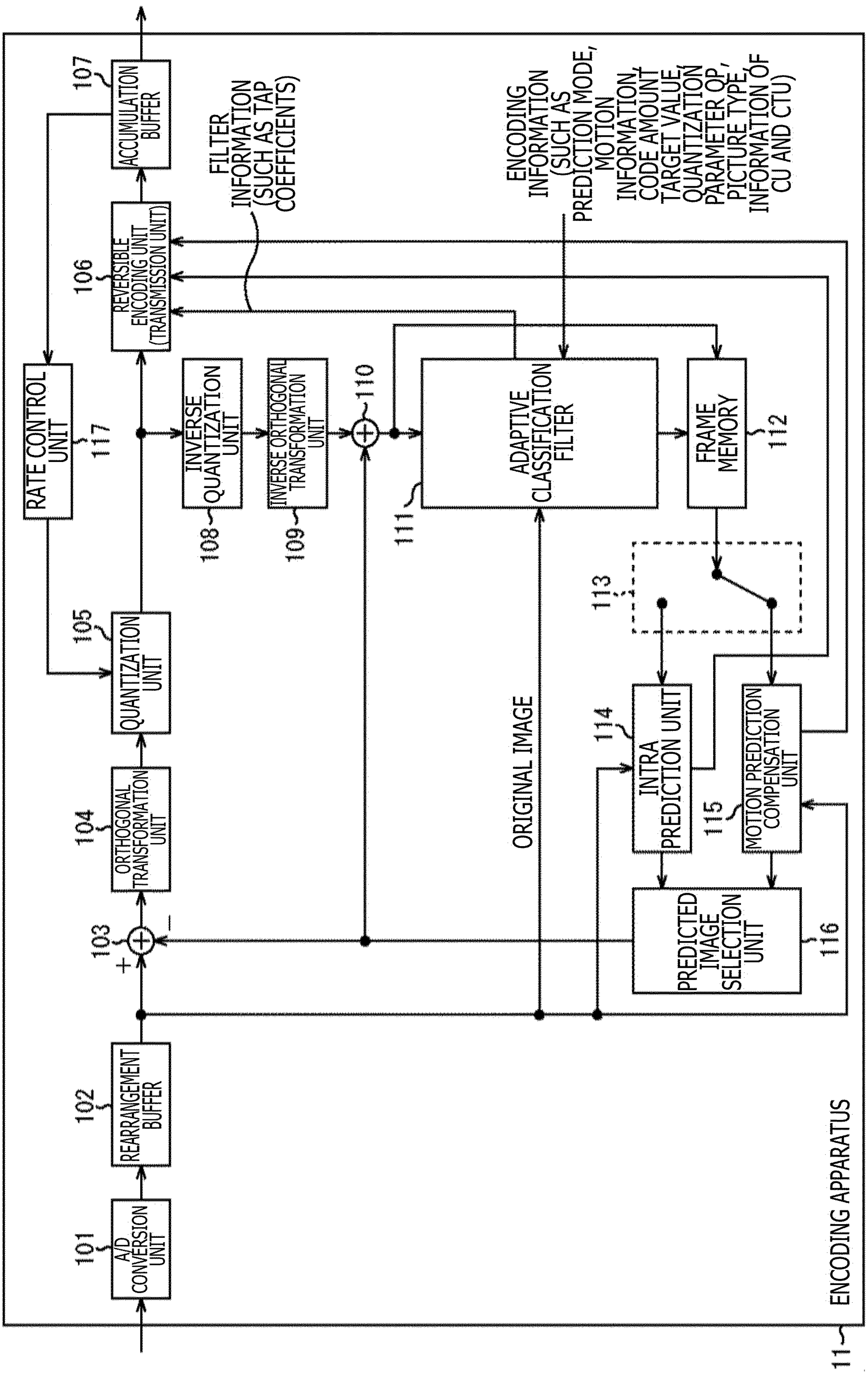
A/D CONVERSION UNIT
101
REARRANGEMENT BUFFER
102
103
+
−
ORTHOGONAL TRANSFORMATION UNIT
104
QUANTIZATION UNIT
105
REVERSIBLE ENCODING UNIT (TRANSMISSION UNIT)
106
ACCUMULATION BUFFER
107
INVERSE QUANTIZATION UNIT
108
INVERSE ORTHOGONAL TRANSFORMATION UNIT
109
110
ADAPTIVE CLASSIFICATION FILTER
111
FRAME MEMORY
112
113
INTRA PREDICTION UNIT
114
MOTION PREDICTION COMPENSATION UNIT
115
PREDICTED IMAGE SELECTION UNIT
116
RATE CONTROL UNIT
117
FILTER INFORMATION (SUCH AS TAP COEFFICIENTS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ORIGINAL IMAGE
ENCODING APPARATUS
11

FIG.10

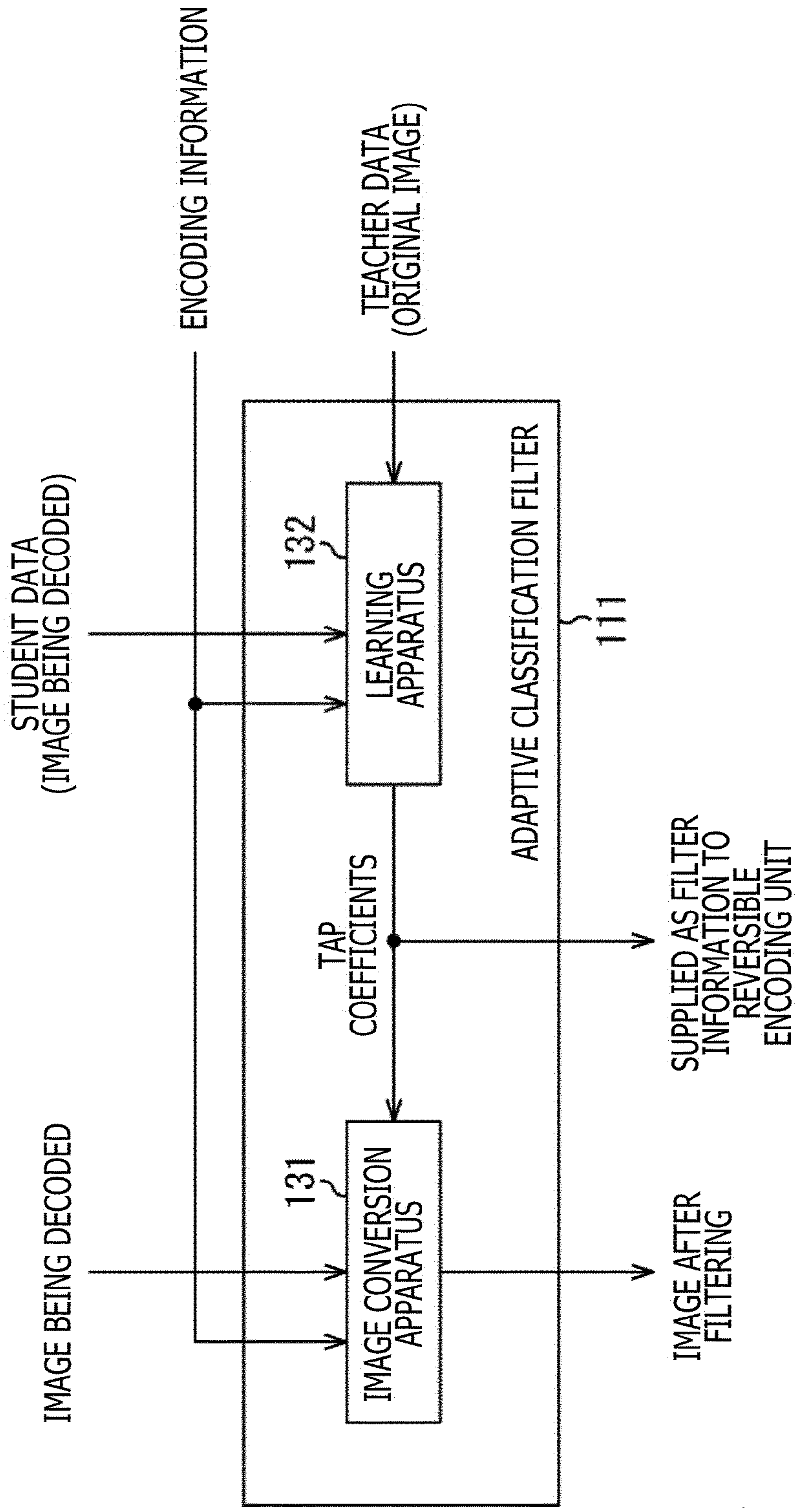
ENCODING INFORMATION
TEACHER DATA (ORIGINAL IMAGE)
STUDENT DATA (IMAGE BEING DECODED)
132
LEARNING APPARATUS
ADAPTIVE CLASSIFICATION FILTER
111
TAP COEFFICIENTS
SUPPLIED AS FILTER INFORMATION TO REVERSIBLE ENCODING UNIT
IMAGE BEING DECODED
131
IMAGE CONVERSION APPARATUS
IMAGE AFTER FILTERING

FIG. 11

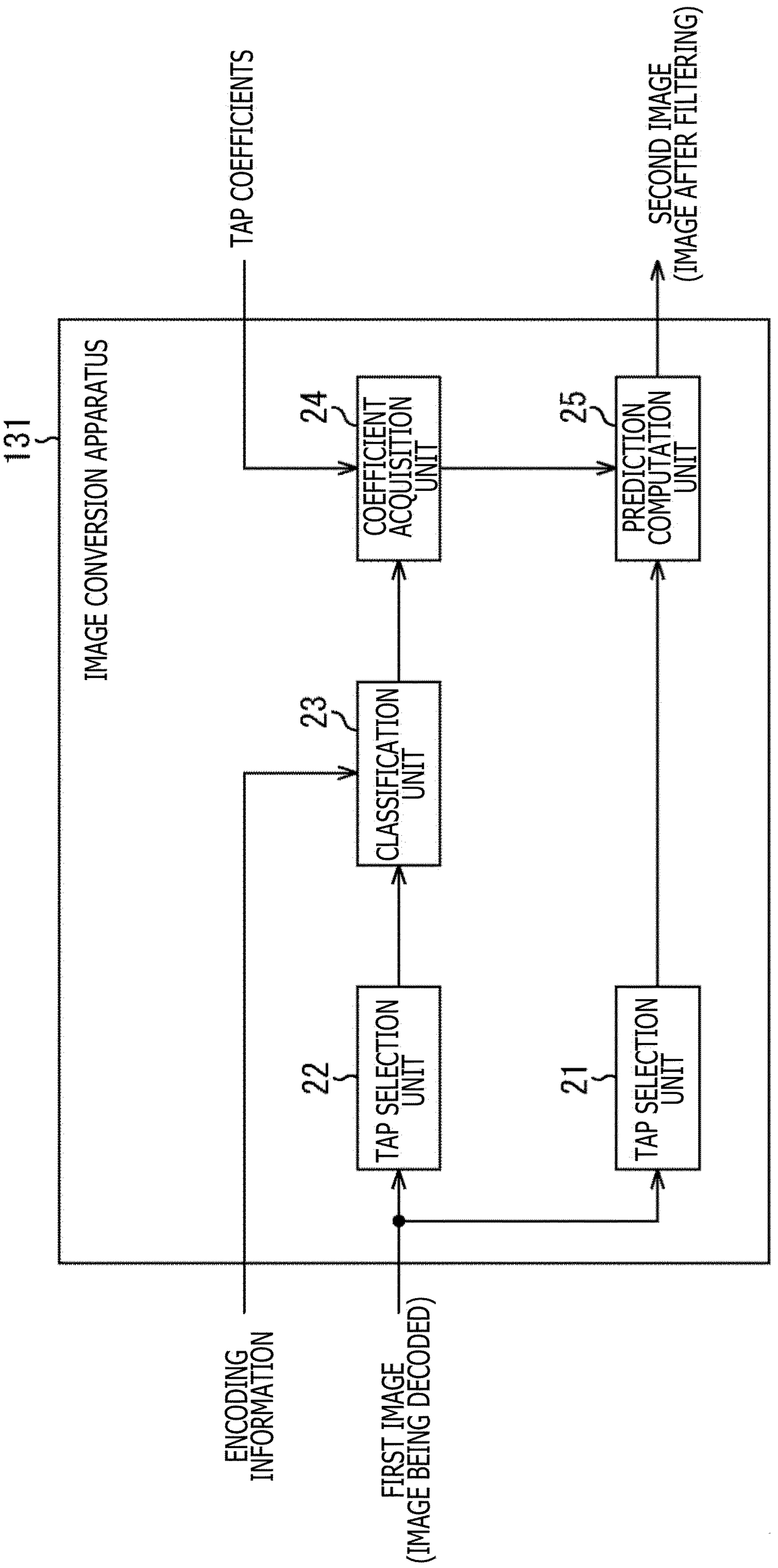
131
IMAGE CONVERSION APPARATUS
TAP COEFFICIENTS
24
COEFFICIENT ACQUISITION UNIT
25
PREDICTION COMPUTATION UNIT
SECOND IMAGE (IMAGE AFTER FILTERING)
23
CLASSIFICATION UNIT
22
TAP SELECTION UNIT
21
TAP SELECTION UNIT
ENCODING INFORMATION
FIRST IMAGE (IMAGE BEING DECODED)

FIG.12

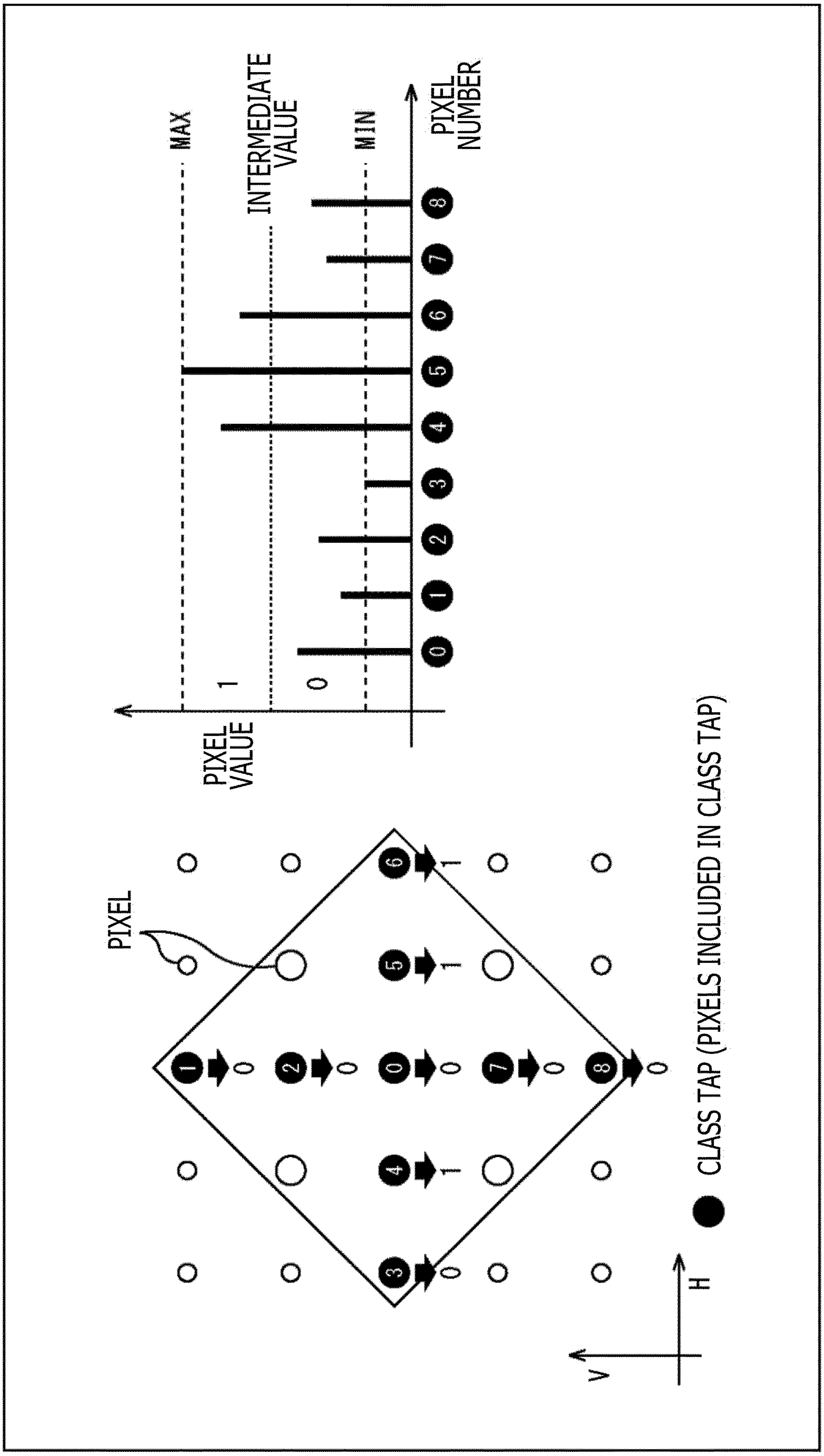
PIXEL VALUE
MAX
INTERMEDIATE VALUE
MIN
PIXEL NUMBER
1
0
PIXEL
CLASS TAP (PIXELS INCLUDED IN CLASS TAP)
V
H

FIG.13

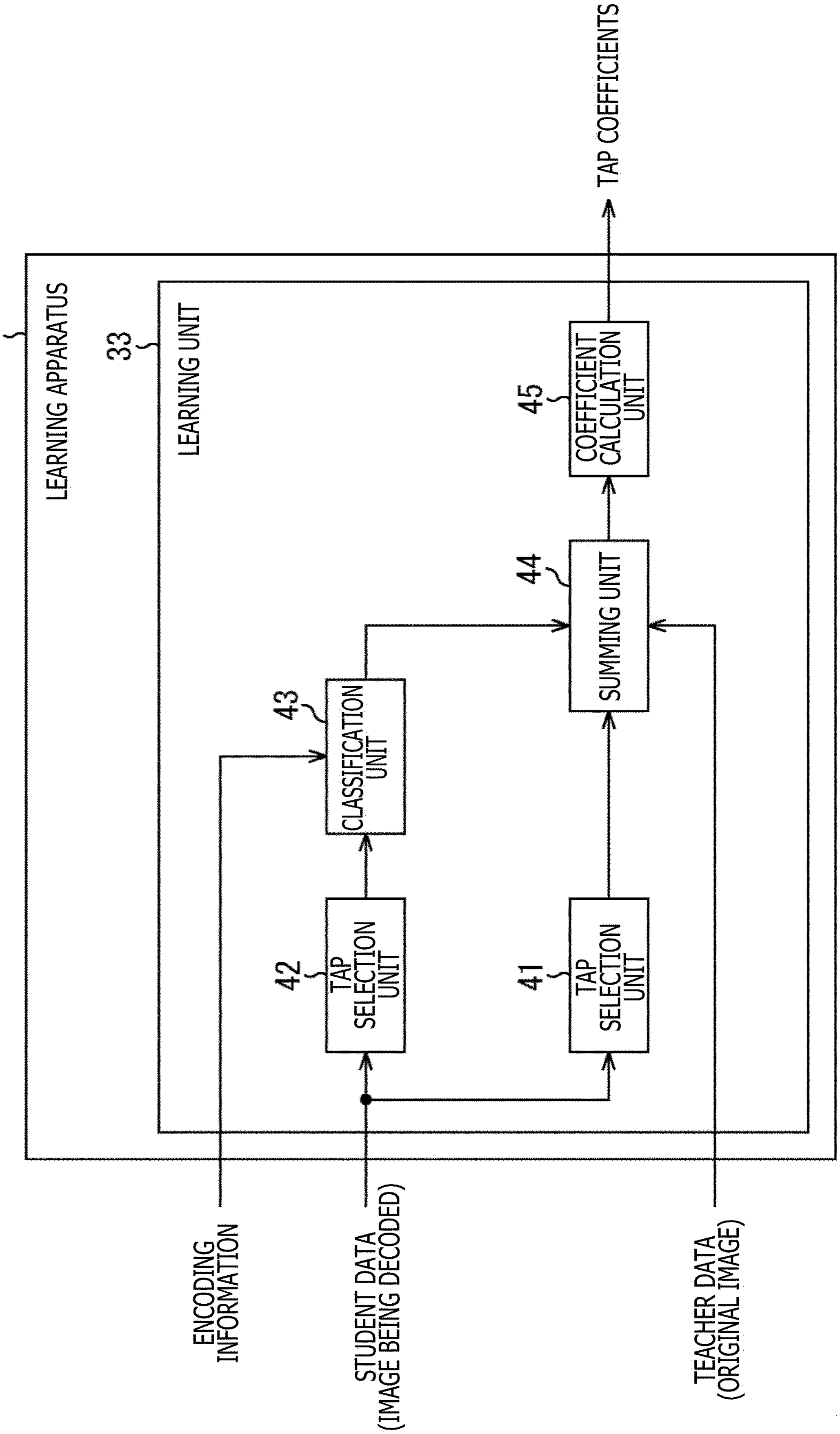
132
LEARNING APPARATUS
33
LEARNING UNIT
41
TAP SELECTION UNIT
42
TAP SELECTION UNIT
43
CLASSIFICATION UNIT
44
SUMMING UNIT
45
COEFFICIENT CALCULATION UNIT
TAP COEFFICIENTS
ENCODING INFORMATION
STUDENT DATA (IMAGE BEING DECODED)
TEACHER DATA (ORIGINAL IMAGE)

FIG. 14

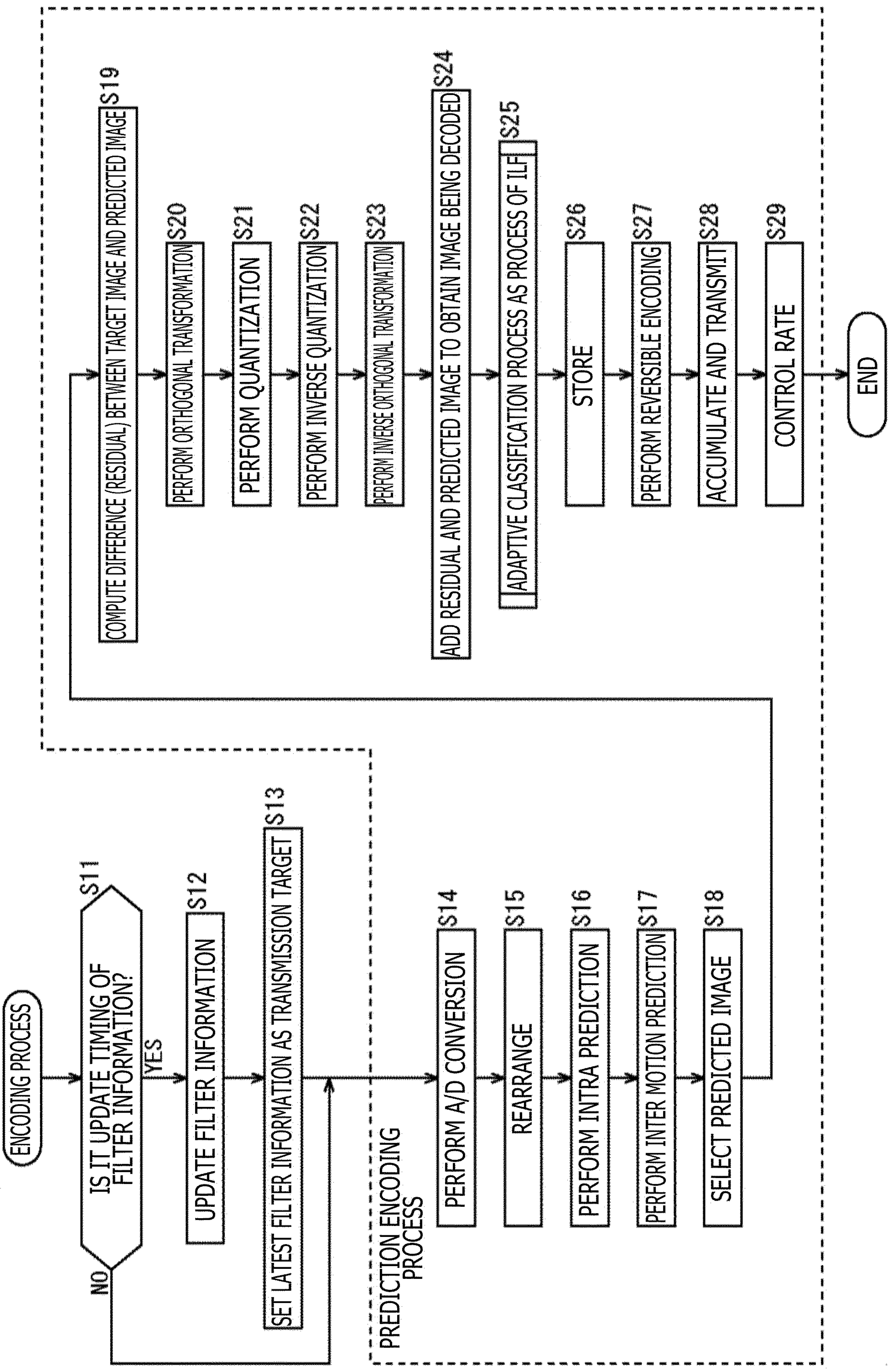
ENCODING PROCESS
IS IT UPDATE TIMING OF FILTER INFORMATION?
S11
YES
NO
UPDATE FILTER INFORMATION
S12
SET LATEST FILTER INFORMATION AS TRANSMISSION TARGET
S13
PREDICTION ENCODING PROCESS
PERFORM A/D CONVERSION
S14
REARRANGE
S15
PERFORM INTRA PREDICTION
S16
PERFORM INTER MOTION PREDICTION
S17
SELECT PREDICTED IMAGE
S18
COMPUTE DIFFERENCE (RESIDUAL) BETWEEN TARGET IMAGE AND PREDICTED IMAGE
S19
PERFORM ORTHOGONAL TRANSFORMATION
S20
PERFORM QUANTIZATION
S21
PERFORM INVERSE QUANTIZATION
S22
PERFORM INVERSE ORTHOGONAL TRANSFORMATION
S23
ADD RESIDUAL AND PREDICTED IMAGE TO OBTAIN IMAGE BEING DECODED
S24
ADAPTIVE CLASSIFICATION PROCESS AS PROCESS OF ILF
S25
STORE
S26
PERFORM REVERSIBLE ENCODING
S27
ACCUMULATE AND TRANSMIT
S28
CONTROL RATE
S29
END

FIG. 15

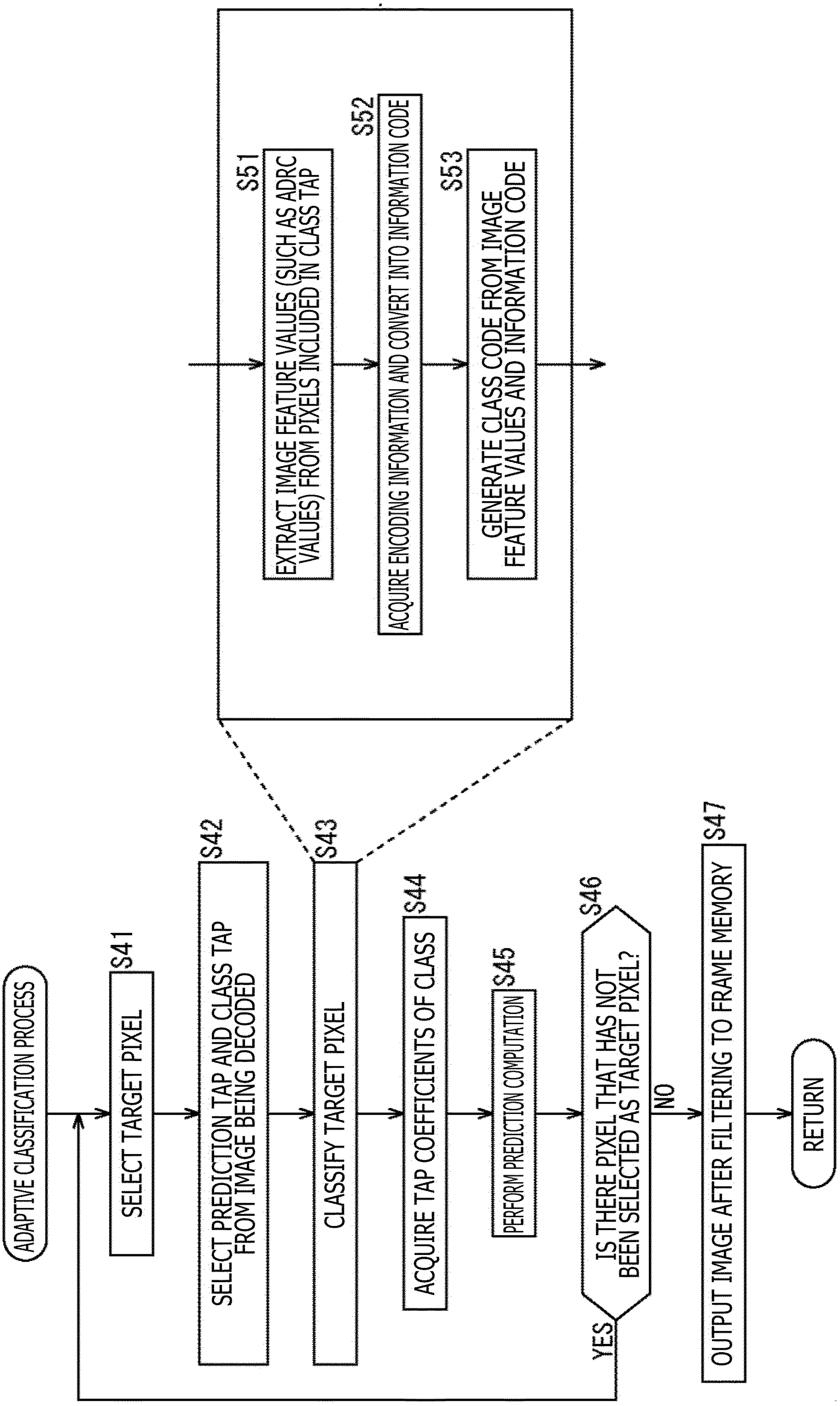
ADAPTIVE CLASSIFICATION PROCESS
SELECT TARGET PIXEL
S41
SELECT PREDICTION TAP AND CLASS TAP FROM IMAGE BEING DECODED
S42
CLASSIFY TARGET PIXEL
S43
ACQUIRE TAP COEFFICIENTS OF CLASS
S44
PERFORM PREDICTION COMPUTATION
S45
IS THERE PIXEL THAT HAS NOT BEEN SELECTED AS TARGET PIXEL?
S46
YES
NO
OUTPUT IMAGE AFTER FILTERING TO FRAME MEMORY
S47
RETURN
EXTRACT IMAGE FEATURE VALUES (SUCH AS ADRC VALUES) FROM PIXELS INCLUDED IN CLASS TAP
S51
ACQUIRE ENCODING INFORMATION AND CONVERT INTO INFORMATION CODE
S52
GENERATE CLASS CODE FROM IMAGE FEATURE VALUES AND INFORMATION CODE
S53

FIG. 16

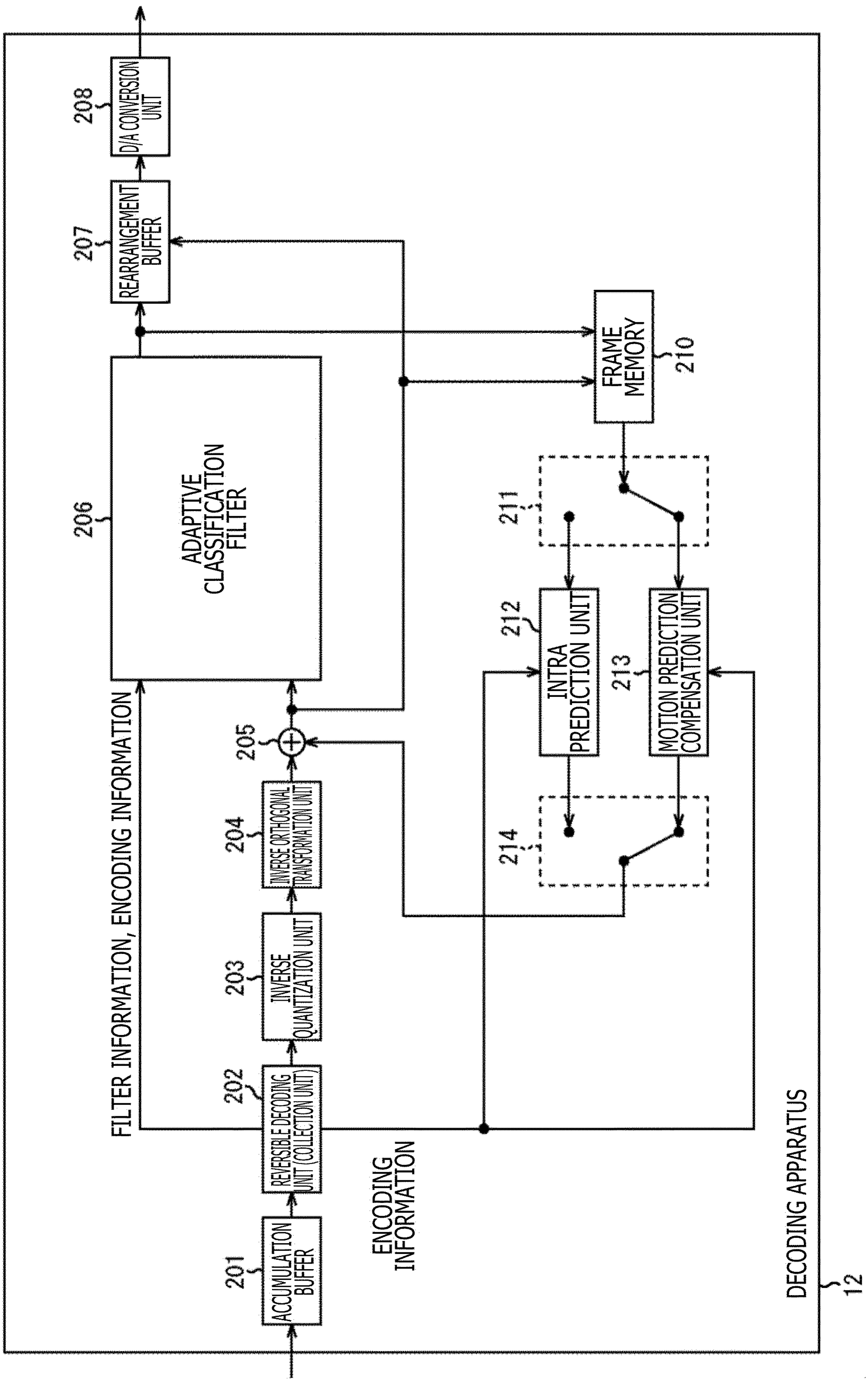
201
ACCUMULATON BUFFER
202
REVERSIBLE DECODING UNIT (COLLECTION UNIT)
203
INVERSE QUANTIZATION UNIT
204
INVERSE ORTHOGONAL TRANSFORMATION UNIT
205
206
ADAPTIVE CLASSIFICATION FILTER
207
REARRANGEMENT BUFFER
208
D/A CONVERSION UNIT
210
FRAME MEMORY
211
212
INTRA PREDICTION UNIT
213
MOTION PREDICTION COMPENSATION UNIT
214
FILTER INFORMATION, ENCODING INFORMATION
ENCODING INFORMATION
DECODING APPARATUS
12

FIG. 17

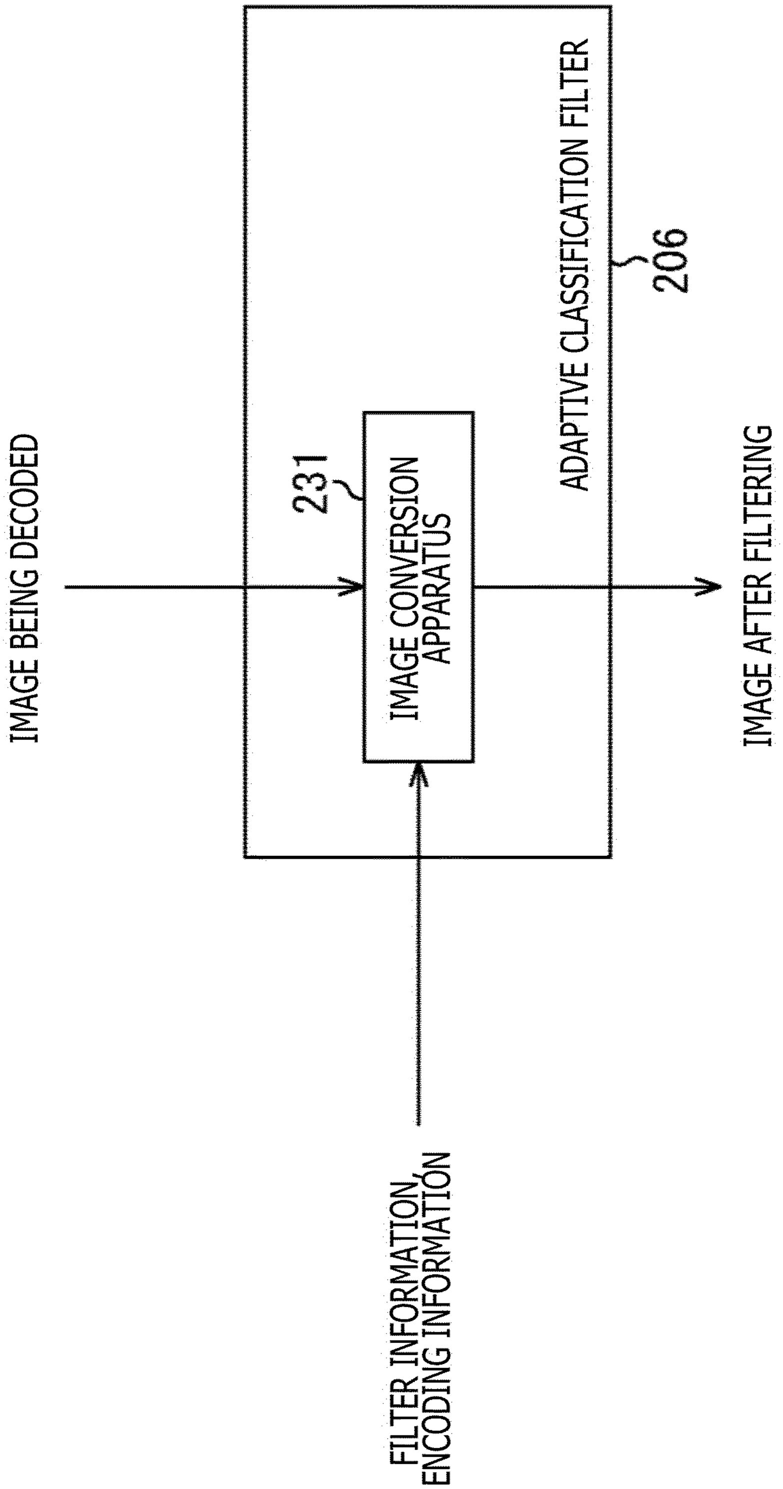
IMAGE BEING DECODED
231
IMAGE CONVERSION APPARATUS
ADAPTIVE CLASSIFICATION FILTER
206
IMAGE AFTER FILTERING
FILTER INFORMATION, ENCODING INFORMATION

FIG. 18

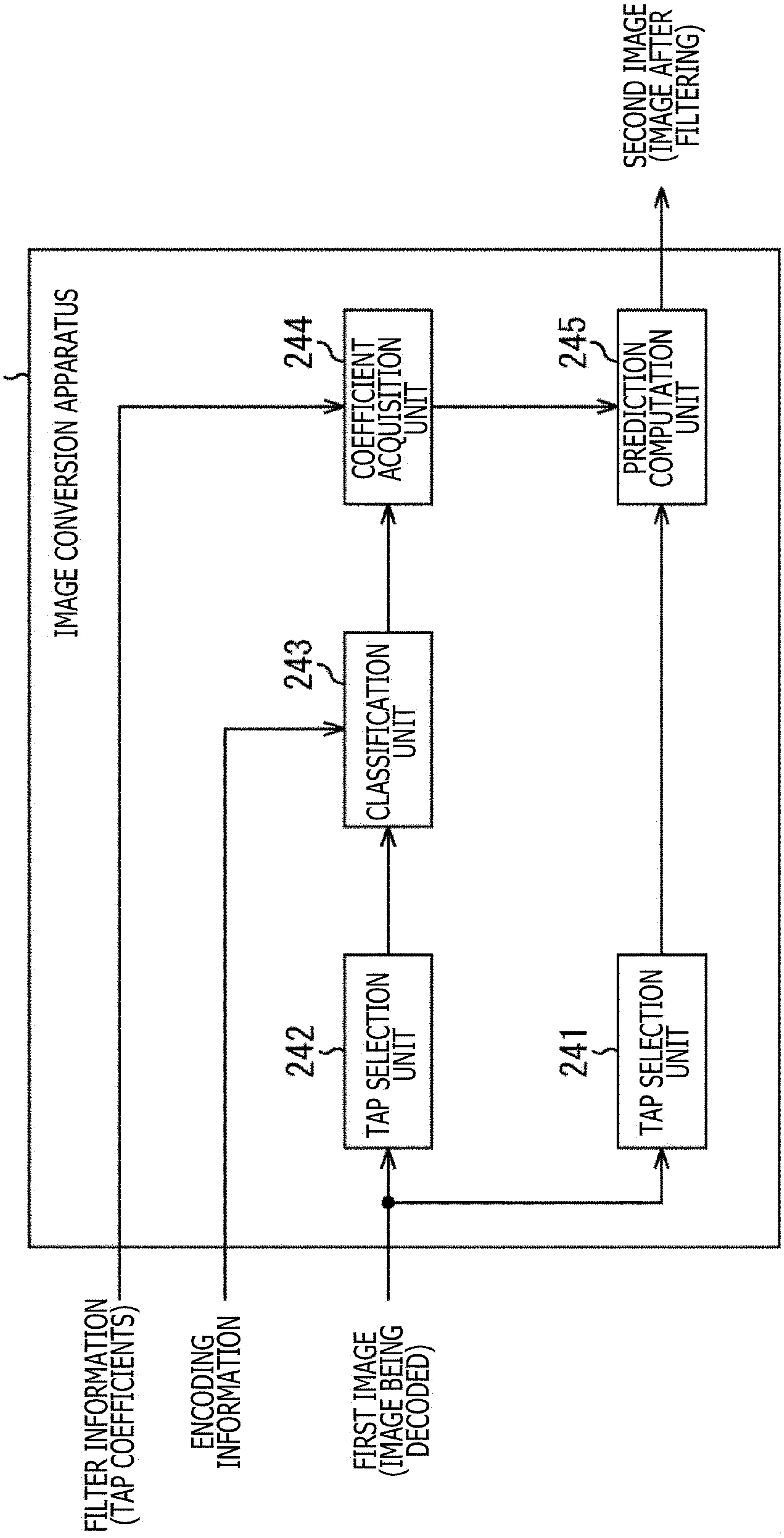

FILTER INFORMATION (TAP COEFFICIENTS)
ENCODING INFORMATION
FIRST IMAGE (IMAGE BEING DECODED)
231
IMAGE CONVERSION APPARATUS
242
TAP SELECTION UNIT
241
TAP SELECTION UNIT
243
CLASSIFICATION UNIT
244
COEFFICIENT ACQUISITION UNIT
245
PREDICTION COMPUTATION UNIT
SECOND IMAGE (IMAGE AFTER FILTERING)

FIG.19

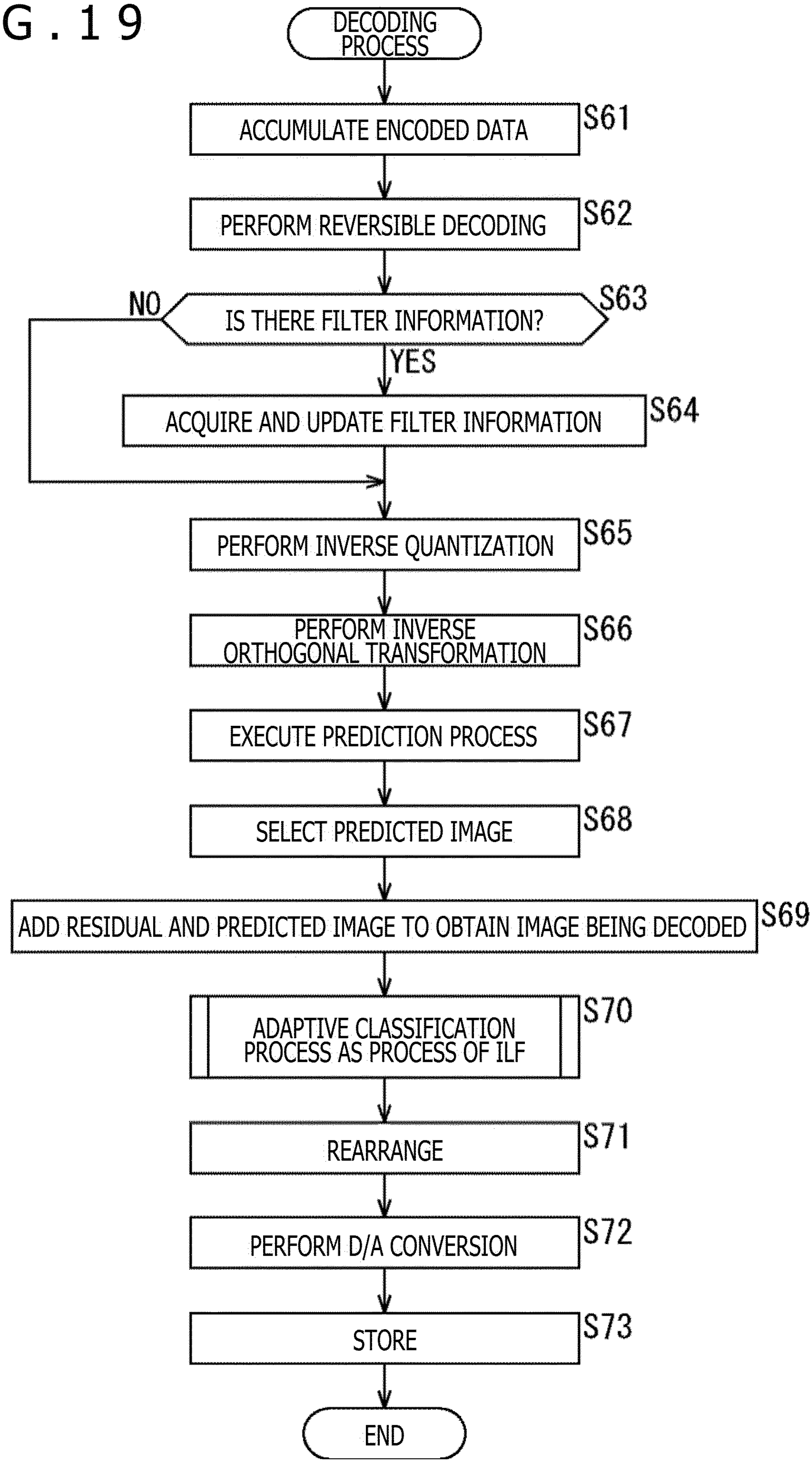
DECODING PROCESS
ACCUMULATE ENCODED DATA
S61
PERFORM REVERSIBLE DECODING
S62
IS THERE FILTER INFORMATION?
S63
NO
YES
ACQUIRE AND UPDATE FILTER INFORMATION
S64
PERFORM INVERSE QUANTIZATION
S65
PERFORM INVERSE ORTHOGONAL TRANSFORMATION
S66
EXECUTE PREDICTION PROCESS
S67
SELECT PREDICTED IMAGE
S68
ADD RESIDUAL AND PREDICTED IMAGE TO OBTAIN IMAGE BEING DECODED
S69
ADAPTIVE CLASSIFICATION PROCESS AS PROCESS OF ILF
S70
REARRANGE
S71
PERFORM D/A CONVERSION
S72
STORE
S73
END

FIG.20

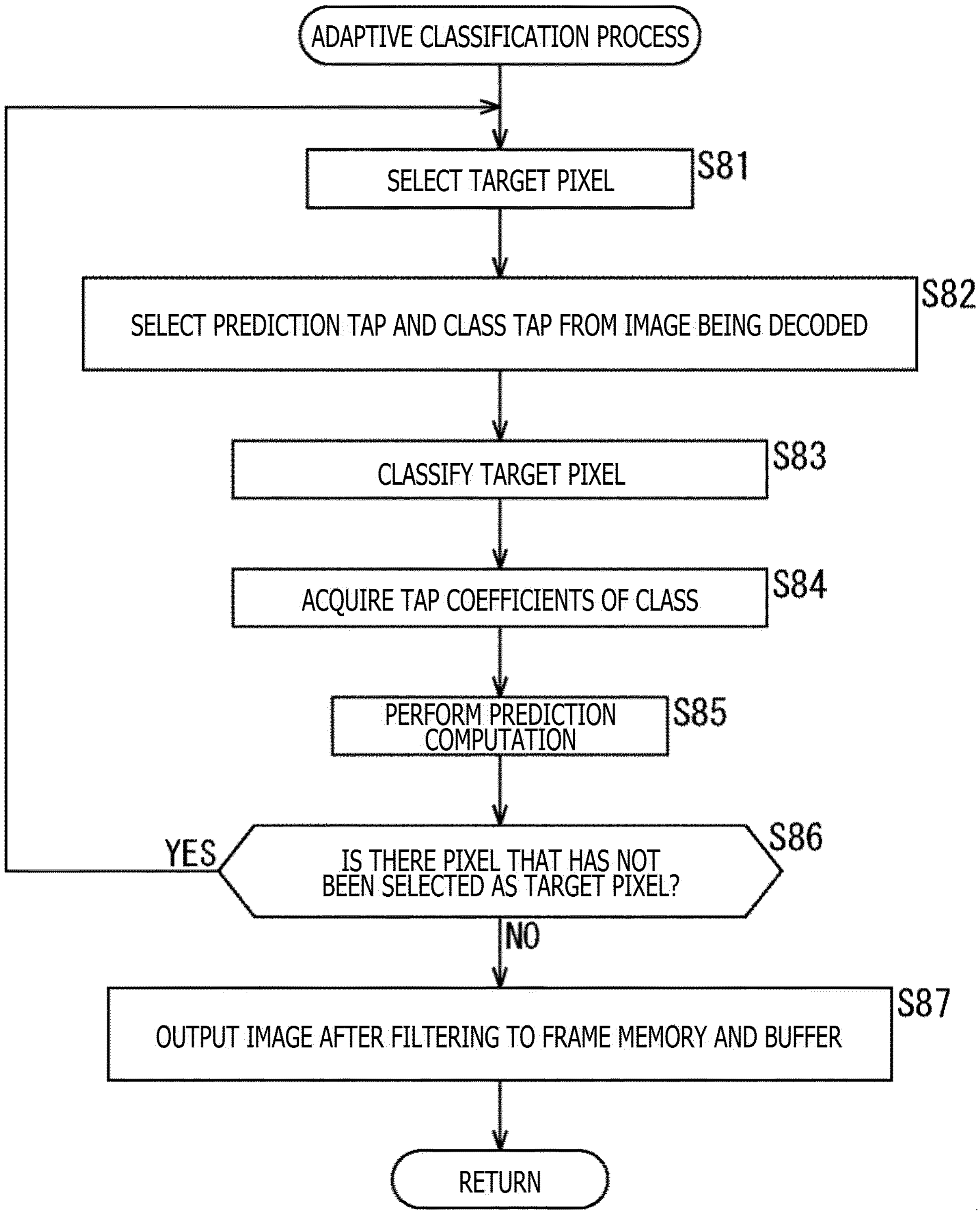
ADAPTIVE CLASSIFICATION PROCESS
SELECT TARGET PIXEL
S81
SELECT PREDICTION TAP AND CLASS TAP FROM IMAGE BEING DECODED
S82
CLASSIFY TARGET PIXEL
S83
ACQUIRE TAP COEFFICIENTS OF CLASS
S84
PERFORM PREDICTION COMPUTATION
S85
IS THERE PIXEL THAT HAS NOT BEEN SELECTED AS TARGET PIXEL?
S86
YES
NO
OUTPUT IMAGE AFTER FILTERING TO FRAME MEMORY AND BUFFER
S87
RETURN

FIG. 21

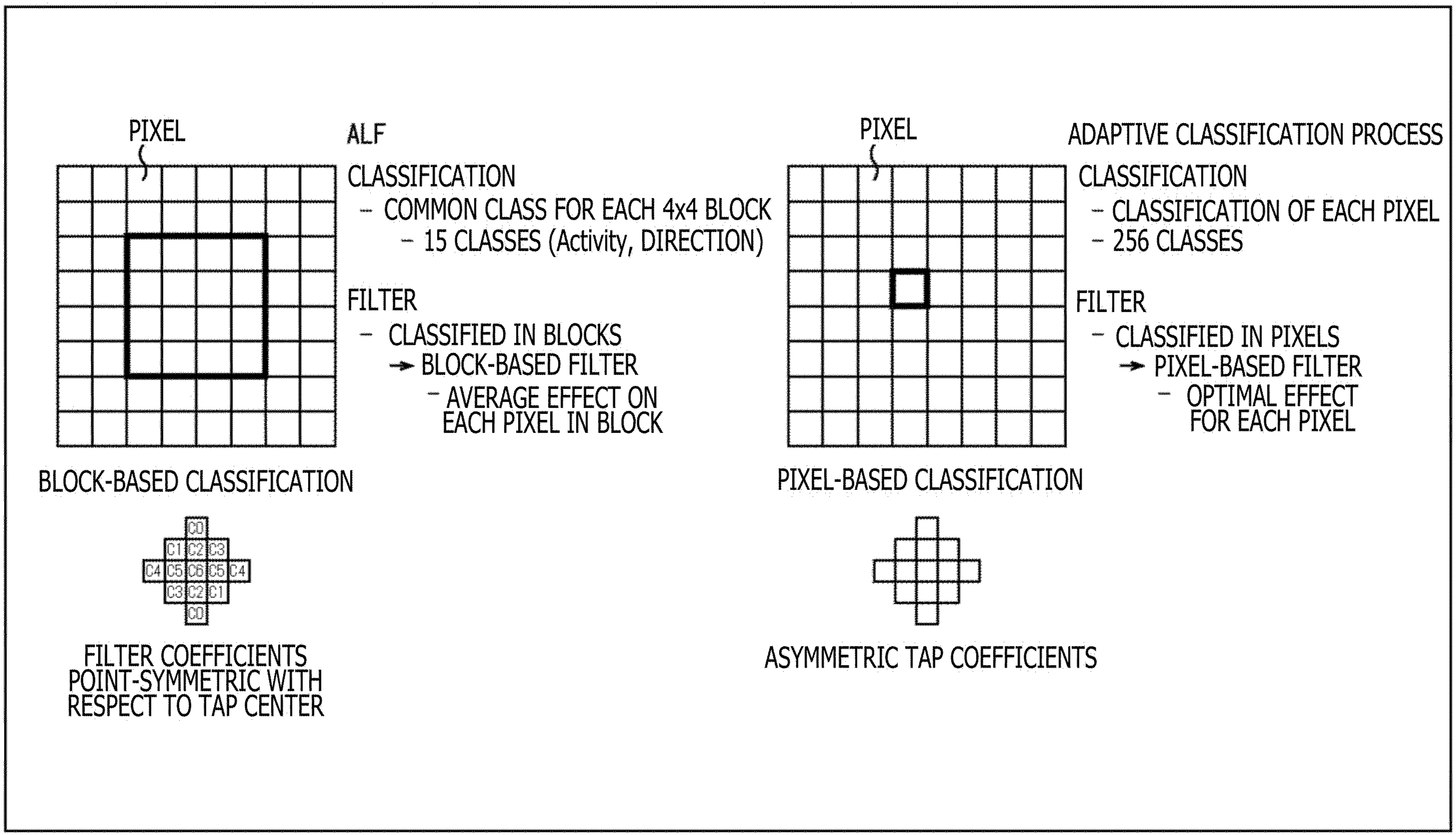
PIXEL
ALF
CLASSIFICATION
- COMMON CLASS FOR EACH 4x4 BLOCK
- 15 CLASSES (Activity, DIRECTION)
FILTER
- CLASSIFIED IN BLOCKS
→ BLOCK-BASED FILTER
- AVERAGE EFFECT ON EACH PIXEL IN BLOCK
BLOCK-BASED CLASSIFICATION
C0
C1 C2 C3
C4 C5 C6 C5 C4
C3 C2 C1
C0
FILTER COEFFICIENTS POINT-SYMMETRIC WITH RESPECT TO TAP CENTER
PIXEL
ADAPTIVE CLASSIFICATION PROCESS
CLASSIFICATION
- CLASSIFICATION OF EACH PIXEL
- 256 CLASSES
FILTER
- CLASSIFIED IN PIXELS
→ PIXEL-BASED FILTER
- OPTIMAL EFFECT FOR EACH PIXEL
PIXEL-BASED CLASSIFICATION
ASYMMETRIC TAP COEFFICIENTS

# FIG. 22

| METHOD OF CLASSIFICATION | ALF | ADAPTIVE CLASSIFICATION PROCESS |
|---|---|---|
| CLASSIFICATION OF LOCAL WAVEFORM PATTERN | DETAILS ARE REDUCED COMPARED TO PIXEL-BASED FILTER<br>* AND VICE VERSA 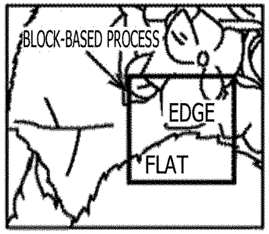  | NOISE CAN BE REDUCED WHILE DETAILS ARE MAINTAINED 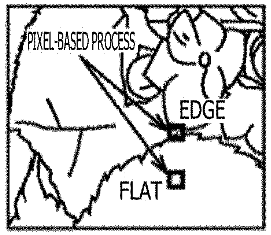  |
| CLASSIFICATION OF PHASE OF ENCODING BLOCK | NOISE REDUCTION CANNOT BE ADJUSTED ACCORDING TO BLOCK DISTORTION AND SO FORTH 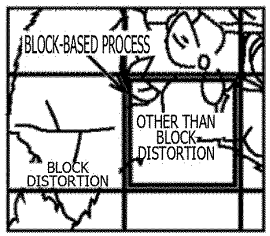  | COEFFICIENTS ACCORDING TO PHASE IN ENCODING BLOCK CAN BE USED<br>- BLOCK DISTORTION IS REMOVED<br>- NOISE OTHER THAN BLOCK DISTORTION IS REDUCED 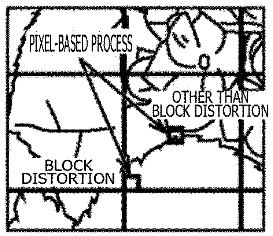 <br>INFORMATION REGARDING BLOCK (SUCH AS SIZE OF BLOCK AND POSITION OF BOUNDARY) CAN BE ACQUIRED AT SIGNALIZATION OR DECODING |

# FIG.23

| METHOD OF CLASSIFICATION | ALF | ADAPTIVE CLASSIFICATION PROCESS |
| --- | --- | --- |
| CLASSIFICATION OF WAVEFORM PATTERN INCLUDING TIME DIRECTION | FILTER TAP IS CONSTRUCTED IN PLANE (DOES NOT CORRESPOND TO TIME DIRECTION)<br>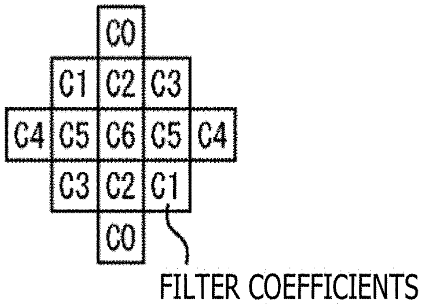 | TAP CAN ALSO BE CONSTRUCTED IN TIME DIRECTION<br>TAP CAN BE CONSTRUCTED AT DESTINATION OF MOTION VECTOR, AND CLASSIFICATION CAN BE PERFORMED TO IMPROVE DEGRADATION CAUSED BY MOTION<br>- PIXEL CLOSEST TO DESTINATION OF MOTION VECTOR IS SET AS TAP CENTER, FOR EXAMPLE<br>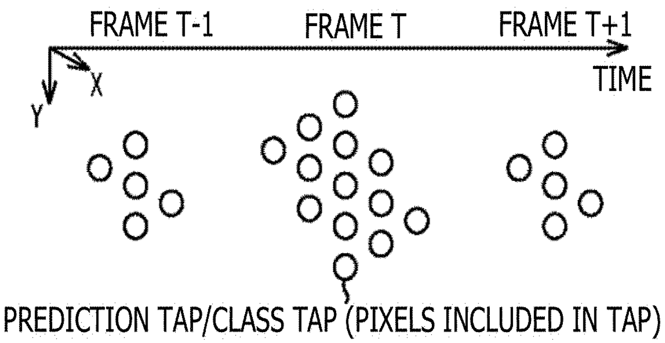 |

FIG.24

| METHOD OF CLASSIFICATION | REDUCTION METHOD OF TAP COEFFICIENTS |
|---|---|
| CLASSIFICATION OF LOCAL WAVEFORM PATTERN (REDUCTION OF CLASSES) | 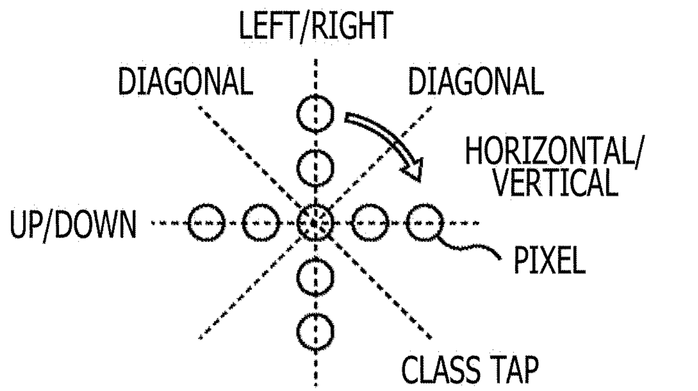  |
| CLASSIFICATION OF PHASE OF ENCODING BLOCK (REDUCTION OF TAP COEFFICIENTS) | 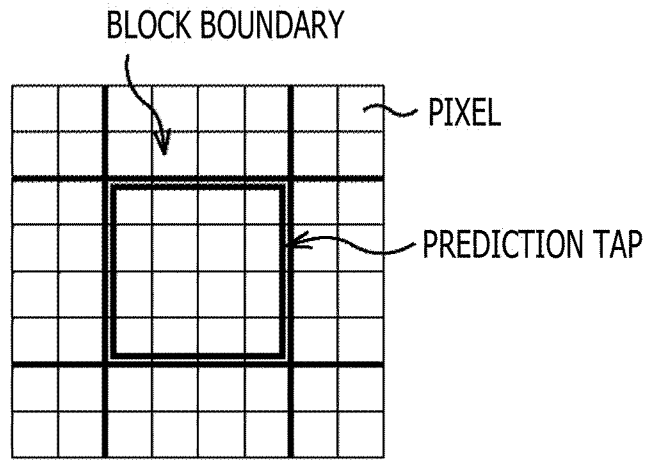  |

FIG. 25

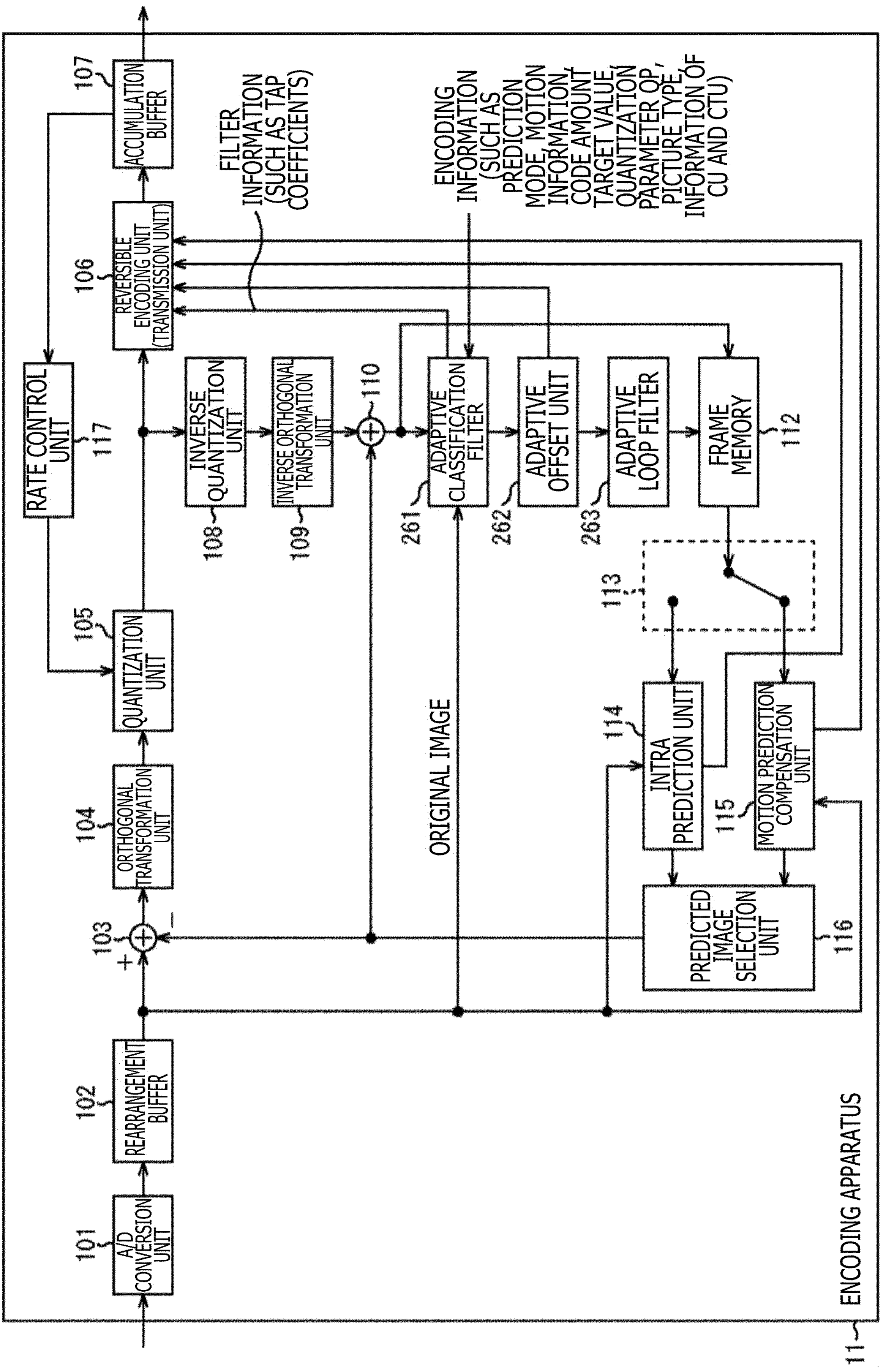
101
A/D CONVERSION UNIT
102
REARRANGEMENT BUFFER
103
+
−
104
ORTHOGONAL TRANSFORMATION UNIT
105
QUANTIZATION UNIT
106
REVERSIBLE ENCODING UNIT (TRANSMISSION UNIT)
107
ACCUMULATION BUFFER
RATE CONTROL UNIT
117
108
INVERSE QUANTIZATION UNIT
109
INVERSE ORTHOGONAL TRANSFORMATION UNIT
110
FILTER INFORMATION (SUCH AS TAP COEFFICIENTS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
261
ADAPTIVE CLASSIFICATION FILTER
262
ADAPTIVE OFFSET UNIT
263
ADAPTIVE LOOP FILTER
FRAME MEMORY
112
113
ORIGINAL IMAGE
114
INTRA PREDICTION UNIT
115
MOTION PREDICTION COMPENSATION UNIT
PREDICTED IMAGE SELECTION UNIT
116
ENCODING APPARATUS
11

FIG. 26

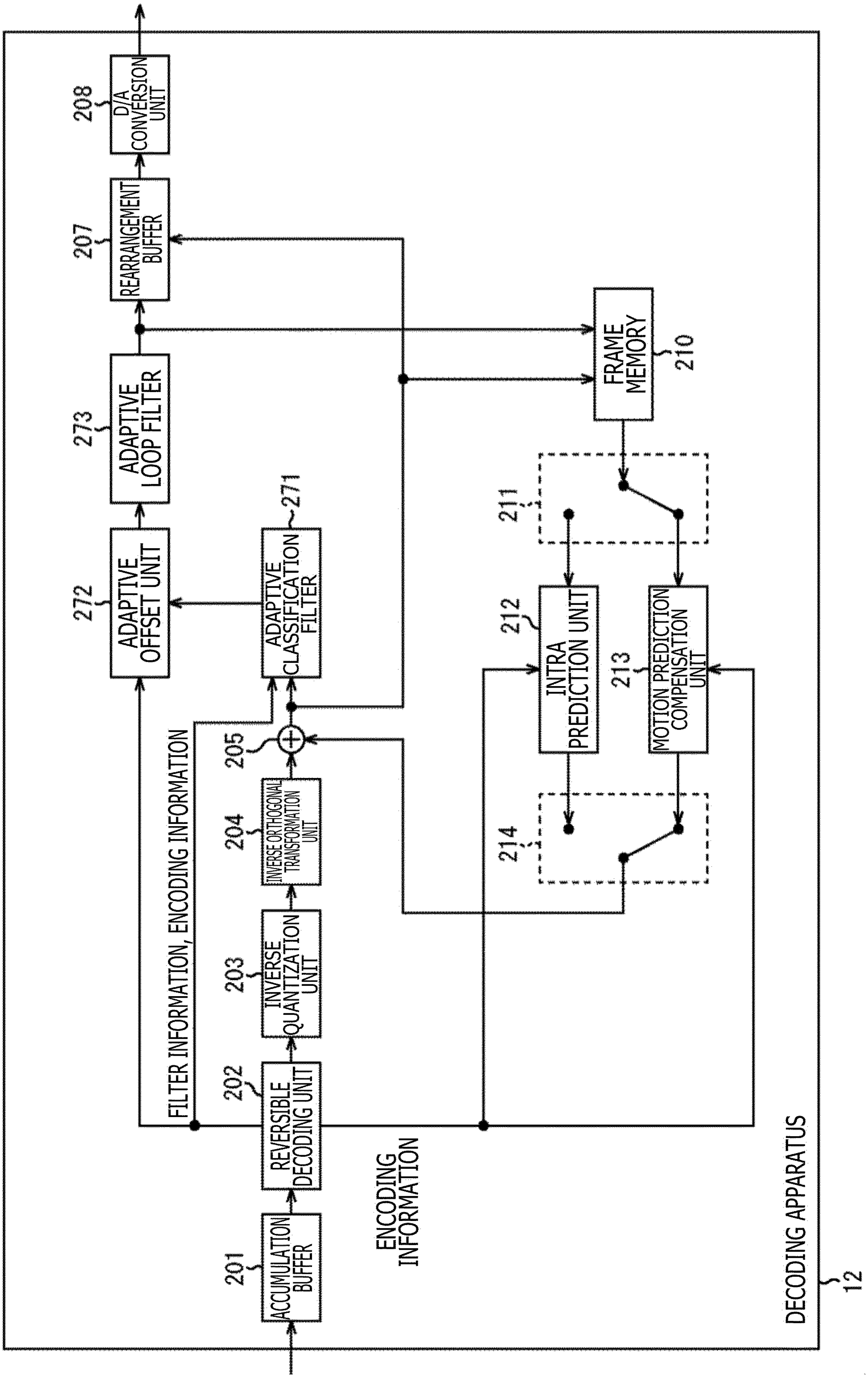

201
ACCUMULATION BUFFER
202
REVERSIBLE DECODING UNIT
203
INVERSE QUANTIZATION UNIT
204
INVERSE ORTHOGONAL TRANSFORMATION UNIT
205
207
REARRANGEMENT BUFFER
208
D/A CONVERSION UNIT
210
FRAME MEMORY
211
212
INTRA PREDICTION UNIT
213
MOTION PREDICTION COMPENSATION UNIT
214
271
ADAPTIVE CLASSIFICATION FILTER
272
ADAPTIVE OFFSET UNIT
273
ADAPTIVE LOOP FILTER
FILTER INFORMATION, ENCODING INFORMATION
ENCODING INFORMATION
DECODING APPARATUS
12

FIG. 27

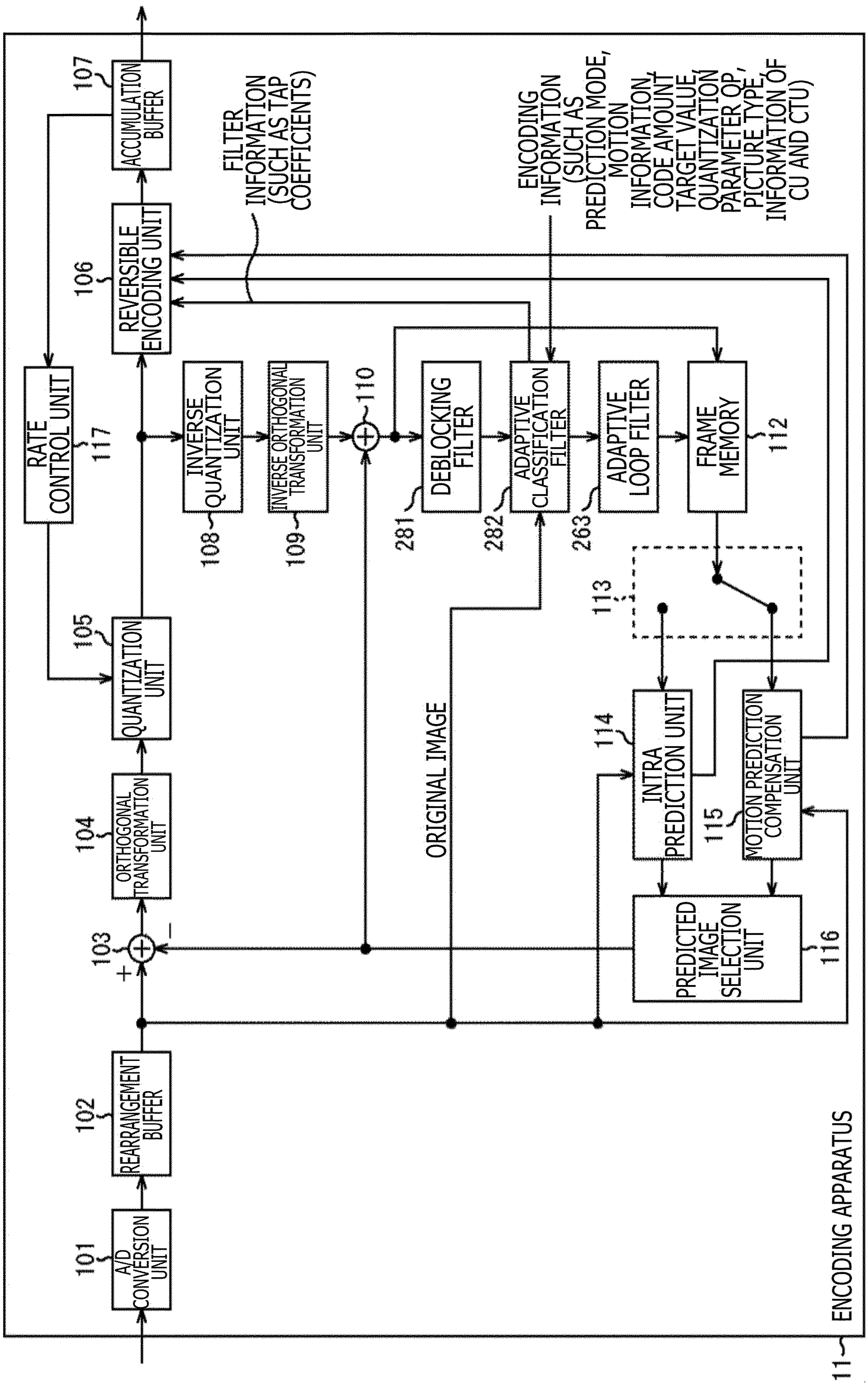
101
A/D CONVERSION UNIT
102
REARRANGEMENT BUFFER
103
+
-
104
ORTHOGONAL TRANSFORMATION UNIT
105
QUANTIZATION UNIT
106
REVERSIBLE ENCODING UNIT
107
ACCUMULATION BUFFER
117
RATE CONTROL UNIT
108
INVERSE QUANTIZATION UNIT
109
INVERSE ORTHOGONAL TRANSFORMATION UNIT
110
281
DEBLOCKING FILTER
282
ADAPTIVE CLASSIFICATION FILTER
263
ADAPTIVE LOOP FILTER
112
FRAME MEMORY
113
114
INTRA PREDICTION UNIT
115
MOTION PREDICTION COMPENSATION UNIT
116
PREDICTED IMAGE SELECTION UNIT
ORIGINAL IMAGE
FILTER INFORMATION (SUCH AS TAP COEFFICIENTS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ENCODING APPARATUS
11

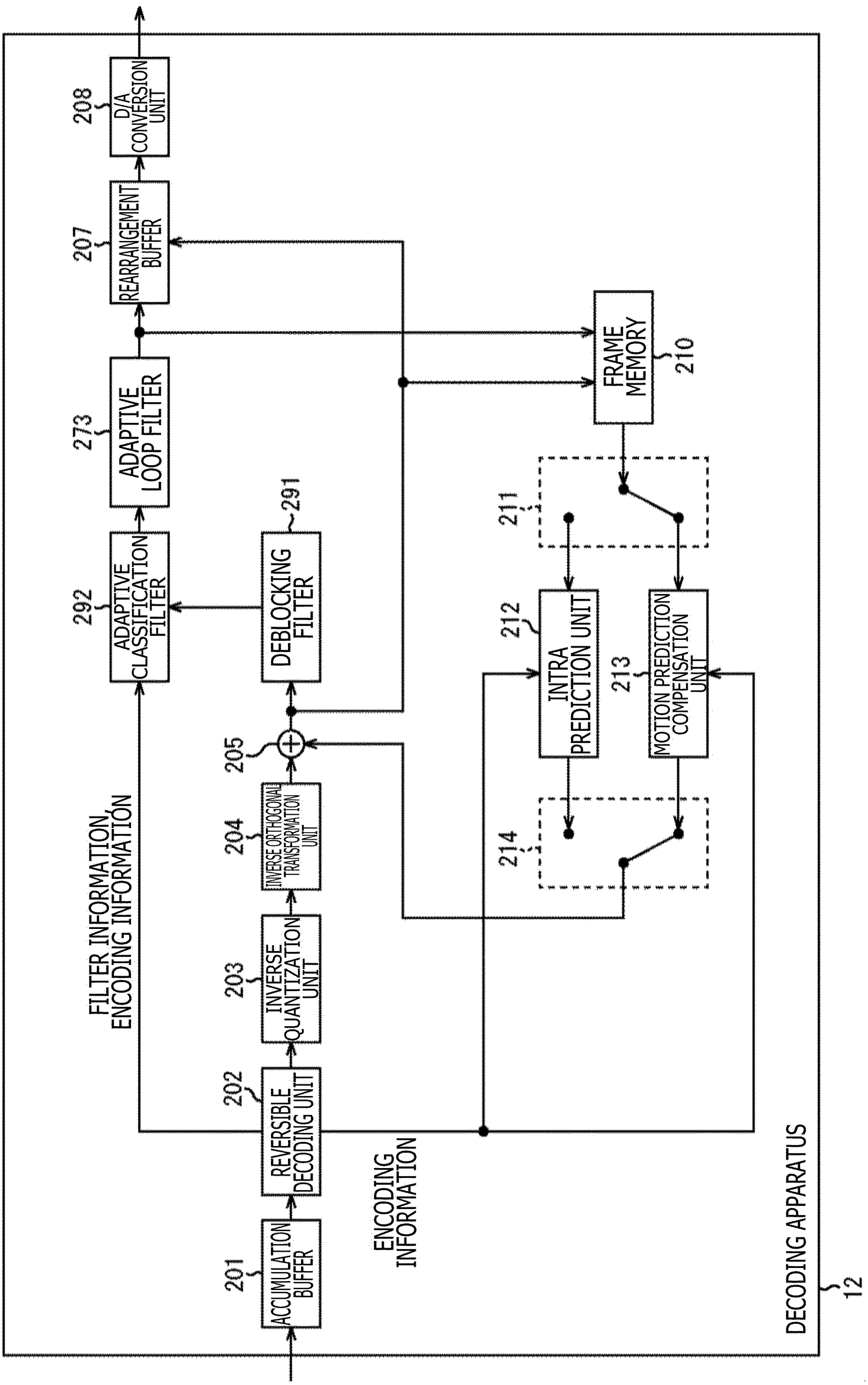
201
ACCUMULATON BUFFER
202
REVERSIBLE DECODING UNIT
203
INVERSE QUANTIZATION UNIT
204
INVERSE ORTHOGONAL TRANSFORMATION UNIT
205
DEBLOCKING FILTER
291
292
ADAPTIVE CLASSIFICATION FILTER
273
ADAPTIVE LOOP FILTER
207
REARRANGEMENT BUFFER
208
D/A CONVERSION UNIT
FRAME MEMORY
210
211
212
INTRA PREDICTION UNIT
213
MOTION PREDICTION COMPENSATION UNIT
214
FILTER INFORMATION, ENCODING INFORMATION
ENCODING INFORMATION
DECODING APPARATUS
12

FIG. 28

FIG. 29

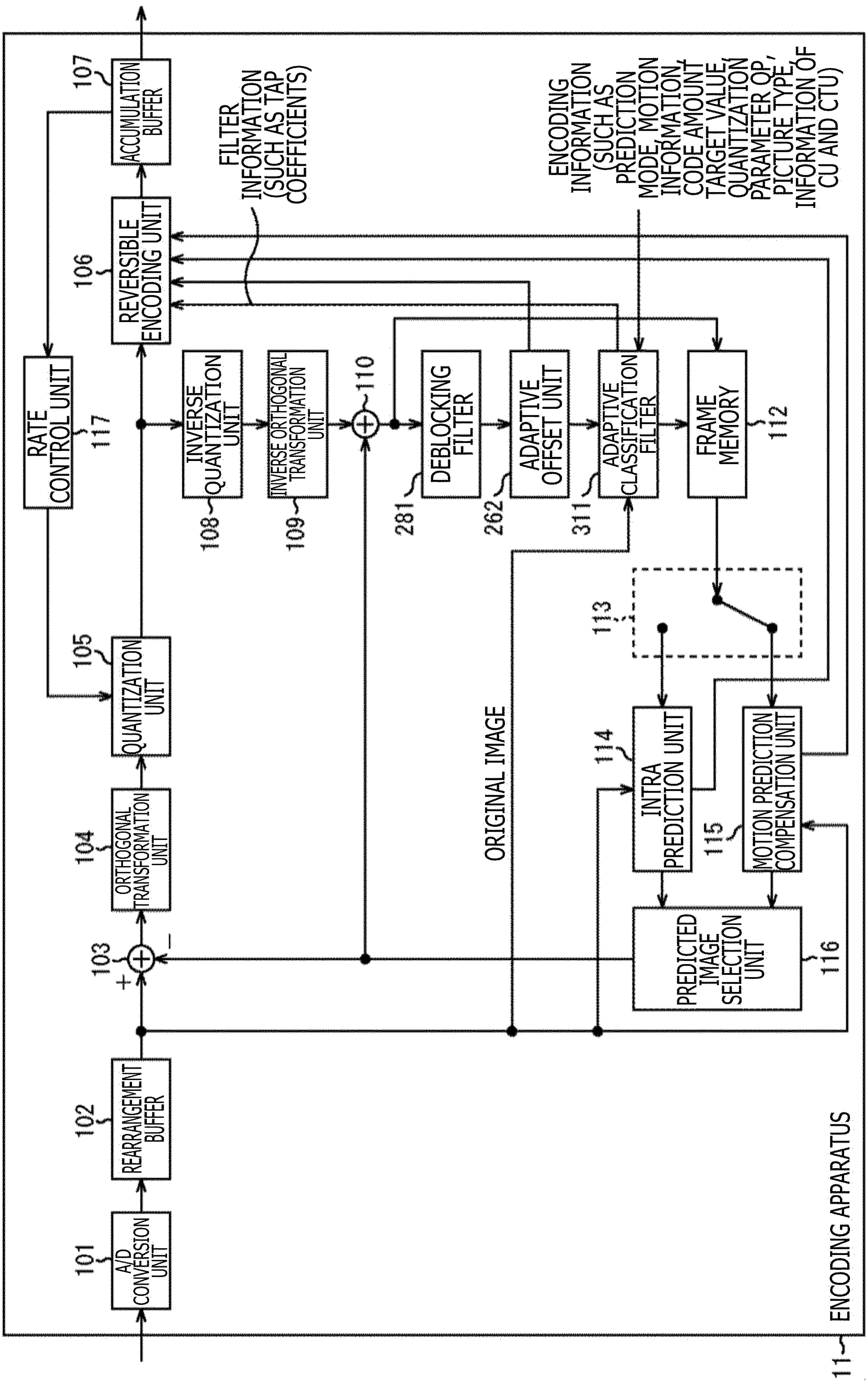

101
A/D CONVERSION UNIT
102
REARRANGEMENT BUFFER
103
+
−
104
ORTHOGONAL TRANSFORMATION UNIT
105
QUANTIZATION UNIT
106
REVERSIBLE ENCODING UNIT
107
ACCUMULATION BUFFER
117
RATE CONTROL UNIT
108
INVERSE QUANTIZATION UNIT
109
INVERSE ORTHOGONAL TRANSFORMATION UNIT
110
281
DEBLOCKING FILTER
262
ADAPTIVE OFFSET UNIT
311
ADAPTIVE CLASSIFICATION FILTER
112
FRAME MEMORY
113
114
INTRA PREDICTION UNIT
115
MOTION PREDICTION COMPENSATION UNIT
116
PREDICTED IMAGE SELECTION UNIT
ORIGINAL IMAGE
FILTER INFORMATION (SUCH AS TAP COEFFICIENTS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ENCODING APPARATUS
11

FIG. 30

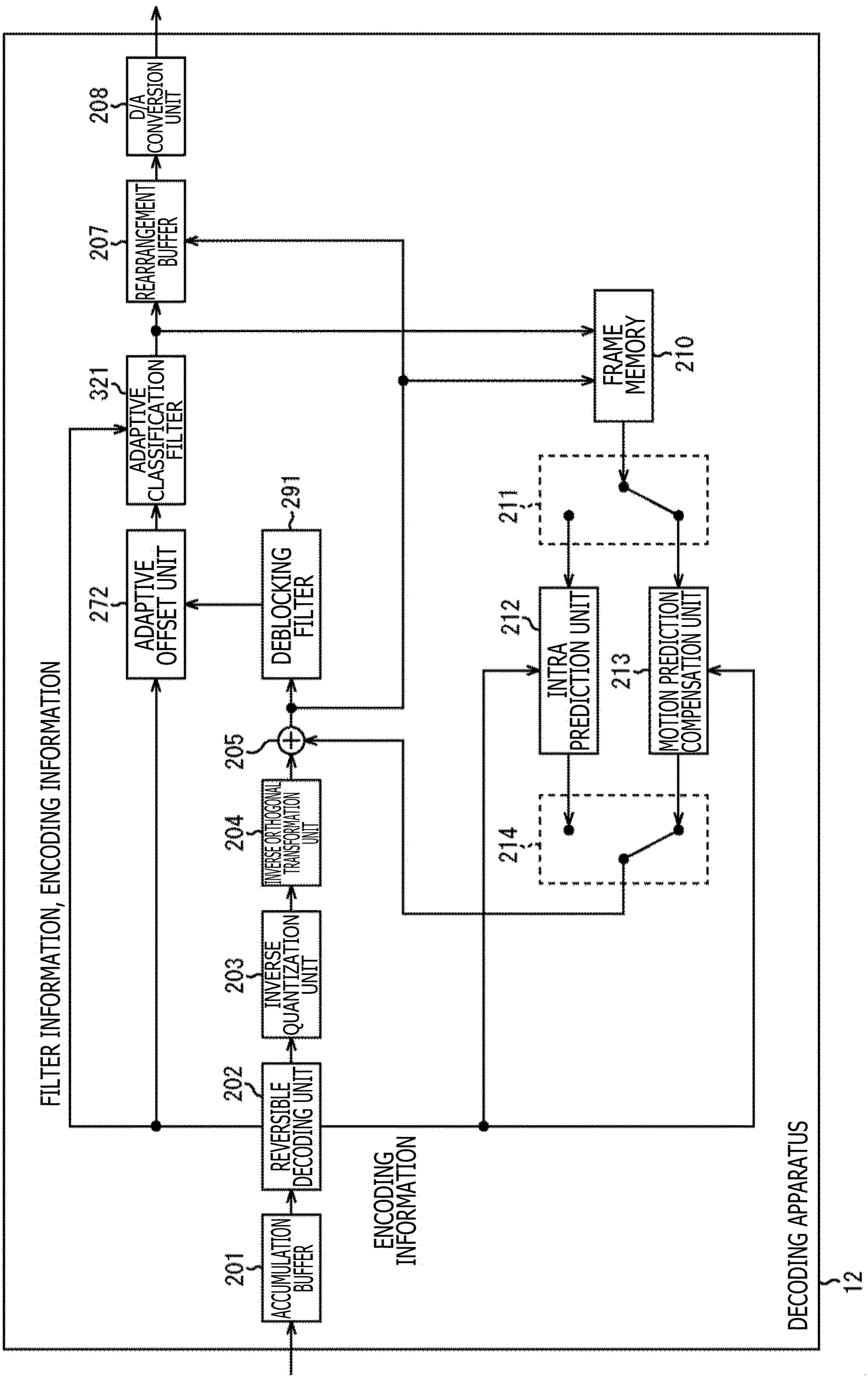
FILTER INFORMATION, ENCODING INFORMATION
201
ACCUMULATION BUFFER
202
REVERSIBLE DECODING UNIT
203
INVERSE QUANTIZATION UNIT
204
INVERSE ORTHOGONAL TRANSFORMATION UNIT
205
291
DEBLOCKING FILTER
272
ADAPTIVE OFFSET UNIT
321
ADAPTIVE CLASSIFICATION FILTER
207
REARRANGEMENT BUFFER
208
D/A CONVERSION UNIT
FRAME MEMORY
210
211
212
INTRA PREDICTION UNIT
213
MOTION PREDICTION COMPENSATION UNIT
214
ENCODING INFORMATION
DECODING APPARATUS
12

FIG. 31

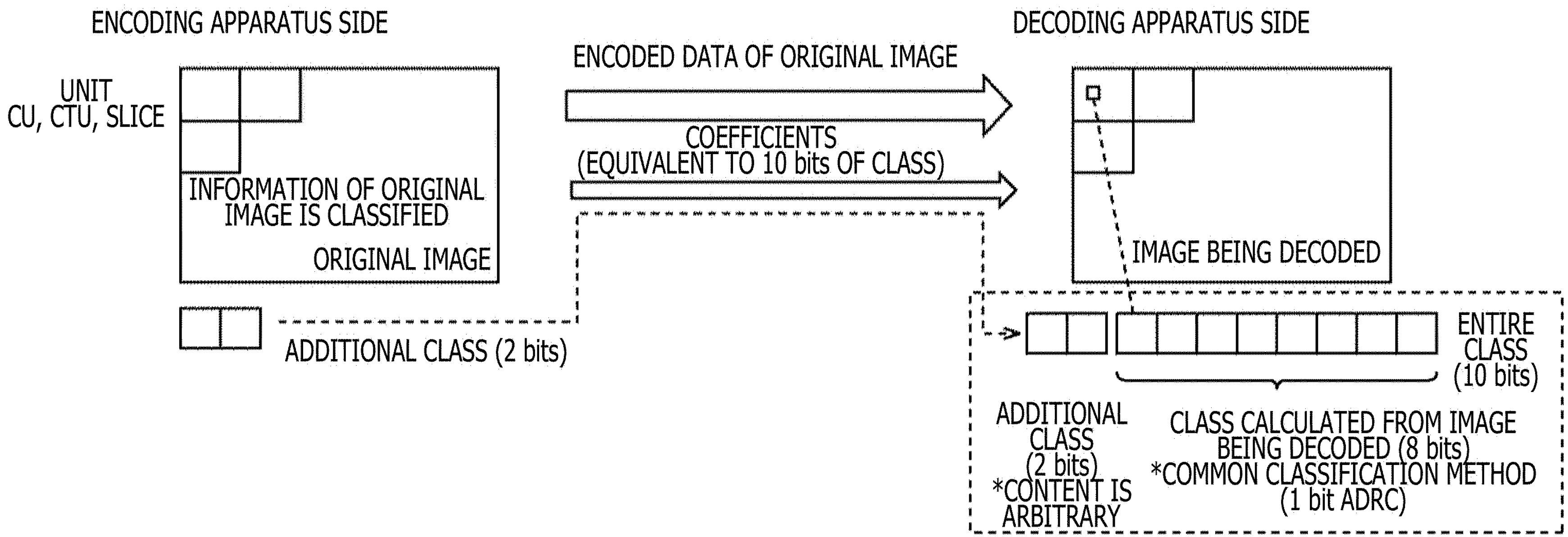
ENCODING APPARATUS SIDE
UNIT
CU, CTU, SLICE
INFORMATION OF ORIGINAL IMAGE IS CLASSIFIED
ORIGINAL IMAGE
ADDITIONAL CLASS (2 bits)
ENCODED DATA OF ORIGINAL IMAGE
COEFFICIENTS
(EQUIVALENT TO 10 bits OF CLASS)
DECODING APPARATUS SIDE
IMAGE BEING DECODED
ENTIRE CLASS
(10 bits)
ADDITIONAL CLASS
(2 bits)
*CONTENT IS ARBITRARY
CLASS CALCULATED FROM IMAGE BEING DECODED (8 bits)
*COMMON CLASSIFICATION METHOD
(1 bit ADRC)

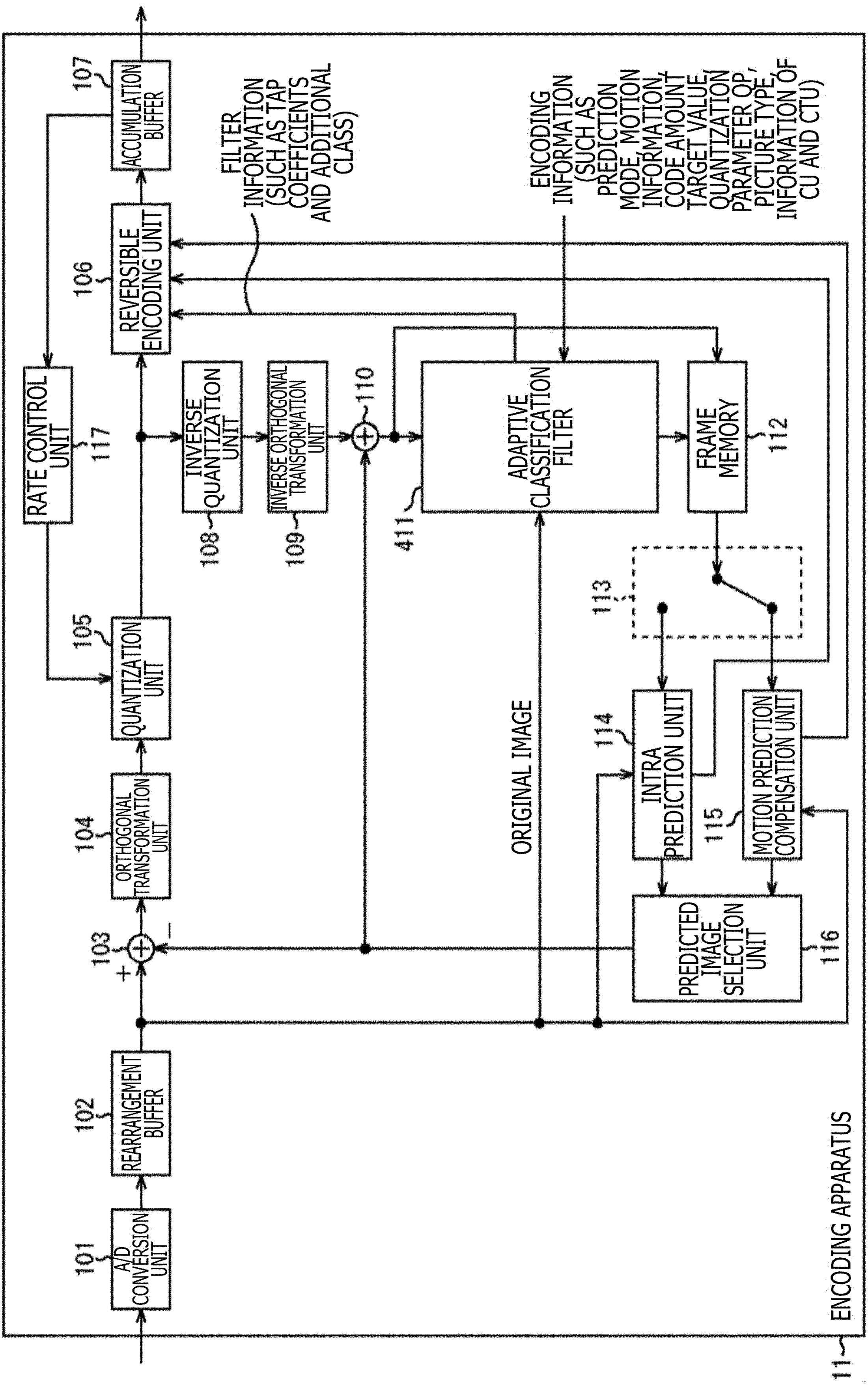
101 A/D CONVERSION UNIT
102 REARRANGEMENT BUFFER
103
+
−
104 ORTHOGONAL TRANSFORMATION UNIT
105 QUANTIZATION UNIT
106 REVERSIBLE ENCODING UNIT
107 ACCUMULATION BUFFER
117 RATE CONTROL UNIT
108 INVERSE QUANTIZATION UNIT
109 INVERSE ORTHOGONAL TRANSFORMATION UNIT
110
411 ADAPTIVE CLASSIFICATION FILTER
112 FRAME MEMORY
113
114 INTRA PREDICTION UNIT
115 MOTION PREDICTION COMPENSATION UNIT
116 PREDICTED IMAGE SELECTION UNIT
ORIGINAL IMAGE
FILTER INFORMATION (SUCH AS TAP COEFFICIENTS AND ADDITIONAL CLASS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ENCODING APPARATUS
11

FIG. 32

FIG.33

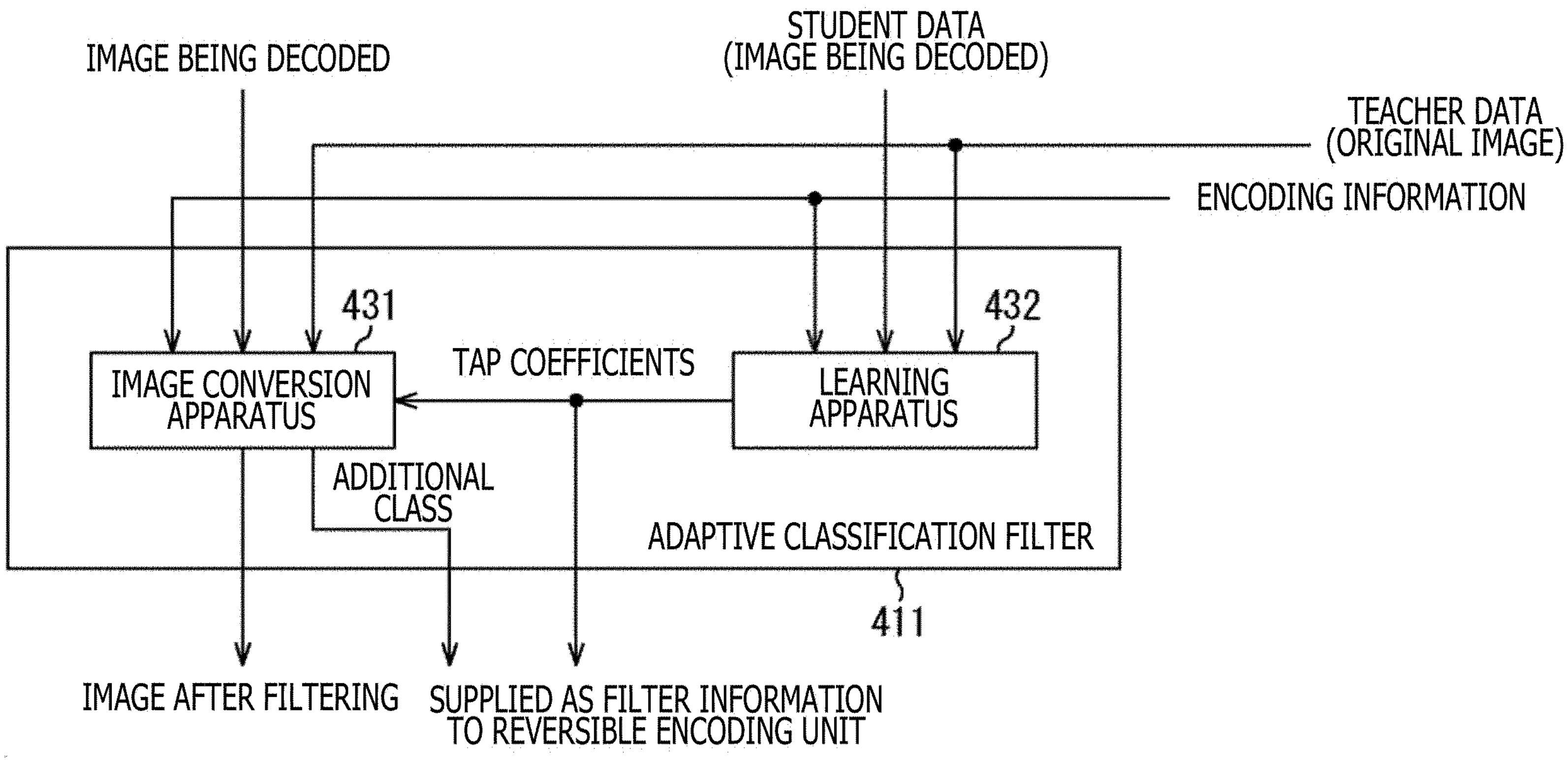
IMAGE BEING DECODED
STUDENT DATA
(IMAGE BEING DECODED)
TEACHER DATA
(ORIGINAL IMAGE)
ENCODING INFORMATION
431
IMAGE CONVERSION APPARATUS
TAP COEFFICIENTS
432
LEARNING APPARATUS
ADDITIONAL CLASS
ADAPTIVE CLASSIFICATION FILTER
411
IMAGE AFTER FILTERING
SUPPLIED AS FILTER INFORMATION TO REVERSIBLE ENCODING UNIT

FIG. 34

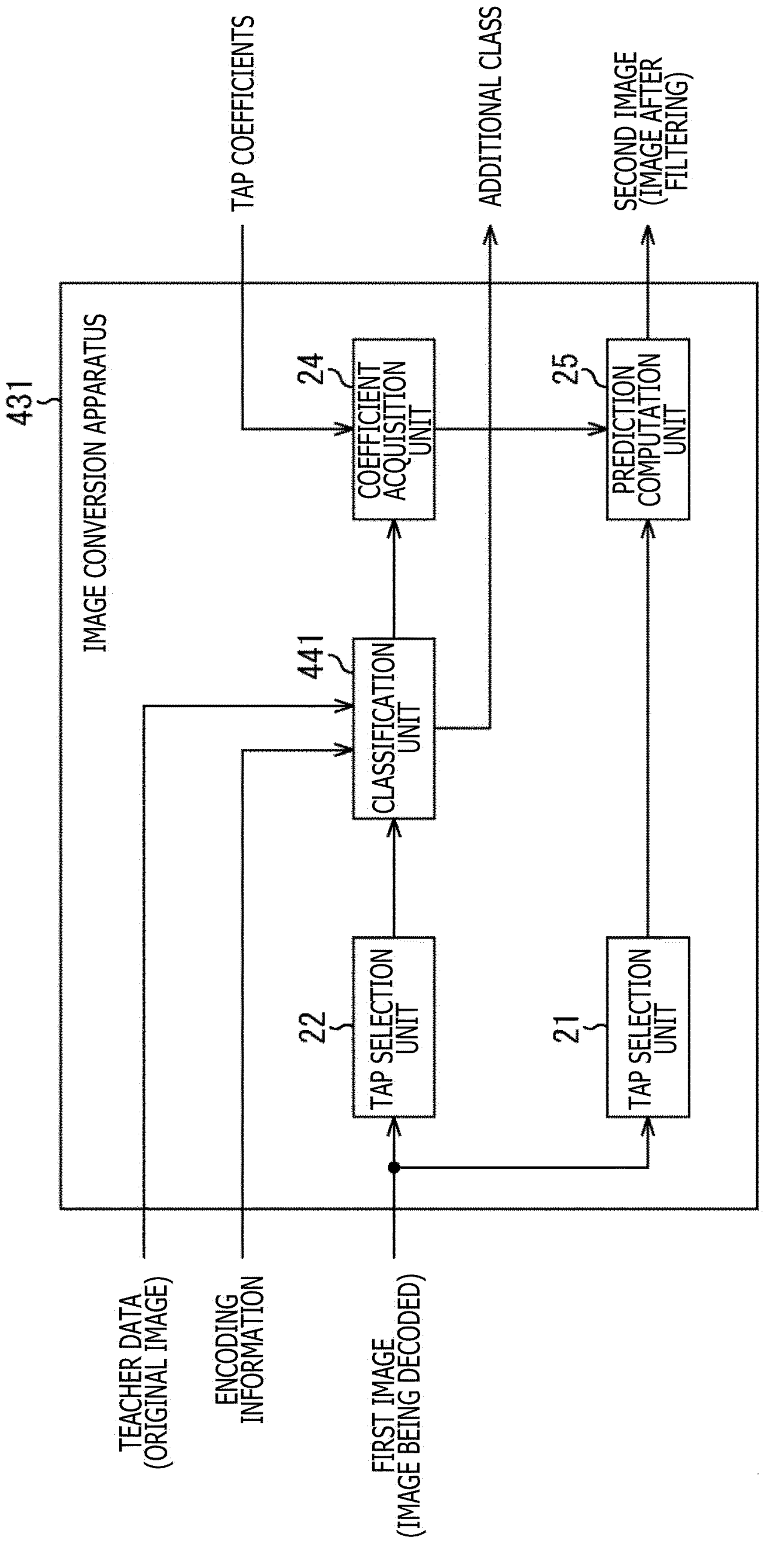
TAP COEFFICIENTS
ADDITIONAL CLASS
SECOND IMAGE (IMAGE AFTER FILTERING)
431
IMAGE CONVERSION APPARATUS
24
COEFFICIENT ACQUISITION UNIT
25
PREDICTION COMPUTATION UNIT
441
CLASSIFICATION UNIT
22
TAP SELECTION UNIT
21
TAP SELECTION UNIT
TEACHER DATA (ORIGINAL IMAGE)
ENCODING INFORMATION
FIRST IMAGE (IMAGE BEING DECODED)

FIG. 35

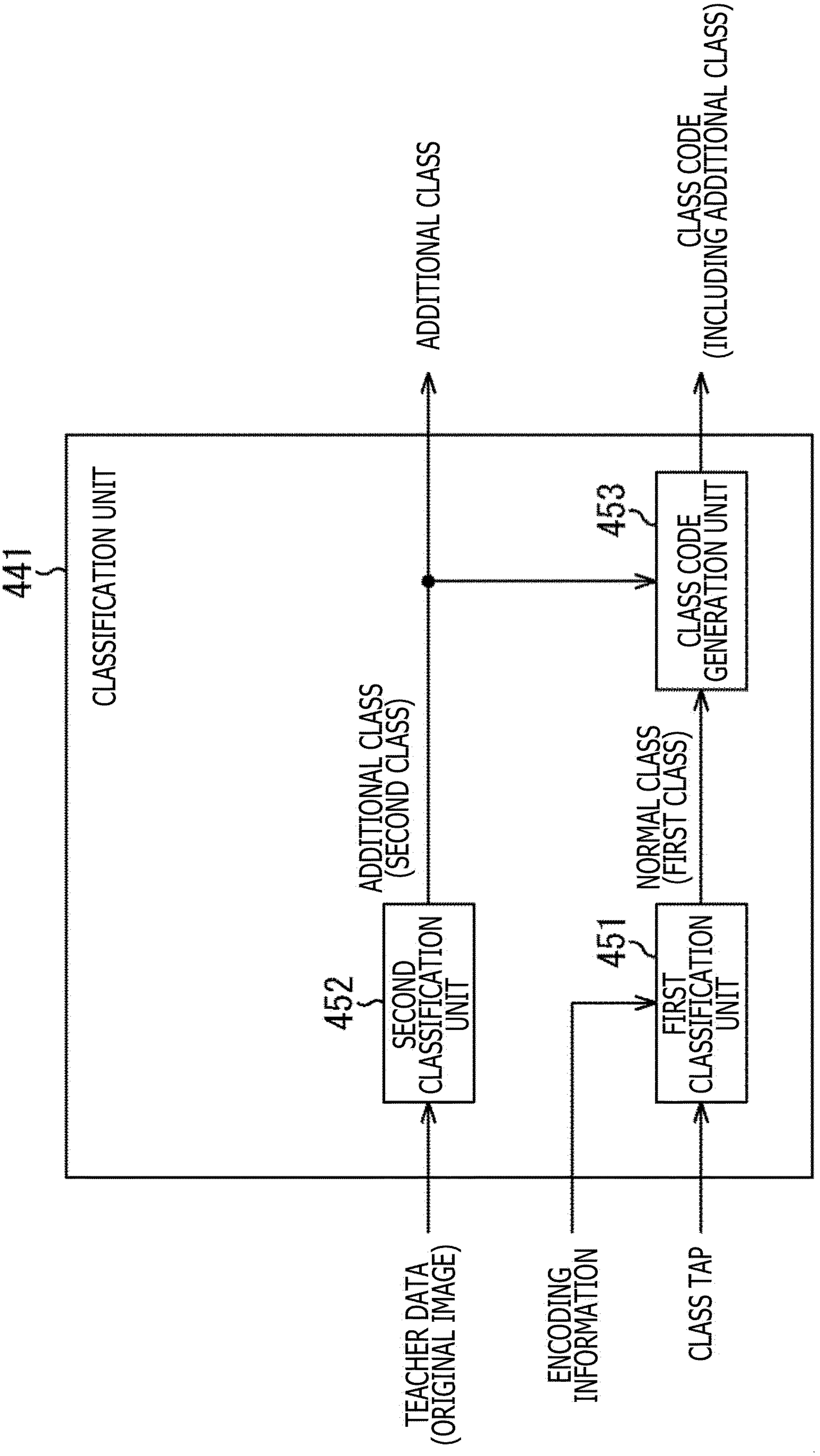
441
CLASSIFICATION UNIT
452
SECOND CLASSIFICATION UNIT
451
FIRST CLASSIFICATION UNIT
453
CLASS CODE GENERATION UNIT
ADDITIONAL CLASS (SECOND CLASS)
NORMAL CLASS (FIRST CLASS)
ADDITIONAL CLASS
CLASS CODE (INCLUDING ADDITIONAL CLASS)
TEACHER DATA (ORIGINAL IMAGE)
ENCODING INFORMATION
CLASS TAP

FIG.36

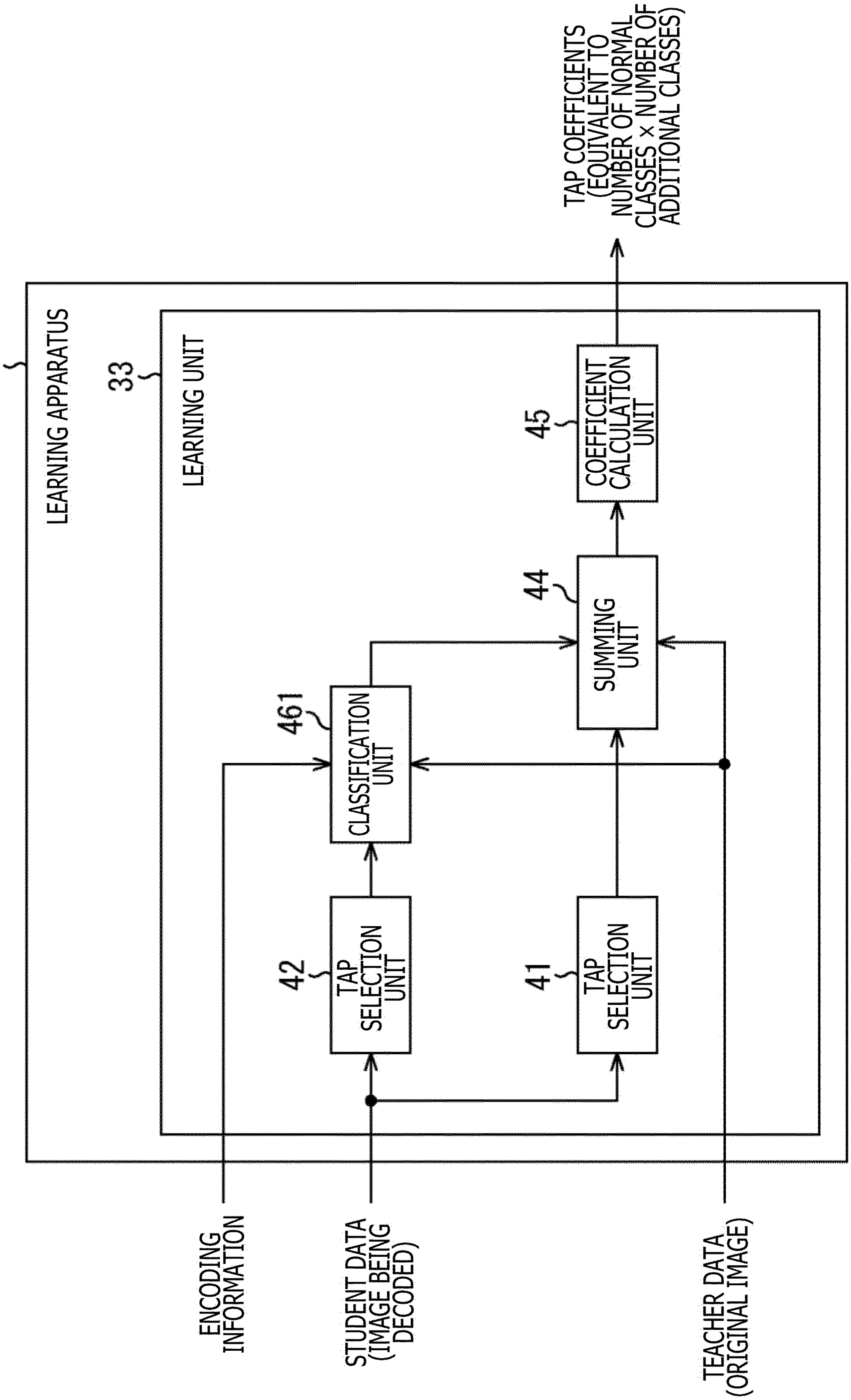
432
LEARNING APPARATUS
33
LEARNING UNIT
42
TAP SELECTION UNIT
41
TAP SELECTION UNIT
461
CLASSIFICATION UNIT
44
SUMMING UNIT
45
COEFFICIENT CALCULATION UNIT
ENCODING INFORMATION
STUDENT DATA (IMAGE BEING DECODED)
TEACHER DATA (ORIGINAL IMAGE)
TAP COEFFICIENTS (EQUIVALENT TO NUMBER OF NORMAL CLASSES × NUMBER OF ADDITIONAL CLASSES)

FIG.37

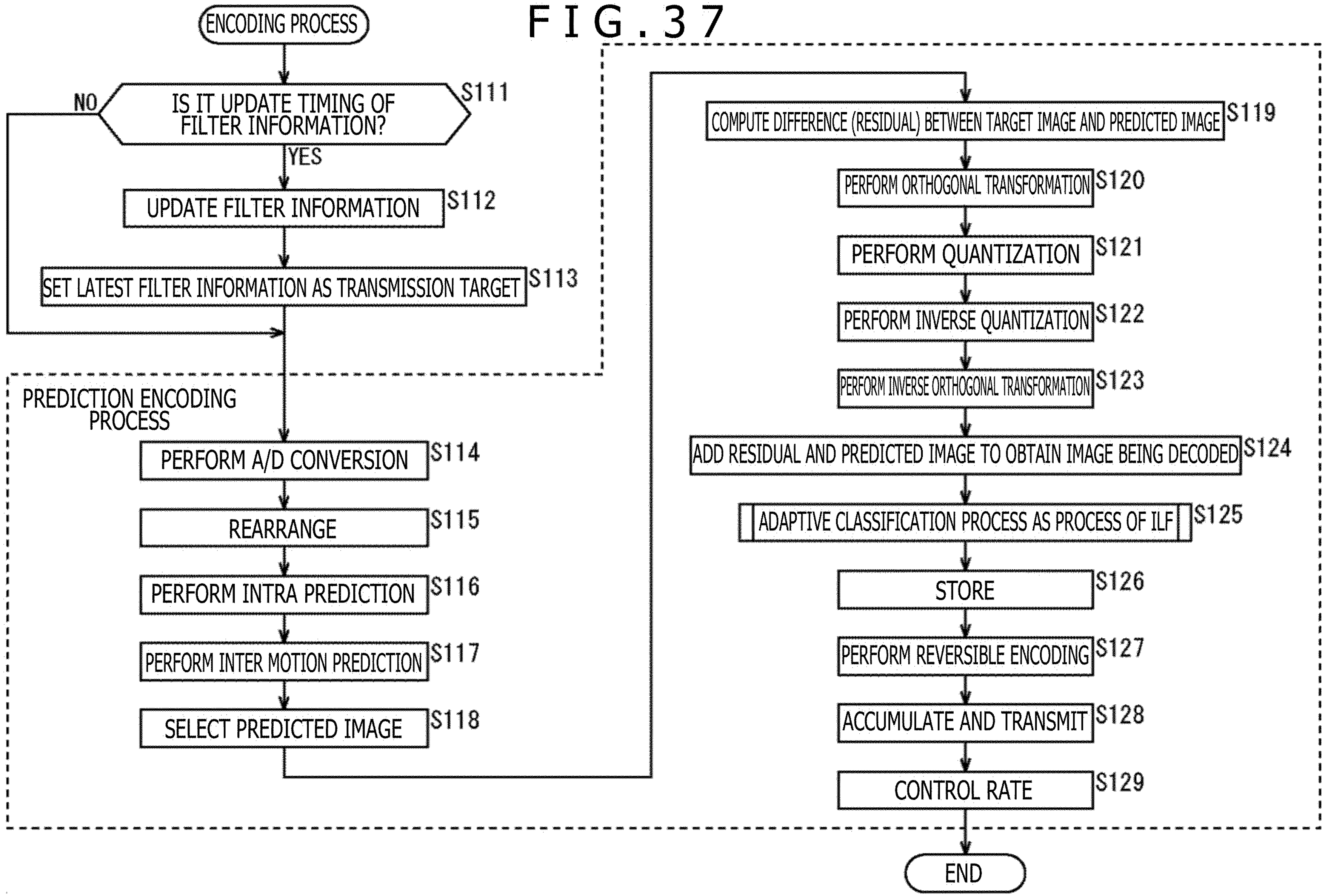
ENCODING PROCESS
IS IT UPDATE TIMING OF FILTER INFORMATION?
S111
NO
YES
UPDATE FILTER INFORMATION
S112
SET LATEST FILTER INFORMATION AS TRANSMISSION TARGET
S113
PREDICTION ENCODING PROCESS
PERFORM A/D CONVERSION
S114
REARRANGE
S115
PERFORM INTRA PREDICTION
S116
PERFORM INTER MOTION PREDICTION
S117
SELECT PREDICTED IMAGE
S118
COMPUTE DIFFERENCE (RESIDUAL) BETWEEN TARGET IMAGE AND PREDICTED IMAGE
S119
PERFORM ORTHOGONAL TRANSFORMATION
S120
PERFORM QUANTIZATION
S121
PERFORM INVERSE QUANTIZATION
S122
PERFORM INVERSE ORTHOGONAL TRANSFORMATION
S123
ADD RESIDUAL AND PREDICTED IMAGE TO OBTAIN IMAGE BEING DECODED
S124
ADAPTIVE CLASSIFICATION PROCESS AS PROCESS OF ILF
S125
STORE
S126
PERFORM REVERSIBLE ENCODING
S127
ACCUMULATE AND TRANSMIT
S128
CONTROL RATE
S129
END

FIG.38

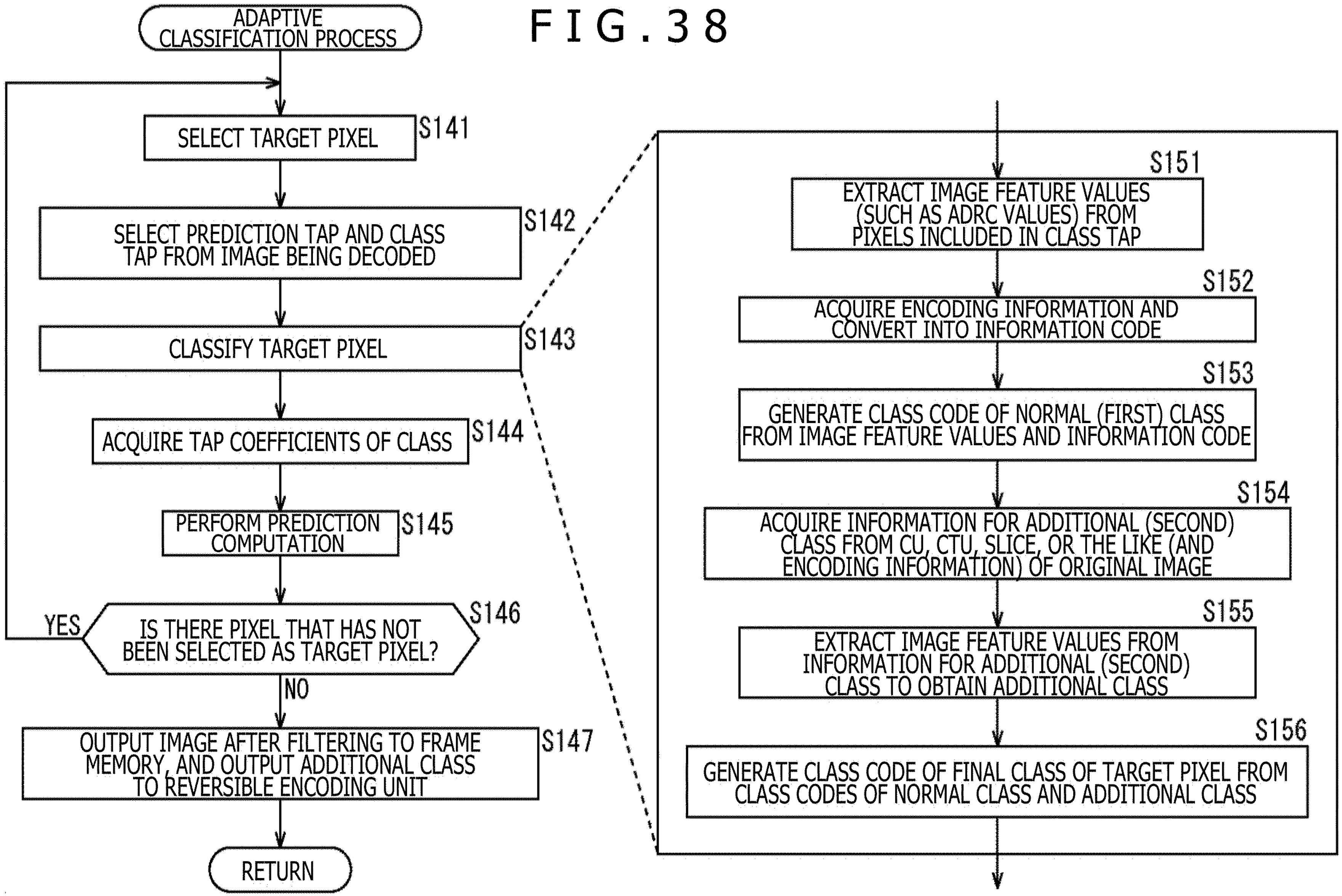
ADAPTIVE CLASSIFICATION PROCESS
SELECT TARGET PIXEL
S141
SELECT PREDICTION TAP AND CLASS TAP FROM IMAGE BEING DECODED
S142
CLASSIFY TARGET PIXEL
S143
ACQUIRE TAP COEFFICIENTS OF CLASS
S144
PERFORM PREDICTION COMPUTATION
S145
IS THERE PIXEL THAT HAS NOT BEEN SELECTED AS TARGET PIXEL?
S146
YES
NO
OUTPUT IMAGE AFTER FILTERING TO FRAME MEMORY, AND OUTPUT ADDITIONAL CLASS TO REVERSIBLE ENCODING UNIT
S147
RETURN
EXTRACT IMAGE FEATURE VALUES (SUCH AS ADRC VALUES) FROM PIXELS INCLUDED IN CLASS TAP
S151
ACQUIRE ENCODING INFORMATION AND CONVERT INTO INFORMATION CODE
S152
GENERATE CLASS CODE OF NORMAL (FIRST) CLASS FROM IMAGE FEATURE VALUES AND INFORMATION CODE
S153
ACQUIRE INFORMATION FOR ADDITIONAL (SECOND) CLASS FROM CU, CTU, SLICE, OR THE LIKE (AND ENCODING INFORMATION) OF ORIGINAL IMAGE
S154
EXTRACT IMAGE FEATURE VALUES FROM INFORMATION FOR ADDITIONAL (SECOND) CLASS TO OBTAIN ADDITIONAL CLASS
S155
GENERATE CLASS CODE OF FINAL CLASS OF TARGET PIXEL FROM CLASS CODES OF NORMAL CLASS AND ADDITIONAL CLASS
S156

FIG. 39

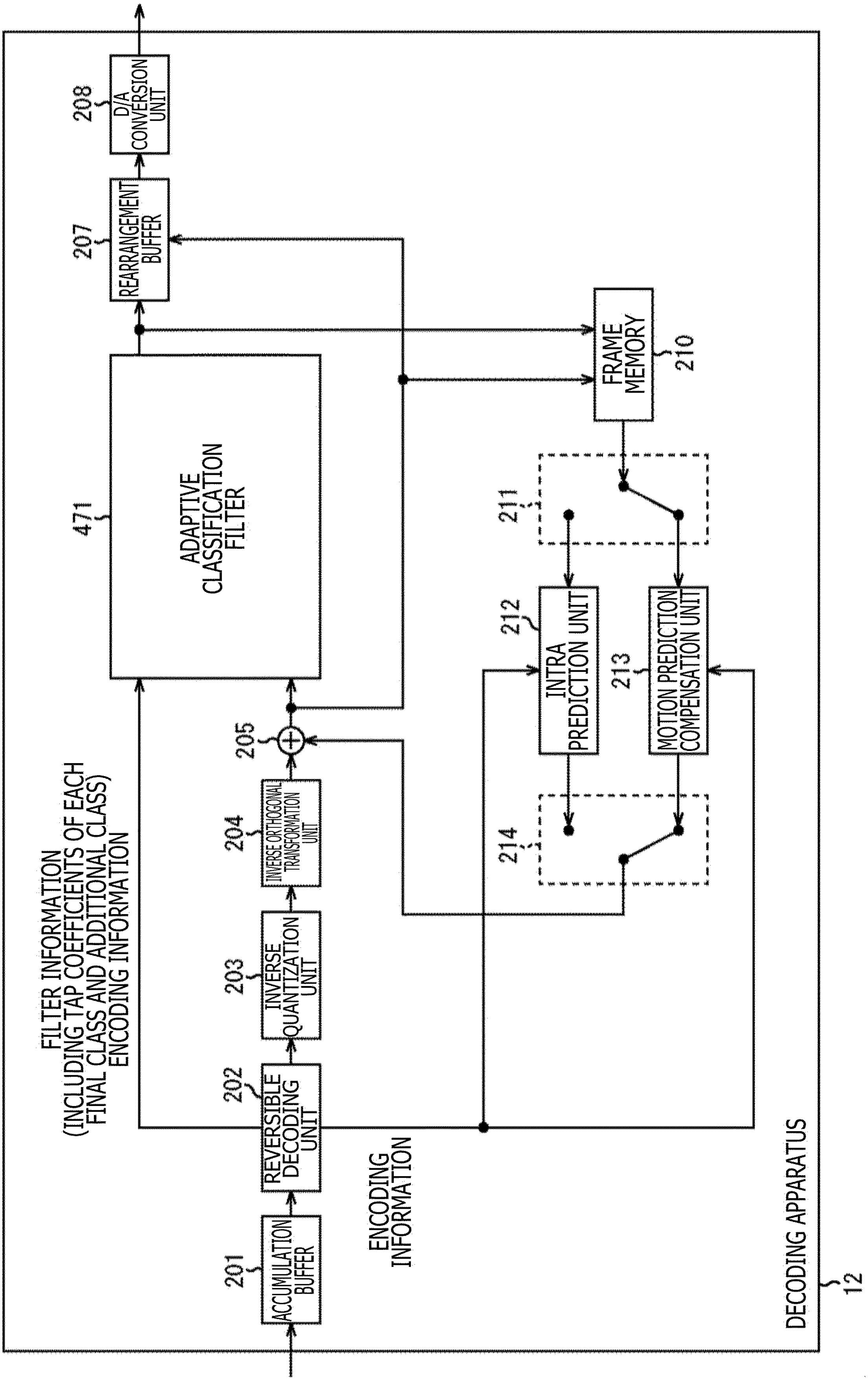
201
ACCUMULATION BUFFER
202
REVERSIBLE DECODING UNIT
203
INVERSE QUANTIZATION UNIT
204
INVERSE ORTHOGONAL TRANSFORMATION UNIT
205
471
ADAPTIVE CLASSIFICATION FILTER
207
REARRANGEMENT BUFFER
208
D/A CONVERSION UNIT
210
FRAME MEMORY
211
212
INTRA PREDICTION UNIT
213
MOTION PREDICTION COMPENSATION UNIT
214
FILTER INFORMATION
(INCLUDING TAP COEFFICIENTS OF EACH FINAL CLASS AND ADDITIONAL CLASS)
ENCODING INFORMATION
ENCODING INFORMATION
DECODING APPARATUS
12

FIG.40

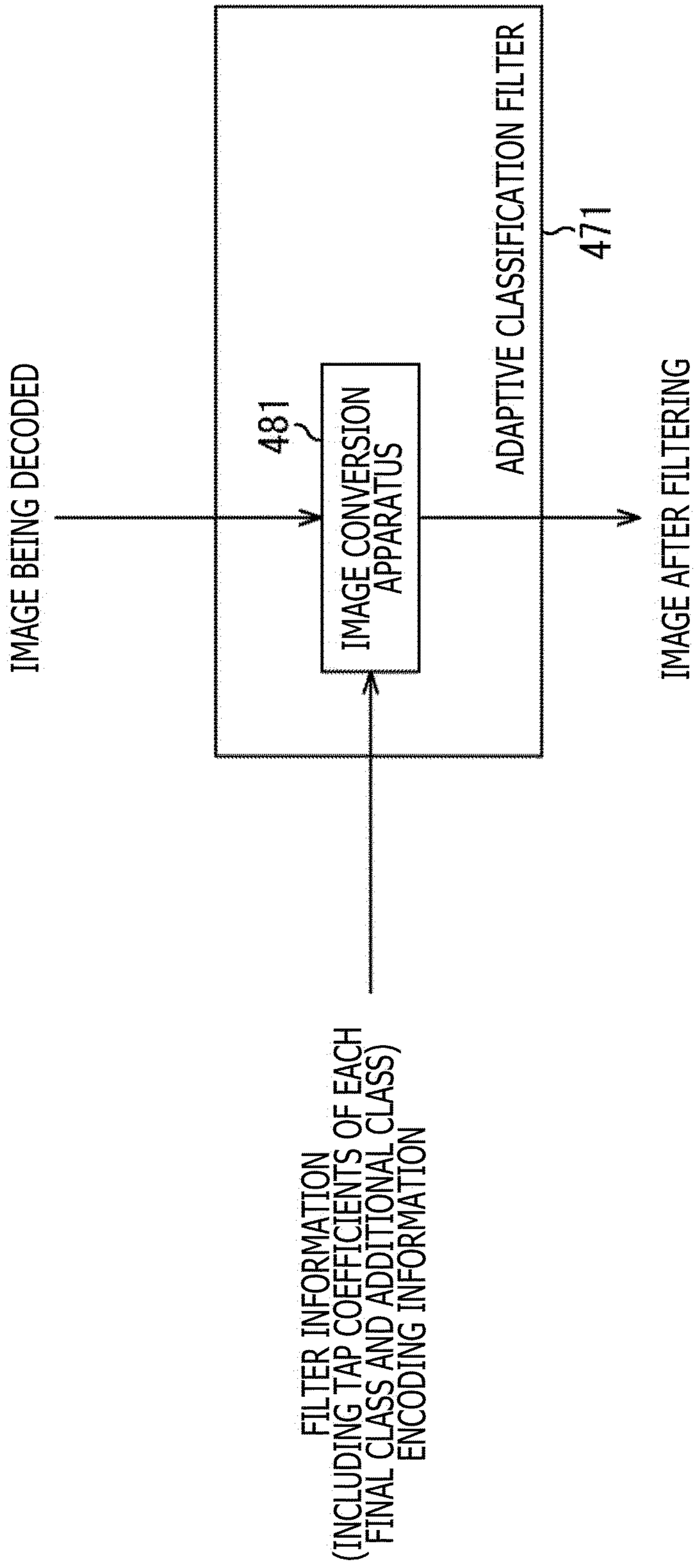
IMAGE BEING DECODED
481
IMAGE CONVERSION APPARATUS
ADAPTIVE CLASSIFICATION FILTER
471
IMAGE AFTER FILTERING
FILTER INFORMATION
(INCLUDING TAP COEFFICIENTS OF EACH FINAL CLASS AND ADDITIONAL CLASS)
ENCODING INFORMATION

FIG. 41

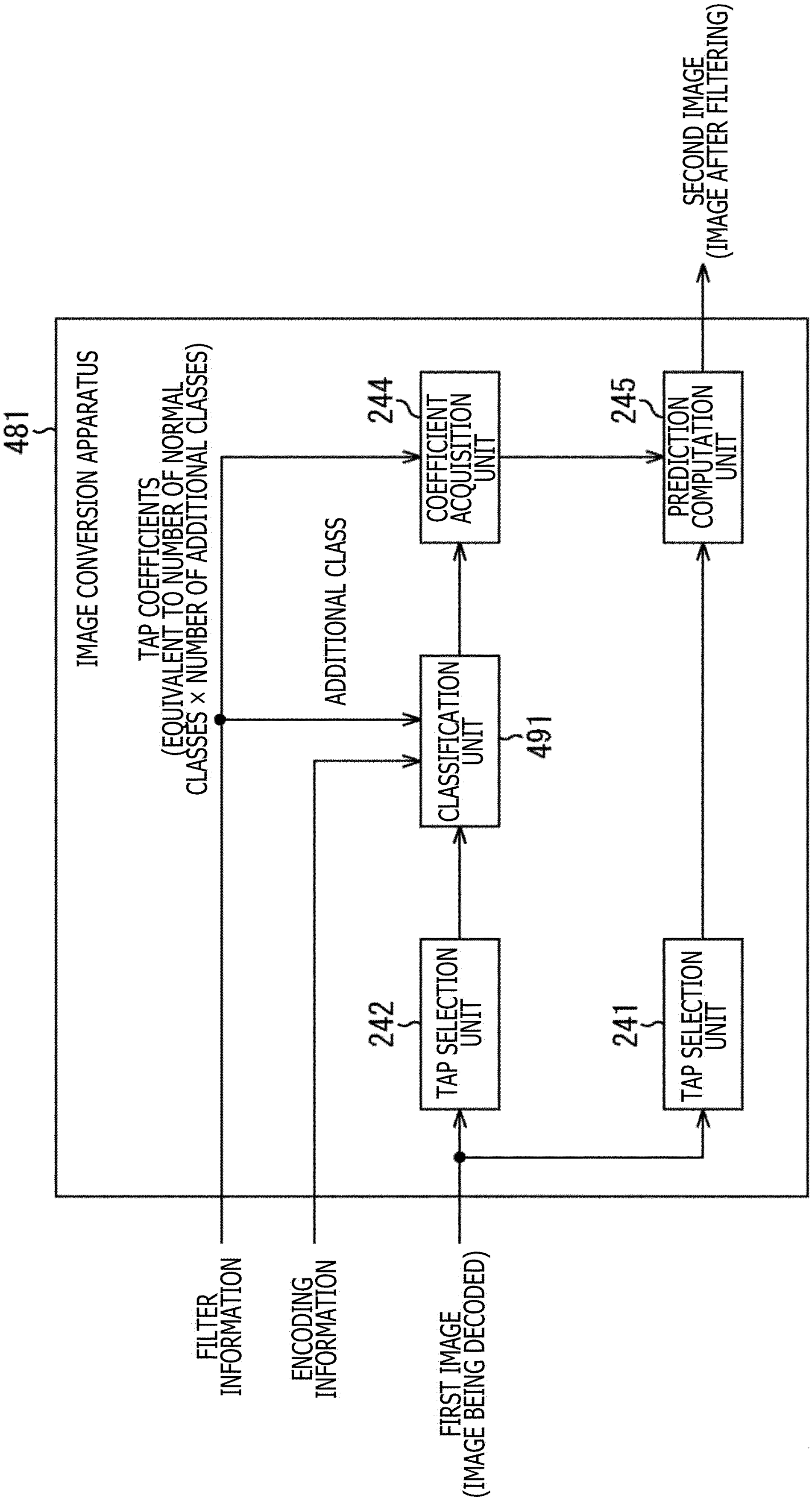
481
IMAGE CONVERSION APPARATUS
TAP COEFFICIENTS (EQUIVALENT TO NUMBER OF NORMAL CLASSES × NUMBER OF ADDITIONAL CLASSES)
ADDITIONAL CLASS
244
COEFFICIENT ACQUISITION UNIT
245
PREDICTION COMPUTATION UNIT
CLASSIFICATION UNIT
491
242
TAP SELECTION UNIT
241
TAP SELECTION UNIT
FILTER INFORMATION
ENCODING INFORMATION
FIRST IMAGE (IMAGE BEING DECODED)
SECOND IMAGE (IMAGE AFTER FILTERING)

FIG. 42

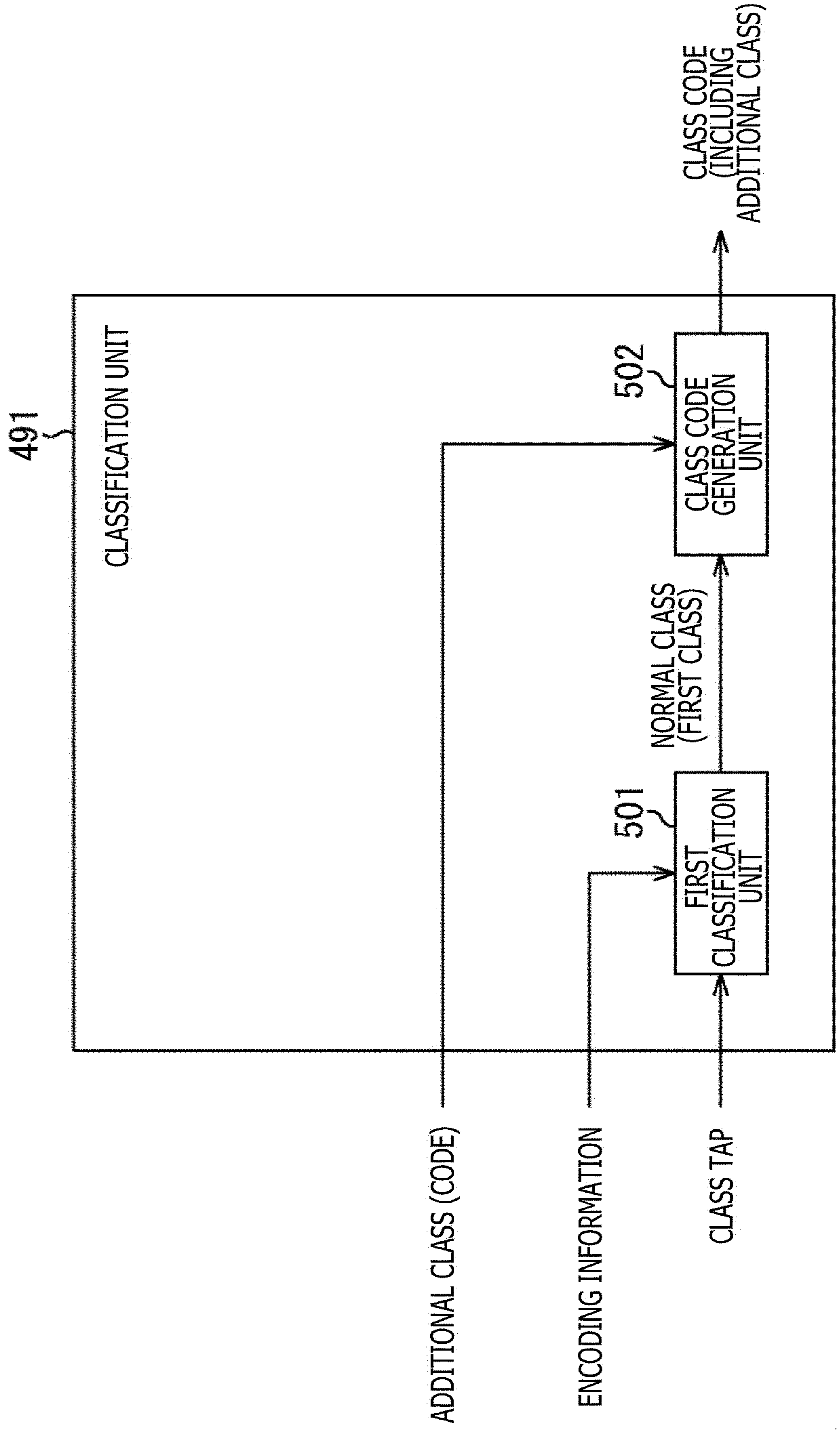
491
CLASSIFICATION UNIT
501
FIRST CLASSIFICATION UNIT
502
CLASS CODE GENERATION UNIT
NORMAL CLASS (FIRST CLASS)
CLASS CODE (INCLUDING ADDITIONAL CLASS)
ADDITIONAL CLASS (CODE)
ENCODING INFORMATION
CLASS TAP

FIG.43

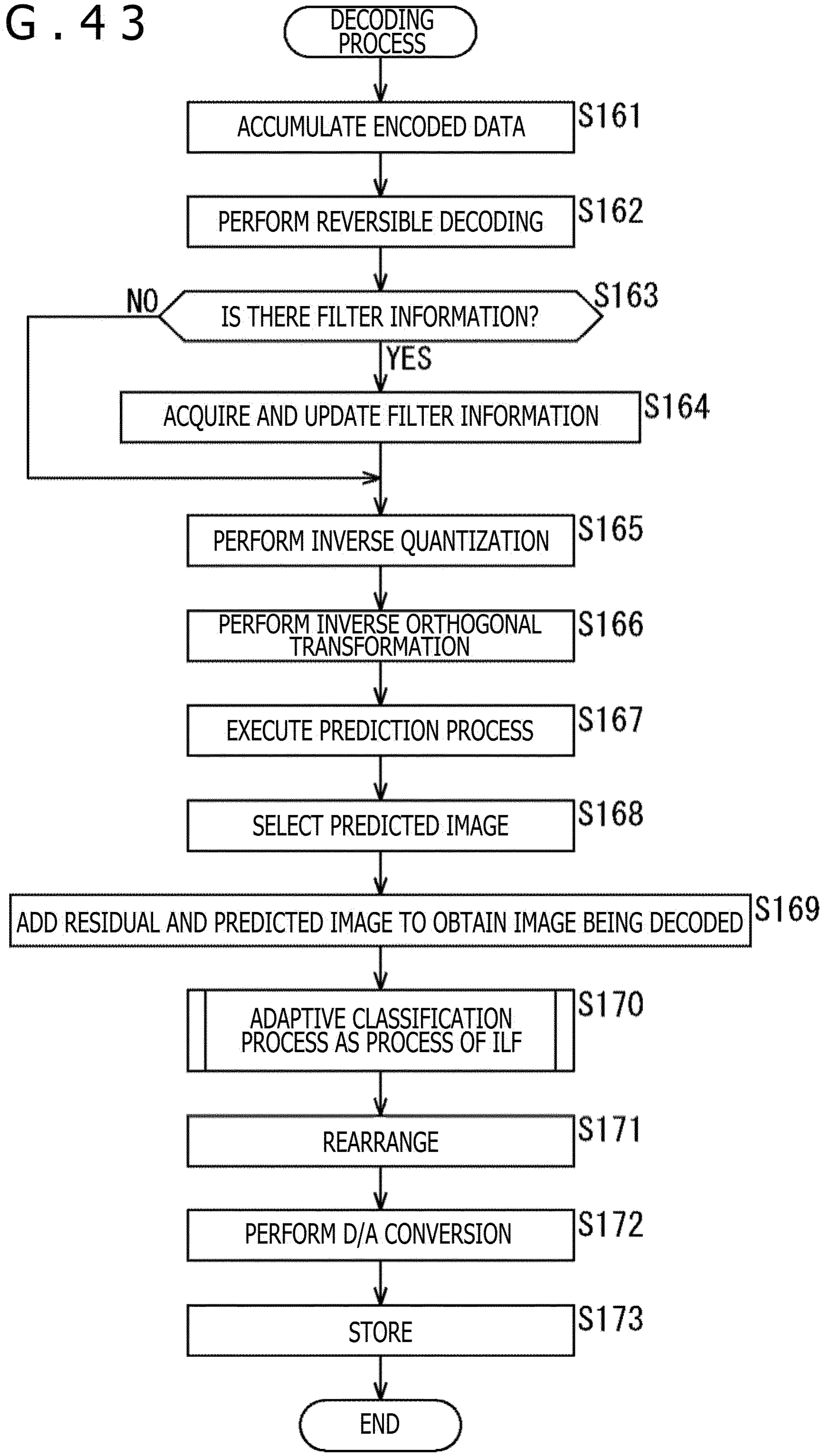
DECODING PROCESS
ACCUMULATE ENCODED DATA
S161
PERFORM REVERSIBLE DECODING
S162
IS THERE FILTER INFORMATION?
S163
NO
YES
ACQUIRE AND UPDATE FILTER INFORMATION
S164
PERFORM INVERSE QUANTIZATION
S165
PERFORM INVERSE ORTHOGONAL TRANSFORMATION
S166
EXECUTE PREDICTION PROCESS
S167
SELECT PREDICTED IMAGE
S168
ADD RESIDUAL AND PREDICTED IMAGE TO OBTAIN IMAGE BEING DECODED
S169
ADAPTIVE CLASSIFICATION PROCESS AS PROCESS OF ILF
S170
REARRANGE
S171
PERFORM D/A CONVERSION
S172
STORE
S173
END

FIG.44

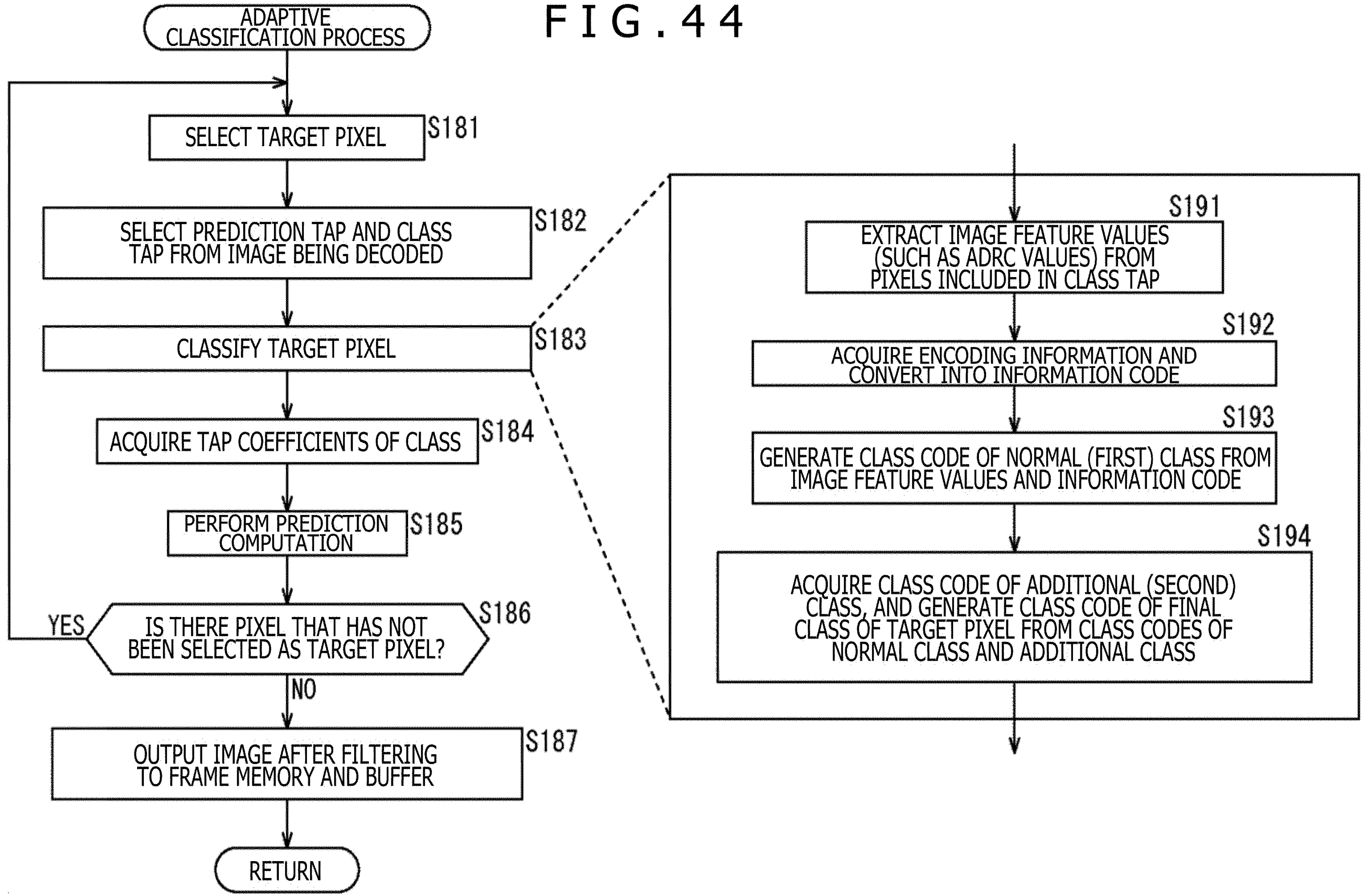
ADAPTIVE CLASSIFICATION PROCESS
SELECT TARGET PIXEL
S181
SELECT PREDICTION TAP AND CLASS TAP FROM IMAGE BEING DECODED
S182
CLASSIFY TARGET PIXEL
S183
ACQUIRE TAP COEFFICIENTS OF CLASS
S184
PERFORM PREDICTION COMPUTATION
S185
IS THERE PIXEL THAT HAS NOT BEEN SELECTED AS TARGET PIXEL?
S186
YES
NO
OUTPUT IMAGE AFTER FILTERING TO FRAME MEMORY AND BUFFER
S187
RETURN
EXTRACT IMAGE FEATURE VALUES (SUCH AS ADRC VALUES) FROM PIXELS INCLUDED IN CLASS TAP
S191
ACQUIRE ENCODING INFORMATION AND CONVERT INTO INFORMATION CODE
S192
GENERATE CLASS CODE OF NORMAL (FIRST) CLASS FROM IMAGE FEATURE VALUES AND INFORMATION CODE
S193
ACQUIRE CLASS CODE OF ADDITIONAL (SECOND) CLASS, AND GENERATE CLASS CODE OF FINAL CLASS OF TARGET PIXEL FROM CLASS CODES OF NORMAL CLASS AND ADDITIONAL CLASS
S194

FIG. 45

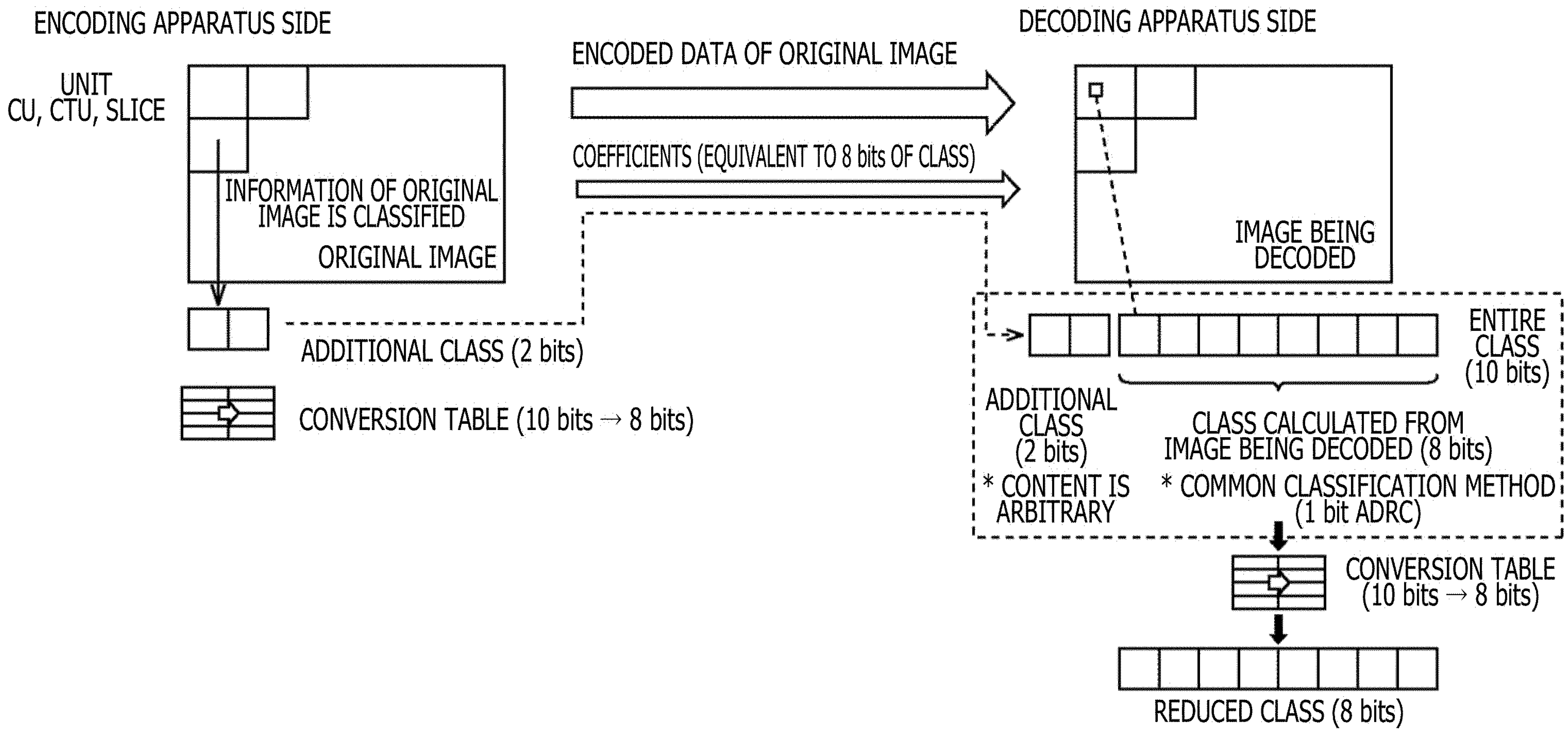
ENCODING APPARATUS SIDE
UNIT
CU, CTU, SLICE
INFORMATION OF ORIGINAL IMAGE IS CLASSIFIED
ORIGINAL IMAGE
ADDITIONAL CLASS (2 bits)
CONVERSION TABLE (10 bits → 8 bits)
ENCODED DATA OF ORIGINAL IMAGE
COEFFICIENTS (EQUIVALENT TO 8 bits OF CLASS)
DECODING APPARATUS SIDE
IMAGE BEING DECODED
ENTIRE CLASS (10 bits)
ADDITIONAL CLASS (2 bits)
* CONTENT IS ARBITRARY
CLASS CALCULATED FROM IMAGE BEING DECODED (8 bits)
* COMMON CLASSIFICATION METHOD (1 bit ADRC)
CONVERSION TABLE (10 bits → 8 bits)
REDUCED CLASS (8 bits)

FIG. 46

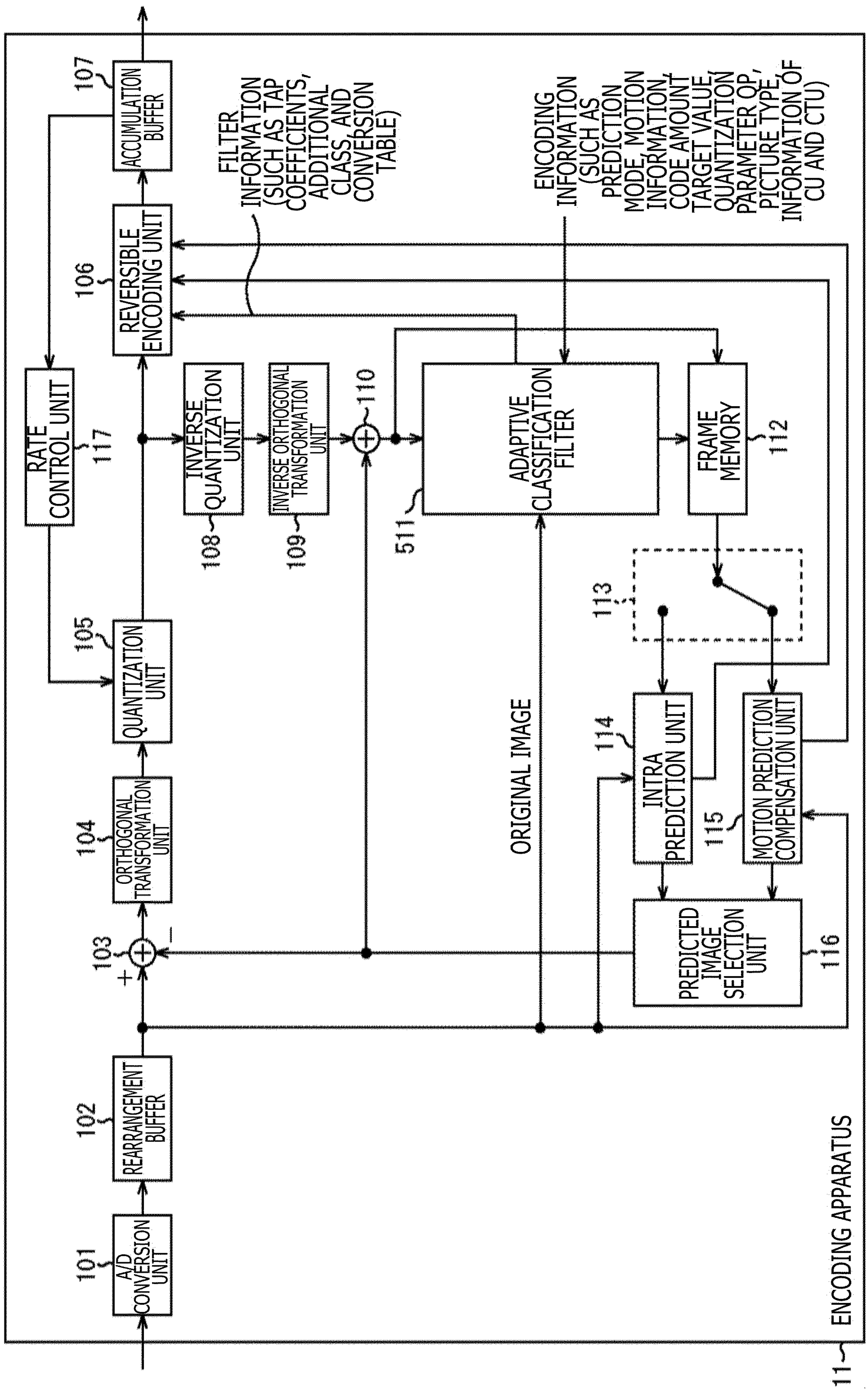
A/D CONVERSION UNIT
101
REARRANGEMENT BUFFER
102
103
+
-
ORTHOGONAL TRANSFORMATION UNIT
104
QUANTIZATION UNIT
105
REVERSIBLE ENCODING UNIT
106
ACCUMULATION BUFFER
107
RATE CONTROL UNIT
117
INVERSE QUANTIZATION UNIT
108
INVERSE ORTHOGONAL TRANSFORMATION UNIT
109
110
ADAPTIVE CLASSIFICATION FILTER
511
FRAME MEMORY
112
113
INTRA PREDICTION UNIT
114
MOTION PREDICTION COMPENSATION UNIT
115
PREDICTED IMAGE SELECTION UNIT
116
ORIGINAL IMAGE
FILTER INFORMATION (SUCH AS TAP COEFFICIENTS, ADDITIONAL CLASS, AND CONVERSION TABLE)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ENCODING APPARATUS
11

FIG. 47

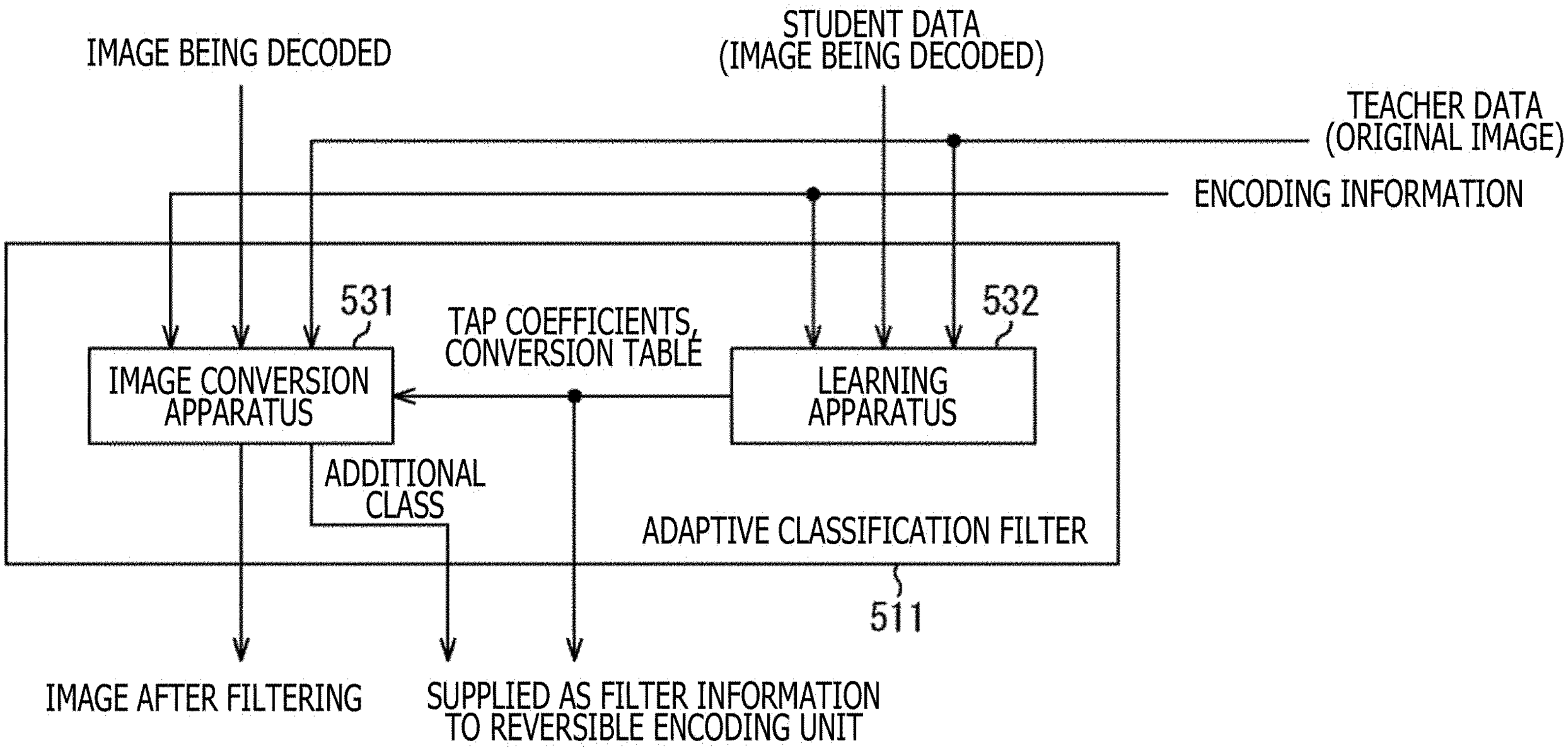
IMAGE BEING DECODED
STUDENT DATA (IMAGE BEING DECODED)
TEACHER DATA (ORIGINAL IMAGE)
ENCODING INFORMATION
531
IMAGE CONVERSION APPARATUS
TAP COEFFICIENTS, CONVERSION TABLE
532
LEARNING APPARATUS
ADDITIONAL CLASS
ADAPTIVE CLASSIFICATION FILTER
511
IMAGE AFTER FILTERING
SUPPLIED AS FILTER INFORMATION TO REVERSIBLE ENCODING UNIT

FIG. 48

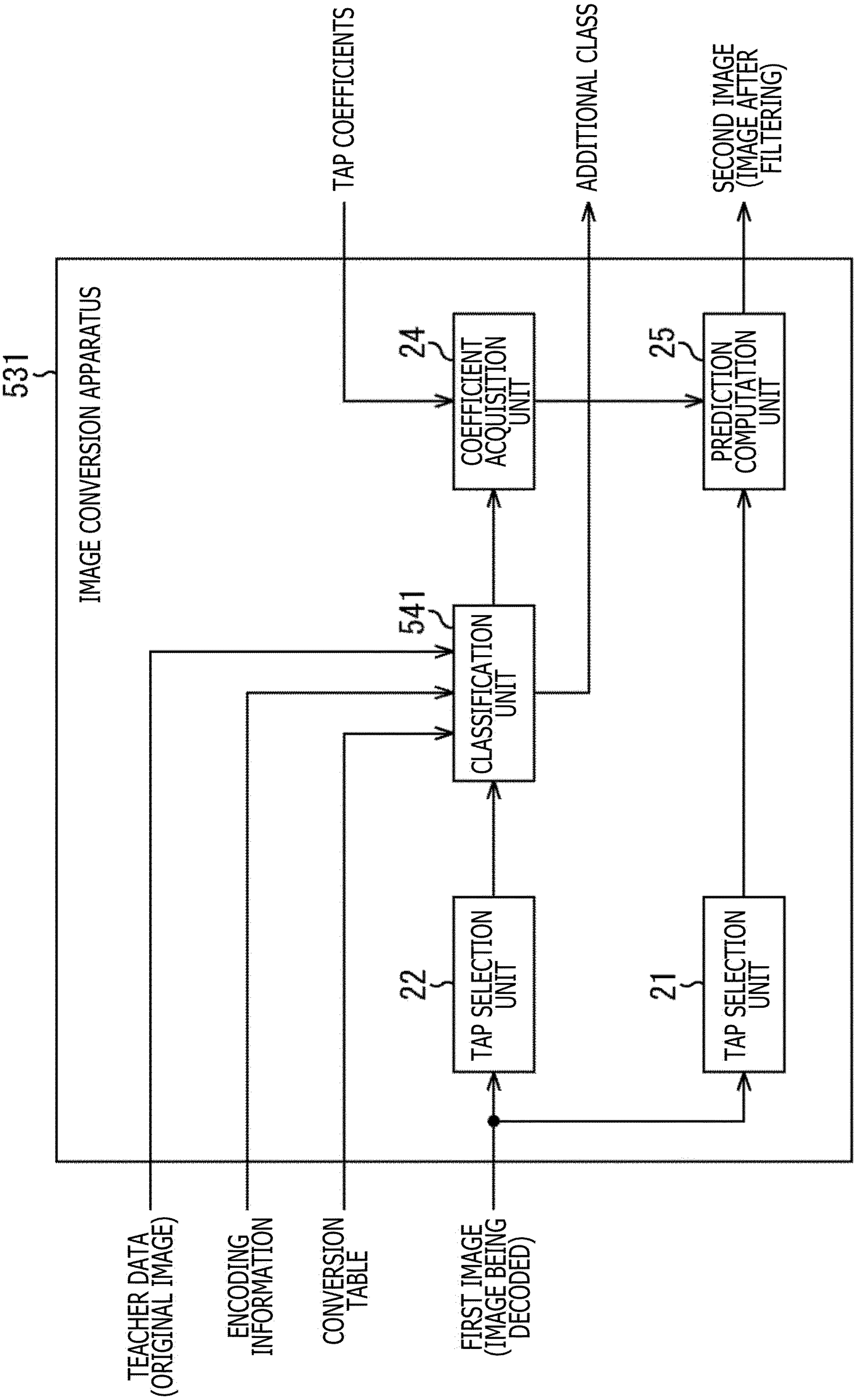
531
IMAGE CONVERSION APPARATUS
TAP COEFFICIENTS
ADDITIONAL CLASS
SECOND IMAGE (IMAGE AFTER FILTERING)
24
COEFFICIENT ACQUISITION UNIT
25
PREDICTION COMPUTATION UNIT
541
CLASSIFICATION UNIT
22
TAP SELECTION UNIT
21
TAP SELECTION UNIT
TEACHER DATA (ORIGINAL IMAGE)
ENCODING INFORMATION
CONVERSION TABLE
FIRST IMAGE (IMAGE BEING DECODED)

FIG.49

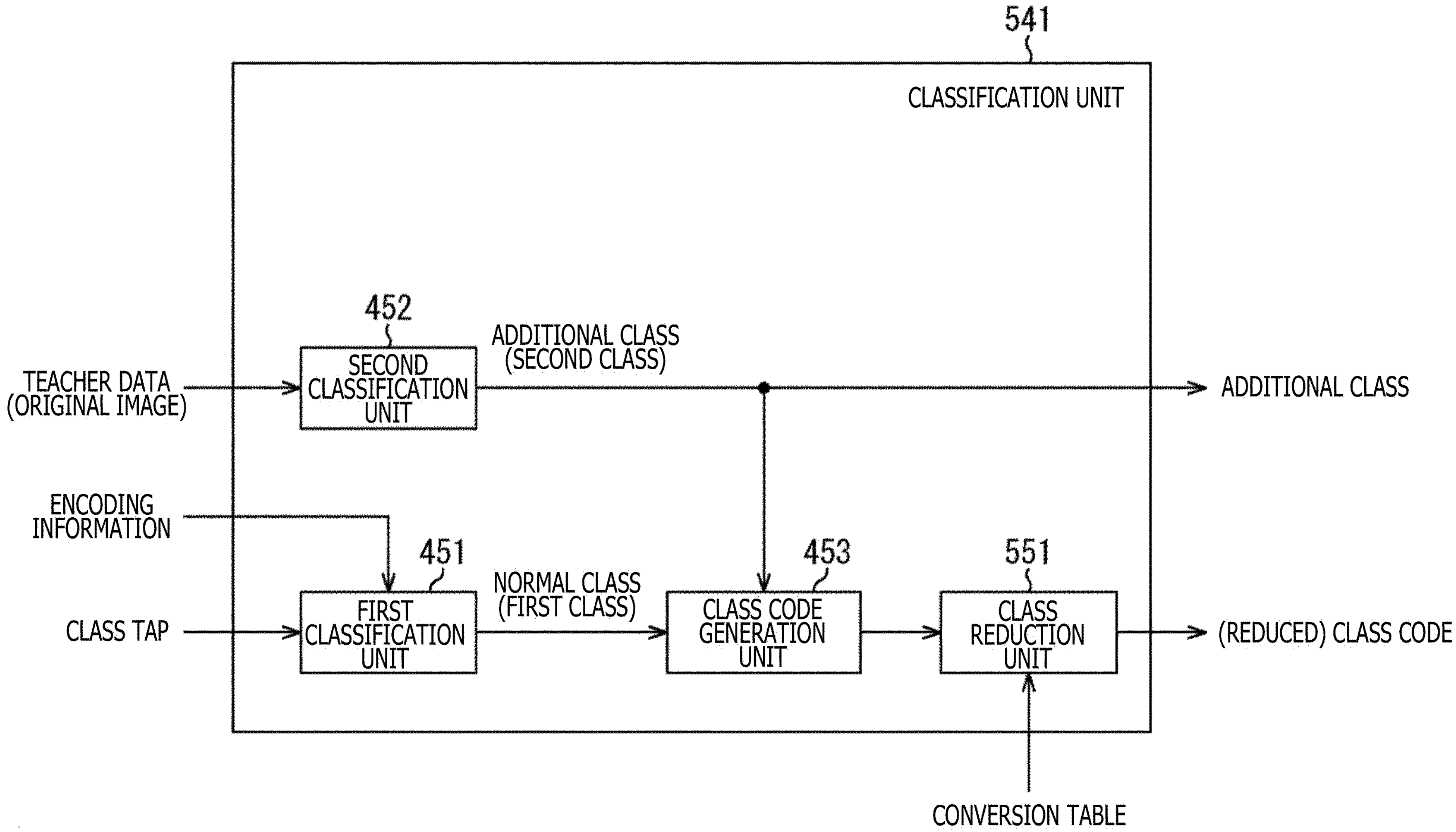
541
CLASSIFICATION UNIT
TEACHER DATA
(ORIGINAL IMAGE)
452
SECOND
CLASSIFICATION
UNIT
ADDITIONAL CLASS
(SECOND CLASS)
ADDITIONAL CLASS
ENCODING
INFORMATION
CLASS TAP
451
FIRST
CLASSIFICATION
UNIT
NORMAL CLASS
(FIRST CLASS)
453
CLASS CODE
GENERATION
UNIT
551
CLASS
REDUCTION
UNIT
(REDUCED) CLASS CODE
CONVERSION TABLE

FIG.50

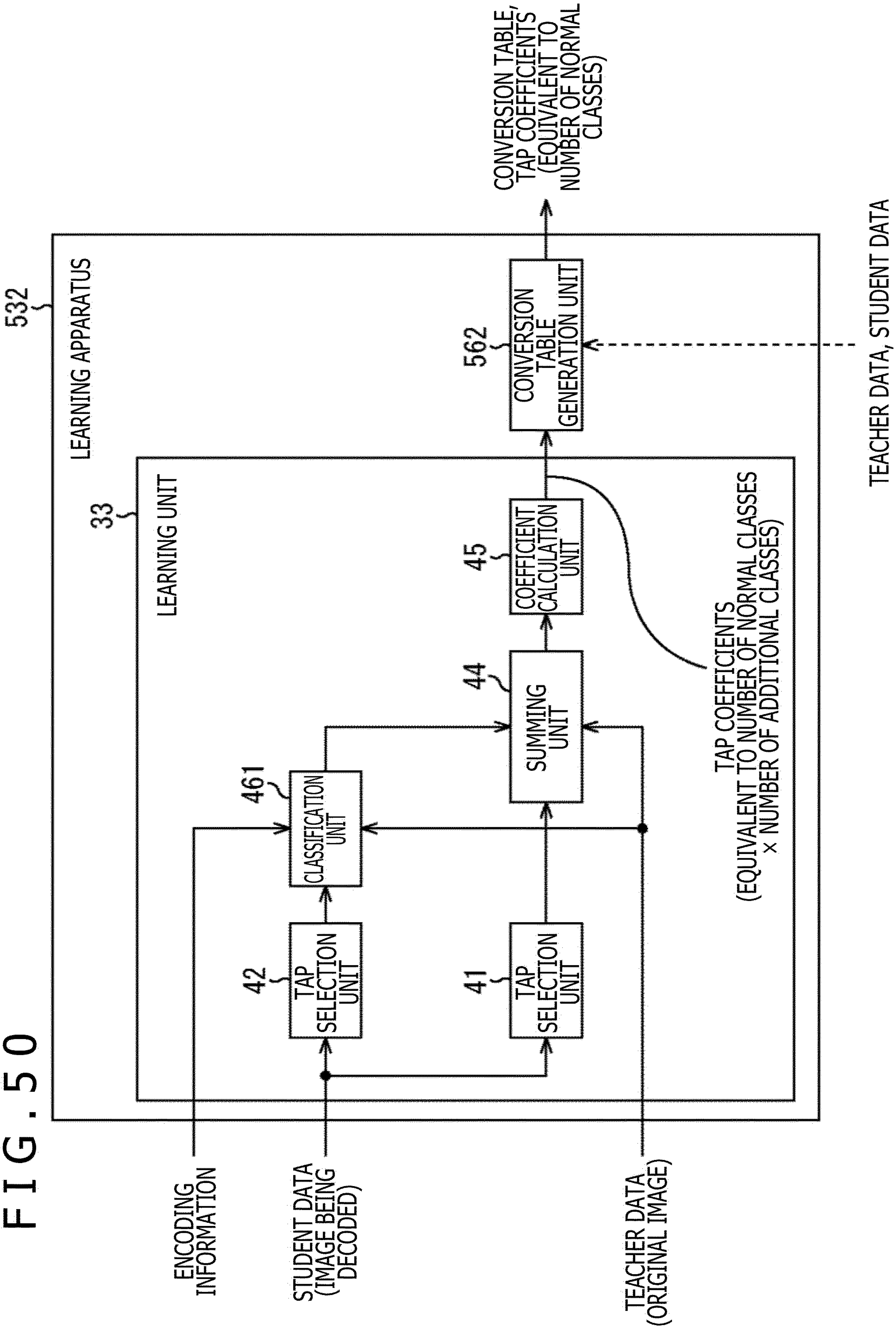
532
LEARNING APPARATUS
33
LEARNING UNIT
42
TAP SELECTION UNIT
41
TAP SELECTION UNIT
461
CLASSIFICATION UNIT
44
SUMMING UNIT
45
COEFFICIENT CALCULATION UNIT
562
CONVERSION TABLE GENERATION UNIT
ENCODING INFORMATION
STUDENT DATA (IMAGE BEING DECODED)
TEACHER DATA (ORIGINAL IMAGE)
TAP COEFFICIENTS (EQUIVALENT TO NUMBER OF NORMAL CLASSES × NUMBER OF ADDITIONAL CLASSES)
CONVERSION TABLE, TAP COEFFICIENTS (EQUIVALENT TO NUMBER OF NORMAL CLASSES)
TEACHER DATA, STUDENT DATA

FIG. 51

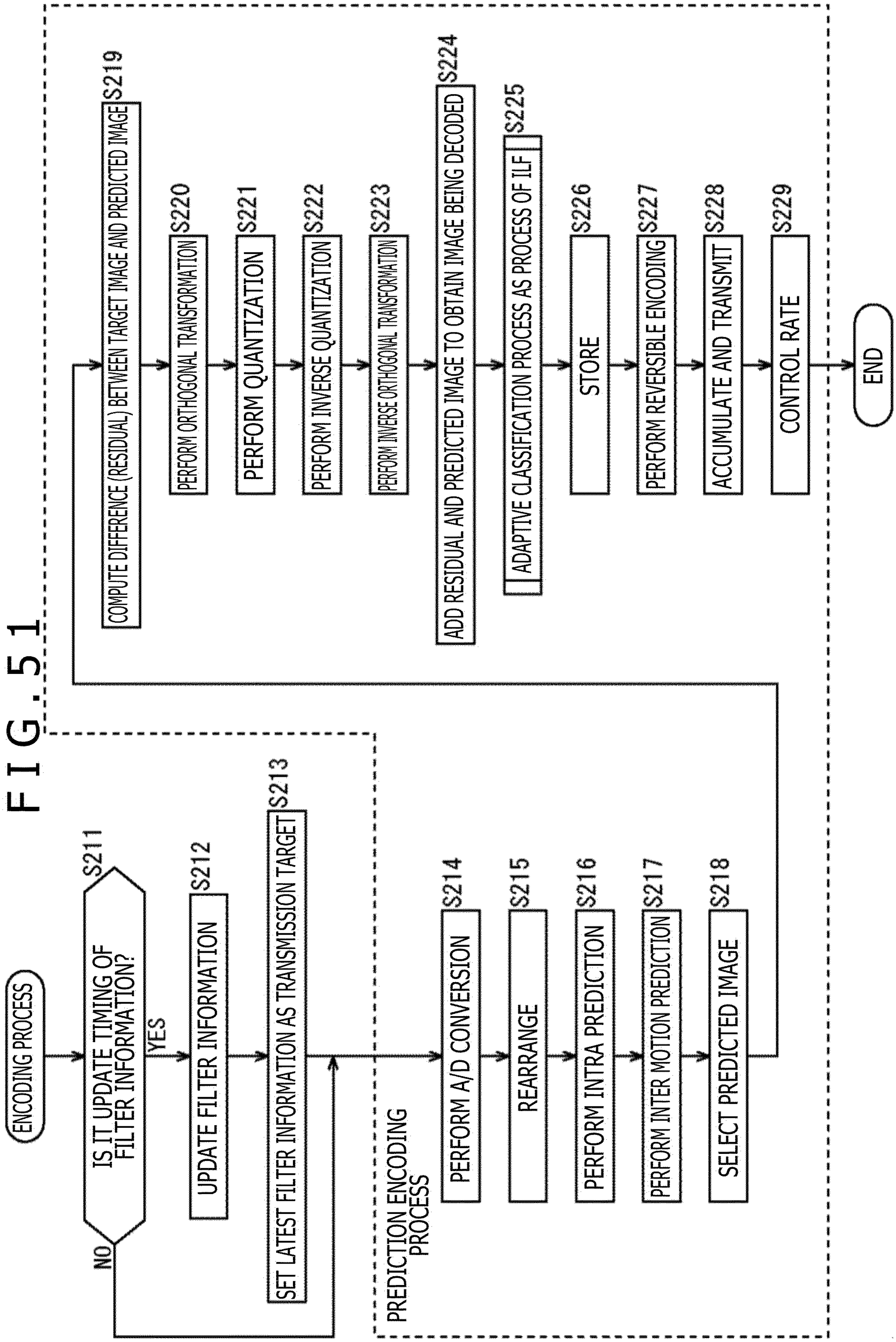
ENCODING PROCESS
IS IT UPDATE TIMING OF FILTER INFORMATION?
S211
YES
NO
UPDATE FILTER INFORMATION
S212
SET LATEST FILTER INFORMATION AS TRANSMISSION TARGET
S213
PREDICTION ENCODING PROCESS
PERFORM A/D CONVERSION
S214
REARRANGE
S215
PERFORM INTRA PREDICTION
S216
PERFORM INTER MOTION PREDICTION
S217
SELECT PREDICTED IMAGE
S218
COMPUTE DIFFERENCE (RESIDUAL) BETWEEN TARGET IMAGE AND PREDICTED IMAGE
S219
PERFORM ORTHOGONAL TRANSFORMATION
S220
PERFORM QUANTIZATION
S221
PERFORM INVERSE QUANTIZATION
S222
PERFORM INVERSE ORTHOGONAL TRANSFORMATION
S223
ADD RESIDUAL AND PREDICTED IMAGE TO OBTAIN IMAGE BEING DECODED
S224
ADAPTIVE CLASSIFICATION PROCESS AS PROCESS OF ILF
S225
STORE
S226
PERFORM REVERSIBLE ENCODING
S227
ACCUMULATE AND TRANSMIT
S228
CONTROL RATE
S229
END

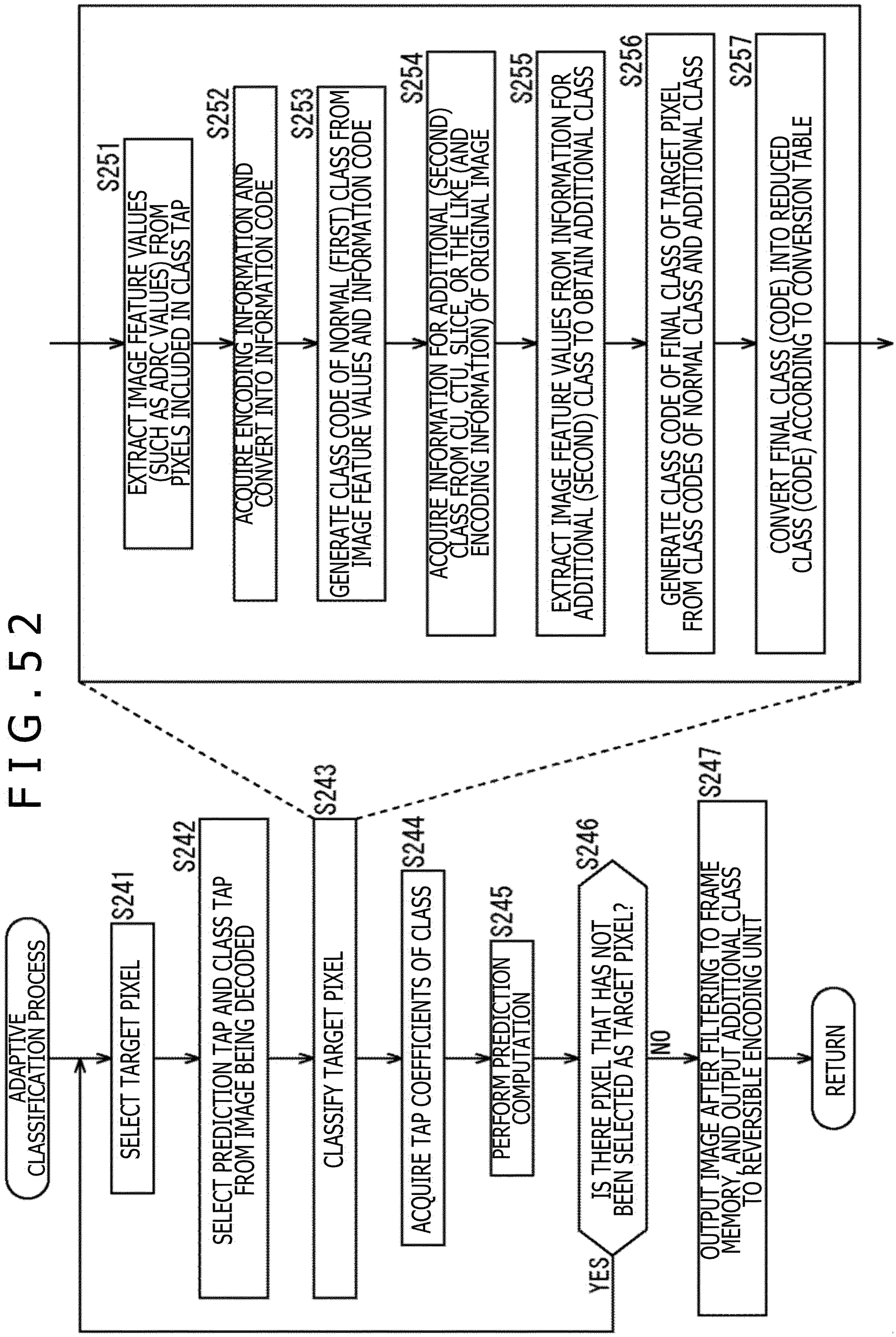
ADAPTIVE CLASSIFICATION PROCESS
S241
SELECT TARGET PIXEL
S242
SELECT PREDICTION TAP AND CLASS TAP FROM IMAGE BEING DECODED
S243
CLASSIFY TARGET PIXEL
S244
ACQUIRE TAP COEFFICIENTS OF CLASS
S245
PERFORM PREDICTION COMPUTATION
S246
IS THERE PIXEL THAT HAS NOT BEEN SELECTED AS TARGET PIXEL?
YES
NO
S247
OUTPUT IMAGE AFTER FILTERING TO FRAME MEMORY, AND OUTPUT ADDITIONAL CLASS TO REVERSIBLE ENCODING UNIT
RETURN
S251
EXTRACT IMAGE FEATURE VALUES (SUCH AS ADRC VALUES) FROM PIXELS INCLUDED IN CLASS TAP
S252
ACQUIRE ENCODING INFORMATION AND CONVERT INTO INFORMATION CODE
S253
GENERATE CLASS CODE OF NORMAL (FIRST) CLASS FROM IMAGE FEATURE VALUES AND INFORMATION CODE
S254
ACQUIRE INFORMATION FOR ADDITIONAL (SECOND) CLASS FROM CU, CTU, SLICE, OR THE LIKE (AND ENCODING INFORMATION) OF ORIGINAL IMAGE
S255
EXTRACT IMAGE FEATURE VALUES FROM INFORMATION FOR ADDITIONAL (SECOND) CLASS TO OBTAIN ADDITIONAL CLASS
S256
GENERATE CLASS CODE OF FINAL CLASS OF TARGET PIXEL FROM CLASS CODES OF NORMAL CLASS AND ADDITIONAL CLASS
S257
CONVERT FINAL CLASS (CODE) INTO REDUCED CLASS (CODE) ACCORDING TO CONVERSION TABLE

FIG. 52

FIG. 53

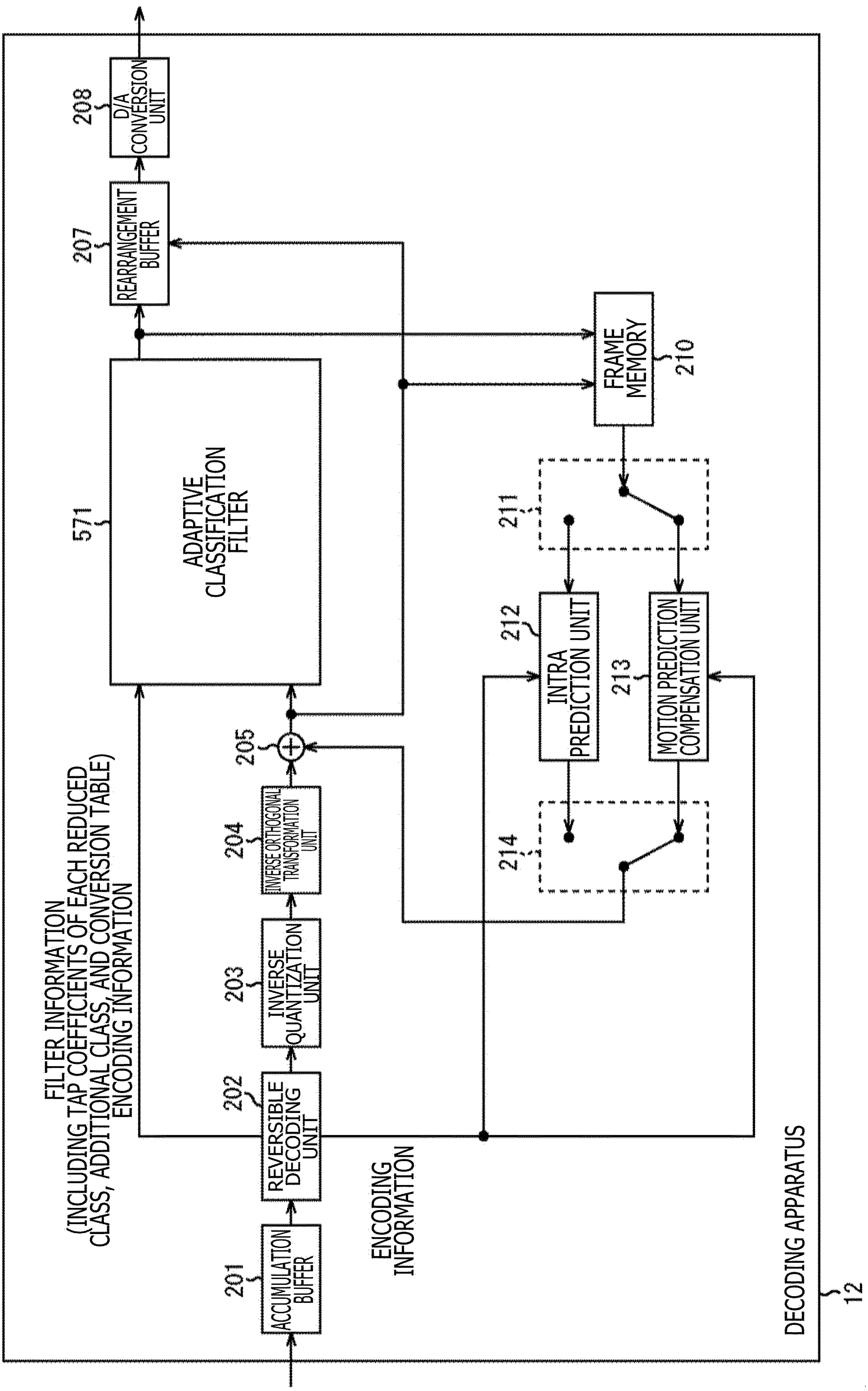
FILTER INFORMATION
(INCLUDING TAP COEFFICIENTS OF EACH REDUCED CLASS, ADDITIONAL CLASS, AND CONVERSION TABLE)
ENCODING INFORMATION
201
ACCUMULATION BUFFER
202
REVERSIBLE DECODING UNIT
203
INVERSE QUANTIZATION UNIT
204
INVERSE ORTHOGONAL TRANSFORMATION UNIT
205
571
ADAPTIVE CLASSIFICATION FILTER
207
REARRANGEMENT BUFFER
208
D/A CONVERSION UNIT
FRAME MEMORY
210
211
212
INTRA PREDICTION UNIT
213
MOTION PREDICTION COMPENSATION UNIT
214
ENCODING INFORMATION
DECODING APPARATUS
12

FIG. 54

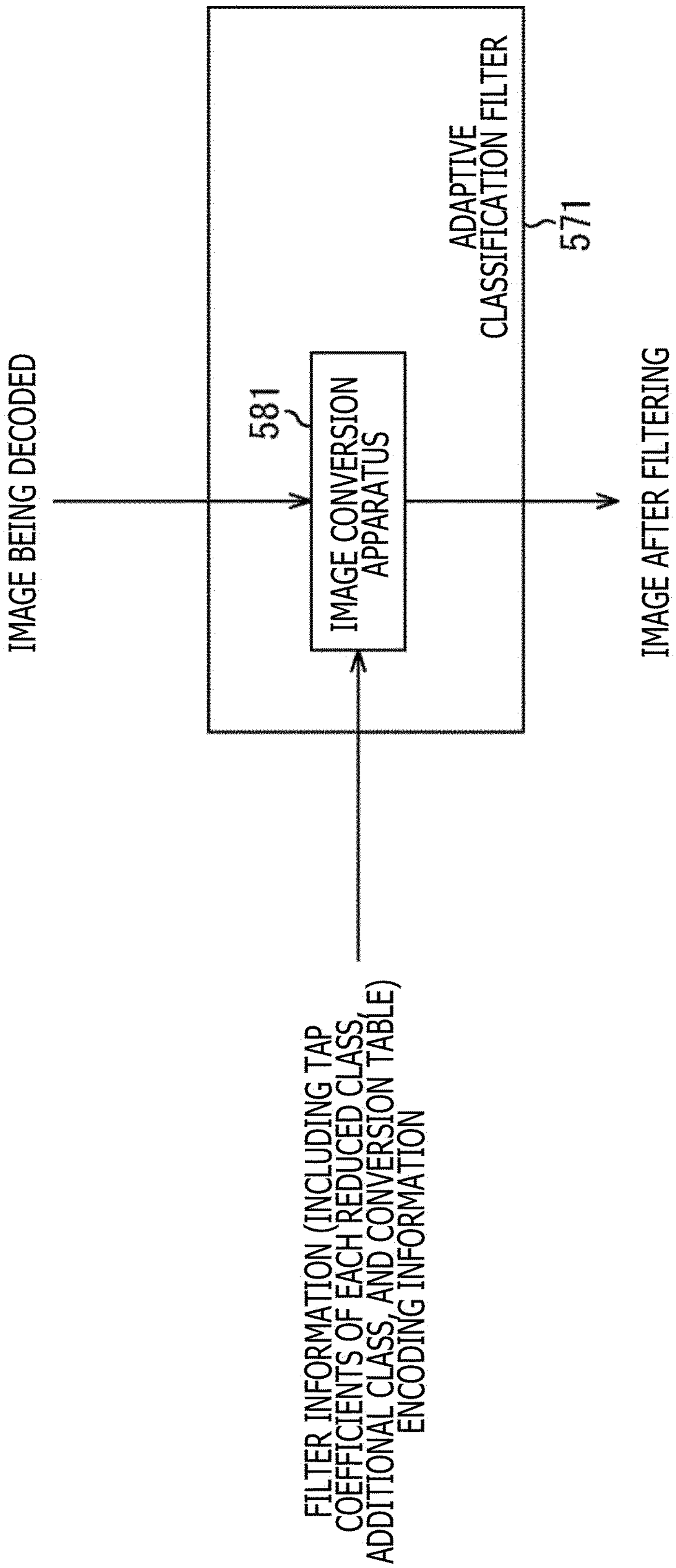
IMAGE BEING DECODED
581
IMAGE CONVERSION APPARATUS
ADAPTIVE CLASSIFICATION FILTER
571
IMAGE AFTER FILTERING
FILTER INFORMATION (INCLUDING TAP COEFFICIENTS OF EACH REDUCED CLASS, ADDITIONAL CLASS, AND CONVERSION TABLE)
ENCODING INFORMATION

FIG. 55

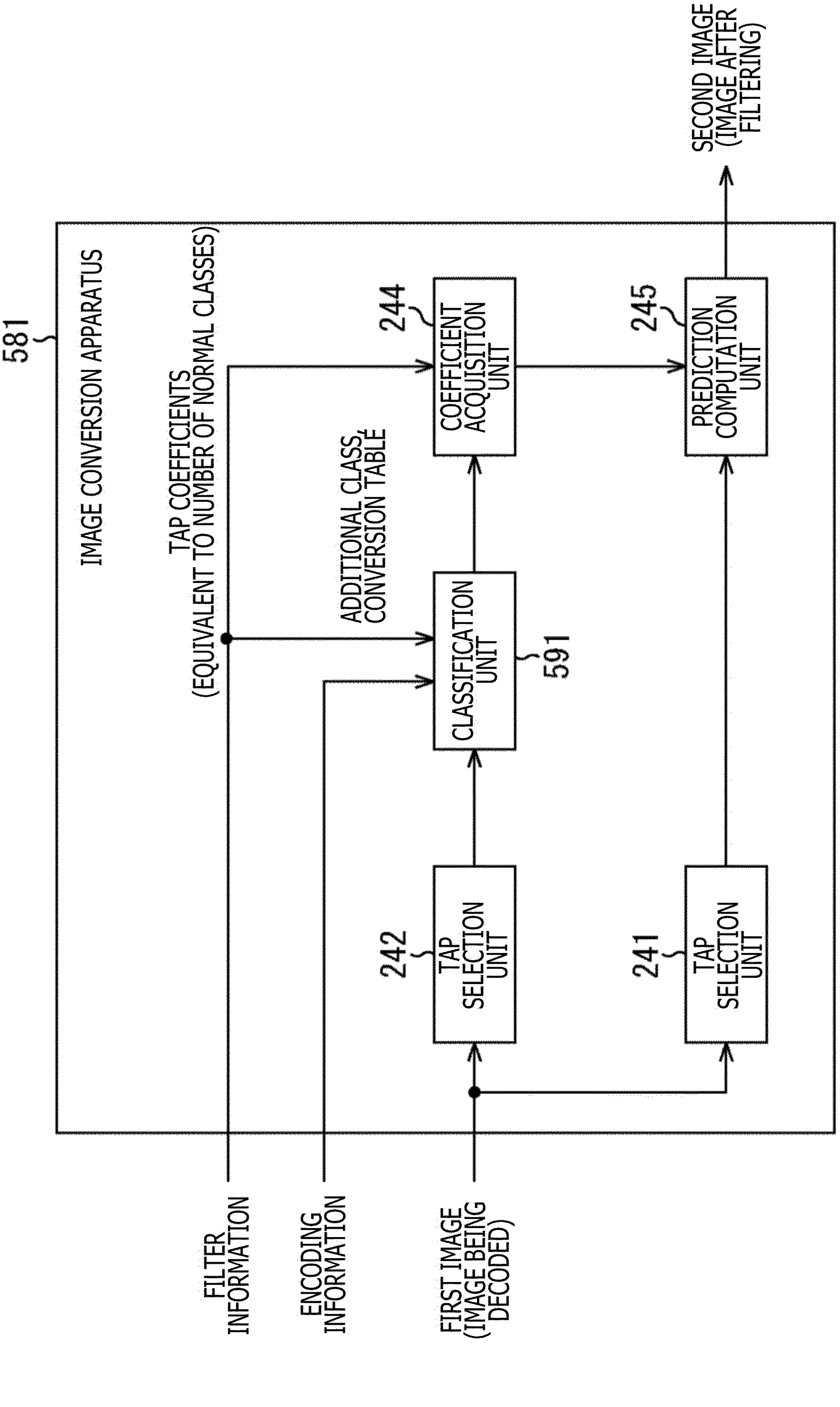
581
IMAGE CONVERSION APPARATUS
TAP COEFFICIENTS (EQUIVALENT TO NUMBER OF NORMAL CLASSES)
ADDITIONAL CLASS CONVERSION TABLE
244
COEFFICIENT ACQUISITION UNIT
245
PREDICTION COMPUTATION UNIT
591
CLASSIFICATION UNIT
242
TAP SELECTION UNIT
241
TAP SELECTION UNIT
FILTER INFORMATION
ENCODING INFORMATION
FIRST IMAGE (IMAGE BEING DECODED)
SECOND IMAGE (IMAGE AFTER FILTERING)

FIG. 56

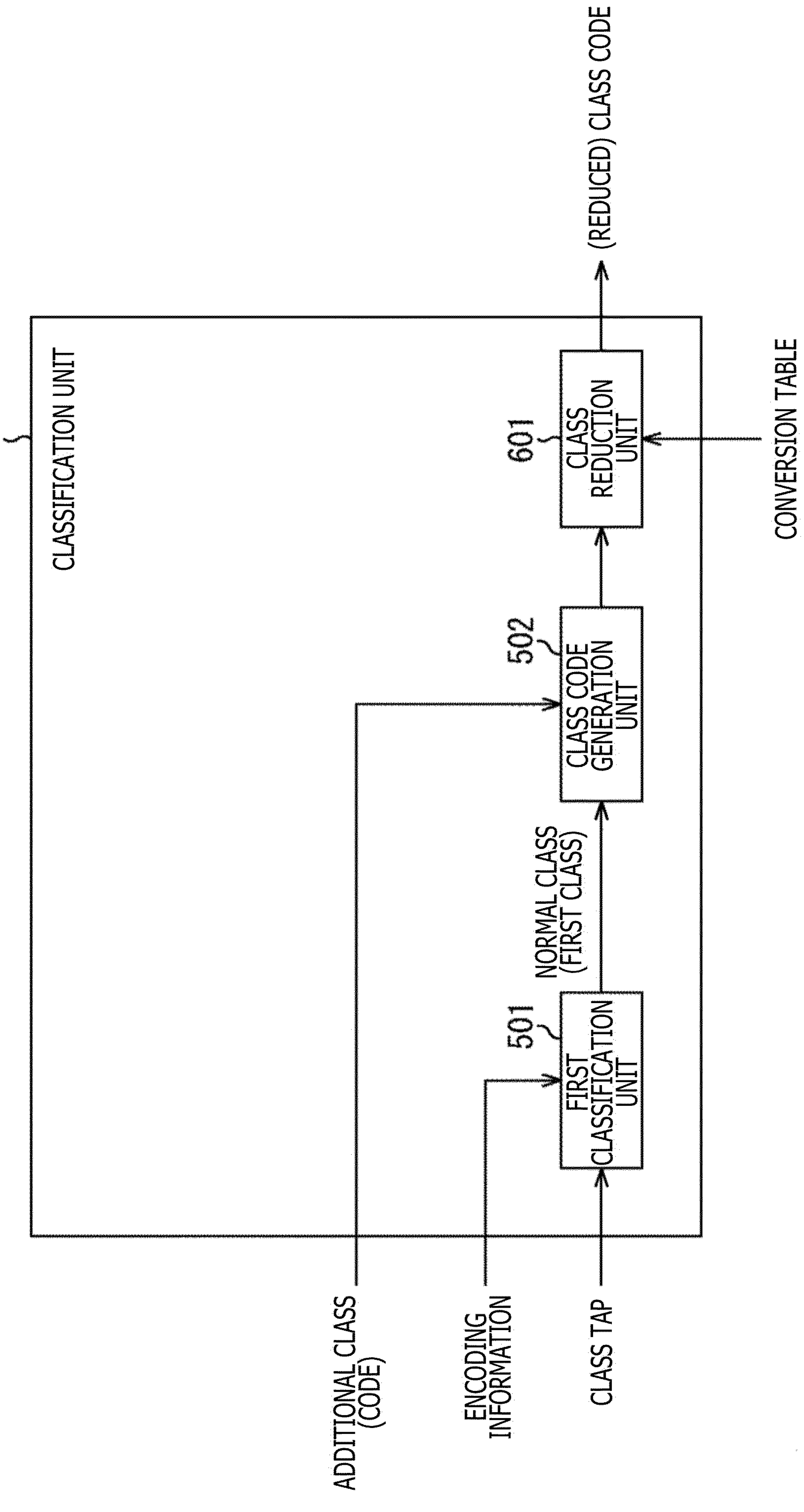
591
CLASSIFICATION UNIT
ADDITIONAL CLASS (CODE)
ENCODING INFORMATION
CLASS TAP
501
FIRST CLASSIFICATION UNIT
NORMAL CLASS (FIRST CLASS)
502
CLASS CODE GENERATION UNIT
601
CLASS REDUCTION UNIT
CONVERSION TABLE
(REDUCED) CLASS CODE

FIG.57

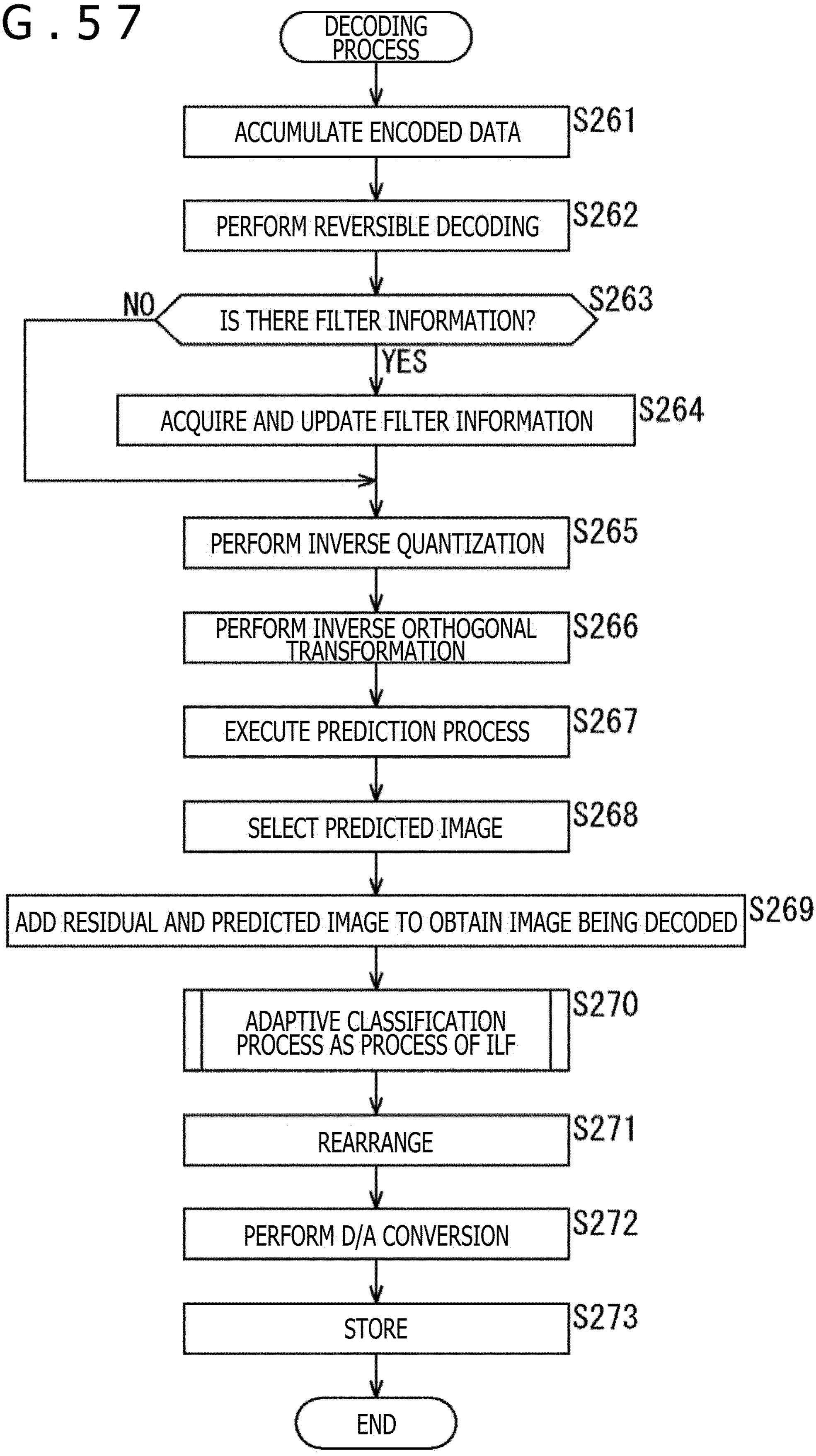
DECODING PROCESS
ACCUMULATE ENCODED DATA
S261
PERFORM REVERSIBLE DECODING
S262
IS THERE FILTER INFORMATION?
S263
NO
YES
ACQUIRE AND UPDATE FILTER INFORMATION
S264
PERFORM INVERSE QUANTIZATION
S265
PERFORM INVERSE ORTHOGONAL TRANSFORMATION
S266
EXECUTE PREDICTION PROCESS
S267
SELECT PREDICTED IMAGE
S268
ADD RESIDUAL AND PREDICTED IMAGE TO OBTAIN IMAGE BEING DECODED
S269
ADAPTIVE CLASSIFICATION PROCESS AS PROCESS OF ILF
S270
REARRANGE
S271
PERFORM D/A CONVERSION
S272
STORE
S273
END

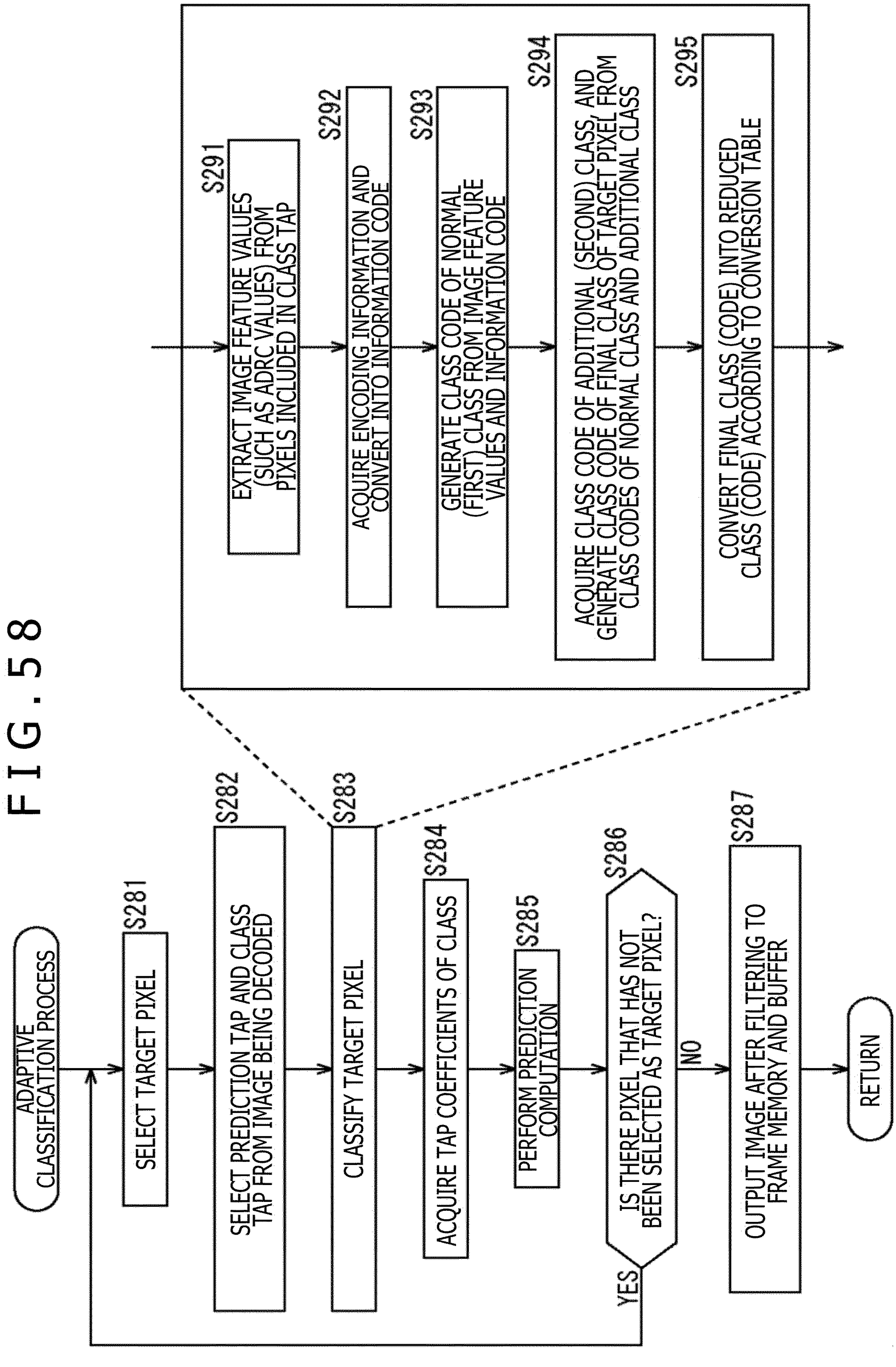
ADAPTIVE CLASSIFICATION PROCESS
S281
SELECT TARGET PIXEL
S282
SELECT PREDICTION TAP AND CLASS TAP FROM IMAGE BEING DECODED
S283
CLASSIFY TARGET PIXEL
S284
ACQUIRE TAP COEFFICIENTS OF CLASS
S285
PERFORM PREDICTION COMPUTATION
S286
IS THERE PIXEL THAT HAS NOT BEEN SELECTED AS TARGET PIXEL?
YES
NO
S287
OUTPUT IMAGE AFTER FILTERING TO FRAME MEMORY AND BUFFER
RETURN
S291
EXTRACT IMAGE FEATURE VALUES (SUCH AS ADRC VALUES) FROM PIXELS INCLUDED IN CLASS TAP
S292
ACQUIRE ENCODING INFORMATION AND CONVERT INTO INFORMATION CODE
S293
GENERATE CLASS CODE OF NORMAL (FIRST) CLASS FROM IMAGE FEATURE VALUES AND INFORMATION CODE
S294
ACQUIRE CLASS CODE OF ADDITIONAL (SECOND) CLASS, AND GENERATE CLASS CODE OF FINAL CLASS OF TARGET PIXEL FROM CLASS CODES OF NORMAL CLASS AND ADDITIONAL CLASS
S295
CONVERT FINAL CLASS (CODE) INTO REDUCED CLASS (CODE) ACCORDING TO CONVERSION TABLE
FIG.58

FIG.59

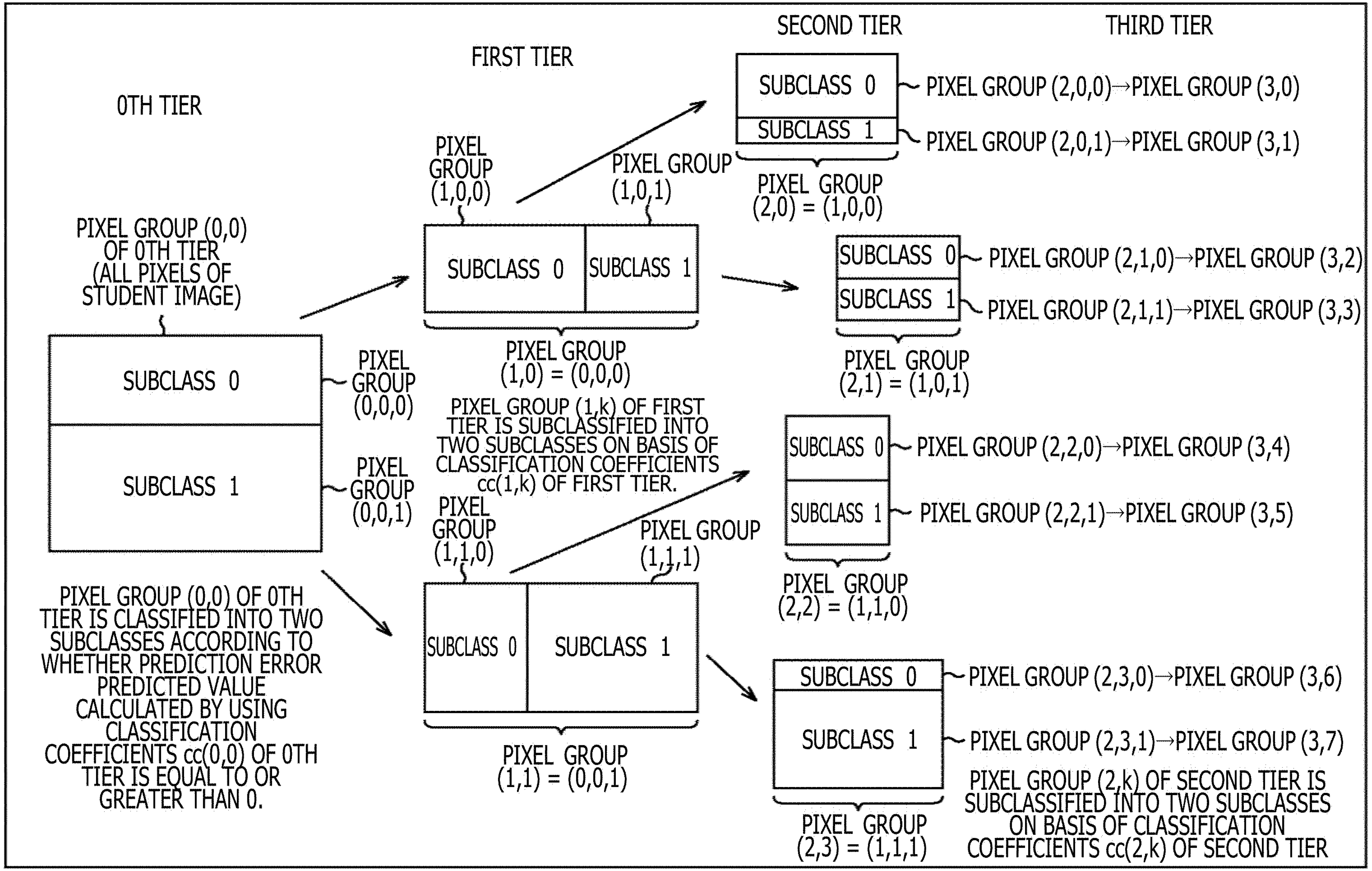
0TH TIER
FIRST TIER
SECOND TIER
THIRD TIER
PIXEL GROUP (0,0) OF 0TH TIER (ALL PIXELS OF STUDENT IMAGE)
SUBCLASS 0
SUBCLASS 1
PIXEL GROUP (0,0,0)
PIXEL GROUP (0,0,1)
PIXEL GROUP (0,0) OF 0TH TIER IS CLASSIFIED INTO TWO SUBCLASSES ACCORDING TO WHETHER PREDICTION ERROR PREDICTED VALUE CALCULATED BY USING CLASSIFICATION COEFFICIENTS cc(0,0) OF 0TH TIER IS EQUAL TO OR GREATER THAN 0.
PIXEL GROUP (1,0,0)
PIXEL GROUP (1,0,1)
SUBCLASS 0
SUBCLASS 1
PIXEL GROUP (1,0) = (0,0,0)
PIXEL GROUP (1,k) OF FIRST TIER IS SUBCLASSIFIED INTO TWO SUBCLASSES ON BASIS OF CLASSIFICATION COEFFICIENTS cc(1,k) OF FIRST TIER.
PIXEL GROUP (1,1,0)
PIXEL GROUP (1,1,1)
SUBCLASS 0
SUBCLASS 1
PIXEL GROUP (1,1) = (0,0,1)
SUBCLASS 0
SUBCLASS 1
PIXEL GROUP (2,0) = (1,0,0)
PIXEL GROUP (2,0,0)→PIXEL GROUP (3,0)
PIXEL GROUP (2,0,1)→PIXEL GROUP (3,1)
SUBCLASS 0
SUBCLASS 1
PIXEL GROUP (2,1) = (1,0,1)
PIXEL GROUP (2,1,0)→PIXEL GROUP (3,2)
PIXEL GROUP (2,1,1)→PIXEL GROUP (3,3)
SUBCLASS 0
SUBCLASS 1
PIXEL GROUP (2,2) = (1,1,0)
PIXEL GROUP (2,2,0)→PIXEL GROUP (3,4)
PIXEL GROUP (2,2,1)→PIXEL GROUP (3,5)
SUBCLASS 0
SUBCLASS 1
PIXEL GROUP (2,3) = (1,1,1)
PIXEL GROUP (2,3,0)→PIXEL GROUP (3,6)
PIXEL GROUP (2,3,1)→PIXEL GROUP (3,7)
PIXEL GROUP (2,k) OF SECOND TIER IS SUBCLASSIFIED INTO TWO SUBCLASSES ON BASIS OF CLASSIFICATION COEFFICIENTS cc(2,k) OF SECOND TIER

FIG. 60

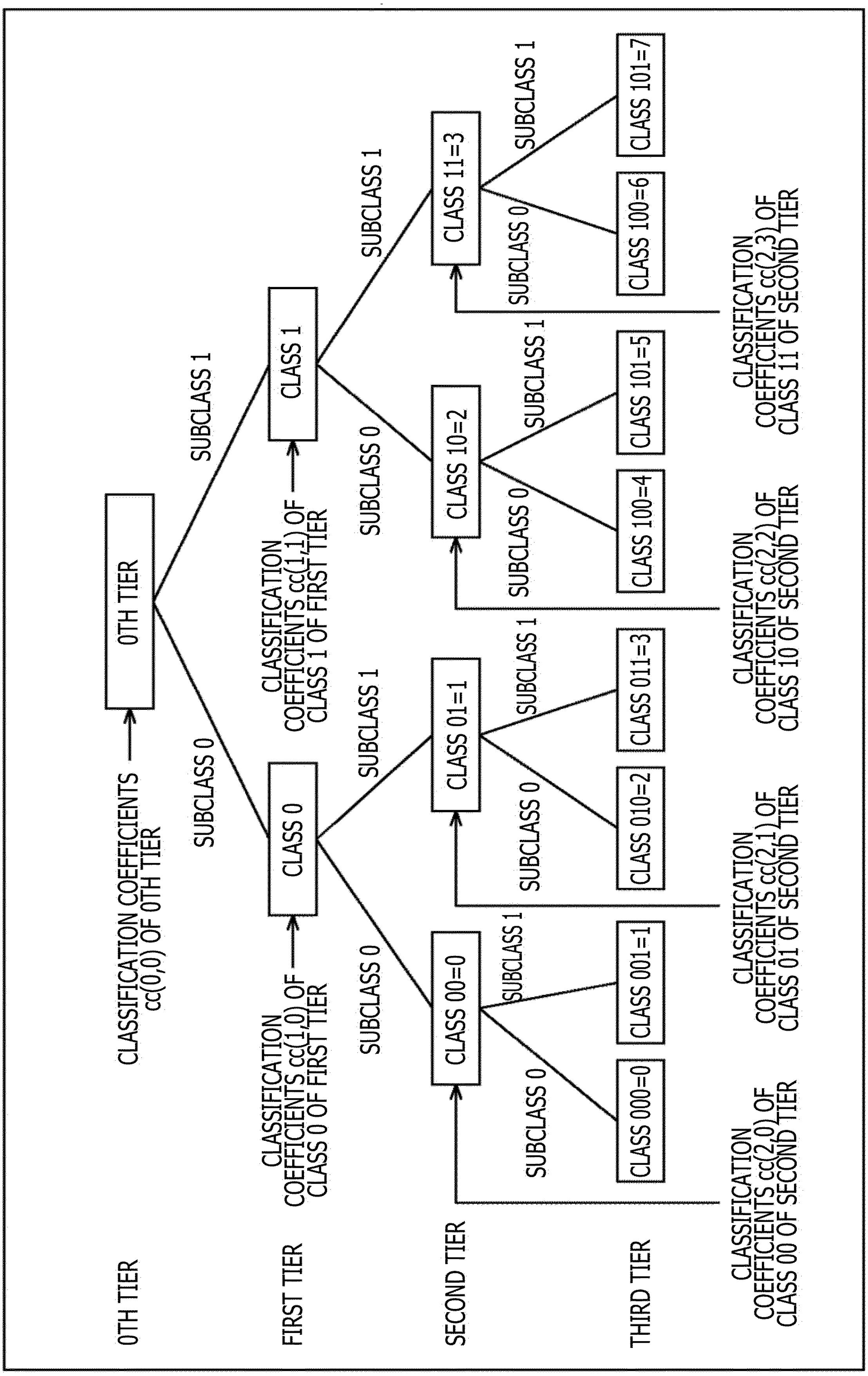
0TH TIER
FIRST TIER
SECOND TIER
THIRD TIER
CLASSIFICATION COEFFICIENTS cc(0,0) OF 0TH TIER
0TH TIER
SUBCLASS 0
SUBCLASS 1
CLASSIFICATION COEFFICIENTS cc(1,0) OF CLASS 0 OF FIRST TIER
CLASS 0
CLASSIFICATION COEFFICIENTS cc(1,1) OF CLASS 1 OF FIRST TIER
CLASS 1
SUBCLASS 0
SUBCLASS 1
SUBCLASS 0
SUBCLASS 1
CLASS 00=0
CLASS 01=1
CLASS 10=2
CLASS 11=3
SUBCLASS 0
SUBCLASS 1
SUBCLASS 0
SUBCLASS 1
SUBCLASS 0
SUBCLASS 1
SUBCLASS 0
SUBCLASS 1
CLASS 000=0
CLASS 001=1
CLASS 010=2
CLASS 011=3
CLASS 100=4
CLASS 101=5
CLASS 100=6
CLASS 101=7
CLASSIFICATION COEFFICIENTS cc(2,0) OF CLASS 00 OF SECOND TIER
CLASSIFICATION COEFFICIENTS cc(2,1) OF CLASS 01 OF SECOND TIER
CLASSIFICATION COEFFICIENTS cc(2,2) OF CLASS 10 OF SECOND TIER
CLASSIFICATION COEFFICIENTS cc(2,3) OF CLASS 11 OF SECOND TIER

FIG. 61

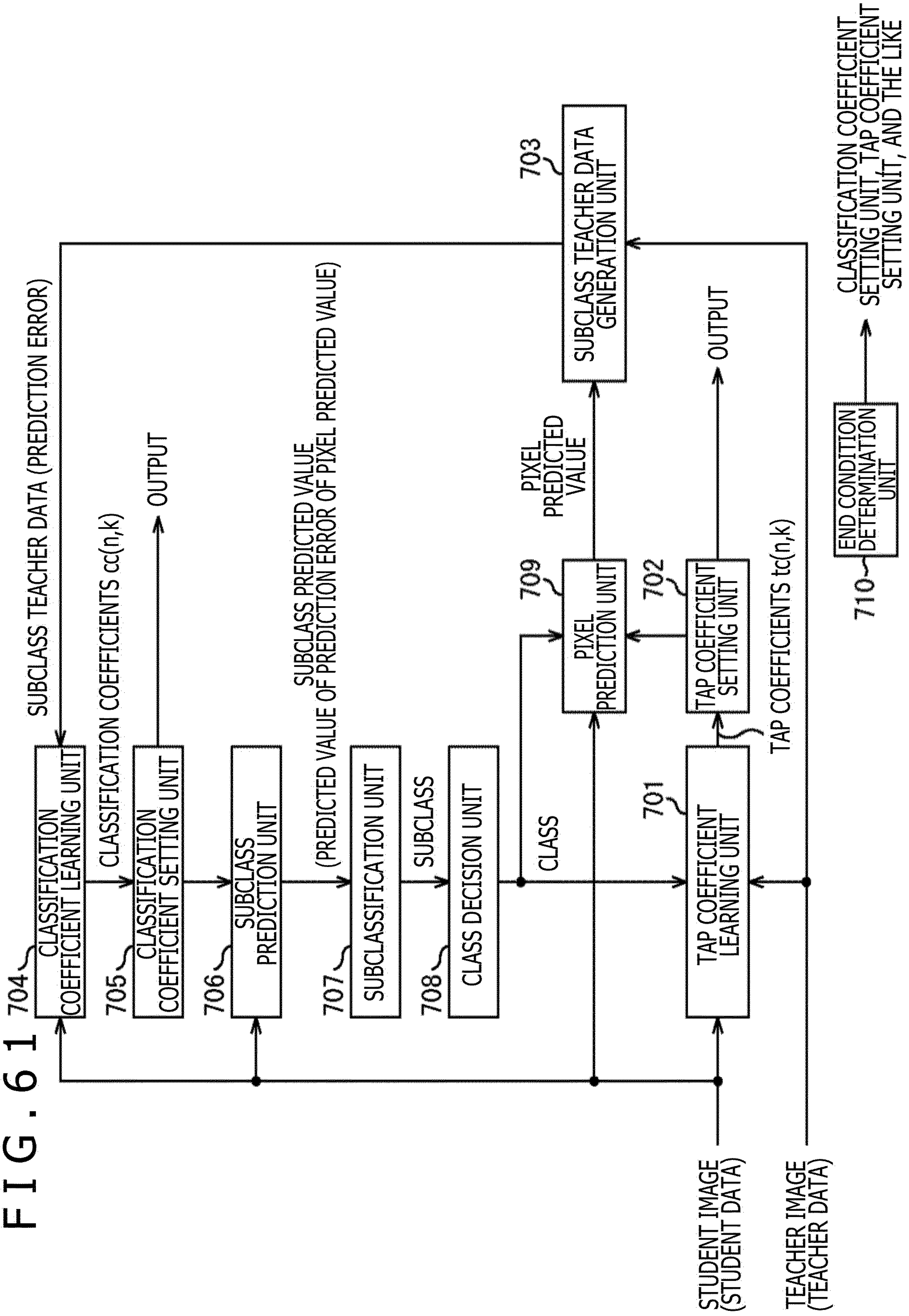
CLASSIFICATION COEFFICIENT LEARNING UNIT
704
SUBCLASS TEACHER DATA (PREDICTION ERROR)
CLASSIFICATION COEFFICIENTS cc(n,k)
CLASSIFICATION COEFFICIENT SETTING UNIT
705
OUTPUT
SUBCLASS PREDICTION UNIT
706
SUBCLASS PREDICTED VALUE
(PREDICTED VALUE OF PREDICTION ERROR OF PIXEL PREDICTED VALUE)
SUBCLASSIFICATION UNIT
707
SUBCLASS
CLASS DECISION UNIT
708
CLASS
PIXEL PREDICTION UNIT
709
PIXEL PREDICTED VALUE
SUBCLASS TEACHER DATA GENERATION UNIT
703
TAP COEFFICIENT LEARNING UNIT
701
TAP COEFFICIENTS tc(n,k)
TAP COEFFICIENT SETTING UNIT
702
OUTPUT
STUDENT IMAGE (STUDENT DATA)
TEACHER IMAGE (TEACHER DATA)
END CONDITION DETERMINATION UNIT
710
CLASSIFICATION COEFFICIENT SETTING UNIT, TAP COEFFICIENT SETTING UNIT, AND THE LIKE

FIG. 62

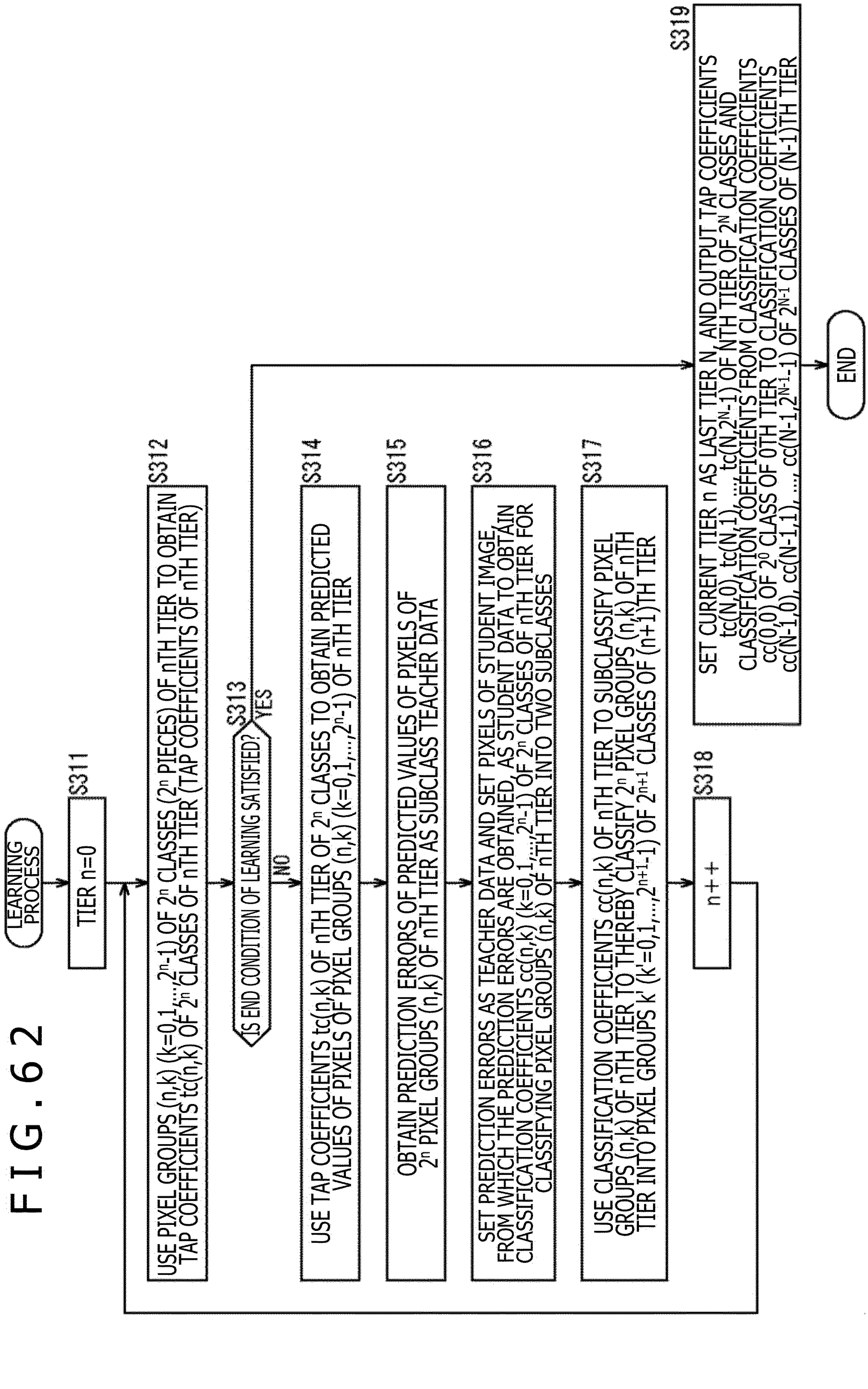
LEARNING PROCESS
S311
TIER n=0
S312
USE PIXEL GROUPS (n,k) (k=0,1,...,2ⁿ-1) OF 2ⁿ CLASSES (2ⁿ PIECES) OF nTH TIER TO OBTAIN TAP COEFFICIENTS tc(n,k) OF 2ⁿ CLASSES OF nTH TIER (TAP COEFFICIENTS OF nTH TIER)
S313
IS END CONDITION OF LEARNING SATISFIED?
YES
NO
S314
USE TAP COEFFICIENTS tc(n,k) OF nTH TIER OF 2ⁿ CLASSES TO OBTAIN PREDICTED VALUES OF PIXELS OF PIXEL GROUPS (n,k) (k=0,1,...,2ⁿ-1) OF nTH TIER
S315
OBTAIN PREDICTION ERRORS OF PREDICTED VALUES OF PIXELS OF 2ⁿ PIXEL GROUPS (n,k) OF nTH TIER AS SUBCLASS TEACHER DATA
S316
SET PREDICTION ERRORS AS TEACHER DATA AND SET PIXELS OF STUDENT IMAGE, FROM WHICH THE PREDICTION ERRORS ARE OBTAINED, AS STUDENT DATA TO OBTAIN CLASSIFICATION COEFFICIENTS cc(n,k) (k=0,1,...,2ⁿ-1) OF 2ⁿ CLASSES OF nTH TIER FOR CLASSIFYING PIXEL GROUPS (n,k) OF nTH TIER INTO TWO SUBCLASSES
S317
USE CLASSIFICATION COEFFICIENTS cc(n,k) OF nTH TIER TO SUBCLASSIFY PIXEL GROUPS (n,k) OF nTH TIER TO THEREBY CLASSIFY 2ⁿ PIXEL GROUPS (n,k) OF nTH TIER INTO PIXEL GROUPS k' (k'=0,1,...,2ⁿ⁺¹-1) OF 2ⁿ⁺¹ CLASSES OF (n+1)TH TIER
S318
n++
S319
SET CURRENT TIER n AS LAST TIER N, AND OUTPUT TAP COEFFICIENTS tc(N,0), tc(N,1), ..., tc(N,2ᴺ-1) OF NTH TIER OF 2ᴺ CLASSES AND CLASSIFICATION COEFFICIENTS FROM CLASSIFICATION COEFFICIENTS cc(0,0) OF 2⁰ CLASS OF 0TH TIER TO CLASSIFICATION COEFFICIENTS cc(N-1,0), cc(N-1,1), ..., cc(N-1,2ᴺ⁻¹-1) OF 2ᴺ⁻¹ CLASSES OF (N-1)TH TIER
END

FIG. 63

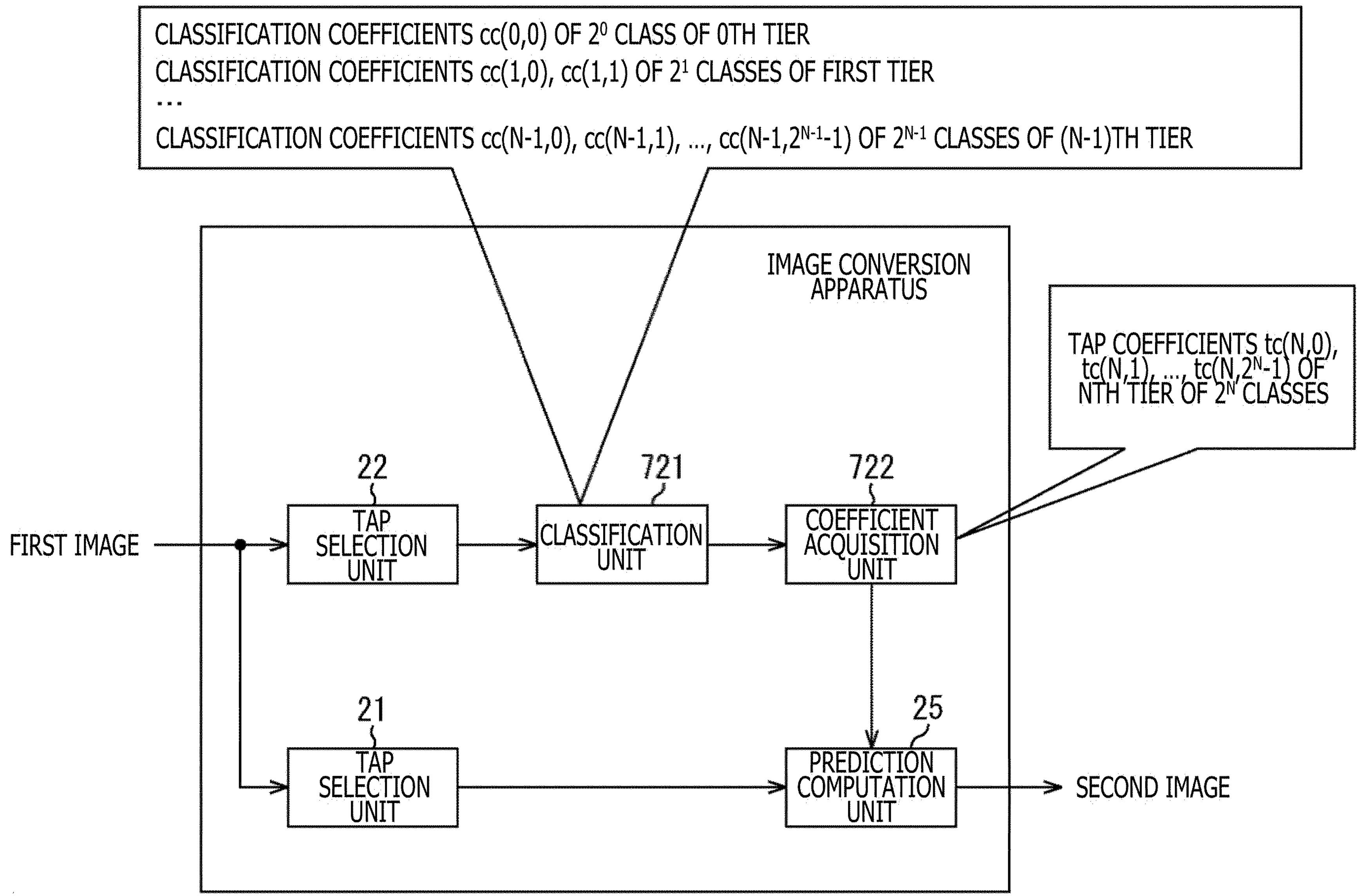
CLASSIFICATION COEFFICIENTS cc(0,0) OF $2^0$ CLASS OF 0TH TIER
CLASSIFICATION COEFFICIENTS cc(1,0), cc(1,1) OF $2^1$ CLASSES OF FIRST TIER
...
CLASSIFICATION COEFFICIENTS cc(N-1,0), cc(N-1,1), ..., cc(N-1,$2^{N-1}$-1) OF $2^{N-1}$ CLASSES OF (N-1)TH TIER
IMAGE CONVERSION APPARATUS
TAP COEFFICIENTS tc(N,0), tc(N,1), ..., tc(N,$2^N$-1) OF NTH TIER OF $2^N$ CLASSES
FIRST IMAGE
22
TAP SELECTION UNIT
721
CLASSIFICATION UNIT
722
COEFFICIENT ACQUISITION UNIT
21
TAP SELECTION UNIT
25
PREDICTION COMPUTATION UNIT
SECOND IMAGE

FIG. 64

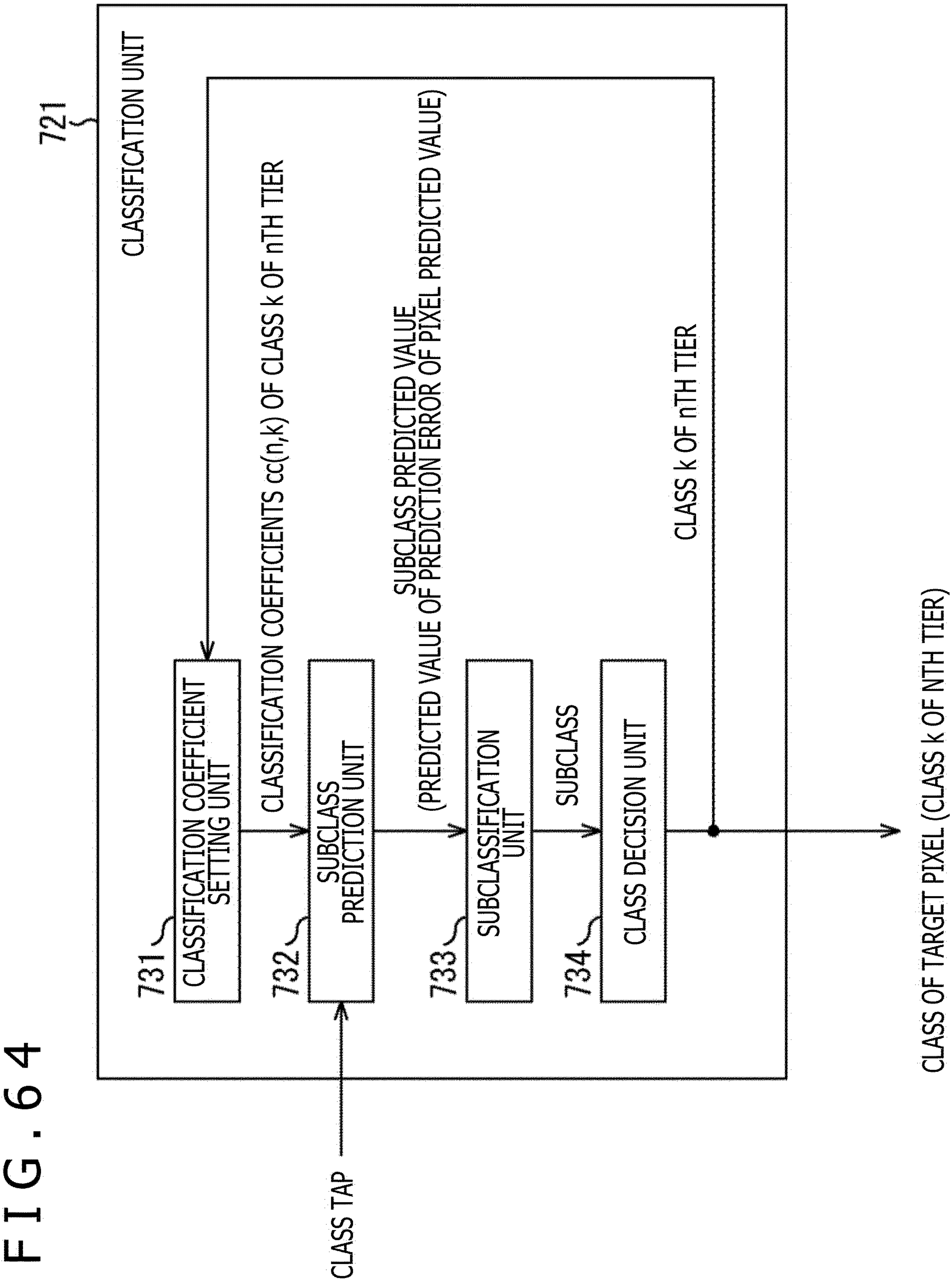

721
CLASSIFICATION UNIT
731
CLASSIFICATION COEFFICIENT SETTING UNIT
CLASSIFICATION COEFFICIENTS cc(n,k) OF CLASS k OF nTH TIER
732
SUBCLASS PREDICTION UNIT
SUBCLASS PREDICTED VALUE
(PREDICTED VALUE OF PREDICTION ERROR OF PIXEL PREDICTED VALUE)
733
SUBCLASSIFICATION UNIT
SUBCLASS
734
CLASS DECISION UNIT
CLASS k OF nTH TIER
CLASS TAP
CLASS OF TARGET PIXEL (CLASS k OF NTH TIER)

FIG. 65

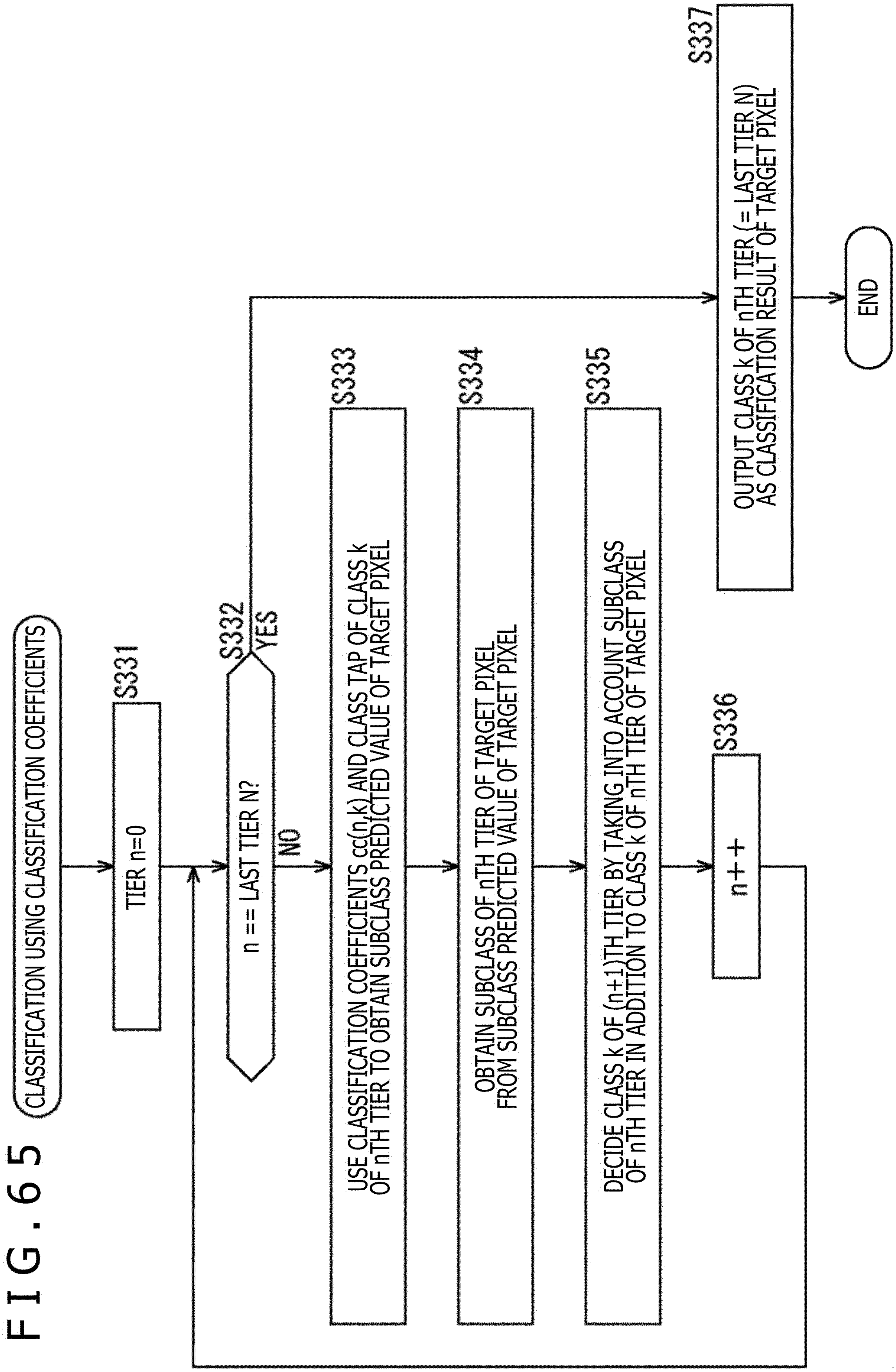
CLASSIFICATION USING CLASSIFICATION COEFFICIENTS
S331
TIER n=0
S332
n == LAST TIER N?
YES
NO
S333
USE CLASSIFICATION COEFFICIENTS cc(n,k) AND CLASS TAP OF CLASS k OF nTH TIER TO OBTAIN SUBCLASS PREDICTED VALUE OF TARGET PIXEL
S334
OBTAIN SUBCLASS OF nTH TIER OF TARGET PIXEL FROM SUBCLASS PREDICTED VALUE OF TARGET PIXEL
S335
DECIDE CLASS k OF (n+1)TH TIER BY TAKING INTO ACCOUNT SUBCLASS OF nTH TIER IN ADDITION TO CLASS k OF nTH TIER OF TARGET PIXEL
S336
n++
S337
OUTPUT CLASS k OF nTH TIER (= LAST TIER N) AS CLASSIFICATION RESULT OF TARGET PIXEL
END

FIG. 66

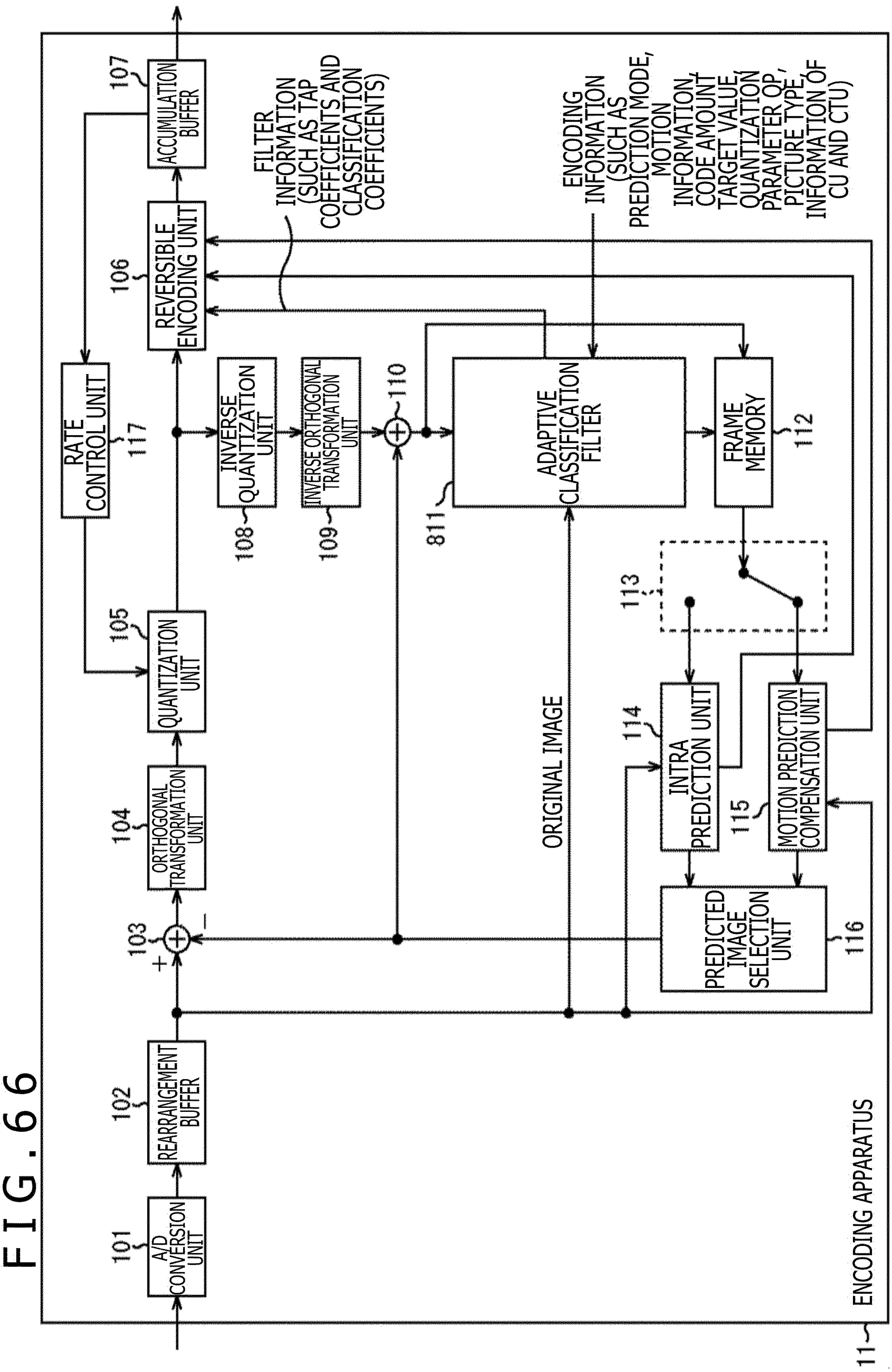
101
A/D CONVERSION UNIT
102
REARRANGEMENT BUFFER
103
+
−
104
ORTHOGONAL TRANSFORMATION UNIT
105
QUANTIZATION UNIT
106
REVERSIBLE ENCODING UNIT
107
ACCUMULATION BUFFER
117
RATE CONTROL UNIT
108
INVERSE QUANTIZATION UNIT
109
INVERSE ORTHOGONAL TRANSFORMATION UNIT
110
811
ADAPTIVE CLASSIFICATION FILTER
112
FRAME MEMORY
113
114
INTRA PREDICTION UNIT
115
MOTION PREDICTION COMPENSATION UNIT
116
PREDICTED IMAGE SELECTION UNIT
ORIGINAL IMAGE
FILTER INFORMATION (SUCH AS TAP COEFFICIENTS AND CLASSIFICATION COEFFICIENTS)
ENCODING INFORMATION (SUCH AS PREDICTION MODE, MOTION INFORMATION, CODE AMOUNT TARGET VALUE, QUANTIZATION PARAMETER QP, PICTURE TYPE, INFORMATION OF CU AND CTU)
ENCODING APPARATUS
11

FIG. 67

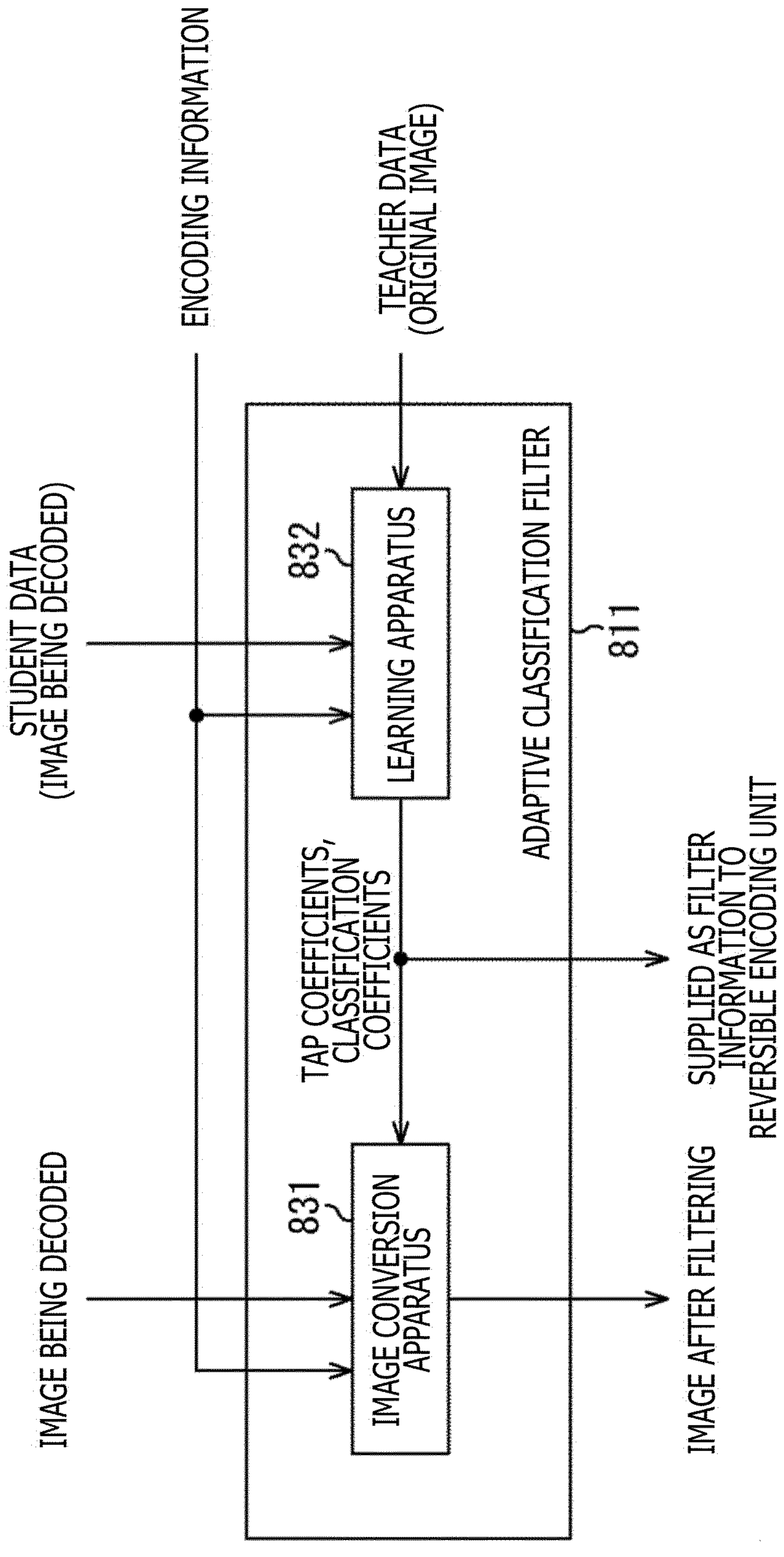
ENCODING INFORMATION
TEACHER DATA (ORIGINAL IMAGE)
STUDENT DATA (IMAGE BEING DECODED)
832
LEARNING APPARATUS
ADAPTIVE CLASSIFICATION FILTER
811
TAP COEFFICIENTS, CLASSIFICATION COEFFICIENTS
SUPPLIED AS FILTER INFORMATION TO REVERSIBLE ENCODING UNIT
IMAGE BEING DECODED
831
IMAGE CONVERSION APPARATUS
IMAGE AFTER FILTERING

FIG. 68

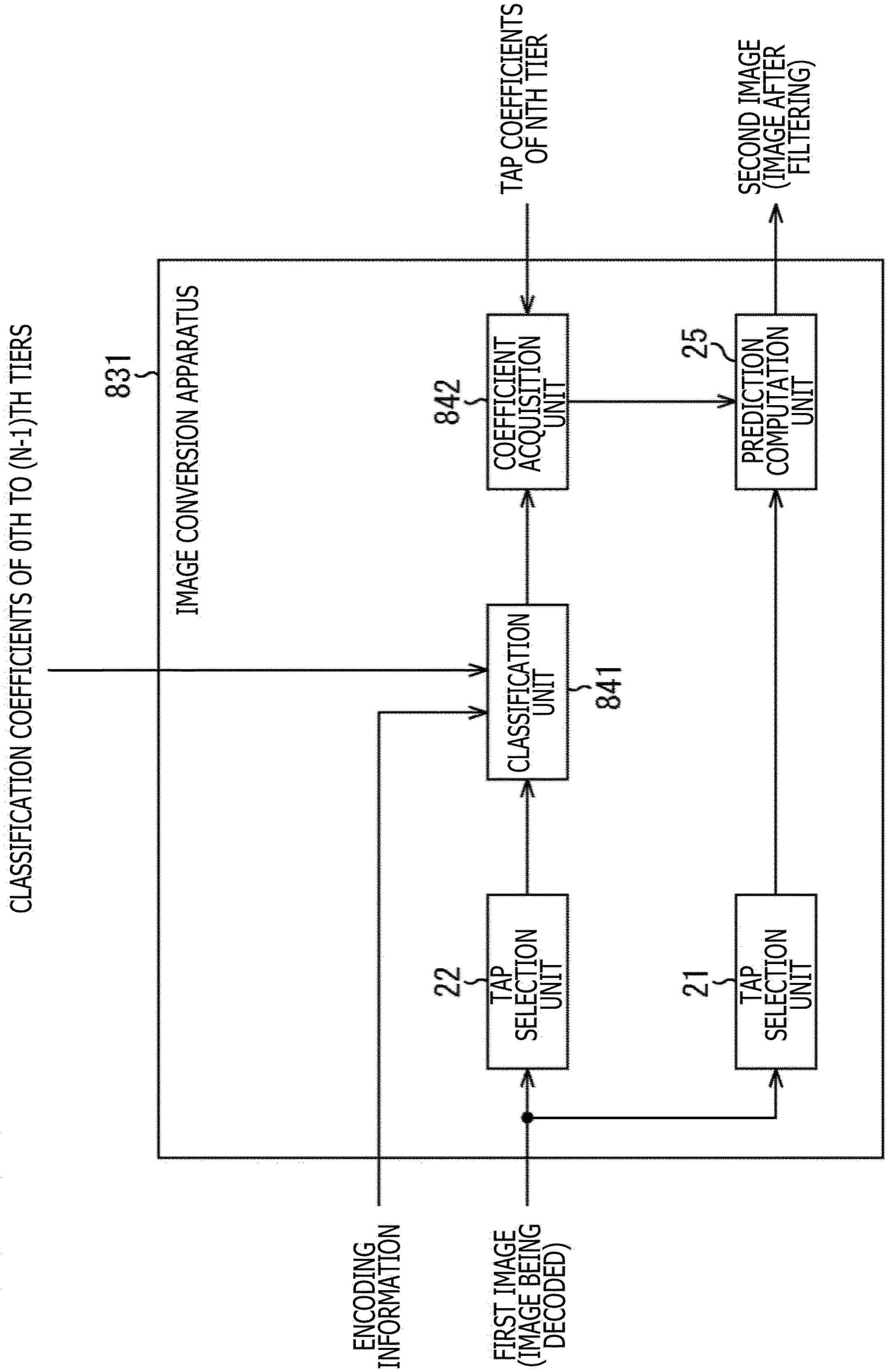
CLASSIFICATION COEFFICIENTS OF 0TH TO (N-1)TH TIERS
831
IMAGE CONVERSION APPARATUS
TAP COEFFICIENTS OF NTH TIER
SECOND IMAGE (IMAGE AFTER FILTERING)
842
COEFFICIENT ACQUISITION UNIT
25
PREDICTION COMPUTATION UNIT
CLASSIFICATION UNIT
841
22
TAP SELECTION UNIT
21
TAP SELECTION UNIT
ENCODING INFORMATION
FIRST IMAGE (IMAGE BEING DECODED)

FIG. 69

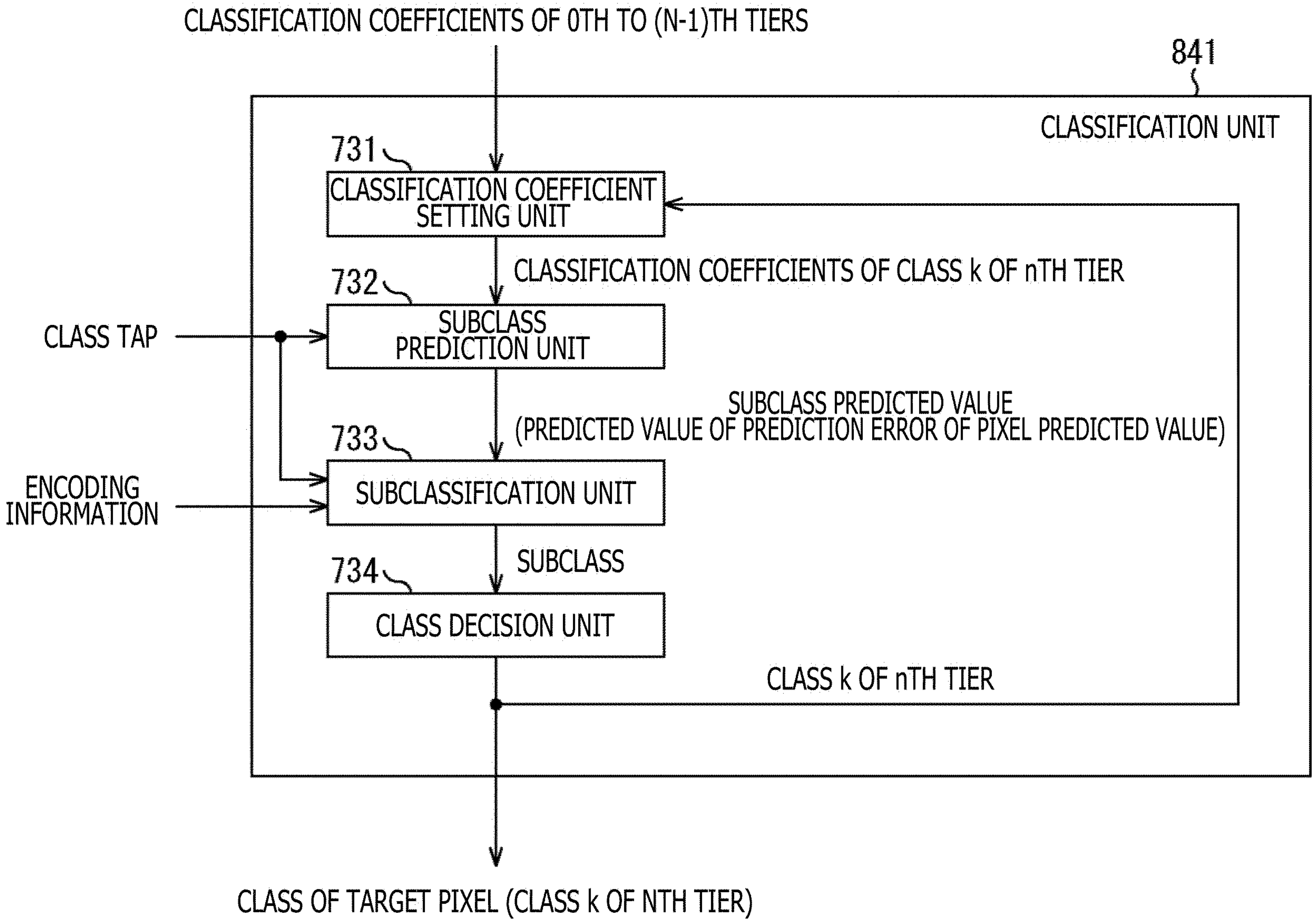
CLASSIFICATION COEFFICIENTS OF 0TH TO (N-1)TH TIERS
841
CLASSIFICATION UNIT
731
CLASSIFICATION COEFFICIENT SETTING UNIT
CLASSIFICATION COEFFICIENTS OF CLASS k OF nTH TIER
732
SUBCLASS PREDICTION UNIT
CLASS TAP
SUBCLASS PREDICTED VALUE
(PREDICTED VALUE OF PREDICTION ERROR OF PIXEL PREDICTED VALUE)
733
SUBCLASSIFICATION UNIT
ENCODING INFORMATION
SUBCLASS
734
CLASS DECISION UNIT
CLASS k OF nTH TIER
CLASS OF TARGET PIXEL (CLASS k OF NTH TIER)

FIG. 70

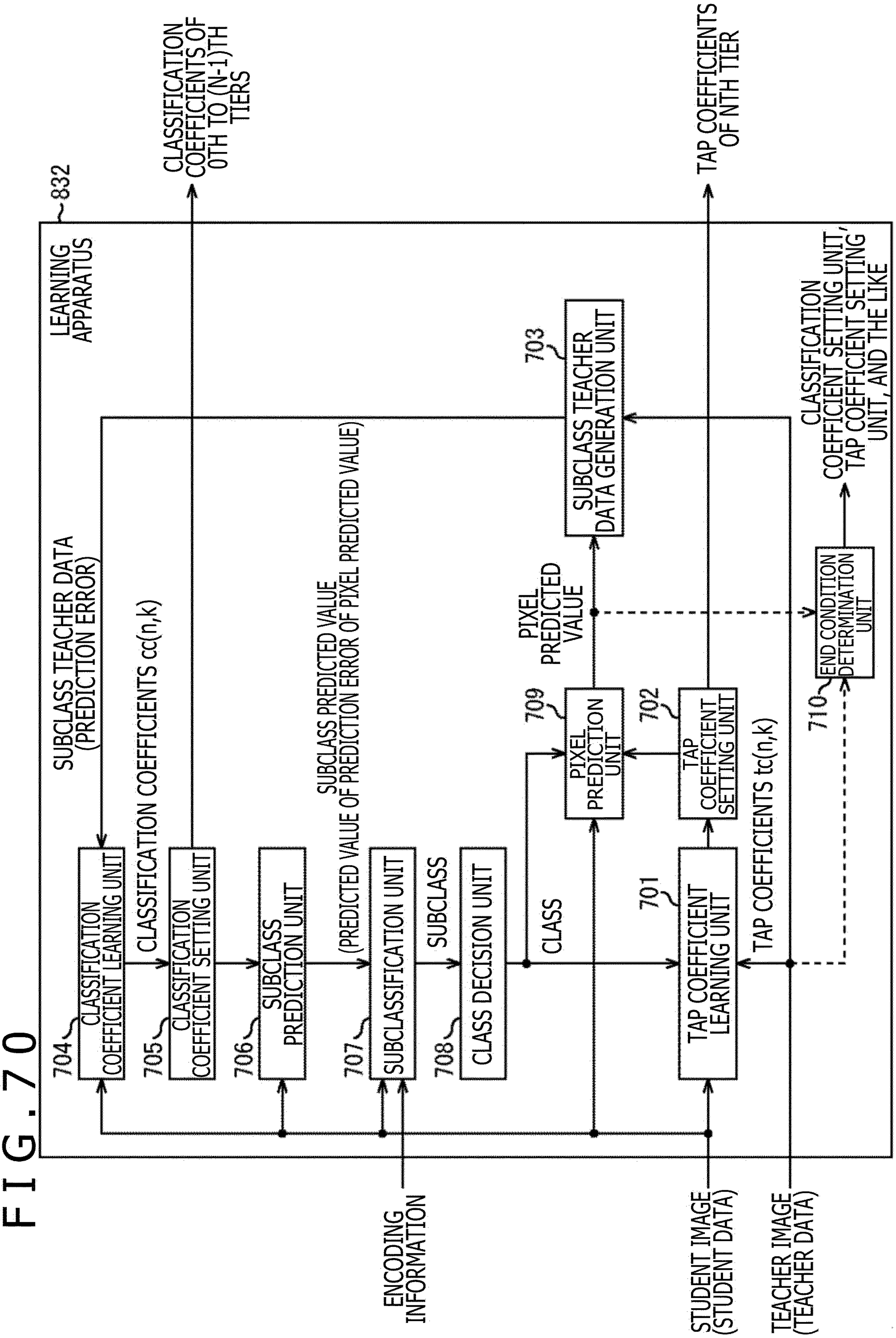
832
LEARNING APPARATUS
CLASSIFICATION COEFFICIENTS OF 0TH TO (N-1)TH TIERS
TAP COEFFICIENTS OF NTH TIER
SUBCLASS TEACHER DATA (PREDICTION ERROR)
704
CLASSIFICATION COEFFICIENT LEARNING UNIT
CLASSIFICATION COEFFICIENTS cc(n,k)
705
CLASSIFICATION COEFFICIENT SETTING UNIT
706
SUBCLASS PREDICTION UNIT
SUBCLASS PREDICTED VALUE (PREDICTED VALUE OF PREDICTION ERROR OF PIXEL PREDICTED VALUE)
707
SUBCLASSIFICATION UNIT
SUBCLASS
708
CLASS DECISION UNIT
CLASS
709
PIXEL PREDICTION UNIT
PIXEL PREDICTED VALUE
703
SUBCLASS TEACHER DATA GENERATION UNIT
701
TAP COEFFICIENT LEARNING UNIT
TAP COEFFICIENTS
702
TAP COEFFICIENT SETTING UNIT
TAP COEFFICIENTS tc(n,k)
710
END CONDITION DETERMINATION UNIT
CLASSIFICATION COEFFICIENT SETTING UNIT, TAP COEFFICIENT SETTING UNIT, AND THE LIKE
ENCODING INFORMATION
STUDENT IMAGE (STUDENT DATA)
TEACHER IMAGE (TEACHER DATA)

FIG. 71

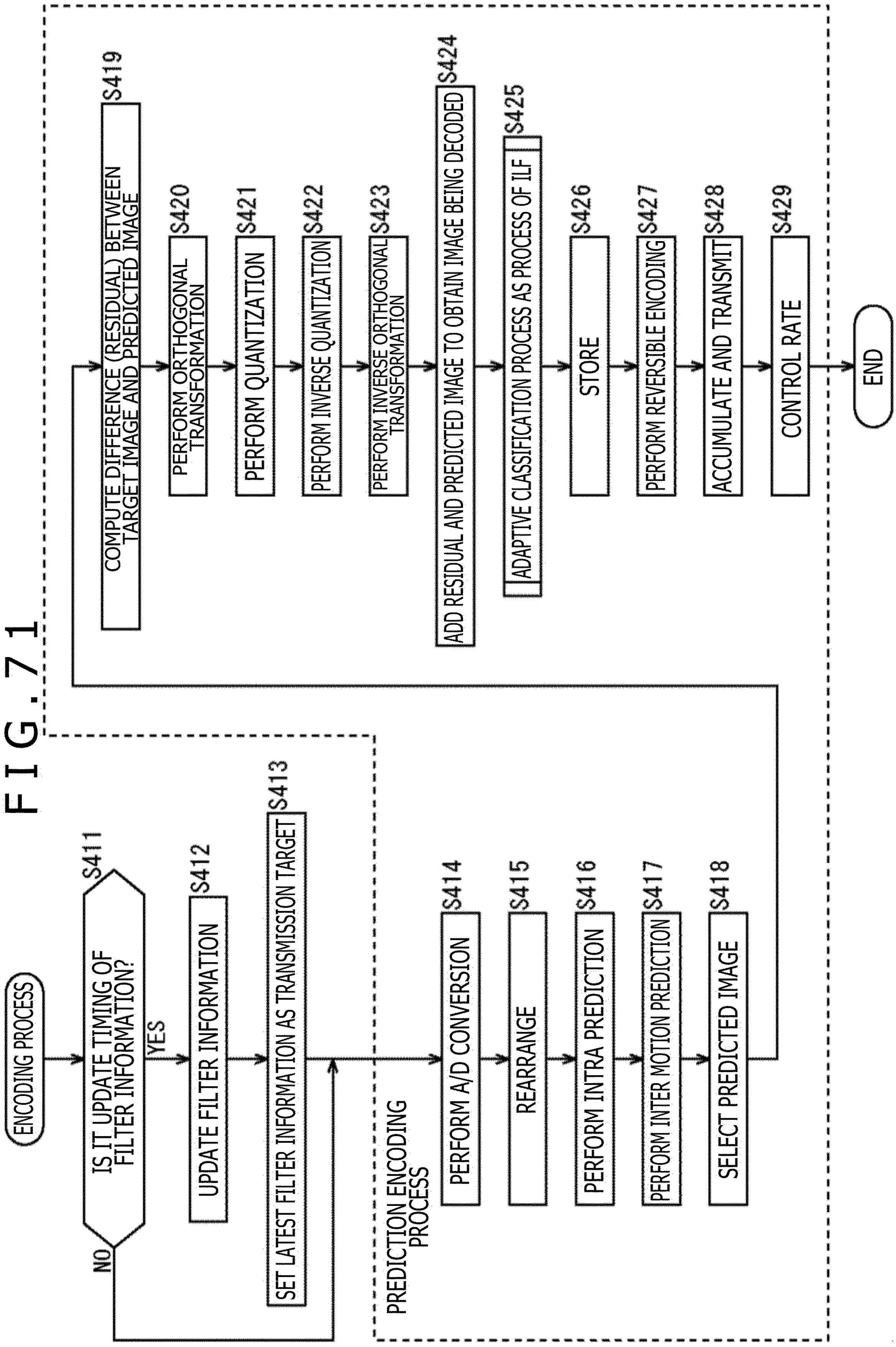
ENCODING PROCESS
IS IT UPDATE TIMING OF FILTER INFORMATION?
S411
YES
NO
UPDATE FILTER INFORMATION
S412
SET LATEST FILTER INFORMATION AS TRANSMISSION TARGET
S413
PREDICTION ENCODING PROCESS
PERFORM A/D CONVERSION
S414
REARRANGE
S415
PERFORM INTRA PREDICTION
S416
PERFORM INTER MOTION PREDICTION
S417
SELECT PREDICTED IMAGE
S418
COMPUTE DIFFERENCE (RESIDUAL) BETWEEN TARGET IMAGE AND PREDICTED IMAGE
S419
PERFORM ORTHOGONAL TRANSFORMATION
S420
PERFORM QUANTIZATION
S421
PERFORM INVERSE QUANTIZATION
S422
PERFORM INVERSE ORTHOGONAL TRANSFORMATION
S423
ADD RESIDUAL AND PREDICTED IMAGE TO OBTAIN IMAGE BEING DECODED
S424
ADAPTIVE CLASSIFICATION PROCESS AS PROCESS OF ILF
S425
STORE
S426
PERFORM REVERSIBLE ENCODING
S427
ACCUMULATE AND TRANSMIT
S428
CONTROL RATE
S429
END

FIG.72

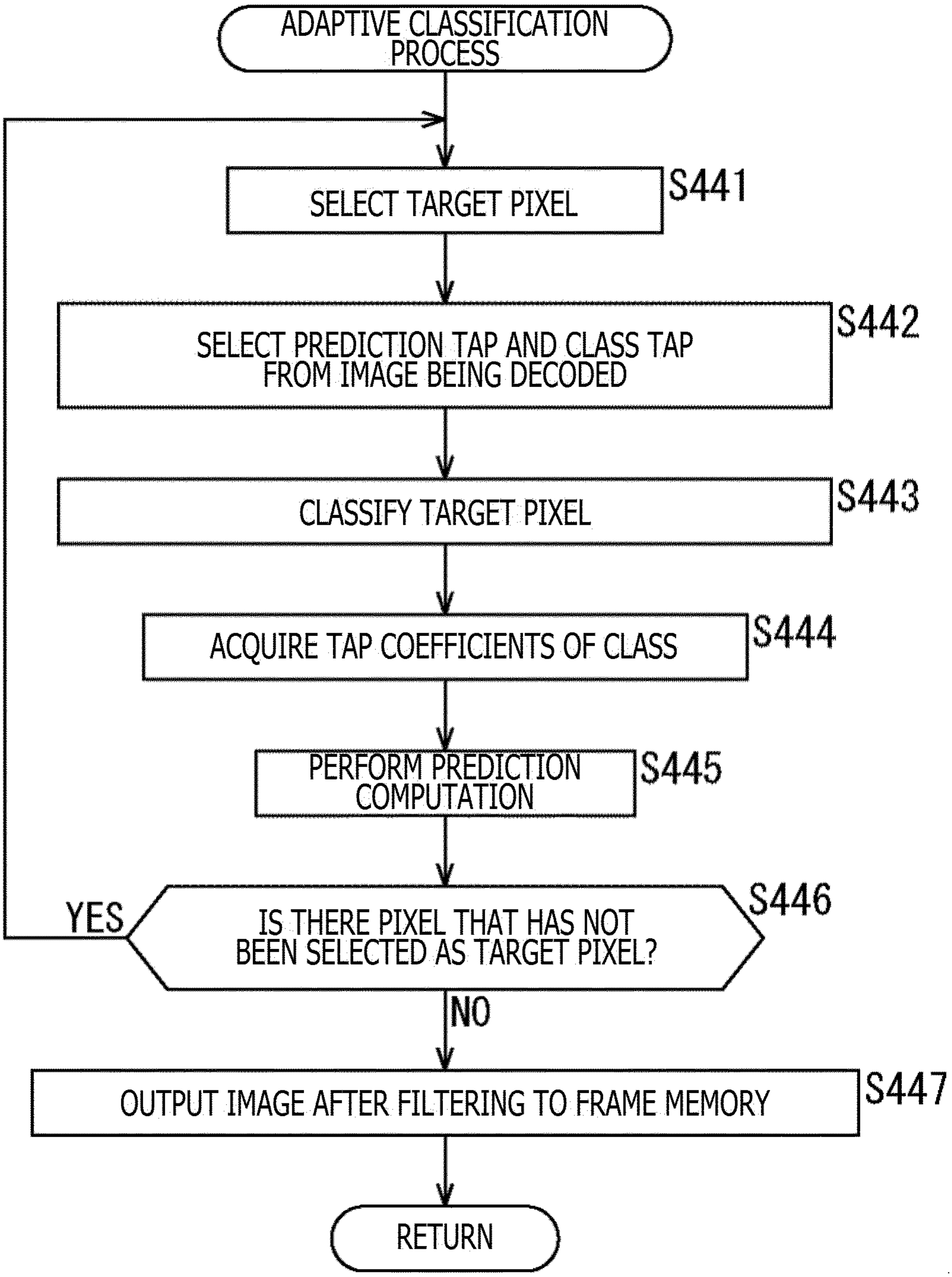
ADAPTIVE CLASSIFICATION PROCESS
SELECT TARGET PIXEL
S441
SELECT PREDICTION TAP AND CLASS TAP FROM IMAGE BEING DECODED
S442
CLASSIFY TARGET PIXEL
S443
ACQUIRE TAP COEFFICIENTS OF CLASS
S444
PERFORM PREDICTION COMPUTATION
S445
IS THERE PIXEL THAT HAS NOT BEEN SELECTED AS TARGET PIXEL?
S446
YES
NO
OUTPUT IMAGE AFTER FILTERING TO FRAME MEMORY
S447
RETURN

FIG. 73

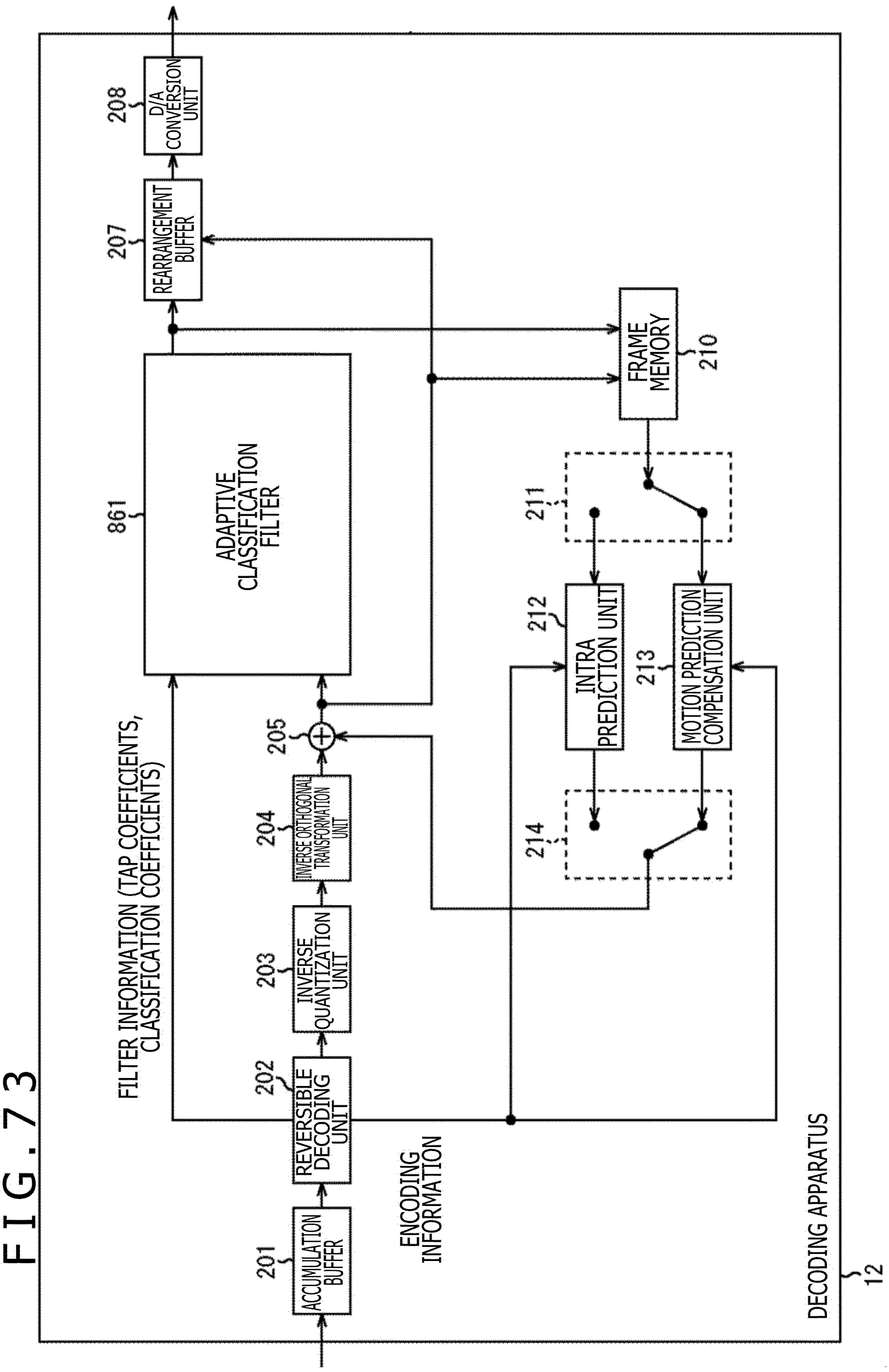
201
ACCUMULATION BUFFER
202
REVERSIBLE DECODING UNIT
203
INVERSE QUANTIZATION UNIT
204
INVERSE ORTHOGONAL TRANSFORMATION UNIT
205
861
ADAPTIVE CLASSIFICATION FILTER
207
REARRANGEMENT BUFFER
208
D/A CONVERSION UNIT
210
FRAME MEMORY
211
212
INTRA PREDICTION UNIT
213
MOTION PREDICTION COMPENSATION UNIT
214
FILTER INFORMATION (TAP COEFFICIENTS, CLASSIFICATION COEFFICIENTS)
ENCODING INFORMATION
DECODING APPARATUS
12

FIG. 74

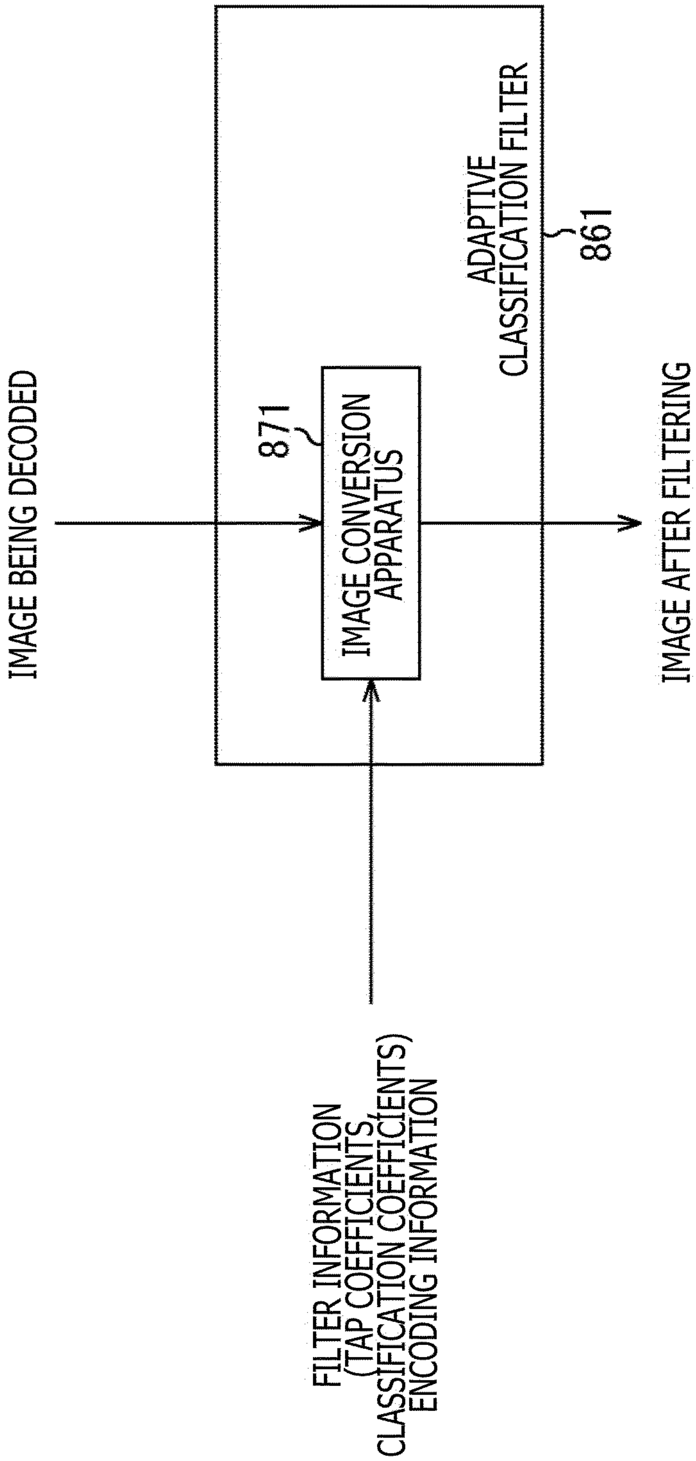
IMAGE BEING DECODED
871
IMAGE CONVERSION APPARATUS
ADAPTIVE CLASSIFICATION FILTER
861
IMAGE AFTER FILTERING
FILTER INFORMATION (TAP COEFFICIENTS, CLASSIFICATION COEFFICIENTS)
ENCODING INFORMATION

FIG. 75

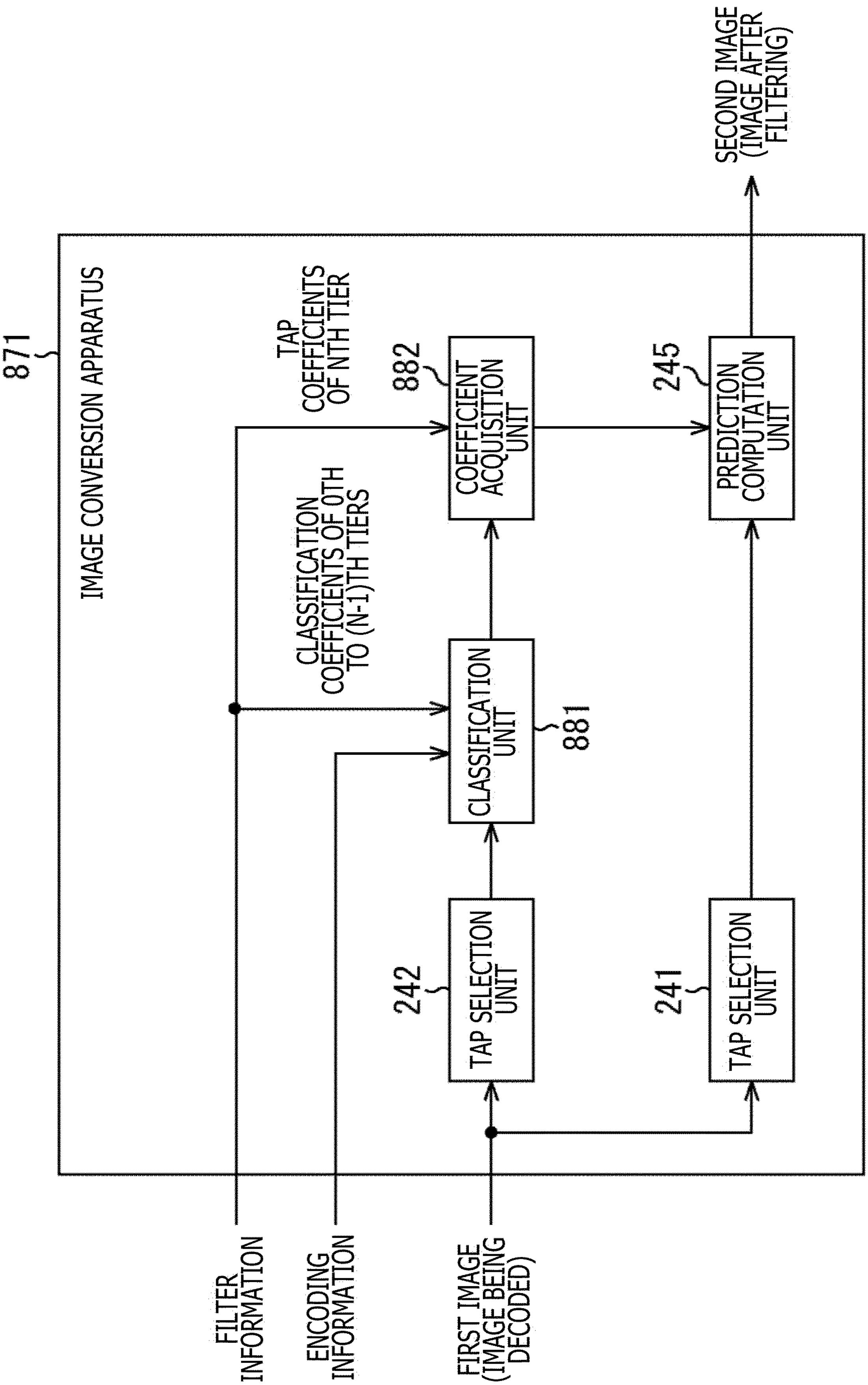
871
IMAGE CONVERSION APPARATUS
FILTER INFORMATION
ENCODING INFORMATION
FIRST IMAGE (IMAGE BEING DECODED)
242
TAP SELECTION UNIT
241
TAP SELECTION UNIT
CLASSIFICATION UNIT
881
CLASSIFICATION COEFFICIENTS OF 0TH TO (N-1)TH TIERS
TAP COEFFICIENTS OF NTH TIER
882
COEFFICIENT ACQUISITION UNIT
245
PREDICTION COMPUTATION UNIT
SECOND IMAGE (IMAGE AFTER FILTERING)

FIG.76

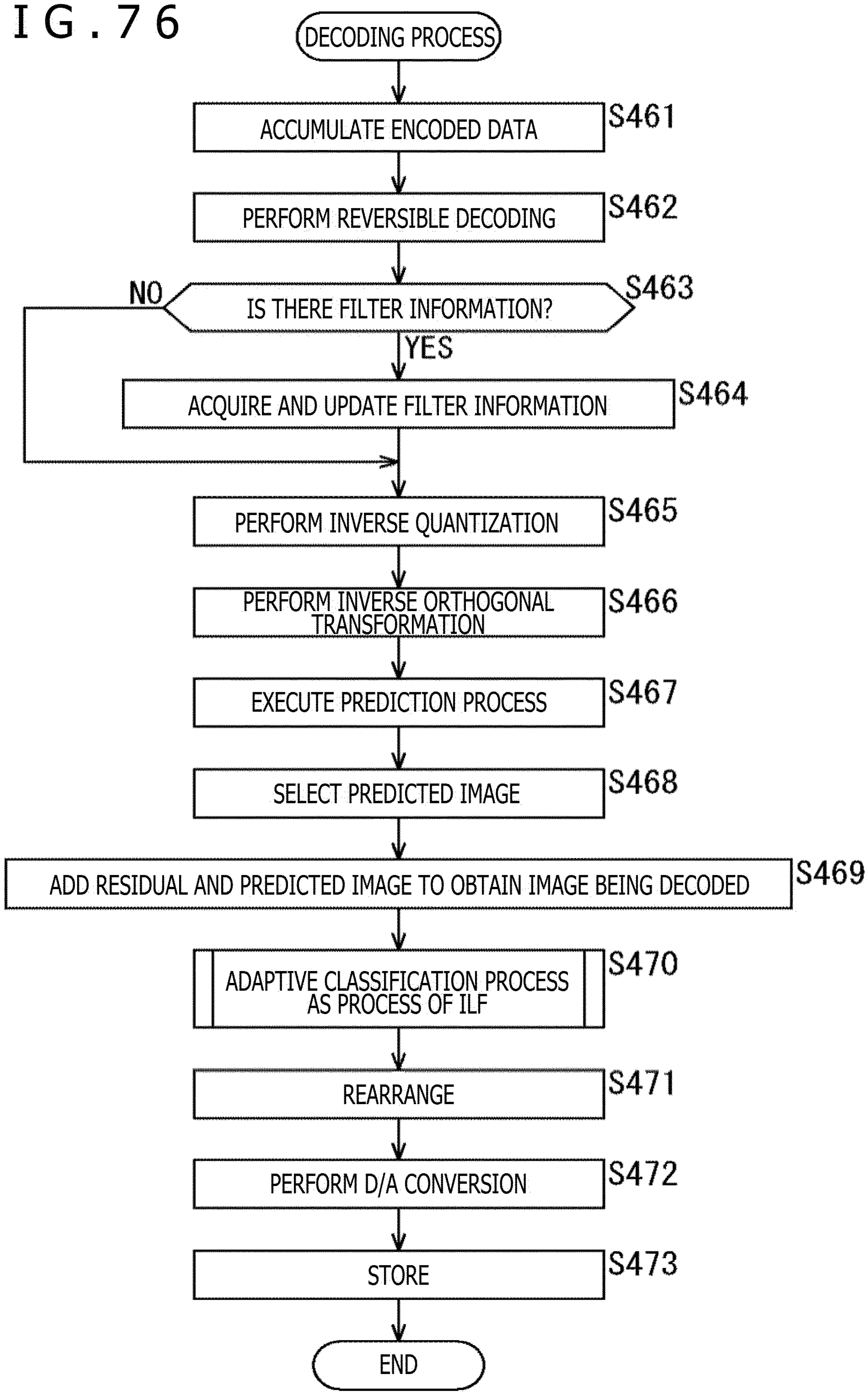
DECODING PROCESS
ACCUMULATE ENCODED DATA
S461
PERFORM REVERSIBLE DECODING
S462
IS THERE FILTER INFORMATION?
S463
NO
YES
ACQUIRE AND UPDATE FILTER INFORMATION
S464
PERFORM INVERSE QUANTIZATION
S465
PERFORM INVERSE ORTHOGONAL TRANSFORMATION
S466
EXECUTE PREDICTION PROCESS
S467
SELECT PREDICTED IMAGE
S468
ADD RESIDUAL AND PREDICTED IMAGE TO OBTAIN IMAGE BEING DECODED
S469
ADAPTIVE CLASSIFICATION PROCESS AS PROCESS OF ILF
S470
REARRANGE
S471
PERFORM D/A CONVERSION
S472
STORE
S473
END

FIG.77

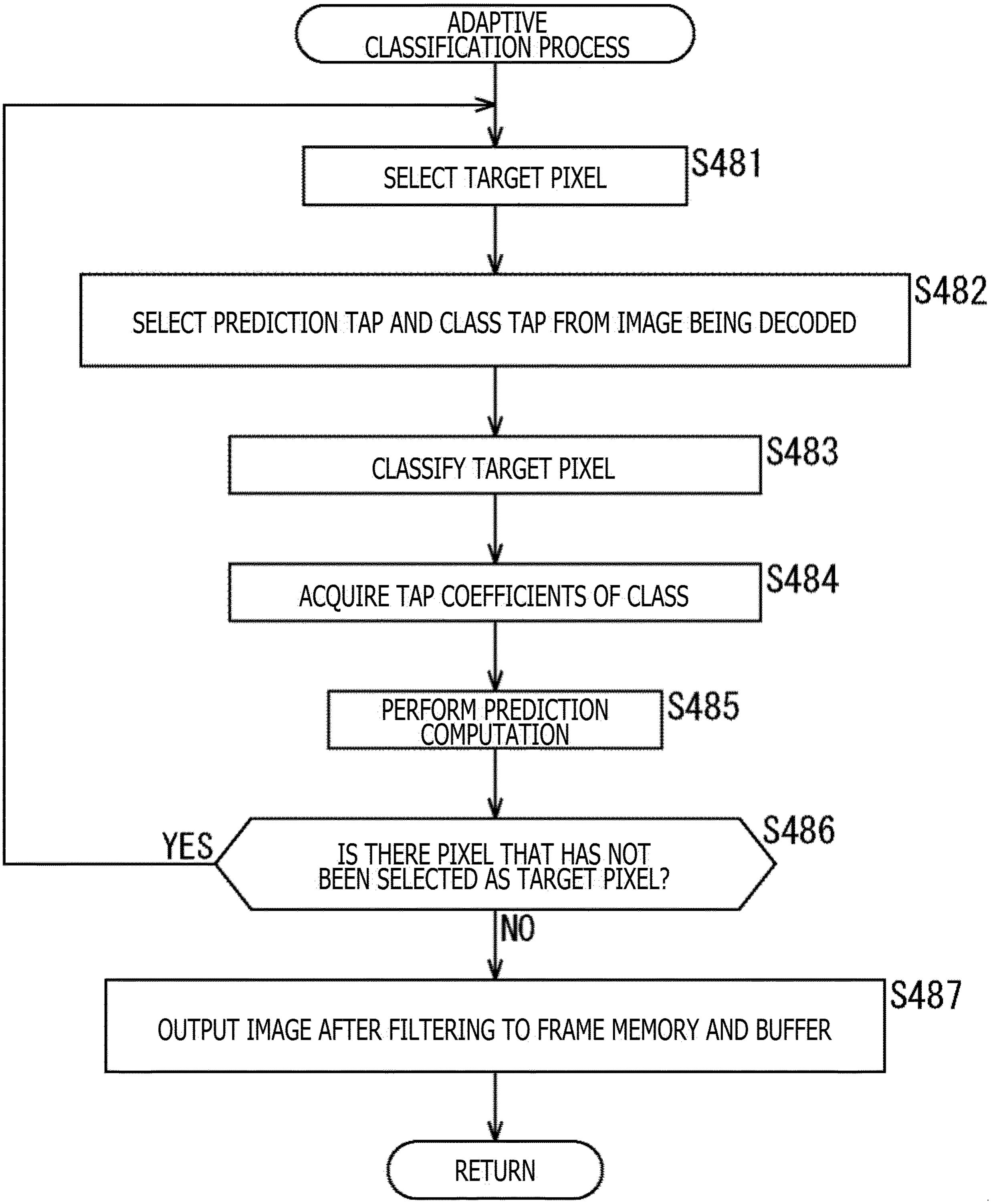
ADAPTIVE CLASSIFICATION PROCESS
SELECT TARGET PIXEL
S481
SELECT PREDICTION TAP AND CLASS TAP FROM IMAGE BEING DECODED
S482
CLASSIFY TARGET PIXEL
S483
ACQUIRE TAP COEFFICIENTS OF CLASS
S484
PERFORM PREDICTION COMPUTATION
S485
IS THERE PIXEL THAT HAS NOT BEEN SELECTED AS TARGET PIXEL?
S486
YES
NO
OUTPUT IMAGE AFTER FILTERING TO FRAME MEMORY AND BUFFER
S487
RETURN

FIG. 78

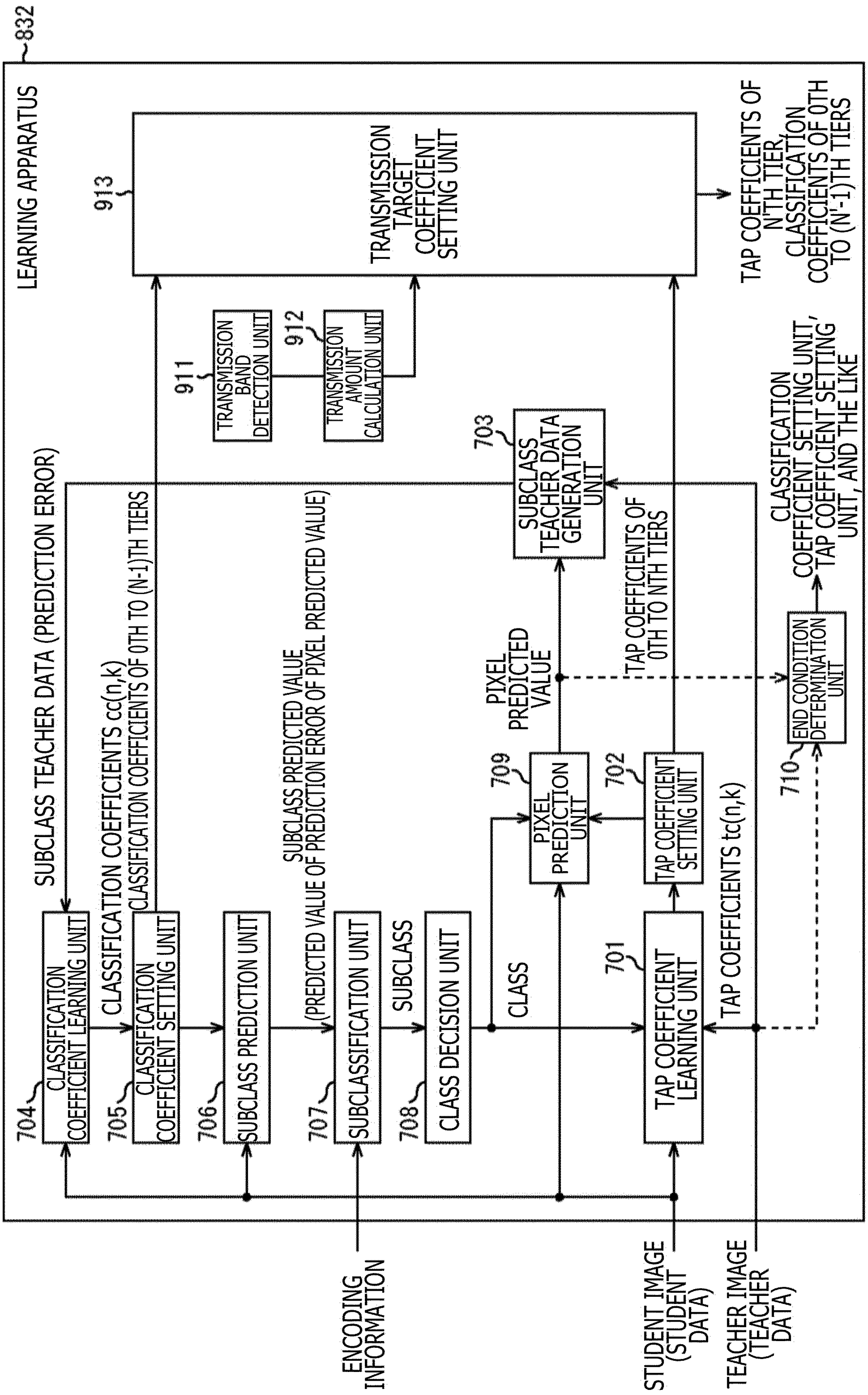
832
LEARNING APPARATUS
913
TRANSMISSION TARGET COEFFICIENT SETTING UNIT
TAP COEFFICIENTS OF N'TH TIER, CLASSIFICATION COEFFICIENTS OF 0TH TO (N'-1)TH TIERS
911
TRANSMISSION BAND DETECTION UNIT
912
TRANSMISSION AMOUNT CALCULATION UNIT
SUBCLASS TEACHER DATA (PREDICTION ERROR)
704
CLASSIFICATION COEFFICIENT LEARNING UNIT
CLASSIFICATION COEFFICIENTS cc(n,k)
CLASSIFICATION COEFFICIENTS OF 0TH TO (N-1)TH TIERS
705
CLASSIFICATION COEFFICIENT SETTING UNIT
706
SUBCLASS PREDICTION UNIT
SUBCLASS PREDICTED VALUE
(PREDICTED VALUE OF PREDICTION ERROR OF PIXEL PREDICTED VALUE)
707
SUBCLASSIFICATION UNIT
SUBCLASS
708
CLASS DECISION UNIT
CLASS
703
SUBCLASS TEACHER DATA GENERATION UNIT
PIXEL PREDICTED VALUE
709
PIXEL PREDICTION UNIT
TAP COEFFICIENTS OF 0TH TO NTH TIERS
702
TAP COEFFICIENT SETTING UNIT
TAP COEFFICIENTS tc(n,k)
701
TAP COEFFICIENT LEARNING UNIT
TAP COEFFICIENTS
710
END CONDITION DETERMINATION UNIT
CLASSIFICATION COEFFICIENT SETTING UNIT, TAP COEFFICIENT SETTING UNIT, AND THE LIKE
ENCODING INFORMATION
STUDENT IMAGE (STUDENT DATA)
TEACHER IMAGE (TEACHER DATA)

FIG. 79

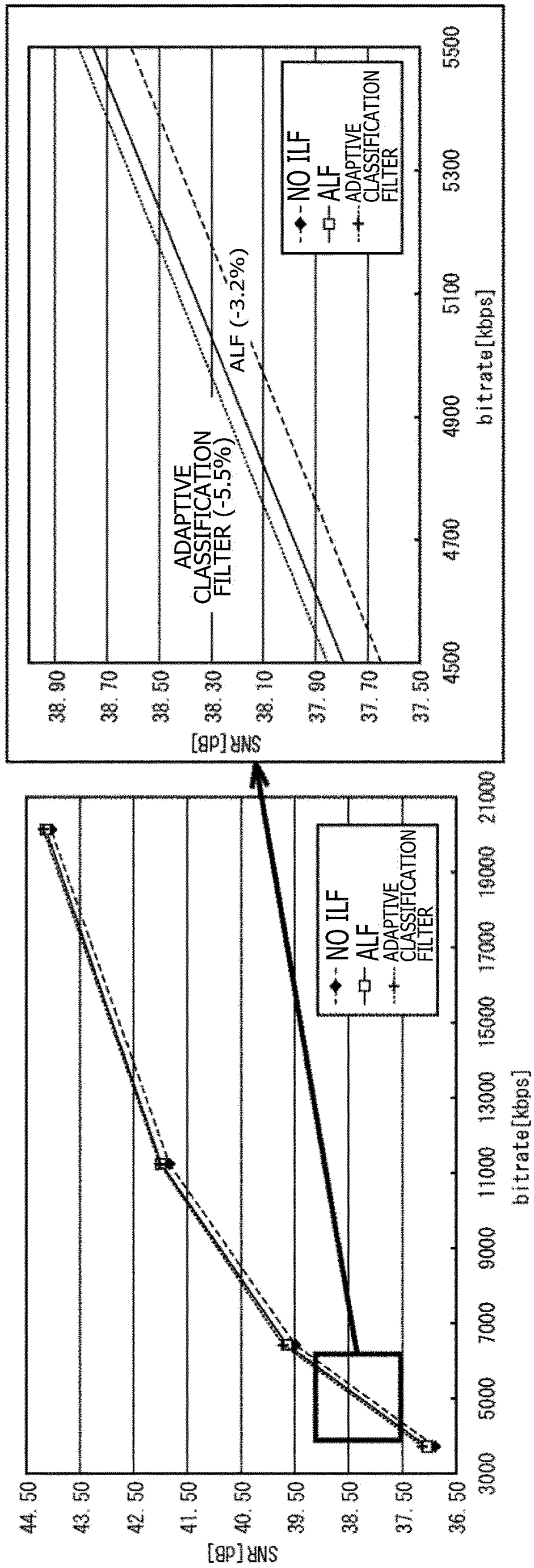
SNR[dB]
44.50
43.50
42.50
41.50
40.50
39.50
38.50
37.50
36.50
3000
5000
7000
9000
11000
13000
15000
17000
19000
21000
bitrate[kbps]
NO ILF
ALF
ADAPTIVE CLASSIFICATION FILTER
38.90
38.70
38.50
38.30
38.10
37.90
37.70
37.50
4500
4700
4900
5100
5300
5500
ADAPTIVE CLASSIFICATION FILTER (-5.5%)
ALF (-3.2%)

FIG.80

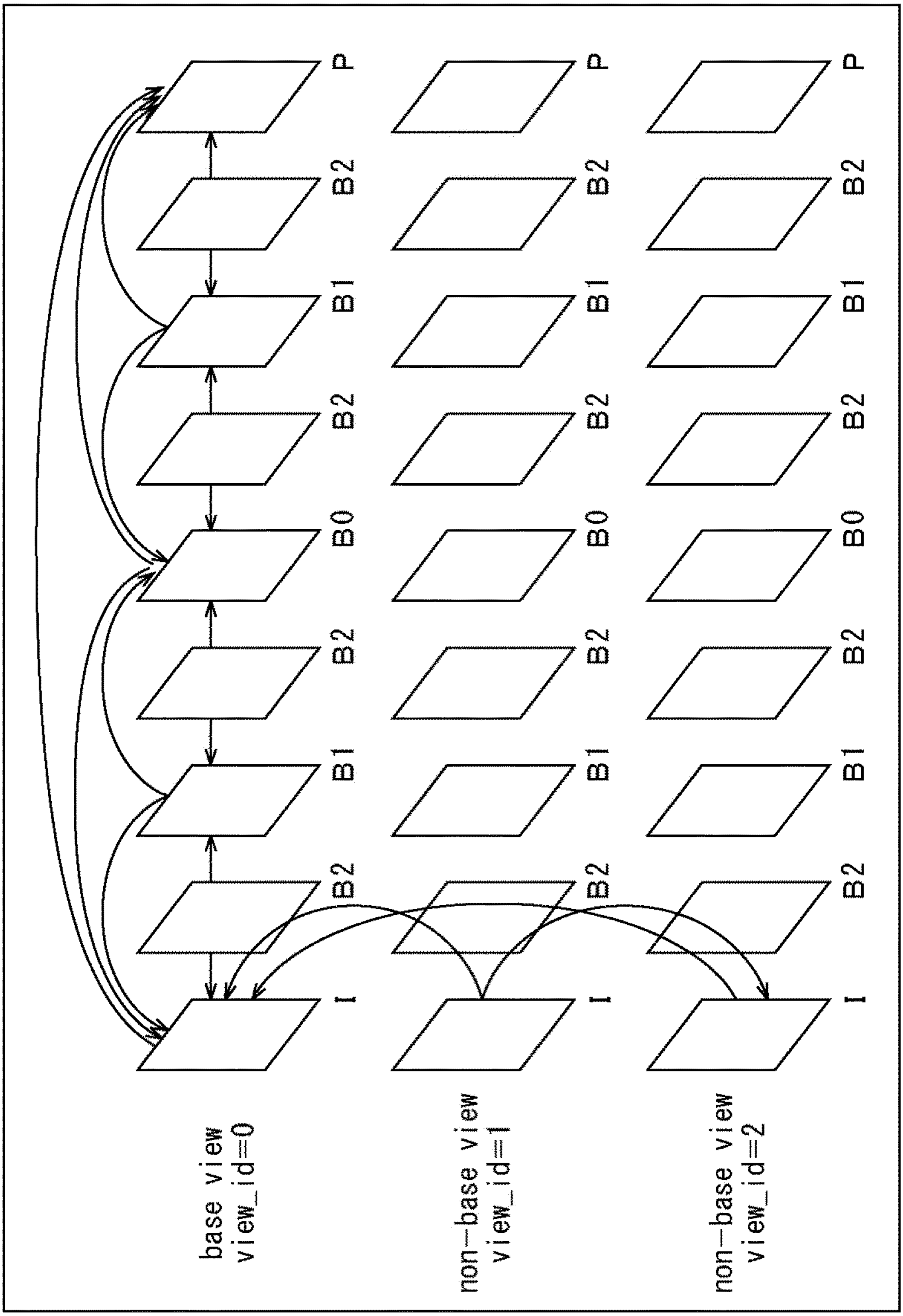
base view
view_id=0
non-base view
view_id=1
non-base view
view_id=2
I
B2
B1
B2
B0
B2
B1
B2
P

FIG.81

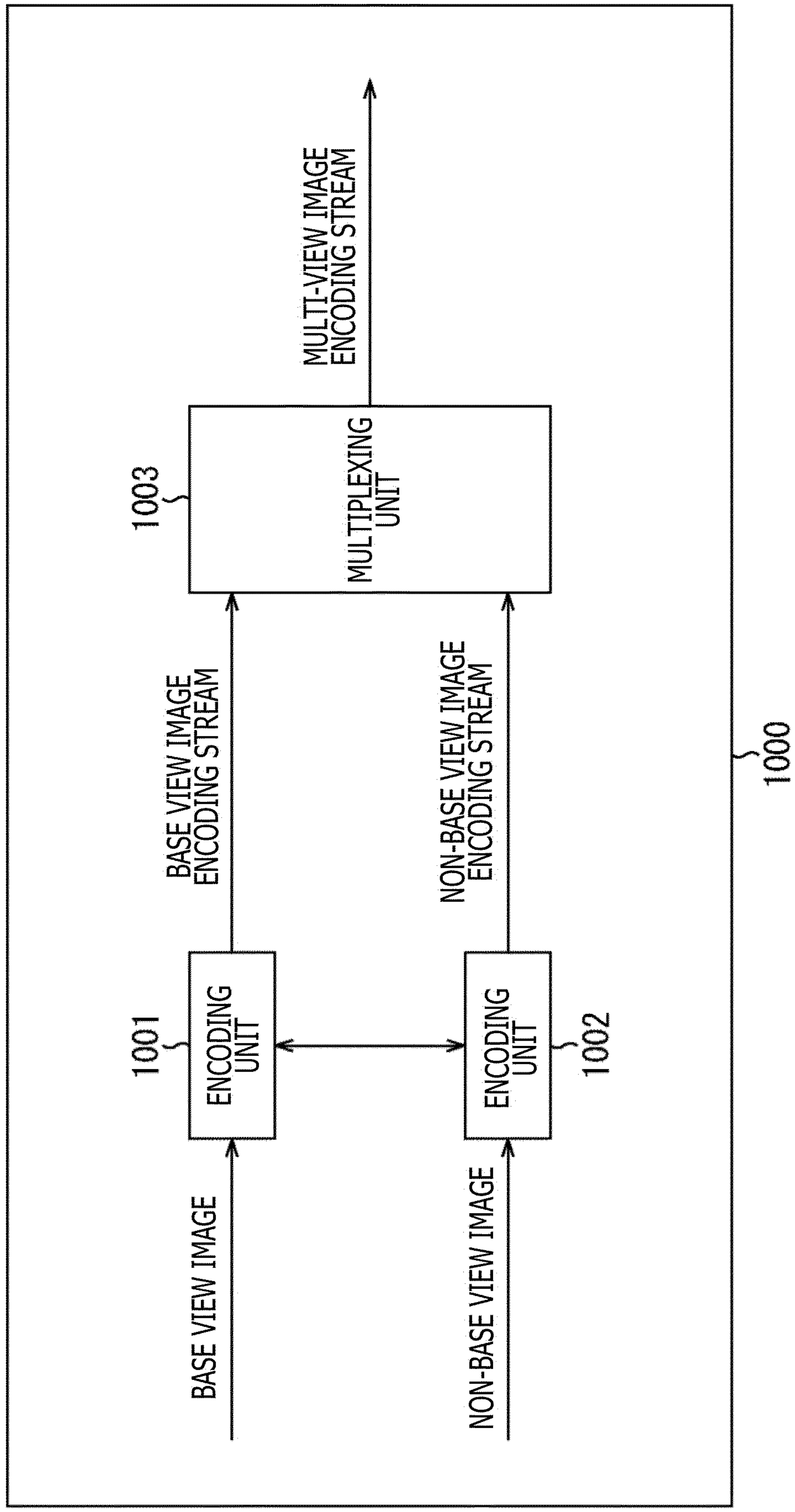
BASE VIEW IMAGE
NON-BASE VIEW IMAGE
ENCODING UNIT
1001
ENCODING UNIT
1002
BASE VIEW IMAGE ENCODING STREAM
NON-BASE VIEW IMAGE ENCODING STREAM
MULTIPLEXING UNIT
1003
MULTI-VIEW IMAGE ENCODING STREAM
1000

FIG. 82

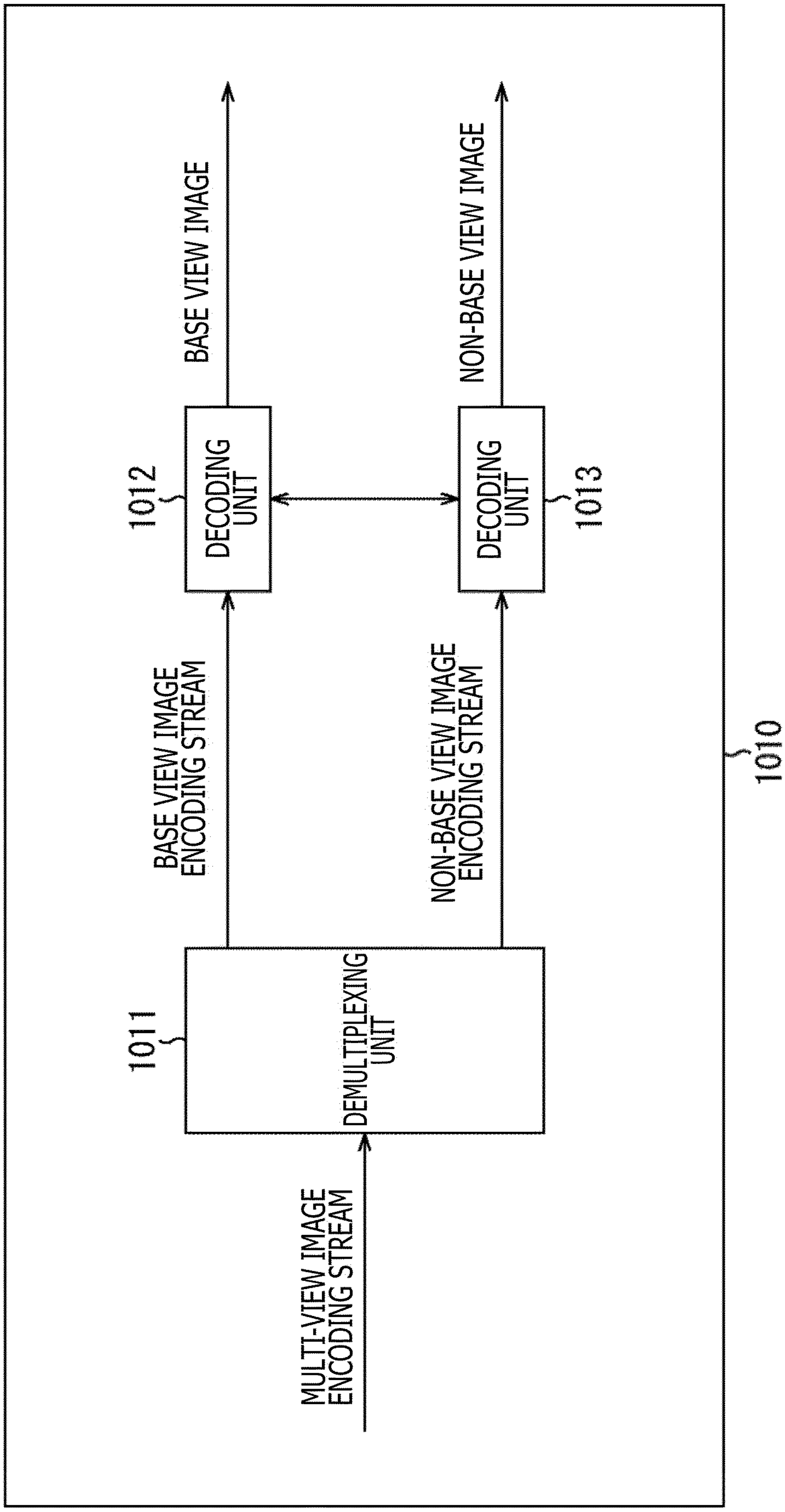
MULTI-VIEW IMAGE
ENCODING STREAM
1011
DEMULTIPLEXING
UNIT
BASE VIEW IMAGE
ENCODING STREAM
NON-BASE VIEW IMAGE
ENCODING STREAM
1012
DECODING
UNIT
1013
DECODING
UNIT
BASE VIEW IMAGE
NON-BASE VIEW IMAGE
1010

FIG. 83

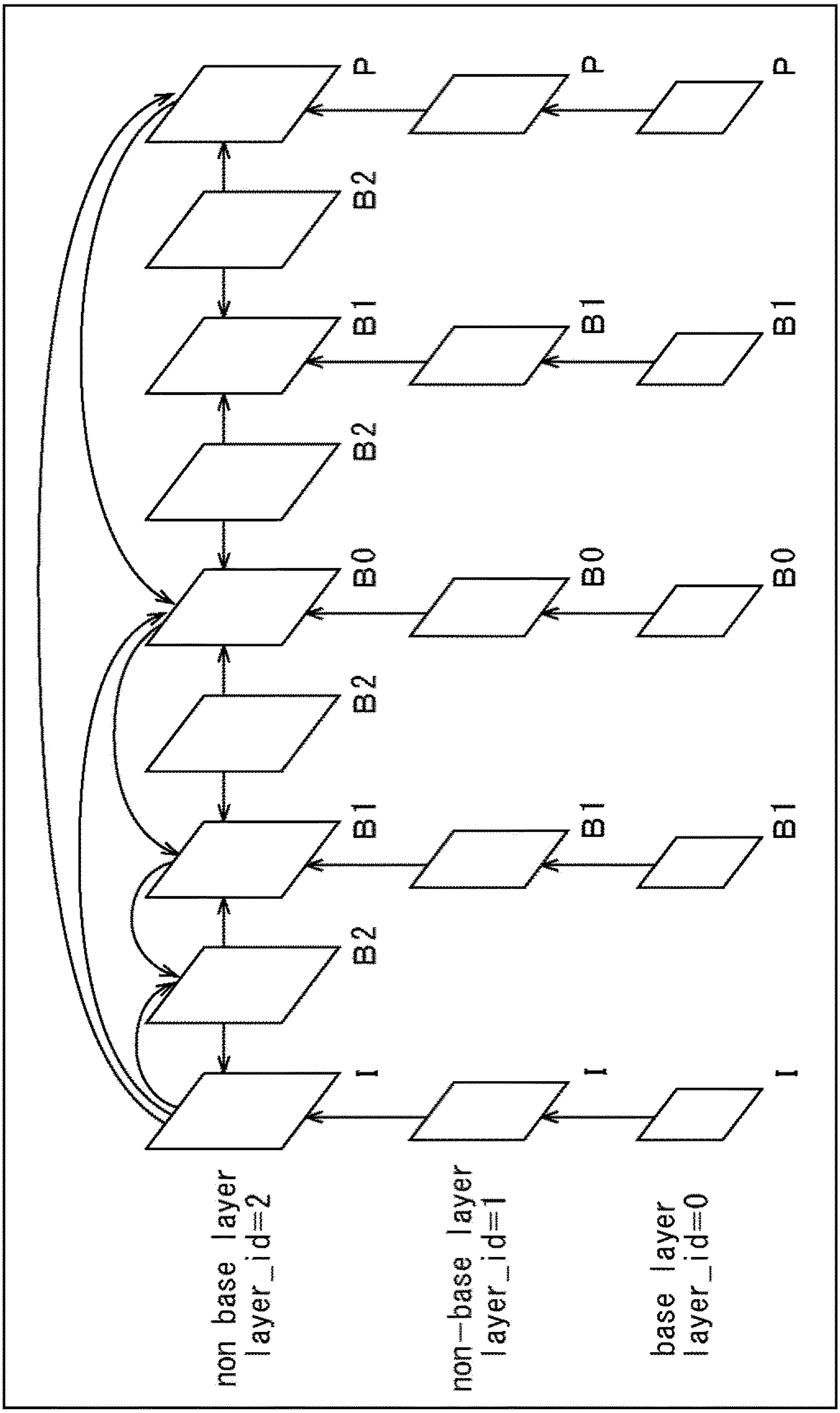
non base layer
layer_id=2
non-base layer
layer_id=1
base layer
layer_id=0
I
B2
B1
B2
B0
B2
B1
B2
P
I
B1
B0
B1
P
I
B1
B0
B1
P

FIG.84

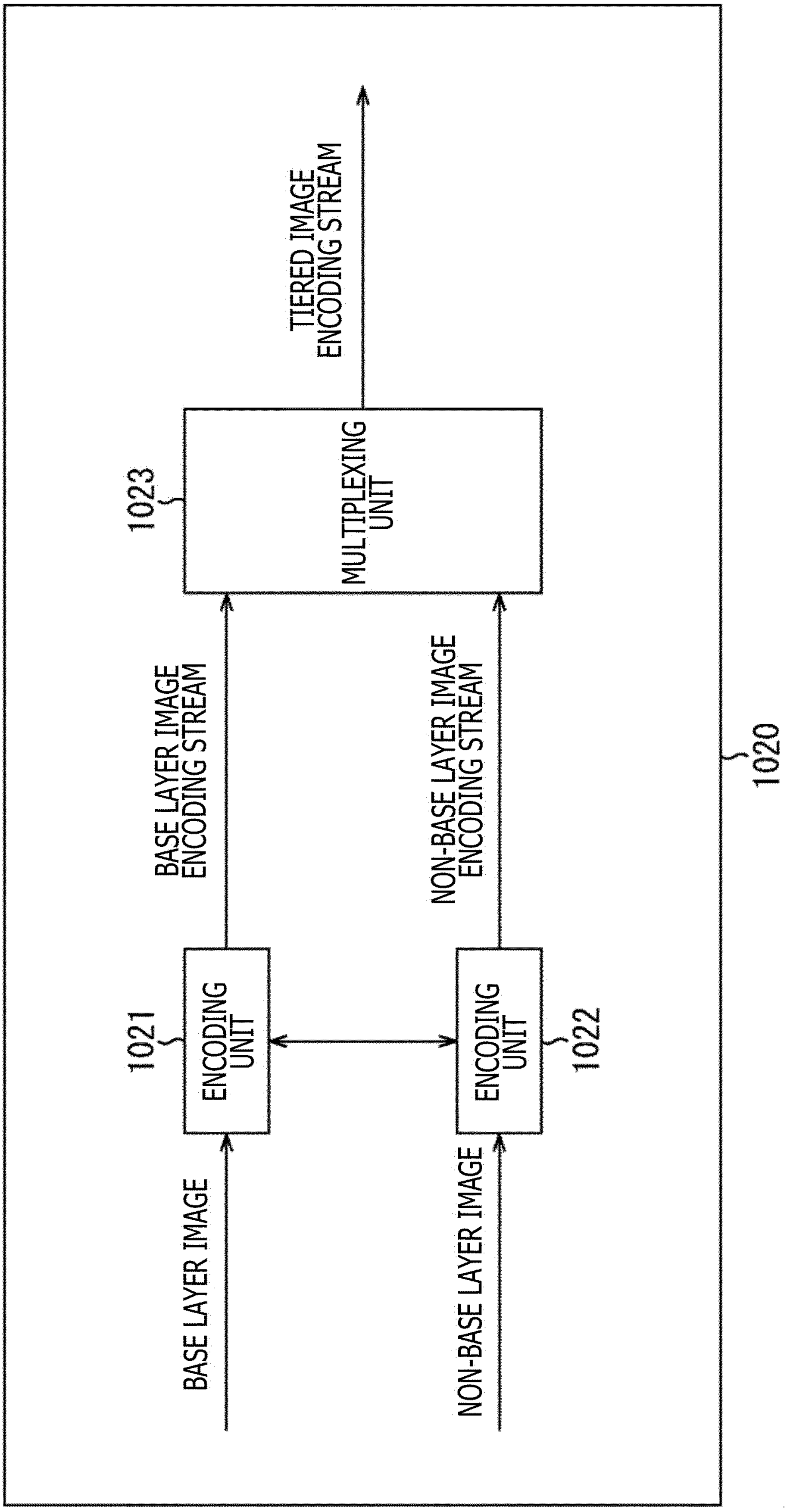

TIERED IMAGE ENCODING STREAM
1023
MULTIPLEXING UNIT
BASE LAYER IMAGE ENCODING STREAM
NON-BASE LAYER IMAGE ENCODING STREAM
1020
1021
ENCODING UNIT
ENCODING UNIT
1022
BASE LAYER IMAGE
NON-BASE LAYER IMAGE

FIG.85

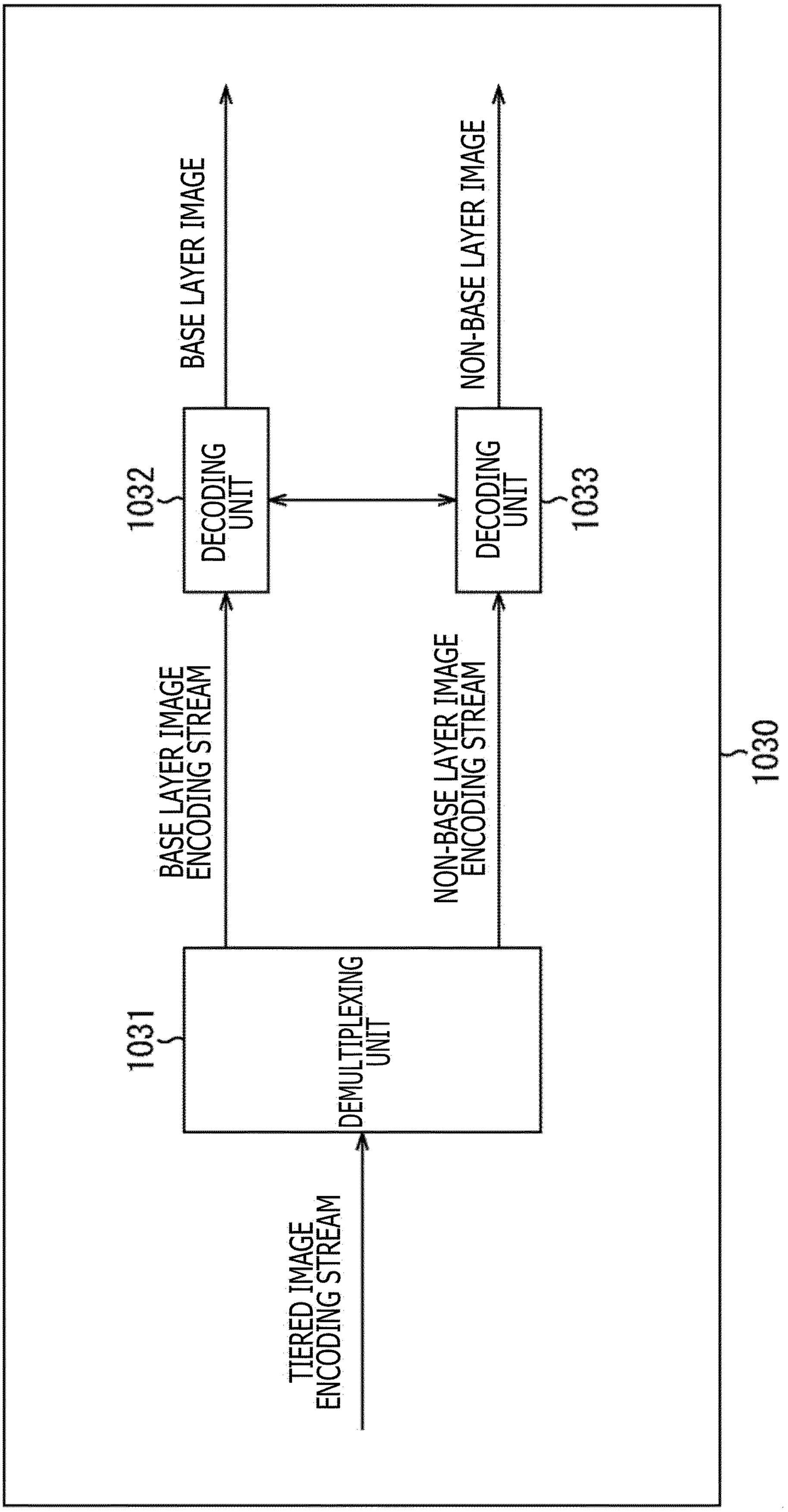
1030
TIERED IMAGE ENCODING STREAM
1031
DEMULTIPLEXING UNIT
BASE LAYER IMAGE ENCODING STREAM
NON-BASE LAYER IMAGE ENCODING STREAM
1032
DECODING UNIT
1033
DECODING UNIT
BASE LAYER IMAGE
NON-BASE LAYER IMAGE

FIG. 86

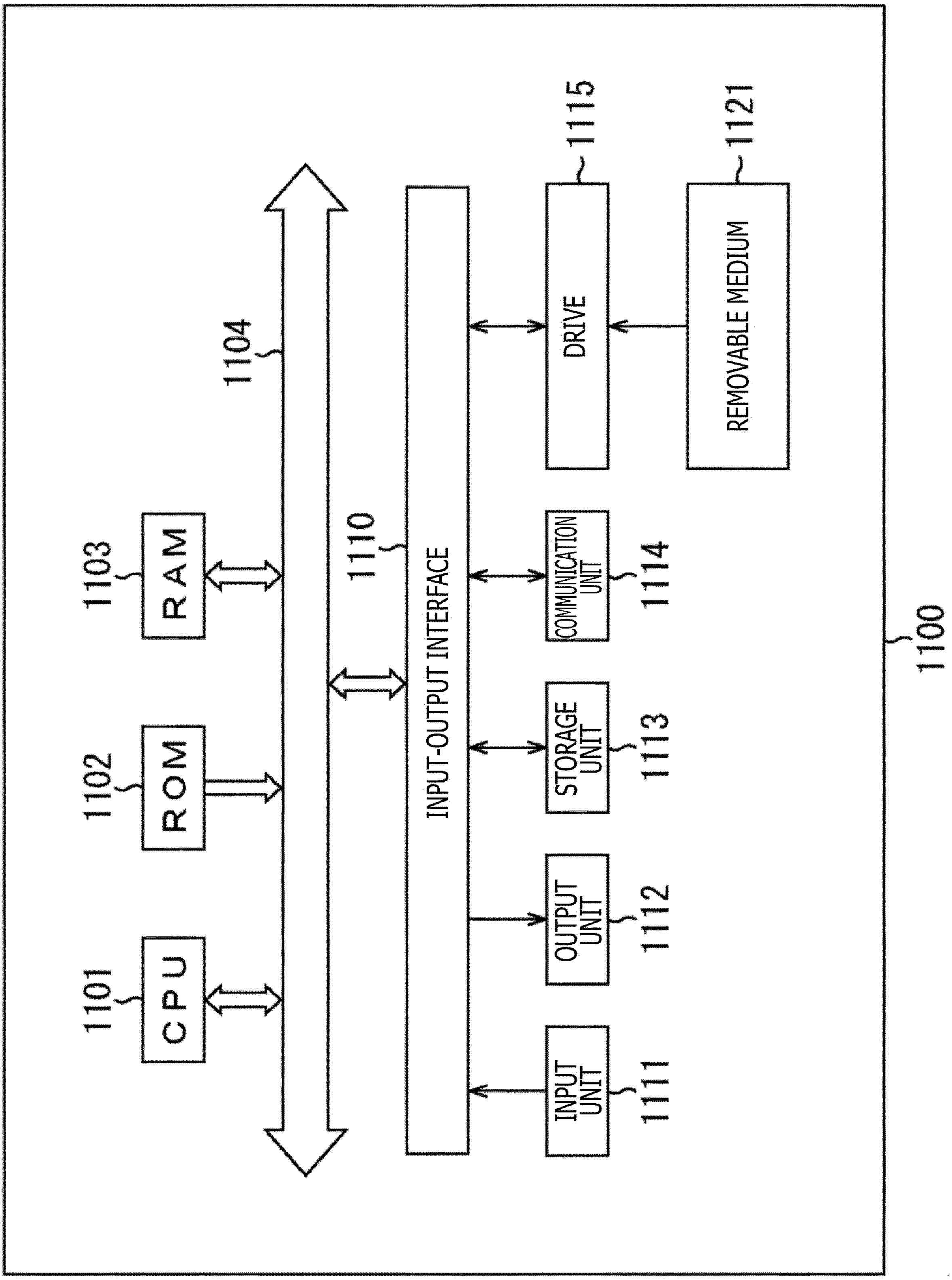
1101
CPU
1102
ROM
1103
RAM
1104
1110
INPUT-OUTPUT INTERFACE
INPUT UNIT
1111
OUTPUT UNIT
1112
STORAGE UNIT
1113
COMMUNICATION UNIT
1114
DRIVE
1115
REMOVABLE MEDIUM
1121
1100

FIG.87

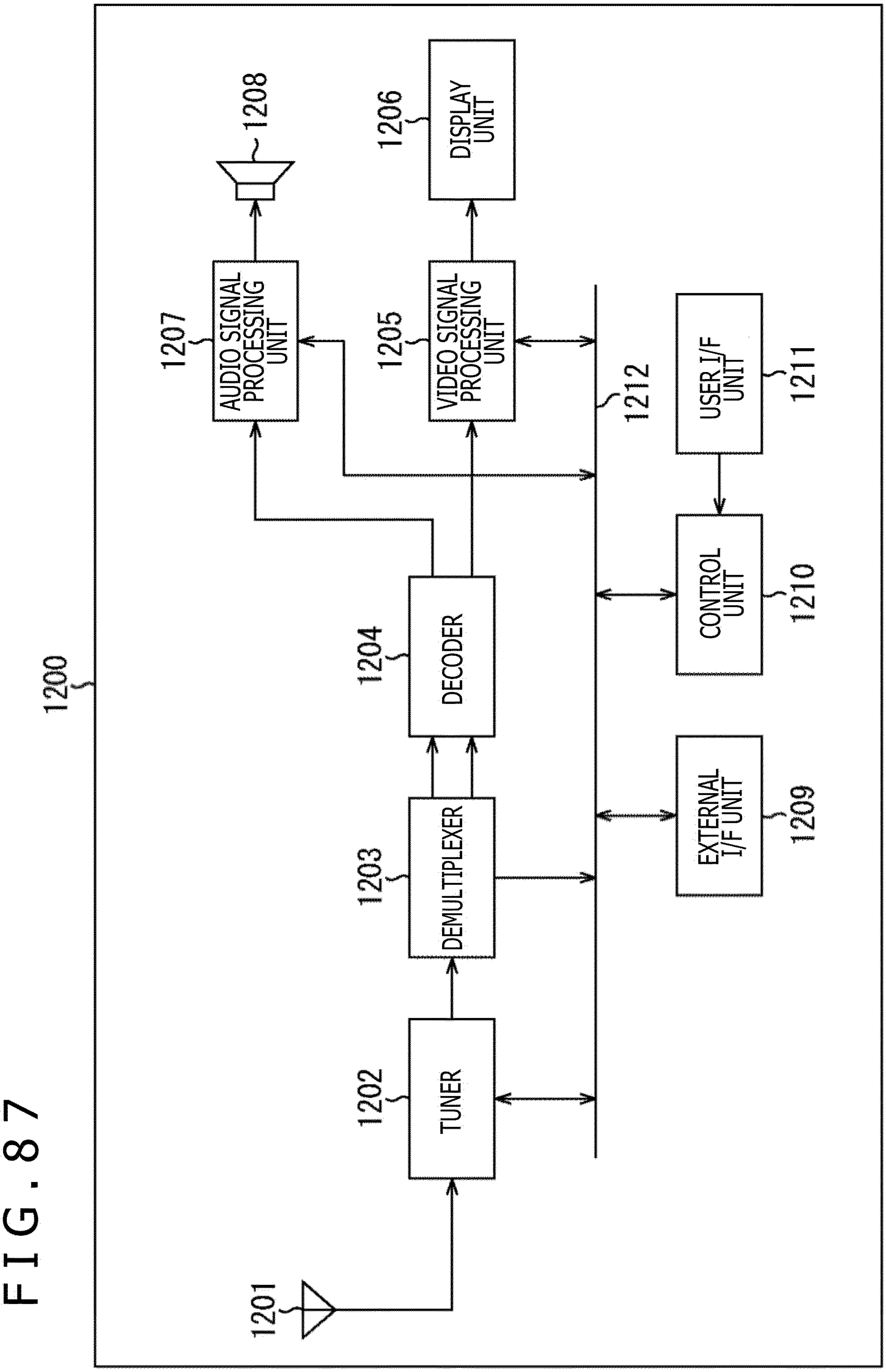
1200
1201
1202
TUNER
1203
DEMULTIPLEXER
1204
DECODER
1205
VIDEO SIGNAL PROCESSING UNIT
1206
DISPLAY UNIT
1207
AUDIO SIGNAL PROCESSING UNIT
1208
1209
EXTERNAL I/F UNIT
1210
CONTROL UNIT
1211
USER I/F UNIT
1212

FIG.88

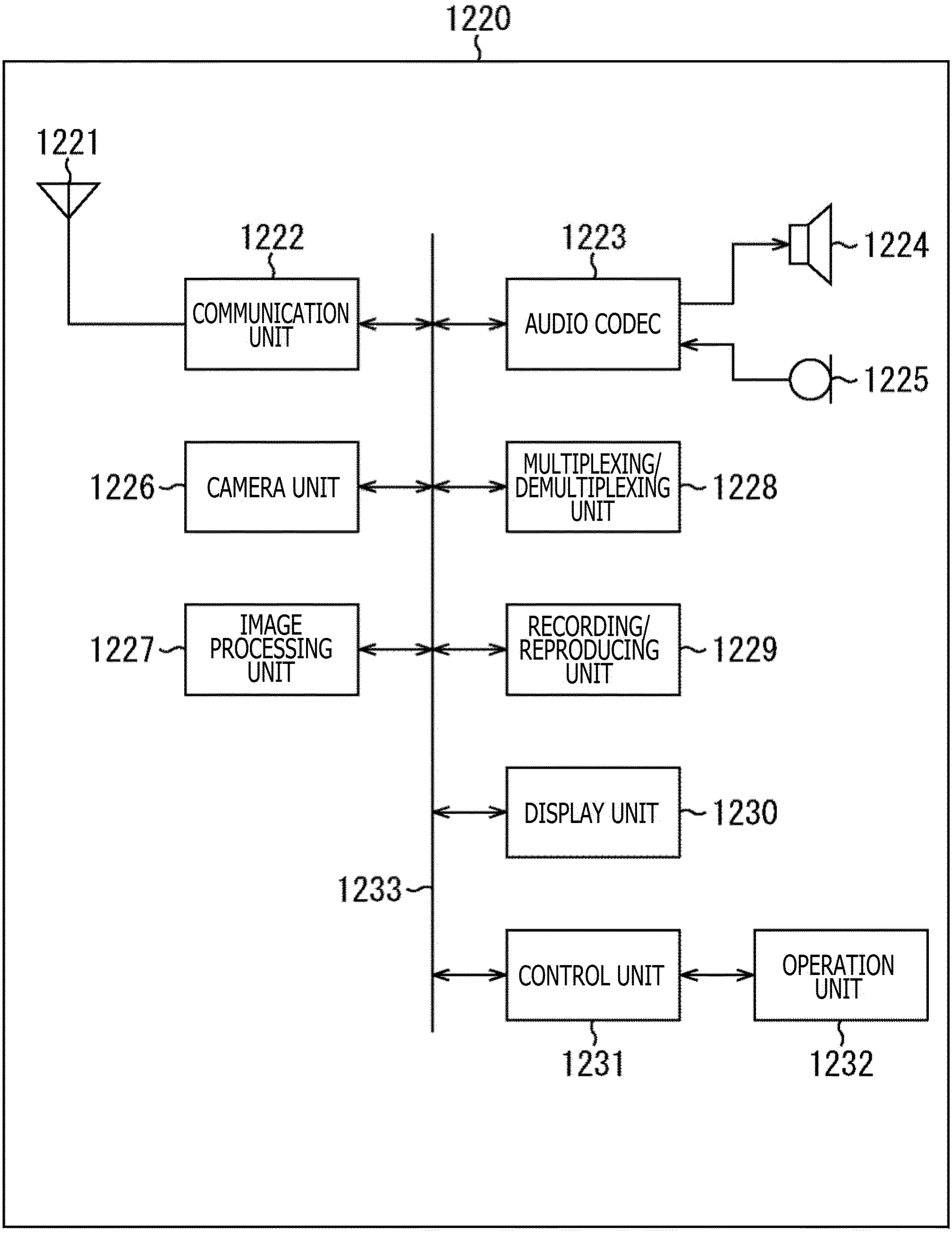
1220
1221
1222
COMMUNICATION UNIT
1223
AUDIO CODEC
1224
1225
1226
CAMERA UNIT
1228
MULTIPLEXING/ DEMULTIPLEXING UNIT
1227
IMAGE PROCESSING UNIT
1229
RECORDING/ REPRODUCING UNIT
DISPLAY UNIT
1230
1233
CONTROL UNIT
OPERATION UNIT
1231
1232

FIG. 89

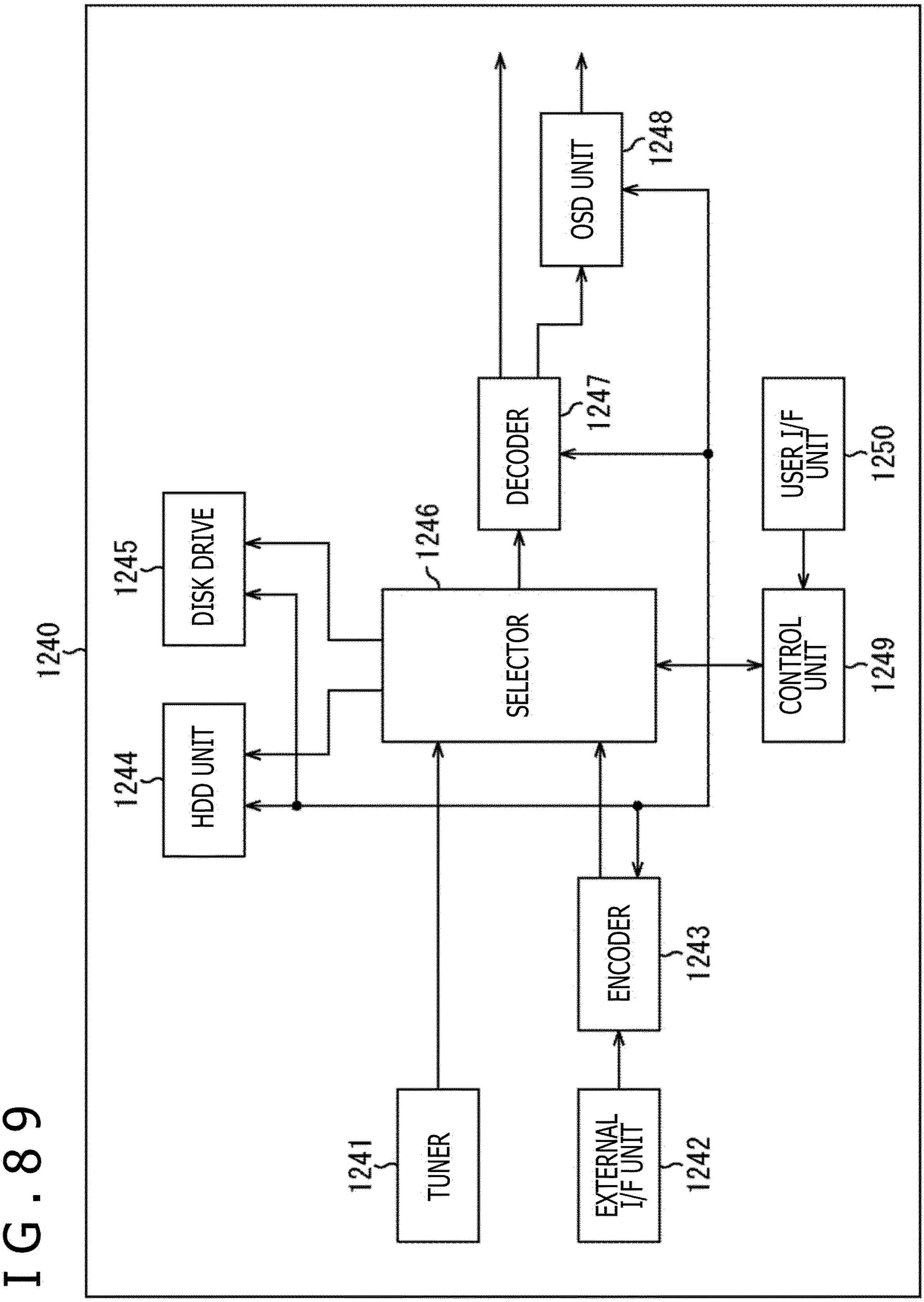
1240
1241
TUNER
1242
EXTERNAL I/F UNIT
1243
ENCODER
1244
HDD UNIT
1245
DISK DRIVE
1246
SELECTOR
1247
DECODER
1248
OSD UNIT
1249
CONTROL UNIT
1250
USER I/F UNIT

FIG. 90

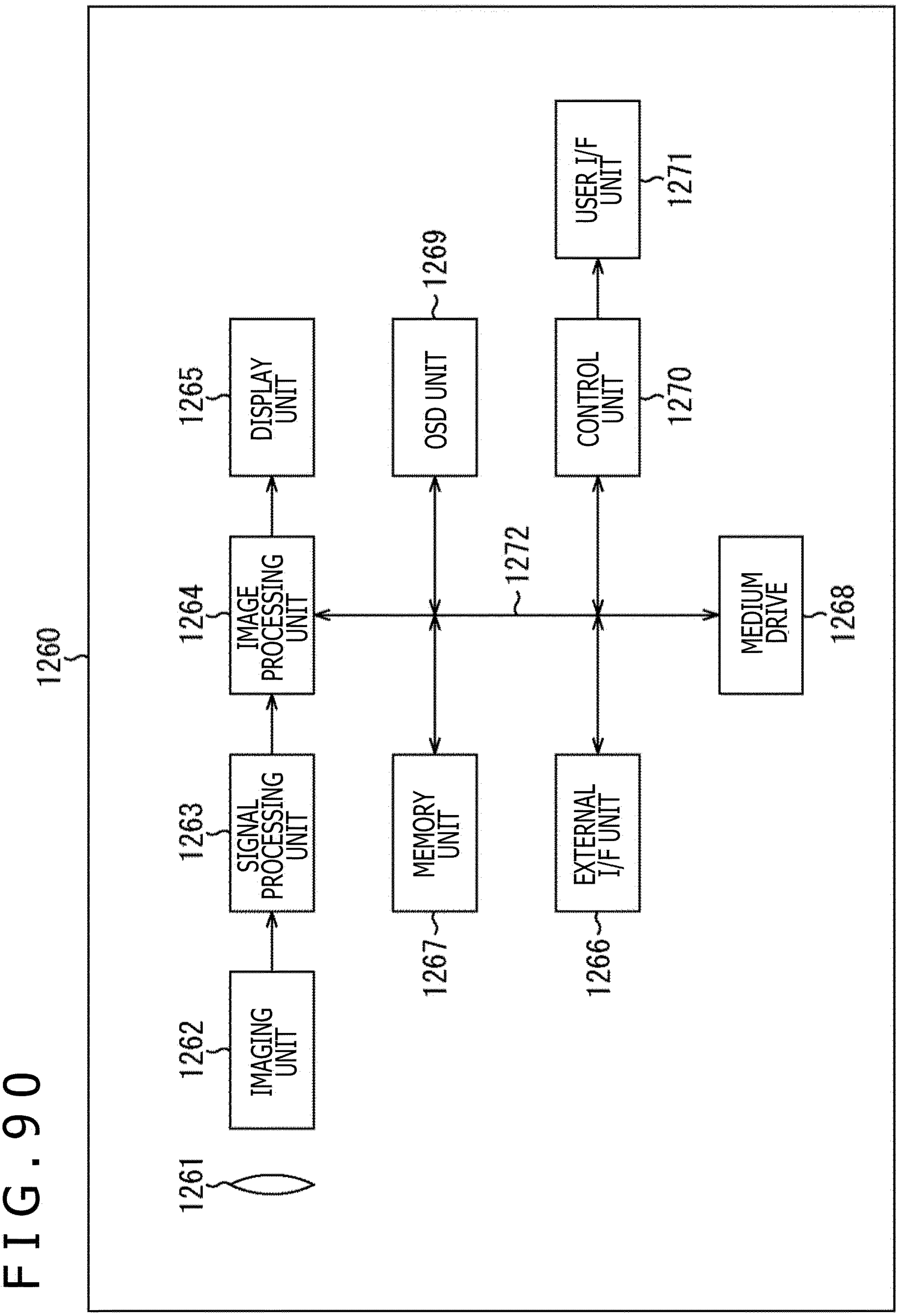
1260
1261
1262
IMAGING UNIT
1263
SIGNAL PROCESSING UNIT
1264
IMAGE PROCESSING UNIT
1265
DISPLAY UNIT
1267
MEMORY UNIT
1269
OSD UNIT
1272
1266
EXTERNAL I/F UNIT
1270
CONTROL UNIT
1271
USER I/F UNIT
1268
MEDIUM DRIVE

FIG. 91

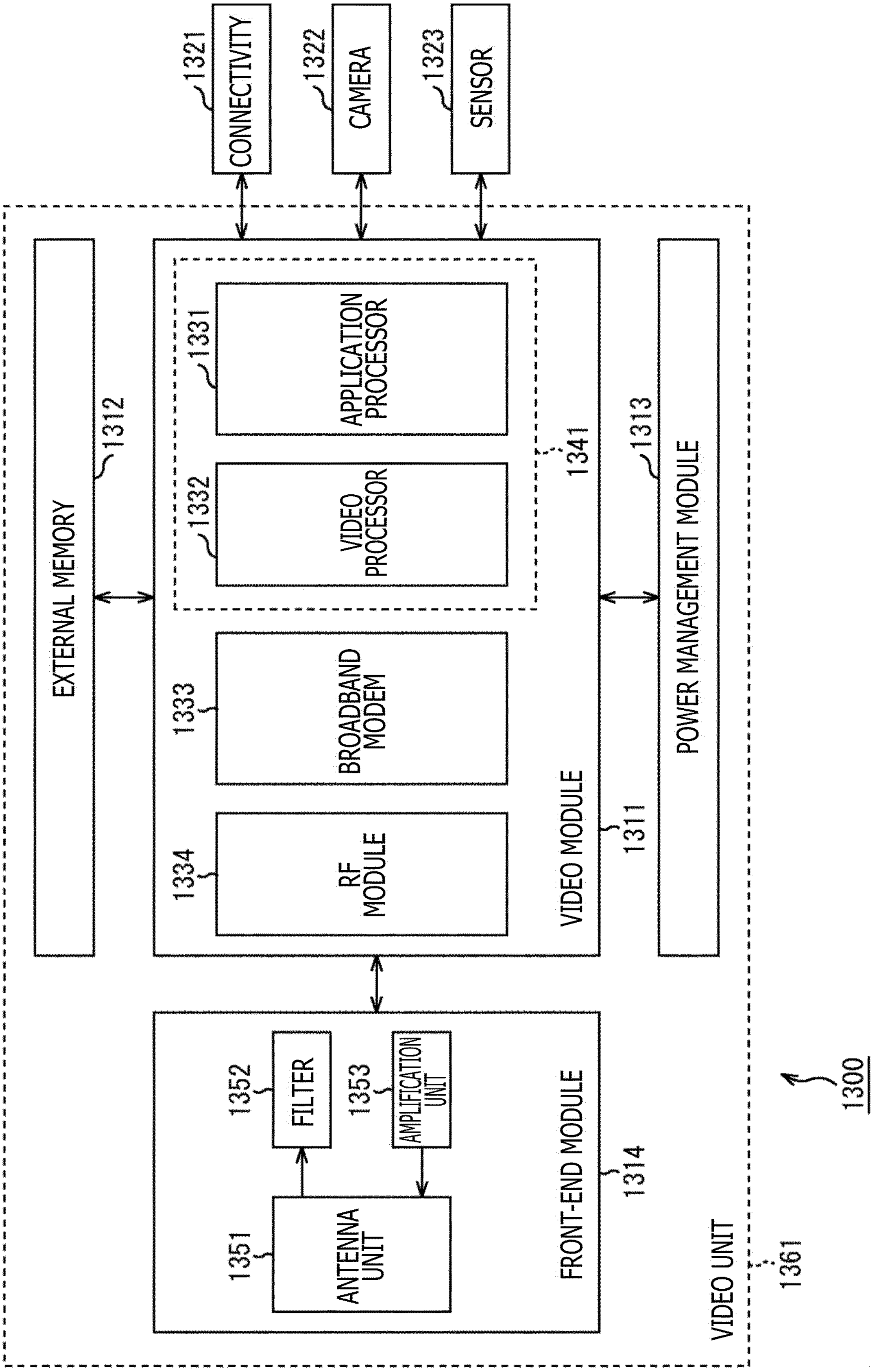
1321
CONNECTIVITY
1322
CAMERA
1323
SENSOR
EXTERNAL MEMORY
1312
1331
APPLICATION PROCESSOR
1332
VIDEO PROCESSOR
1341
1333
BROADBAND MODEM
1334
RF MODULE
VIDEO MODULE
1311
1313
POWER MANAGEMENT MODULE
1351
ANTENNA UNIT
1352
FILTER
1353
AMPLIFICATION UNIT
FRONT-END MODULE
1314
VIDEO UNIT
1361
1300

FIG. 92

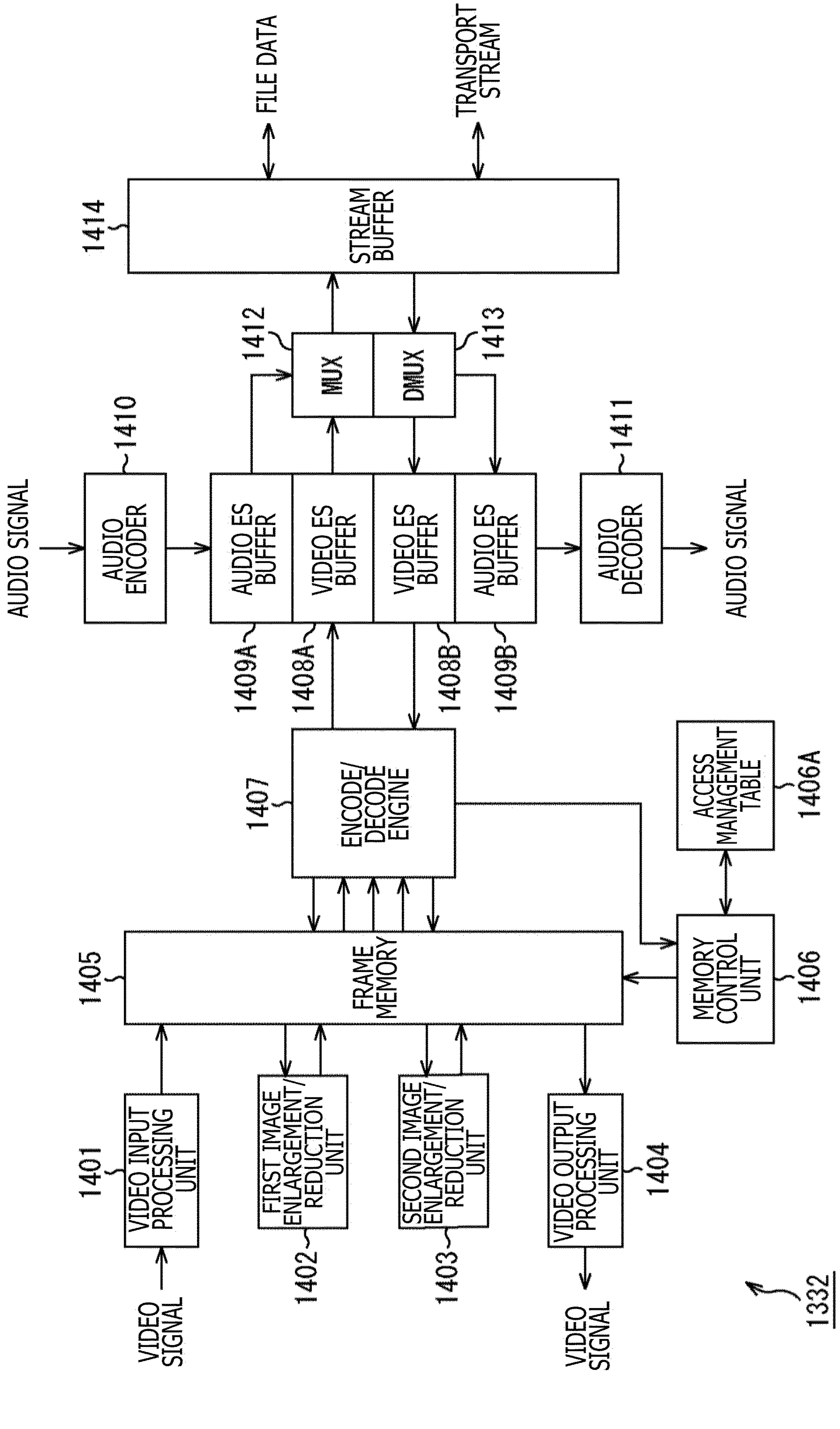
FILE DATA
TRANSPORT STREAM
1414
STREAM BUFFER
1412
MUX
1413
DMUX
1410
1411
AUDIO SIGNAL
AUDIO ENCODER
AUDIO ES BUFFER
VIDEO ES BUFFER
VIDEO ES BUFFER
AUDIO ES BUFFER
AUDIO DECODER
AUDIO SIGNAL
1409A
1408A
1408B
1409B
1407
ENCODE/ DECODE ENGINE
ACCESS MANAGEMENT TABLE
1406A
1405
FRAME MEMORY
MEMORY CONTROL UNIT
1406
1401
VIDEO INPUT PROCESSING UNIT
FIRST IMAGE ENLARGEMENT/ REDUCTION UNIT
SECOND IMAGE ENLARGEMENT/ REDUCTION UNIT
VIDEO OUTPUT PROCESSING UNIT
1404
1402
1403
VIDEO SIGNAL
VIDEO SIGNAL
1332

FIG. 93

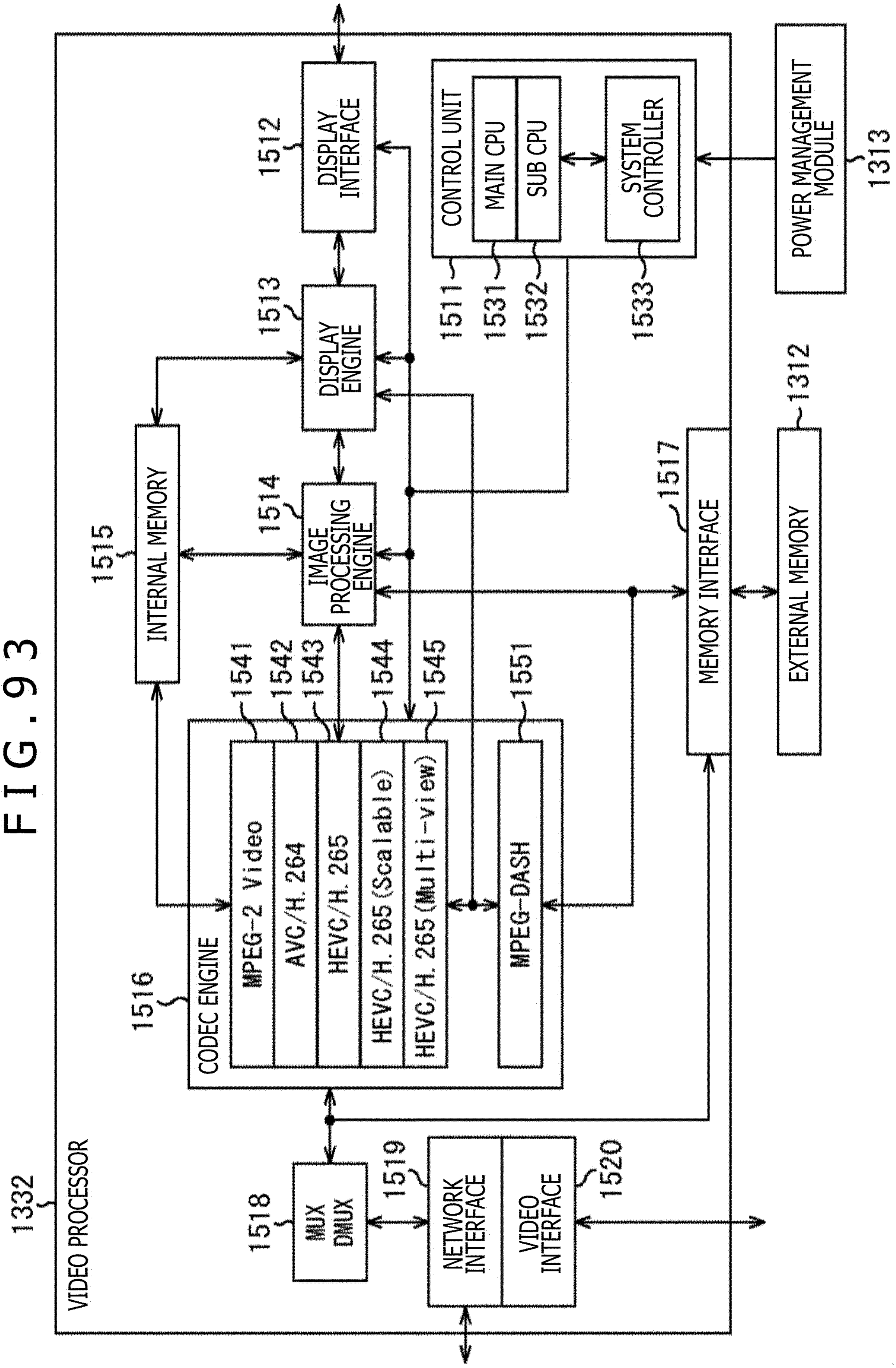
1332
VIDEO PROCESSOR
1512
DISPLAY INTERFACE
1513
DISPLAY ENGINE
1514
IMAGE PROCESSING ENGINE
1515
INTERNAL MEMORY
1511
CONTROL UNIT
1531
MAIN CPU
1532
SUB CPU
1533
SYSTEM CONTROLLER
1313
POWER MANAGEMENT MODULE
1312
EXTERNAL MEMORY
1517
MEMORY INTERFACE
1516
CODEC ENGINE
1541
MPEG-2 Video
1542
AVC/H. 264
1543
HEVC/H. 265
1544
HEVC/H. 265 (Scalable)
1545
HEVC/H. 265 (Multi-view)
1551
MPEG-DASH
1518
MUX DMUX
1519
NETWORK INTERFACE
1520
VIDEO INTERFACE

## INTERNATIONAL SEARCH REPORT

International application No.
PCT/JP2017/015521

A. CLASSIFICATION OF SUBJECT MATTER
*H04N19/117*(2014.01)i, *H04N19/14*(2014.01)i, *H04N19/182*(2014.01)i, *H04N19/196*(2014.01)i, *H04N19/46*(2014.01)i, *H04N19/82*(2014.01)i

According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 2003-299096 A (Sony Corp.), 17 October 2003 (17.10.2003), paragraphs [0008], [0112], [0114], [0139]; fig. 1, 4 (Family: none) | 1-7,13-17, 19-20<br>8-12,18 |
| Y<br><br>A | WO 2010/146771 A1 (Mitsubishi Electric Corp.), 23 December 2010 (23.12.2010), paragraphs [0044] to [0045]; fig. 1 & US 2012/0087595 A1 paragraphs [0132] to [0136]; fig. 1 & EP 2445216 A1 & KR 10-2012-0061797 A & CN 102804781 A | 1-7,13-17, 19-20<br>8-12,18 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 July 2017 (07.07.17) | 18 July 2017 (18.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/015521

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-235407 A (Sony Corp.), 29 November 2012 (29.11.2012), paragraphs [0044], [0046]; fig. 3, 5 & US 2012/0288209 A1 paragraphs [0062], [0064]; fig. 3, 5 & CN 102780887 A | 6-7,16-17 |
| Y | JP 9-237345 A (Sony Corp.), 09 September 1997 (09.09.1997), paragraph [0013] (Family: none) | 7,17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5485983 B
- JP 2014523183 T
- JP 4240322 B
- JP 4770711 B
- JP 5347862 B